# EUROPEAN PATENT APPLICATION

(11) **EP 3 145 200 A1**
(43) Date of publication of application: **22.03.2017**
(21) Application number: 16154432.5
(22) Date of filing: 11.01.2008
(51) Int. Cl.: H04N 21/234, H04N 21/2343, H04N 21/2365, H04N 21/2368, H04N 21/431, H04N 21/434, H04N 21/44, H04N 21/4722, H04N 21/81, H04N 21/8543, H04N 19/48, H04N 19/23, H04N 19/527, G06F 3/16, G11B 27/031

(54) **MPEG OBJECTS AND SYSTEMS AND METHODS FOR USING MPEG OBJECTS**

(30) Priority: 12.01.2007 US 884744 P; 12.01.2007 US 884773 P; 12.01.2007 US 884772 P
(62) Divisional of application: 08705578.6
(71) Applicant: ActiveVideo Networks, Inc., San Jose, CA 95110 (US)
(72) Inventor: GORDON, Donald, SAN JOSE, CA 95110 (US); PAVLOVSKAIA, Lena, Y., SAN JOSE, CA 95110 (US); LANDAU, Airan, SAN JOSE, CA 95110 (US); LENNARTSSON, Andreas, SAN JOSE, CA 95110 (US); CLOUD, Glenn, M., SAN JOSE, CA 95110 (US)
(74) Representative: Eisenführ Speiser

(57) **Abstract**

An MPEG object is an object-oriented data structure that may be used in the creation of interactive MPEG video stream. The MPEG object data structure includes an MPEG object interface defining data received by the MPEG object and data output by the MPEG object. The MPEG object data structure further includes either one or more MPEG video elements or an association to one or more MPEG video elements. The MPEG video elements are preferably defined as MPEG slices that include a plurality of encoded macroblocks. Additionally, the data structure may provide a method for receiving input through the MPEG object interface and in response to input from the client device outputting an MPEG video element. In certain configurations, the MPEG object contains a method that maintains state data for the MPEG object. The state data may be used to select between a plurality of MPEG elements to output. In other configurations, the MPEG object includes a method that provides for the control of streaming MPEG content from a source external to the MPEG object.

## Description

### CROSS-REFERENCE TO RELATED APPLICATIONS

U.S. Patent Application entitled "Interactive Encoded Content System including Object Models for Viewing on a Remote Device" and assigned to the same assignee filed contemporaneously herewith on January 11, 2008 is related generally to the subject matter of the present application and is incorporated herein by reference in its entirety and is attached as Appendix A.

The present application claims priority from U.S. provisional applications serial no 60/884,744, filed January 12, 2007, serial no. 60/884,773, filed January 12, 2007, and serial no. 60/884,772, filed January 12, 2007, the full disclosures of which are hereby incorporated herein by reference.

### TECHNICAL FIELD AND BACKGROUND ART

The present invention relates to interactive encoded video and more specifically to interactive MPEG video that can be used with a client device having a decoder and limited caching capabilities.

Set-top boxes of cable television systems have preferably been simple devices. The boxes generally include a QAM decoder, an MPEG decoder, and a transceiver for receiving signals from a remote control and transferring the signals to the cable headend. In order to keep costs down, set-top boxes have not included sophisticated processors, such as those found in personal computers or extensive memory for caching content or programs. As a result, developers attempting to provide interactive content that includes encoded video elements such as those found in dynamic web pages to subscribers have been forced to find solutions that are compatible with the set-top boxes. These solutions require having the processing functionality reside at the cable headend and further require that the content is delivered in MPEG format. In order to provide dynamic web page content, the content forming the web page first must be decoded and then rendered within the webpage frame as a bitmap. Next, the rendered frames are then re-encoded into an MPEG stream that the set-top box of a requesting user can decode. This decoding and re-encoding scheme is processor intensive.

### SUMMARY OF THE INVENTION

In a first embodiment, a system for providing interactive MPEG content for display on a display device associated with a client device having an MPEG decoder is disclosed. The system operates in a client/server environment wherein the server includes a plurality of session processors that can be assigned to an interactive session requested by a client device. The session processor runs a virtual machine, such as a JAVA virtual machine. The virtual machine includes code that in response to a request for an application accesses the requested application. In addition the virtual machine is capable of parsing the application and interpreting scripts. The application contains a layout for an MPEG frame composed of a plurality of MPEG elements. The application also includes a script that refers to one or more MPEG objects that provide the interactive functionality and the MPEG elements (MPEG encoded audio/video) or methodology for accessing the encoded MPEG audio/video content if the content is stored external to the MPEG object.

The MPEG object includes an object interface that defines data received by the MPEG object and data output by the MPEG object. Additionally, the MPEG object includes one or more MPEG video or audio elements. The MPEG elements are preferably groomed so that the elements can be stitched together to form an MPEG video frame. In some embodiments, the MPEG elements are located external to the MPEG object and the MPEG object includes a method for accessing the MPEG element(s). In certain embodiments, the MPEG object includes a plurality of MPEG video elements wherein each element represents a different state for the MPEG object. For example, a button may have an "on" state and an "off" state and an MPEG button object would include an MPEG element composed of a plurality of macroblocks/slices for each state. The MPEG object also includes methods for receiving input from the client device through the object interface and for outputting data from the MPEG object through the object interface.

After the program running on the virtual machine, has obtained all of the MPEG objects indicated in the application, the program on the virtual machine provides the MPEG elements and the layout to a stitcher. In certain embodiments, the virtual machine and program for retrieving and parsing the application and interpreting the scripts may be subsumed in the stitcher. The stitcher then stitches together each of the MPEG elements in their position within the MPEG frame. The stitched MPEG video frame is passed to a multiplexor that multiplexes in any MPEG audio content and additional data streams and the MPEG video frame is placed into an MPEG transport stream that is directed to the client device. In certain embodiments, the multiplexor may be internal to the stitcher. The client device receives the MPEG frame and can then decode and display the video frame on an associated display device. This process repeats for each video frame that is sent to the client device. As the client interacts and makes requests, for example changing the state of a button object, the virtual machine in conjunction with the MPEG object updates the MPEG element provided to the stitcher and the stitcher will replace the MPEG element within the MPEG video frame based upon the request of the client device. In certain other embodiments, each MPEG element representative of a different state of the MPEG object is provided to the stitcher. The virtual machine forwards the client's request to the stitcher and the stitcher selects the appropriate MPEG element based upon the MPEG objects state from a buffer to stitch into the MPEG video frame.

An interactive MPEG application may be constructed in an authoring environment. The authoring environment includes an editor with one or more scene windows that allow a user to create a scene based upon placement of MPEG objects within a scene window. An object tool bar is included within the authoring environment that allows the MPEG objects to be added. The authoring environment also includes a processor that produces an application file that contains at least reference to the MPEG objects and the display position for each of the MPEG objects within the scene. Preferably, when the MPEG object is placed within a scene window, the MPEG video element for the MPEG object is automatically snapped to a macroblock boundary. For each MPEG object that is added to the scene, the properties for the object can be modified. The authoring environment also allows a programmer to create scripts for using the MPEG objects. For example, a script within the application may relate a button state to an execution of a program. The authoring environment also provides for the creation of new MPEG objects. A designer may create an MPEG object by providing graphical content such as a video file or still image. The authoring environment will encode the graphical content so that the content includes MPEG elements/slices or a sequence of MPEG elements/slices. In addition to defining the MPEG video resource, the authoring environment allows the designer to add methods, properties, object data and scripts to the MPEG object.

### BRIEF DESCRIPTION FO THE DRAWINGS

The foregoing features of the invention will be more readily understood by reference to the following detailed description, taken with reference to the accompanying drawings, in which:
Fig. 1 graphically shows an example of an atomic MPEG object as used in a client/ server environment;
Fig. 1 A is a flow chart showing process flow between a stitcher and events from a client device;
Fig. 2 graphically shows an example of a streaming MPEG object as used in a client/ server environment;
Fig. 2A graphically shows an embodiment employing several session processors;
Fig. 3 provides an exemplary data structure and pseudo code for an atomic MPEG button object;
Fig. 4 provides an exemplary data structure and pseudo code for a progress bar MPEG object;
Fig. 5 shows an exemplary screen shot of an authoring environment for creating applications that use MPEG objects;
Fig. 6A shows an exemplary screen shot of a properties tab for an MPEG object;
Fig. 6B shows an exemplary screen shot of an event tab for an MPEG object;
Fig. 6C shows an exemplary screen shot of a script editor that can be used to create a script for an application that uses MPEG objects; and
Fig. 7 shows a system for using MPEG objects for interactive content.

### DETAILED DESCRIPTION OF SPECIFIC EMBODIMENTS

Embodiments of the present invention disclose MPEG objects and systems and methods of using MPEG objects in a client/server environment for providing interactive encoded video content to a client device that includes an MPEG decoder and an upstream data connection to the server in an interactive communications network. As used in the detailed description and the claims the term MPEG element and MPEG video element shall refer to graphical information that has been formatted according to an MPEG standard (Motion Picture Experts Group). The graphical information may only be partially encoded. For example, graphical information that has been transform coded using the discrete cosine transform will be considered to be an MPEG element without requiring quantization, entropy encoding and additional MPEG formatting. MPEG elements may include MPEG header information for macroblocks and the slice level. An MPEG element may include data for either a full MPEG video frame, a portion of an MPEG video frame (macroblocks or slices) that are contiguous or non-contiguous, or data representative of a temporal sequence (frames, macroblocks or slices).

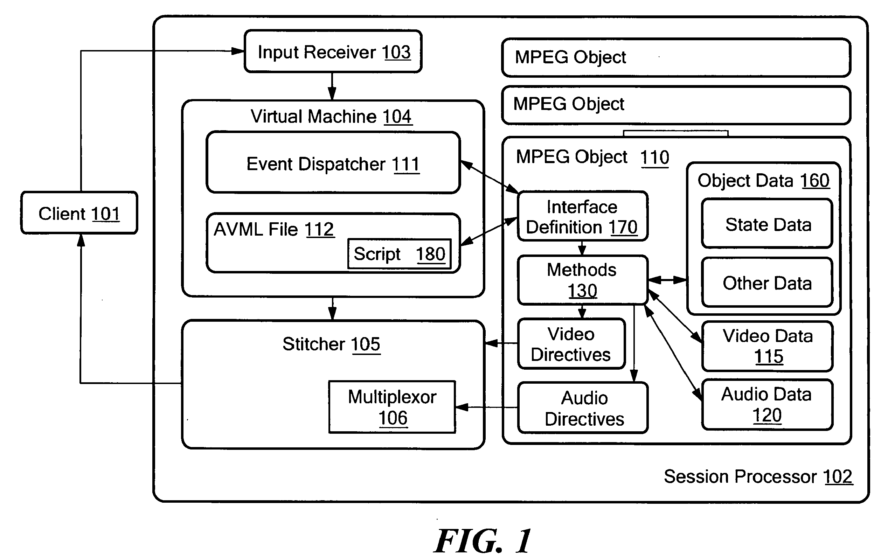

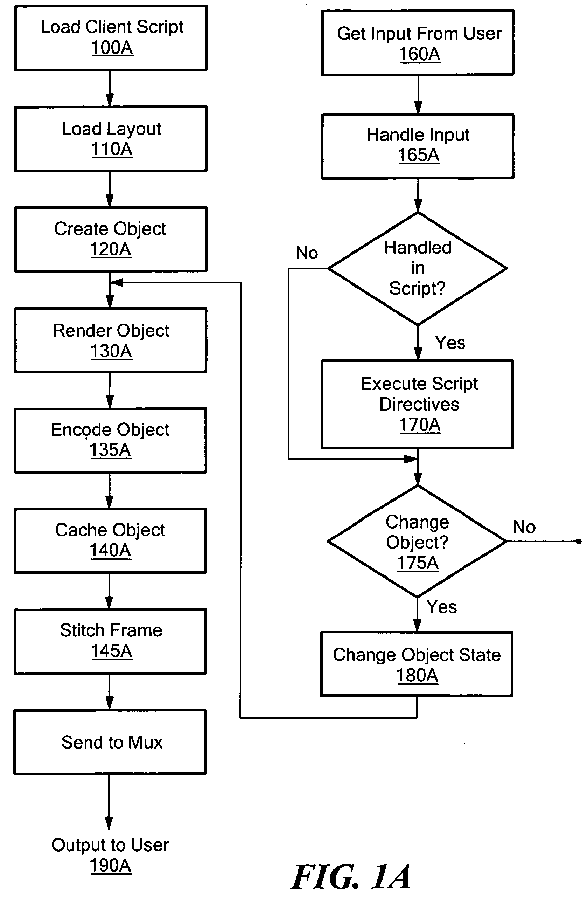

Interactive content formed from MPEG objects is preferably used in a client/server environment 100 as shown in Fig. 1 wherein the client device 101 does not need memory for caching data and includes a standard MPEG video decoder. An example of such a client device is a set-top box or other terminal that includes an MPEG decoder. Client devices may include a full processor and memory for caching; however these elements are not necessary for operation of this system. The server device in the client/server environment contains at least a session processor 102 formed from at least one processor that includes associated memory.

The client 101 and server establish an interactive session wherein the client device 101 transmits a request for an interactive session through an interactive communication network. The server assigns a session processor 102 and the request is sent to an input receiver 103 of the assigned session processor 102. The session processor 102 runs a virtual machine 104 that can interpret scripts. The virtual machine 104 may be any one of a number of virtual machines, such as a JAVA virtual machine. In response to the interactive request from the client, addressing information for the session processor is passed to the client 101. The client 101 then selects an interactive application, as defined in an AVML (Active Video Mark-up Language) file to view and interact with. Interactive applications may include references to video content along with selection controls, such as buttons, lists, and menus. Further explanation of such applications is explained in the U.S. patent application entitled, filed concurrently herewith entitled, "Interactive Encoded Content System including Object Models for Viewing on a Remote Device" and assigned to the same assignee, which is incorporated by reference in its entirety and attached as Appendix A. The request for the selected application is directed to the virtual machine 104. The virtual machine 104 accesses the AVML file defining the application. that indicates the MPEG objects, along with any other graphical content that is necessary for composing a video frame within a video sequence for display on a display device. The AVML file also includes the location within the frame for positioning each of the MPEG objects. In addition, the AVML file may include one or more scripts. One use for a script is to maintain the state of an MPEG object. These MPEG objects can reside and be accessed at different locations and may be distributed. The graphical elements of the MPEG objects are stitched together by a stitcher 105 based upon the location information within the application file (AVML file) to form complete MPEG video frames. The video frames along with MPEG audio frames are multiplexed together in a multiplexor 106 within the stitcher to form an MPEG stream that is sent to the requesting client device. The MPEG stream may then be decoded and displayed on the client's device. The input receiver, virtual machine, and stitcher may be embodied as either computer code that can be executed/interpreted on the session processor or may embodied in hardware or a combination of hardware and software. In some embodiments, any of the software (i.e. input receiver, virtual machine, or stitcher) may be constructed in hardware that is separate from the session processor. Additionally, the stitcher, which may be a computer program application may incorporate the functionality of the input receiver, the virtual machine and may process and parse the application file (AVML).

In certain embodiments, the stitcher may stitch the graphical elements together based upon the type of device that has requested the application. Devices have different capabilities. For example MPEG decoders on certain devices may not be as robust and capable of implementing all aspects of the chosen MPEG standard. Additionally, the bandwidth of the transmission path between the multiplexor and the client device may vary. For example, in general, wireless devices may have less bandwidth than wireline devices. Thus, the stitcher may insert into the MPEG header parameters a load delay or no delay, allow skips or not allow skips, force all frames to be encoded as I-frames or use a repeated uniform quantization to reduce the number of bits required to represent the values.

An MPEG object is part of a programming paradigm that allows individual MPEG video elements to be stitched together to form a frame of a video stream that incorporates active elements wherein a client can interact with the active elements and more specifically change the video stream. The MPEG video elements associated with an MPEG object may be a plurality of encoded macroblocks or slices that form a graphical element. A client can use a client device to select a graphical element on a display screen and interact with that graphical element. An MPEG object 110 includes an association with MPEG video and/or audio data along with methods and properties for the object. The MPEG video or audio may reside internal to the MPEG object or may be externally accessed through remote function calls. The methods within an MPEG object are code that may receive data from outside of the object, process the received data and/or the MPEG video 115 and audio data 120 and output data from the object according to video and audio directives. Object data 160 may indicate the state of the object or other internal variables for the object. For example, parameters such as display priority may be used to determine the priority of stacked media. In addition, parental control parameters, such as a content rating, may be associated with the audio or video data or an audio or video source or address. A parental control may be a method internal to an MPEG object that provides for control over access to the content.

As shown in Fig. 1 a virtual machine is made active on a session processor 102. in response to a request for an interactive application (AVML file having a script) and accesses a first MPEG object 110 which is an atomic object. An atomic object is self-contained in that the object contains all of the encoded data and methods necessary to construct all of the visual states for the object. Once the object is retrieved by the virtual machine the object requires no additional communications with another source. An example of an atomic object is a button that is displayed within a frame. The button object would have an MPEG video file for all states of the button and would include methods for storing the state based upon a client's interaction. The atomic object includes both pre-encoded MPEG data (video and audio data) 115, 120 along with methods 130. In certain embodiments, the audio or video data may not initially be MPEG elements, but rather graphical or audio data in another format that is converted either by the virtual machine or the stitcher into MPEG elements. In addition to the pre-encoded MPEG data 115, 120, the atomic object can include object data 160, such as state information. The object interacts with external sources through an interface definition 170 along with a script 180 for directing data to and from the object. The interface 170 may be for interacting with C++ code, Java Script or binary machine code. For example, the interface may be embodied in a class definitions.

An event may be received from a client device into the input receiver 103 that passes the event to an event dispatcher 111. The event dispatcher 111 identifies an MPEG object within the AVML file that is capable of processing the event. The event dispatcher then communicates the event to that object.

In response, the MPEG object through the interface definition 170 accesses the MPEG video 115 and/or audio data 120. The MPEG object may implement a method 130 for handling the event. In other embodiments, the interface definitions may directly access the data (object data, audio data and video data) Each MPEG object may include multiple MPEG video files that relate to different states of the object wherein the state is stored as object data 160. For example, the method may include a pointer that points the stitcher to the current frame and that is updated each time the stitcher is provided with a video frame. Similarly, the MPEG audio data 120 may have associated methods within the MPEG object. For example, the audio methods 130 may synchronize the MPEG audio data 120 with the MPEG video data 115. In other embodiments, state information is contained within the AVML file 11.

The process flow for the MPEG object and system for implementing the MPEG object is shown in the flow chart of Fig. 1A. In Fig. 1A, all code for accessing and parsing of an application is contained within the stitcher. The stitcher may be a software module that operates within the virtual machine on the session processor.

After receiving the request for the application and retrieving the application the stitcher first loads any script that exists within the application. 100A The stitcher accesses the layout for the video frame and loads this information into memory. 110A The layout will include the background, the overall size of the video frame, the aspect ratio, and position of any objects within the application. The stitcher then instantiates any MPEG objects that are present within the application. 120A Based upon a script within the application that keeps track of the state of an object, the graphical element associated with the state for each object is retrieved from a memory location. The graphical element may be in a format other than MPEG and may not initially be an MPEG element. The stitcher will determine the format of the graphical element. If the graphical element is in a non-MPEG element format, such as a TIFF format, GIF or RGB, for example, the stitcher will render the graphical element into a spatial representation. 130A The stitcher will then encode the spatial representation of the graphical element, so that it becomes an MPEG element. 135A Thus, the MPEG element will have macroblock data formed into slices. If the graphical element associated with the MPEG object is already in an MPEG element format then neither rendering or encoding is necessary. The MPEG elements may include one or more macroblocks that have associated position information. The stitcher then converts the relative macroblock/slice information into global MPEG video frame locations based upon the position information from the layout and encodes each of the slices. The slices are then stored to memory so that they are cached for quick retrieval. 140A An MPEG video frame is then created. The MPEG elements for each object based upon the layout are placed into scan order by slice for an MPEG frame. The stitcher sequences the slices into the appropriate order to form an MPEG frame. 145A The MPEG video frame is sent to the stitcher's multiplexor and the multiplexor multiplexes the video frame with any audio content. The MPEG video stream that includes the MPEG video frame and any audio content is directed through the interactive communication network to the client device of the user for display on a display device. 190A

Changes to the MPEG frames are event driven. A user through an input device sends a signal through a client device to the session processor that is provided to the stitcher. 160A The stitcher checks to see if the input that is received is input that is handled by the script of the application using the event dispatcher. 165A If it is handled by the script, the script directives are executed/interpreted. 170A The stitcher determines if the object state has changed. 175A The stitcher will retrieve the graphical element associated with the state of that object from a memory location. 180A The stitcher may retrieve the graphical element from a memory location associated with the MPEG object after the event has been processed, or the MPEG object may place the graphical element in a memory location associated with the stitcher during event processing. The stitcher will again determine the format of the graphical element. If the graphical element is in a non-MPEG element format and therefore is not structured according to macroblocks and slices, the stitcher will render and encode the element as an MPEG element and will cache the element into a buffer. 130A, 135A, 140A This new MPEG element representative of the change in state will be stitched into the MPEG frame at the same location as defined by the layout for the MPEG frame from the application. 145A The stitcher will gather all of the MPEG elements and places the slices into scan order and format the frame according to the appropriate MPEG standard. The MPEG frame will then be sent to the client device for display. 190A The system will continue to output MPEG frames into an MPEG stream until the next event causes a change in state and therefore, a change to one or more MPEG elements within the frame layout.

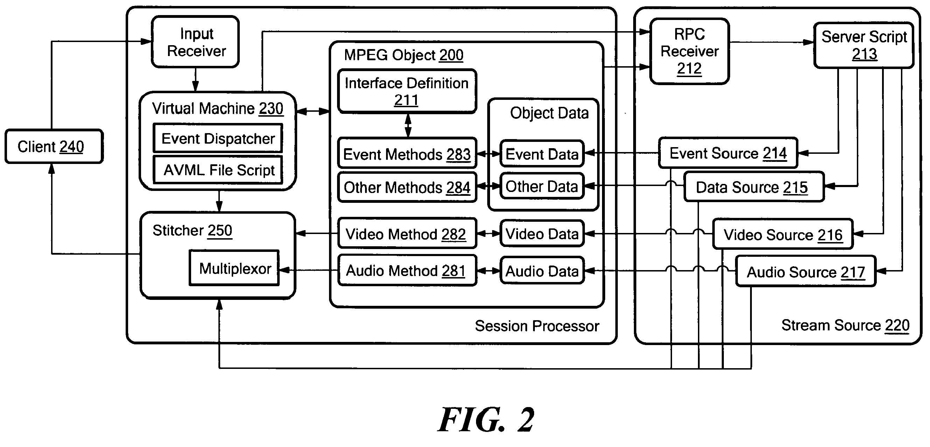

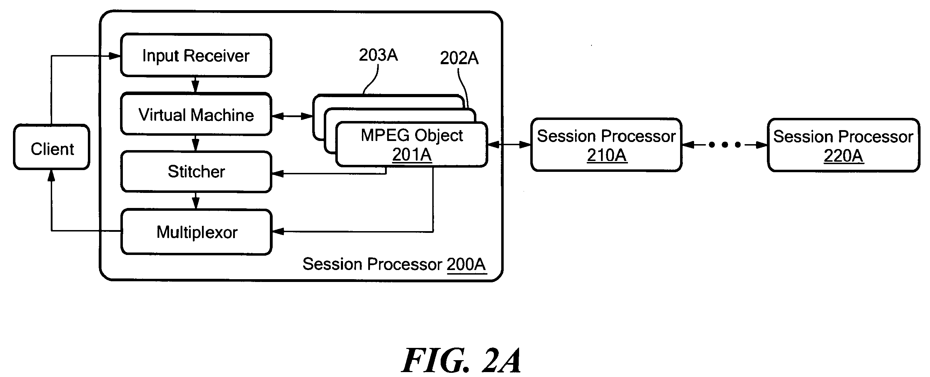

A second MPEG object is a streaming MPEG object. The streaming MPEG object operates within the same environment as the atomic object, but the object is not self-contained and accesses an outside source for source data. For example, the object may be a media player that allows for selection between various sources of audio and video. Thus, the MPEG object is not self-contained for each of the audio and video sources, but the MPEG object accesses the sources based upon requests from the client device. As shown in Fig. 2, the MPEG object 200 and methods implemented according to interface definitions (input, output) 211 link the MPEG object 200 to the virtual machine 230, the stitcher 250, as well as an RPC (remote procedure call) receiver 212 at a stream source 220. Thus, the streaming MPEG object is in communication with the virtual machine/client 230, 240 a stitcher 250, a source entity, the stream source 220 and other sources. The interface definitions may also directly access the data (object, audio and video). In response to an event, an event dispatcher accesses the MPEG object capable of handling the event using the interface. The event dispatcher causes the MPEG object to access or request the video and audio content requested by the client. This request may be achieved directly by a method within the MPEG object that accesses the data source. In other embodiments, a script within the AVML file calls an RPC receiver 212 that accesses a server script 213. The server script 213 retrieves the requested content (event source 214, data source 215, video source 216, or audio source 217) or accesses an address for the content and either provides this information or content to the MPEG object or to the stitcher 250.

The server script 213 may render the requested content and encode the content as one or more MPEG slices. MPEG video content can be passed through the MPEG object to the stitcher 250 that stitches together the MPEG video content into an MPEG video frame. The MPEG object may also request or retrieve audio MPEG content that can be passed to the stitcher. Thus, audio MPEG content may be processed in a similar fashion to MPEG video content. The MPEG video data may be processed by a method within the MPEG object. For example, a method may synchronize all of the MPEG content prior to providing the MPEG content to the stitcher, or the method may confirm that all of the MPEG content has been received and is temporally aligned, so that the stitcher can stitch together a complete MPEG video frame from a plurality of MPEG object video and audio data for presentation to the client in a compliant MPEG stream. The script of the AVML file or the MPEG object may request updated content from the stream source through the server script 213 or directly from an addressable location. An event requesting updated content may originate from communication with the client. The content may originate from a data, audio, video, or event source 214-217.

Event data 214 includes but is not limited to trigger data. Triggers include data that can be inserted into the MPEG transport stream. In addition, triggers may be internal to an MPEG video or audio source. For example, triggers may be located in header information or within the data content itself. These triggers when triggered can cause different events, such as an overlay to be presented on the screen of the client or a pop-up advertisement. The data source 215 may include data that is not traditionally audio or video data. For example, a data from the data source may include an alert notification for the client script, data to be embedded within the MPEG video stream or stock data that is to be merged with a separate graphical element.

Each of the various sources that have been requested is provided to the stitcher directly or may pass through the MPEG object. The MPEG object using a method may combine the data sources into a single stream for transport to the session processor. The single stream is received by the session processor and the session processor Like the atomic object the streaming object may include audio and video methods 281, 282 that synchronize the audio and video data. The video method 282 provides the video content to the stitcher so that the stitcher can stitch each of the MPEG video elements together to form a series of MPEG frames. The audio method 281 provides the audio data to the multiplexor within the stitcher so that the audio data is multiplexed together with the video data into an MPEG transport stream. The MPEG object also includes methods 283, 284 for the event data and for the other data.

Steaming MPEG objects may be produced by stitching multiple streaming MPEG objects 201A, 202A...203A together in a session processor 200A. Construction of a scene may occur by linking multiple session processors 210A...220A wherein each session processor feeds the next session processor with the MPEG elements of an MPEG object as shown in Fig. 2A.

The MPEG object, either an atomic object or a streaming object may itself be an application with a hierarchy of internal objects. For example, there may be an application object that defines the type of application at the top level. Below the application object there may be a scene object that defines a user interface including the locations of MPEG elements that are to be stitched together along with reference to other MPEG objects that are necessary for the application. Below the scene object, the individual MPEG object could be located. Thus, an MPEG object may be a self contained application. In such an embodiment, in response to a request for an application, the client script would call the MPEG object that contains the application and the application would be instantiated.

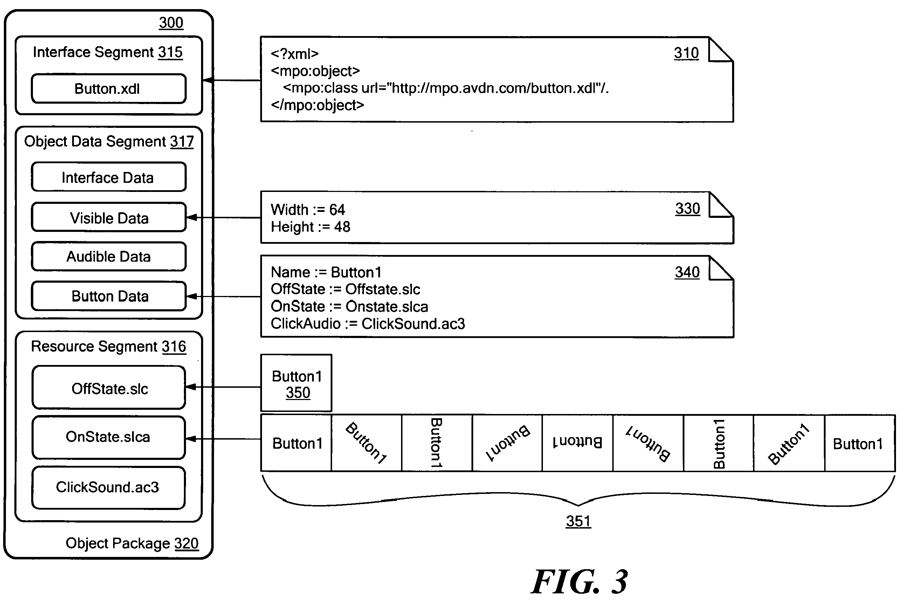

An example of an atomic MPEG object's data structure 300 along with pseudo code 310 for the MPEG object is shown in Fig. 3. Each MPEG object includes an interface segment 315 that may provide such information as class definitions and/or the location of the object and related class definitions in a distributed system. MPEG objects also include either a resource segment 316 or a method for at least receiving one or more resources.

The data structure 300 of Fig. 3 shows the object container/package 320 that includes an interface segment 315 that provides the location of the button MPEG object. The object also includes an object data segment 317. As shown there may be multiple object data segments (i.e. Interface Data, Visible Data, Audible Data, Button Data etc.) The object data is data that is used to define parameters of the object. For example, the visible data 330 for the object defines the height and the width of the button. The button data 340 provides a name for the button along with the states of the button and an audio file that is played when the button is selected (ClickAudio:= ClickSound.ac3). The resource segment 316 of the MPEG button object includes one or more video and/or audio files. In the example that is shown, the various state data for the button are provided 350, 351 wherein the video content would be a collection of macroblocks that represent one or more frames of MPEG video data. Thus, for each state of the button there would be at least one group of MPEG video elements composed of a plurality of macroblocks. The MPEG video elements would be the size of the height and width of the button and may be smaller than a frame to be displayed on a client's display device.

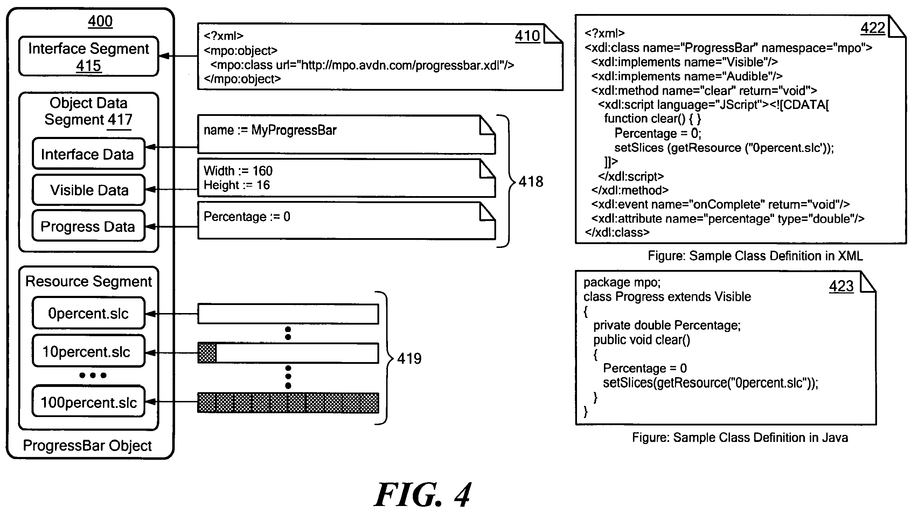

Fig. 4 shows another example of a possible MPEG object including the data structure 400 and pseudo code 410. This example is of a progress bar object. Like the MPEG object of Fig. 3 the progress bar MPEG object includes an interface segment 415 that identifies the location of the object's classes. Sample class definitions are provided in both XML and JAVA 422, 423. In the class definition the class includes methods for clearing the variable percentage and for setting the MPEG graphic initially to Opercent.slc wherein slc represents an MPEG slice. In addition, the progress bar includes an Object Data Segment 417 that provides interface data (name of the progress bar), visible data (the size of the progress bar MPEG slices) and progress data (an internal variable that is updated as progress of the event being measured increases) 418. The progress bar MPEG object includes resource data 316 that includes MPEG slices that represent the various graphical states representing percentages of completion of the event being monitored. Thus, there may be ten different progress bar graphics each composed of MPEG slices 419. These MPEG slices can be combined with other MPEG slices to form a complete MPEG frame.

An authoring environment provides for the creation and manipulation of MPEG objects and allows for the creation of scenes for an interactive application. The authoring environment is preferably a graphical user interface authoring tool for creating MPEG objects and interactive applications by graphical selection of MPEG objects. The authoring environment includes two interfaces. The first interface is the authoring tool for creating MPEG objects and defining application scenes. The second interface is a script editor that allows a designer to add events and methods to MPEG object or to a scene. The output of the authoring environment may be self contained binary code for an MPEG object or a structured data file representing an application. The structured data file for an application includes information regarding the MPEG objects within a scene, the location of the MPEG graphical element of the MPEG object within a frame, properties for the MPEG object, the address/memory location of the MPEG object, and scripts for the application that access and use the MPEG objects. The self contained binary code for an MPEG object may be used by an application. The application may access an MPEG object by referencing the memory location wherein the self-contained binary code is located.

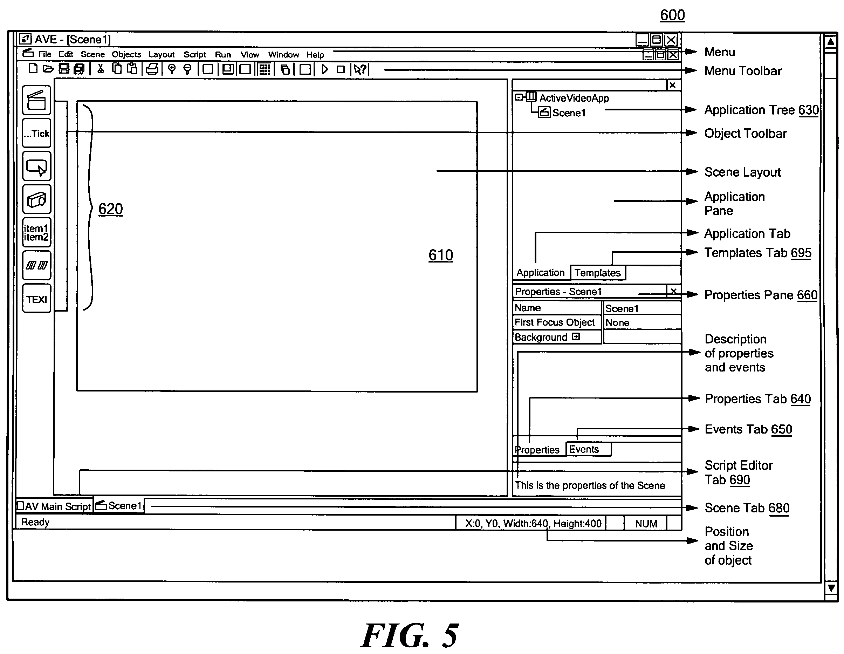

Fig. 5 graphically shows the authoring environment 600. The graphical environment allows an application designer to add MPEG objects into a scene layout 610 though graphical selection of a representative icon 620 that is linked to the underlying object code. In addition, the authoring environment allows a user to create new MPEG objects.

A top level scene will be the first scene that is provided to a user's device when the application is loaded. The application designer can select and drag and drop an object from the object toolbar 620. For example, the designer can insert user interface objects such as: a media player object, a ticker object, a button object, a static image, a list box object, or text. The authoring environment includes other objects such as container objects, session objects and timer objects that are not graphical in nature, but are part of the MPEG object model.

The authoring environment includes an application tree 630 that indicates the level of the application. For example, an application may include a plurality of video scenes wherein a single scene is equivalent to a portion of a webpage. The video scene may allow a user of the interactive video to drill down to a second scene by selecting a link within the video scene. The second scene would be at a level that is lower than the first scene. The application tree 630 provides both a listing of the scene hierarchy as well as a listing of the objects within the scene in a hierarchical order.

Rather than the creation of an application, the designer may create an object or a hierarchical object that contains a plurality of objects. Thus, the output of the authoring environment may also be that of an MPEG object. The designer would provide graphical content, for example in the form of a JPEG image, and the authoring environment would render the JPEG image and encode the JPEG image as a sequence of slices. The authoring environment would also allow the designer to define scripts, methods and properties for the object.

For example, a designer may wish to create a new media player MPEG object to display viewable media streams. The designer may import a graphic that provides a skin for the media player that surrounds the media stream. The graphic would be rendered by the authoring environment and encoded as a plurality of MPEG slices. The designer could then add in properties for the media player object such as the name and location of the media stream, whether a chaser (highlighting of the media stream within the video frame) is present, or the type of highlighting (i.e. yellow ring around the object that has focus). In addition, the designer may include properties that indicate the objects that are located in each direction in case a user decides to move focus from the media player object to another object. For example, there may be a chaser up, down, left, and right properties and associated methods that indicate the object that will receive focus if the current media player object has focus and the user uses a remote control coupled to the user's device (i.e. set-top box) and presses one of the direction keys. The MPEG object designer may provide the media player object with events such as onLoad that is triggered every time a user views the scene that has the media player object. Other events may include onFocus that indicates that the object has received focus and onBlur that indicates the object has lost focus. An onKeyPress event may be included indicating that if the object is in focus and a key is pressed that this event will occur. The events and properties for the Media Player Object are provided for exemplary purposes to show the nature and scope of events and properties that can be associated with an MPEG object. Other MPEG objects can be created having similar event and properties as well as distinct events and properties as required by the application designer.

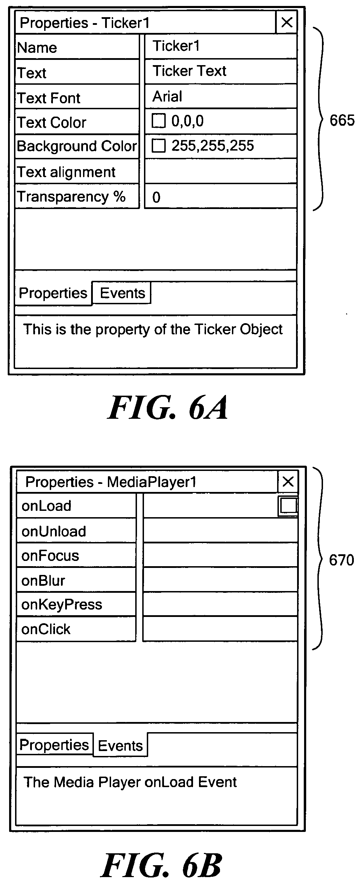

The authoring environment includes a properties 640 and event tab 650 for defining the properties of a predefined or new object. An example of the properties pane 660 is shown in Fig. 6A. The properties for a predefined ticker object (a banner that appears to scroll across the video frame) includes the background color, the text color, the text font and the transparency of the ticker 665. It should be recognized that each object type will have different properties. The events tab allows the application designer to make associations between events (received signals from the user) and the object. For example, a button object may include a plurality of states (on and off). Associated with each state may be a separate MPEG video sequence. Thus, there is a video graphic for the "on" state that indicates the button has been activated and a video graphic for the "off" state that indicates the button is inactive. The event tab allows the application designer to make the association between the signal received from the user, the state change of the object and the change in the video content that is part of the scene. Fig. 6B shows an example of the event tab when selected for a predefined media player object. The events include an onLoad, onFocus, onBlur, onKeyPress, and onClick events 670 for the media player. The authoring environment allows the designer to tab between scenes 680 and tab between the scene layout and the scripting page 690. As shown, the authoring environment includes a template tab. The template tab 695 allows for selection of previously saved scenes, so that a designer can use design information from previous scenes for the creation of new scenes. In addition, the designer may be provided with blank event panes and properties panes so that the designer can create a new MPEG object defining properties and events for the new object.

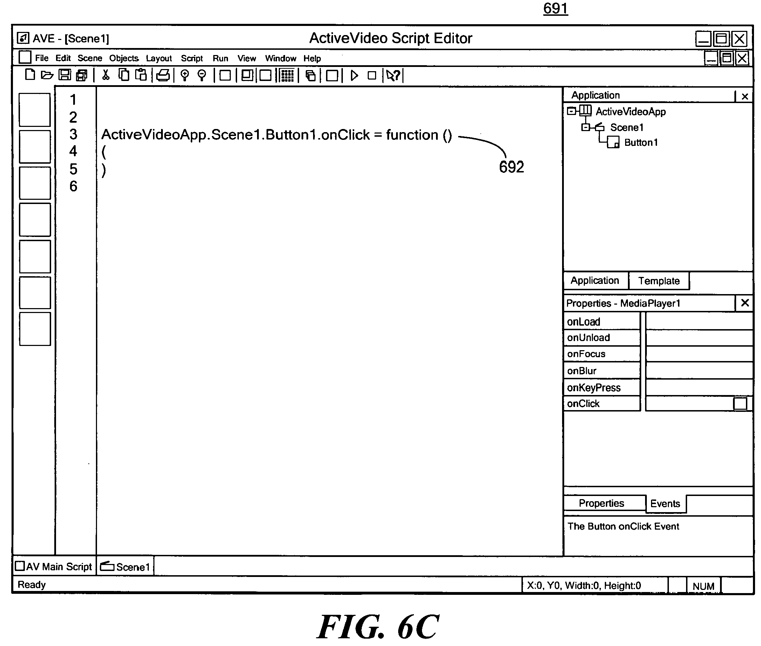

Scripts can be added to an application or to a newly created object by selecting the scripting tab. Fig. 6C shows the script editor 691. For example, the script may determine the function that is provided if a client attempts to select a button graphic 692. In this example, the script would be part of the application file. Similarly, the designer may designate that the script is to be used for creating a script internal to the MPEG object such as the client script within the MPEG streaming object shown in Fig. 2 or the script shown in the atomic object of Fig. 1.

MPEG objects may also be generated in real-time. In this paradigm, a request for an MPEG object is made to the session processor wherein the MPEG object has undefined video and/or audio content. A script at the session processor will cause a separate processor/server to obtain and render the video content for the object, encode the content as an MPEG element and return a complete MPEG object in real-time to the session processor. The server may construct either an atomic or streaming MPEG object. The server may also employee caching techniques to store the newly defined MPEG objects for subsequent MPEG object requests. This methodology is useful for distributed rendering of user specific or real-time generated content. For example, the server may act as a proxy that transcodes a client's photo album where the photos originate in a JPEG format and the server stores the photos as MPEG elements within an MPEG photo album object. The server may then pass the MPEG photo album object to the session processor for use with the requested application. Additionally, the MPEG photo album object would be saved for later retrieval when the client again requests the photo album.

Once the designer has completed the design of the application or the MPEG object, the system takes the received information and converts the information into either binary code if a new MPEG object is created or an AVML (active video mark-up language) file if the designer has created a new application. The AVML file is XML based in syntax, but contain specific structures relevant to the formation of an interactive video. For example, the AVML file can contain scripts that interact with MPEG objects. An explanation of the AVML language can be found in Appendix A attached to U.S. patent application entitled, entitled, **"Interactive Encoded Content System including Object Models for Viewing on a Remote Device"** filed concurrently herewith on January 11, 2008 and assigned to the same assignee, which is incorporated by reference in its entirety. All objects within an application scene have a hierarchy in a logical stack. The hierarchy is assigned based on the sequence of adding the object in the scene. The object first added to the scene is at the bottom of the stack. Objects may be moved up or down within the hierarchy prior to completion of the design and conversion of the graphical scene into the AVML file format. New MPEG objects that are in binary code may be incorporated into applications by referencing the storage location for the binary code.

The AVML file output from the authoring environment allows a stitcher module to be aware of the desired output slice configuration from the plurality of MPEG elements associated with the MPEG objects referenced within the AVML file. The AVML file indicates the size of the slices and the location of the slices within an MPEG frame. In addition, the AVML file describes the encapsulated self-describing object presentations or states of the MPEG objects. For example, if a button object is graphically placed into the authoring environment by a user, the authoring environment will determine the position of the button within an MPEG video frame based upon this dynamic placement. This position information will be translated into a frame location and will be associated with the MPEG button object. State information will also be placed within the AVML file. Thus, the AVML file will list the states for the MPEG button object (on and off) and will have a reference to the location of each MPEG graphical file (MPEG elements) for those two states.

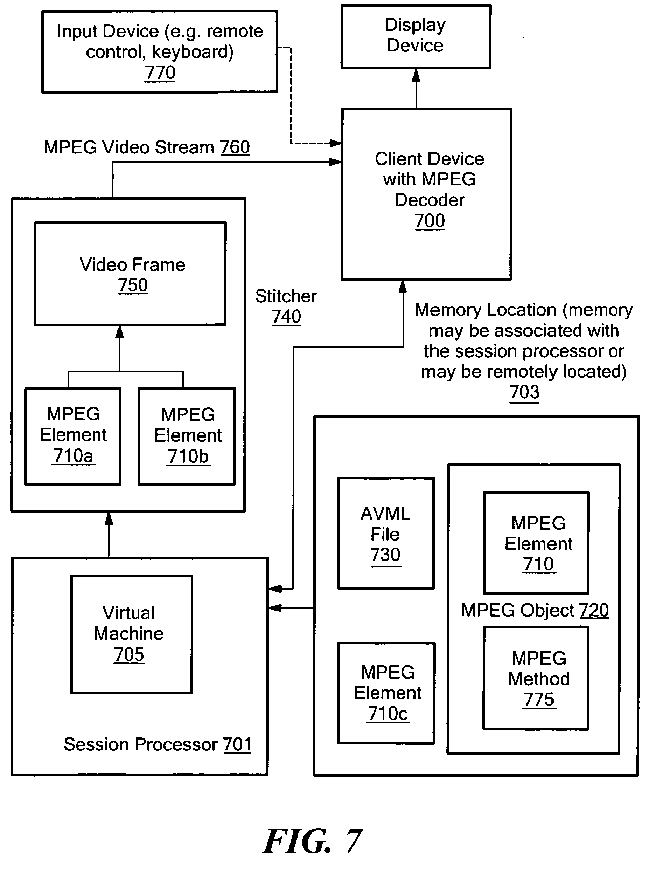

After an application is defined by an application designer, a client can request the application by using the client's device 700 as shown in Fig. 7. The client's device 700 will request an interactive session and a session processor 701 will be assigned. The session processor 701 will retrieve the AVML file 702 from a memory location 703 for the requested application and will run a virtual machine 705. The virtual machine 705 will parse the AVML file and identify the MPEG objects that the session processor 701 needs to access for the application. The virtual machine 705 will determine the position of each graphical element 710 from the accessed MPEG objects 720 within a video frame based upon the position information from the AVML file 730 and the sizing information as defined within the MPEG objects 720. As shown, only one MPEG object is present in the Fig. although many MPEG objects may be used in conjunction with the AVML file. Additionally, the MPEG object that is shown stored in memory has two representative components, the MPEG element 710 and the MPEG method 775. As expressed above, the MPEG element may be internal to the MPEG object or may be external. The MPEG elements 710a,b, which are preferably MPEG slices from one or more MPEG objects are then passed to the stitcher 740 by the virtual machine 705 and the stitcher sequences the slices so that they form an MPEG video frame 750 according to the position information parsed by the virtual machine. The stitcher is presented with the MPEG elements associated with the objects for each state. For example, if an MPEG button object has MPEG elements of 64x64 pixels and has two states (on and off), the stitcher will buffer the pre-encoded 64x64 pixel MPEG elements for each state.

The MPEG video frame 750 is encapsulated so that it forms a part of an MPEG video stream 760 that is then provided to the client device 700. The client device 700 can then decode the MPEG video stream. The client may then interact with MPEG objects by using an input device 770. The session processor 701 receives the signal form the input device 770 and based on the signal and the object selected methods 775 of the MPEG object 720 will be executed or interpreted by the virtual machine 705 and an MPEG video element 710a will be updated and the updated video element content 710c will be passed to the stitcher 740. Additionally, state information maintained by the session processor for the MPEG object that has been selected will be updated within the application (AVML file). The MPEG video element 710c may already be stored in a buffer within the stitcher. For example, the MPEG element 710c may be representative of a state. A request for change in state of a button may be received by the session processor and the stitcher can access the buffer that contains the MPEG slices of the MPEG element for the 'off-state' assuming the button was previously in the 'on-state.' The stitcher 740 can then replace the MPEG element slice 710a within the MPEG frame 750 and the updated MPEG frame 750a will be sent to the client device 700. Thus, the client interacts with the MPEG content even though the client device may only have an MPEG decoder and an upstream connection for sending signals/instructions to the assigned session processor 701.

Although the present invention has been described in terms of MPEG encoding, the invention may be employed with other block based encoding techniques for creating objects that are specific to those block based encoding techniques. The present invention may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof. In an embodiment of the present invention, predominantly all of the reordering logic may be implemented as a set of computer program instructions that is converted into a computer executable form, stored as such in a computer readable medium, and executed by a microprocessor within the array under the control of an operating system.

Computer program logic implementing all or part of the functionality previously described herein may be embodied in various forms, including, but in no way limited to, a source code form, a computer executable form, and various intermediate forms (e.g., forms generated by an assembler, compiler, networker, or locator.) Source code may include a series of computer program instructions implemented in any of various programming languages (e.g., an object code, an assembly language, or a high-level language such as FORTRAN, C, C++, JAVA, or HTML) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device. The computer program may be fixed in any form in a signal that is transmittable to a computer using any of various communication technologies, including, but in no way limited to, analog technologies, digital technologies, optical technologies, wireless technologies, networking technologies, and internetworking technologies. The computer program may be distributed in any form as a removable storage medium with accompanying printed or electronic documentation (e.g., shrink wrapped software or a magnetic tape), preloaded with a computer system (e.g., on system ROM or fixed disk), or distributed from a server or electronic bulletin board over the communication system (e.g., the Internet or World Wide Web.)

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL.)

While the invention has been particularly shown and described with reference to specific embodiments, it will be understood by those skilled in the art that various changes in form and detail may be made therein without departing from the spirit and scope of the invention as defined by the appended clauses. As will be apparent to those skilled in the art, techniques described above for panoramas may be applied to images that have been captured as non-panoramic images, and vice versa.

Embodiments of the present invention may be described, without limitation, by the following clauses. While these embodiments have been described in the clauses by process steps, an apparatus comprising a computer with associated display capable of executing the process steps in the clauses below is also included in the present invention. Likewise, a computer program product including computer executable instructions for executing the process steps in the clauses below and stored on a computer readable medium is included within the present invention.

### Interactive Encoded Content System including Object Models for Viewing on a Remote Device

### CROSS-REFERENCE TO RELATED APPLICATIONS

U.S. Patent Application entitled "MPEG Objects and Systems and Methods for Using MPEG Objects" and assigned to the same assignee filed contemporaneously herewith is related generally to the subject matter of the present application and is incorporated herein by reference in its entirety.

The present application claims priority from U.S. provisional applications serial no. 60/884,773, filed January 12, 2007, serial no 60/884,744, filed January 12, 2007, and serial no. 60/884,772, filed January 12, 2007, the full disclosures of which are hereby incorporated herein by reference.

### Technical Field and Background Art

The present invention relates to systems and methods for providing interactive content to a remote device and more specifically to systems and methods wherein an object model is associated with pre-encoded video content.

In cable television systems, the cable head-end transmits content to one or more subscribers wherein the content is transmitted in an encoded form. Typically, the content is encoded as digital MPEG video and each subscriber has a set-top box or cable card that is capable of decoding the MPEG video stream. Beyond providing linear content, cable providers can now provide interactive content, such as web pages or walled-garden content. As the Internet has become more dynamic, including video content on web pages and requiring applications or scripts for decoding the video content, cable providers have adapted to allow subscribers the ability to view these dynamic web pages. In order to composite a dynamic web page for transmission to a requesting subscriber in encoded form, the cable head end retrieves the requested web page and renders the web page. Thus, the cable headend must first decode any encoded content that appears within the dynamic webpage. For example, if a video is to be played on the webpage, the headend must retrieve the encoded video and decode each frame of the video. The cable headend then renders each frame to form a sequence of bitmap images of the Internet web page. Thus, the web page can only be composited together if all of the content that forms the web page is first decoded. Once the composite frames are complete, the composited video is sent to an encoder, such as an MPEG encoder to be re-encoded. The compressed MPEG video frames are then sent in an MPEG video stream to the user's set-top box.

Creating such composite encoded video frames in a cable television network requires intensive CPU and memory processing, since all encoded content must first be decoded, then composited, rendered, and re-encoded. In particular, the cable headend must decode and re-encode all of the content in real-time. Thus, allowing users to operate in an interactive environment with dynamic web pages is quite costly to cable operators because of the required processing. Additionally, such systems have the additional drawback that the image quality is degraded due to re-encoding of the encoded video.

### Summary of the Invention

Embodiments of the invention disclose a system for encoding at least one composite encoded video frame for display on a display device. The system includes a markup language-based graphical layout, the graphical layout including frame locations within the composite frame for at least the first encoded source and the second encoded source. Additionally, the system has a stitcher module for stitching together the first encoded source and the second encoded source according to the frame locations of the graphical layout. The stitcher forms an encoded frame without having to decode the block-based transform encoded data for at least the first source. The encoded video may be encoded using one of the MPEG standards, AVS, VC-1 or another block-based encoding protocol.

In certain embodiments of the invention, the system allows a user to interact with graphical elements on a display device. The processor maintains state information about one or more graphical elements identified in the graphical layout. The graphical elements in the graphical layout are associated with one of the encoded sources. A user transmits a request to change state of one of the graphical elements through a client device in communication with the system. The request for the change in state causes the processor to register the change in state and to obtain a new encoded source. The processor causes the stitcher to stitch the new encoded source in place of the encoded source representing the graphic element. The processor may also execute or interpret computer code associated with the graphic element.

For example, the graphic element may be a button object that has a plurality of states, associated encoded content for each state, and methods associated which each of the states. The system may also include a transmitter for transmitting to the client device the composited video content. The client device can then decode the composited video content and cause the composited video content to be displayed on a display device. In certain embodiments each graphical element within the graphical layout is associated with one or more encoded MPEG video frames or portions of a video frame, such as one or more macroblocks or slices. The compositor may use a single graphical element repeatedly within the MPEG video stream. For example, the button may be only a single video frame in one state and a single video frame in another state and the button may be composited together with MPEG encoded video content wherein the encoded macroblocks representing the button are stitched into the MPEG encoded video content in each frame.

Other embodiments of the invention disclose a system for creating one or more composite MPEG video frames forming an MPEG video stream. The MPEG video stream is provided to a client device that includes an MPEG decoder. The client device decodes the MPEG video stream and outputs the video to a display device. The composite MPEG video frames are created by obtaining a graphical layout for a video frame. The graphical layout includes frame locations within the composite MPEG video frame for at least a first MPEG source and a second MPEG source. Based upon the graphical layout the first and second MPEG sources are obtained. The first and second MPEG sources are provided to a stitcher module. The stitcher module stitches together the first MPEG source and the second MPEG source according to the frame locations of the graphical layout to form an MPEG frame without having to decode the macroblock data of the MPEG sources. In certain embodiments, the MPEG sources are only decoded to the slice layer and a processor maintains the positions of the slices within the frame for the first and second MPEG sources. This process is repeated for each frame of MPEG data in order to form an MPEG video stream.

In certain embodiments, the system includes a groomer. The groomer grooms the MPEG sources so that each MPEG element of the MPEG source is converted to an MPEG P-frame format. The groomer module may also identify any macroblocks in the second MPEG source that include motion vectors that reference other macroblocks in a section of the first MPEG source and re-encodes those macroblocks as intracoded macroblocks.

The system may include an association between an MPEG source and a method for the MPEG source forming an MPEG object. In such a system, a processor would receive a request from a client device and in response to the request, a method of the MPEG object would be used. The method may change the state of the MPEG object and cause the selection of a different MPEG source. Thus, the stitcher may replace a first MPEG source with a third MPEG source and stitch together the third and second MPEG sources to form a video frame. The video frame would be streamed to the client device and the client device could decode the updated MPEG video frame and display the updated material on the client's display. For example, an MPEG button object may have an "on" state and an "off" state and the MPEG button object may also include two MPEG graphics composed of a plurality of macroblocks forming slices. In response to a client requesting to change the state of the button from off to on, a method would update the state and cause the MPEG graphic representing an "on" button to be passed to the stitcher.

In certain embodiments, the video frame may be constructed from an unencoded graphic or a graphic that is not MPEG encoded and a groomed MPEG video source. The unencoded graphic may first be rendered. For example, a background may be rendered as a bit map. The background may then be encoded as a series of MPEG macroblocks divided up into slices. The stitcher can then stitch together the background and the groomed MPEG video content to form an MPEG video stream. The background may then be saved for later reuse. In such a configuration, the background would have cut-out regions wherein the slices in those regions would have no associated data, thus video content slices could be inserted into the cut-out. In other embodiments, real-time broadcasts may be received and groomed for creating MPEG video streams.

### Brief Description of the Drawings

The foregoing features of the invention will be more readily understood by reference to the following detailed description, taken with reference to the accompanying drawings, in which:
Fig. 1 is a block diagram showing a communications environment for implementing one version of the present invention;
Fig. 1A shows the regional processing offices and the video content distribution network;
Fig. 1B is a sample composite stream presentation and interaction layout file;
Fig. 1C shows the construction of a frame within the authoring environment;
Fig. 1D shows breakdown of a frame by macroblocks into elements;
Fig. 2 is a diagram showing multiple sources composited onto a display;
Fig. 3 is a diagram of a system incorporating grooming;
Fig. 4 is a diagram showing a video frame prior to grooming, after grooming, and with a video overlay in the groomed section;
Fig. 5 is a diagram showing how grooming is done, for example, removal of B-frames;
Fig. 6 is a diagram showing an MPEG frame structure;
Fig. 7 is a flow chart showing the grooming process for I, B, and P frames;
Fig. 8 is a diagram depicting removal of region boundary motion vectors;
Fig. 9 is a diagram showing the reordering of the DCT coefficients;
Fig. 10 shows an alternative groomer;
Fig. 11 is an example of a video frame;
Fig. 12 is a diagram showing video frames starting in random positions relative to each other;
Fig. 13 is a diagram of a display with multiple MPEG elements composited within the picture;
Fig. 14 is a diagram showing the slice breakdown of a picture consisting of multiple elements;
Fig. 15 is a diagram showing slice based encoding in preparation for stitching;
Fig. 16 is a diagram detailing the compositing of a video element into a picture;
Fig. 17 is a diagram detailing compositing of a 16x16 sized macroblock element into a background comprised of 24x24 sized macroblocks;
Fig. 18 is a flow chart showing the steps involved in encoding and building a composited picture;
Fig. 19 is a diagram providing a simple example of grooming;
Fig. 20 is a diagram showing that the composited element does not need to be rectangular nor contiguous;
Fig. 21 shows a diagram of elements on a screen wherein a single element is non-contiguous;
Fig. 22 shows a groomer for grooming linear broadcast content for multicasting to a plurality of processing offices and/or session processors;
Fig. 23 shows an example of a customized mosaic when displayed on a display device;
Fig. 24 is a diagram of an IP based network for providing interactive MPEG content;
FIG. 25 is a diagram of a cable based network for providing interactive MPEG content;
FIG. 26 is a flow-chart of the resource allocation process for a load balancer for use with a cable based network; and
FIG. 27 is a system diagram used to show communication between cable network elements for load balancing.

### Detailed Description of Specific Embodiments

As used in the following detailed description and in the appended claims the term "region" shall mean a logical grouping of MPEG (Motion Picture Expert Group) slices that are either contiguous or non-contiguous. When the term MPEG is used it shall refer to all variants of the MPEG standard including MPEG-2 and MPEG-4. The present invention as described in the embodiments below provides an environment for interactive MPEG content and communications between a processing office and a client device having an associated display, such as a television,. Although the present invention specifically references the MPEG specification and encoding, principles of the invention may be employed with other encoding techniques that are based upon block-based transforms that result in a representation of the content in the frequency domain. As used in the following specification and appended claims, the terms encode, encoded, and encoding shall refer to the process of compressing a digital data signal and formatting the compressed digital data signal to a protocol or standard. Encoded video data can be in any state other than a spatial representation. For example, encoded video data may be transform coded, quantized, and entropy encoded or any combination thereof. Therefore, data that has been transform coded will be considered to be encoded.

Although the present application refers to the display device as a television, the display device may be a cell phone, a Personal Digital Assistant (PDA) or other device that includes a display. A client device including a decoding device, such as a set-top box that can decode MPEG content, is associated with the display device of the user. The decoder and the display device may be integrated. The interactive MPEG content is created in an authoring environment allowing an application designer to design the interactive MPEG content creating an application having one or more scenes from various elements including video content from content providers and linear broadcasters. An application file is formed in an Active Video Markup Language (AVML). The AVML file produced by the authoring environment is an XML-based file defining the video graphical elements (i.e. MPEG slices) within a single frame/page, the sizes of the video graphical elements, the layout of the video graphical elements within the page/frame for each scene, links to the video graphical elements, and any scripts for the scene. The AVML file may also be authored in a text editor in addition to being generated by the authoring environment. The video graphical elements may be static graphics, dynamic graphics, or video content. It should be recognized that each element within a scene is really a sequence of images and a static graphic is an image that is repeatedly displayed and does not change over time. Each of the elements may be an MPEG object that can include both MPEG data for graphics and operations associated with the graphics. The interactive MPEG content can include multiple interactive MPEG objects within a scene with which a user can interact. For example, the scene may include a button MPEG object that provides encoded MPEG data forming the video graphic for the object and also includes a procedure for keeping track of the button state. The MPEG objects may work in coordination with the scripts. For example, an MPEG button object may keep track of its state (on/off), but a script within the scene will determine what occurs when that button is pressed. The script may associate the button state with a video program so that the button will indicate whether the video content is playing or stopped. MPEG objects always have an associated action as part of the object. In certain embodiments, the MPEG objects, such as a button MPEG object, may perform actions beyond keeping track of the status of the button. In such, embodiments, the MPEG object may also include a call to an external program, wherein the MPEG object will access the program when the button graphic is engaged. Thus, for a play/pause MPEG object button, the MPEG object may include code that keeps track of the state of the button, provides a graphical overlay based upon a state change, and/or causes a video player object to play or pause the video content depending on the state of the button.

Once an application is created within the authoring environment, and an interactive session is requested by a requesting client device, the processing office assigns a processor for the interactive session.

The assigned processor operational at the processing office runs a virtual machine and accesses and runs the requested application. The processor prepares the graphical part of the scene for transmission in the MPEG format. Upon receipt of the MPEG transmission by the client device and display on the user's display, a user can interact with the displayed content by using an input device in communication with the client device. The client device sends input requests from the user through a communication network to the application running on the assigned processor at the processing office or other remote location. In response, the assigned processor updates the graphical layout based upon the request and the state of the MPEG objects hereinafter referred to in total as the application state. New elements may be added to the scene or replaced within the scene or a completely new scene may be created. The assigned processor collects the elements and the objects for the scene, and either the assigned processor or another processor processes the data and operations according to the object(s) and produces the revised graphical representation in an MPEG format that is transmitted to the transceiver for display on the user's television. Although the above passage indicates that the assigned processor is located at the processing office, the assigned processor may be located at a remote location and need only be in communication with the processing office through a network connection. Similarly, although the assigned processor is described as handling all transactions with the client device, other processors may also be involved with requests and assembly of the content (MPEG objects) of the graphical layout for the application.

Fig. 1 is a block diagram showing a communications environment 100 for implementing one version of the present invention. The communications environment 100 allows an applications programmer to create an application for two-way interactivity with an end user. The end user views the application on a client device 110, such as a television, and can interact with the content by sending commands upstream through an upstream network 120 wherein upstream and downstream may be part of the same network or a separate network providing the return path link to the processing office. The application programmer creates an application that includes one or more scenes. Each scene is the equivalent of an HTML webpage except that each element within the scene is a video sequence. The application programmer designs the graphical representation of the scene and incorporates links to elements, such as audio and video files and objects, such as buttons and controls for the scene. The application programmer uses a graphical authoring tool 130 to graphically select the objects and elements. The authoring environment 130 may include a graphical interface that allows an application programmer to associate methods with elements creating video objects. The graphics may be MPEG encoded video, groomed MPEG video, still images or video in another format. The application programmer can incorporate content from a number of sources including content providers 160 (news sources, movie studios, RSS feeds etc.) and linear broadcast sources (broadcast media and cable, on demand video sources and web-based video sources) 170 into an application. The application programmer creates the application as a file in AVML (active video mark-up language) and sends the application file to a proxy/cache 140 within a video content distribution network 150. The AVML file format is an XML format. For example see Fig. 1B that shows a sample AVML file.

The content provider 160 may encode the video content as MPEG video/audio or the content may be in another graphical format (e.g. JPEG, BITMAP, H263, H264, VC-1 etc.). The content may be subsequently groomed and/or scaled in a Groomer/Scaler 190 to place the content into a preferable encoded MPEG format that will allow for stitching. If the content is not placed into the preferable MPEG format, the processing office will groom the format when an application that requires the content is requested by a client device. Linear broadcast content 170 from broadcast media services, like content from the content providers, will be groomed. The linear broadcast content is preferably groomed and/or scaled in Groomer/Scaler 180 that encodes the content in the preferable MPEG format for stitching prior to passing the content to the processing office.

The video content from the content producers 160 along with the applications created by application programmers are distributed through a video content distribution network 150 and are stored at distribution points 140. These distribution points are represented as the proxy/cache within Fig. 1. Content providers place their content for use with the interactive processing office in the video content distribution network at a proxy/cache 140 location. Thus, content providers 160 can provide their content to the cache 140 of the video content distribution network 150 and one or more processing office that implements the present architecture may access the content through the video content distribution network 150 when needed for an application. The video content distribution network 150 may be a local network, a regional network or a global network. Thus, when a virtual machine at a processing office requests an application, the application can be retrieved from one of the distribution points and the content as defined within the application's AVML file can be retrieved from the same or a different distribution point.

An end user of the system can request an interactive session by sending a command through the client device 110, such as a set-top box, to a processing office 105. In Fig. 1, only a single processing office is shown. However, in real-world applications, there may be a plurality of processing offices located in different regions, wherein each of the processing offices is in communication with a video content distribution network as shown in Fig. 1B. The processing office 105 assigns a processor for the end user for an interactive session. The processor maintains the session including all addressing and resource allocation. As used in the specification and the appended claims the term "virtual machine" 106 shall refer to the assigned processor, as well as, other processors at the processing office that perform functions, such as session management between the processing office and the client device as well as resource allocation (i.e. assignment of a processor for an interactive session).

The virtual machine 106 communicates its address to the client device 110 and an interactive session is established. The user can then request presentation of an interactive application (AVML) through the client device 110. The request is received by the virtual machine 106 and in response, the virtual machine 106 causes the AVML file to be retrieved from the proxy/cache 140 and installed into a memory cache 107 that is accessible by the virtual machine 106. It should be recognized that the virtual machine 106 may be in simultaneous communication with a plurality of client devices 110 and the client devices may be different device types. For example, a first device may be a cellular telephone, a second device may be a set-top box, and a third device may be a personal digital assistant wherein each device access the same or a different application.

In response to a request for an application, the virtual machine 106 processes the application and requests elements and MPEG objects that are part of the scene to be moved from the proxy/cache into memory 107 associated with the virtual machine 106. An MPEG object includes both a visual component and an actionable component. The visual component may be encoded as one or more MPEG slices or provided in another graphical format. The actionable component may be storing the state of the object, may include performing computations, accessing an associated program, or displaying overlay graphics to identify the graphical component as active. An overlay graphic may be produced by a signal being transmitted to a client device wherein the client device creates a graphic in the overlay plane on the display device. It should be recognized that a scene is not a static graphic, but rather includes a plurality of video frames wherein the content of the frames can change over time.

The virtual machine 106 determines based upon the scene information, including the application state, the size and location of the various elements and objects for a scene. Each graphical element may be formed from contiguous or non-contiguous MPEG slices. The virtual machine keeps track of the location of all of the slices for each graphical element. All of the slices that define a graphical element form a region. The virtual machine 106 keeps track of each region. Based on the display position information within the AVML file, the slice positions for the elements and background within a video frame are set. If the graphical elements are not already in a groomed format, the virtual machine passes that element to an element renderer. The renderer renders the graphical element as a bitmap and the renderer passes the bitmap to an MPEG element encoder 109. The MPEG element encoder encodes the bitmap as an MPEG video sequence. The MPEG encoder processes the bitmap so that it outputs a series of P-frames. An example of content that is not already pre-encoded and pre-groomed is personalized content. For example, if a user has stored music files at the processing office and the graphic element to be presented is a listing of the user's music files, this graphic would be created in real-time as a bitmap by the virtual machine. The virtual machine would pass the bitmap to the element renderer 108 which would render the bitmap and pass the bitmap to the MPEG element encoder 109 for grooming.

After the graphical elements are groomed by the MPEG element encoder, the MPEG element encoder 109 passes the graphical elements to memory 107 for later retrieval by the virtual machine 106 for other interactive sessions by other users. The MPEG encoder 109 also passes the MPEG encoded graphical elements to the stitcher 115. The rendering of an element and MPEG encoding of an element may be accomplished in the same or a separate processor from the virtual machine 106. The virtual machine 106 also determines if there are any scripts within the application that need to be interpreted. If there are scripts, the scripts are interpreted by the virtual machine 106.

Each scene in an application can include a plurality of elements including static graphics, object graphics that change based upon user interaction, and video content. For example, a scene may include a background (static graphic), along with a media player for playback of audio video and multimedia content (object graphic) having a plurality of buttons, and a video content window (video content) for displaying the streaming video content. Each button of the media player may itself be a separate object graphic that includes its own associated methods.

The virtual machine 106 acquires each of the graphical elements (background, media player graphic, and video frame) for a frame and determines the location of each element. Once all of the objects and elements (background, video content) are acquired, the elements and graphical objects are passed to the stitcher/compositor 115 along with positioning information for the elements and MPEG objects. The stitcher 115 stitches together each of the elements (video content, buttons, graphics, background) according to the mapping provided by the virtual machine 106. Each of the elements is placed on a macroblock boundary and when stitched together the elements form an MPEG video frame. On a periodic basis all of the elements of a scene frame are encoded to form a reference P-frame in order to refresh the sequence and avoid dropped macroblocks. The MPEG video stream is then transmitted to the address of client device through the down stream network. The process continues for each of the video frames. Although the specification refers to MPEG as the encoding process, other encoding processes may also be used with this system.

The virtual machine 106 or other processor or process at the processing office 105 maintains information about each of the elements and the location of the elements on the screen. The virtual machine 106 also has access to the methods for the objects associated with each of the elements. For example, a media player may have a media player object that includes a plurality of routines. The routines can include, play, stop, fast forward, rewind, and pause. Each of the routines includes code and upon a user sending a request to the processing office 105 for activation of one of the routines, the object is accessed and the routine is run. The routine may be a JAVA-based applet, a script to be interpreted, or a separate computer program capable of being run within the operating system associated with the virtual machine.

The processing office 105 may also create a linked data structure for determining the routine to execute or interpret based upon a signal received by the processor from the client device associated with the television. The linked data structure may be formed by an included mapping module. The data structure associates each resource and associated object relative to every other resource and object. For example, if a user has already engaged the play control, a media player object is activated and the video content is displayed. As the video content is playing in a media player window, the user can depress a directional key on the user's remote control. In this example, the depression of the directional key is indicative of pressing a stop button. The transceiver produces a directional signal and the assigned processor receives the directional signal. The virtual machine 106 or other processor at the processing office 105 accesses the linked data structure and locates the element in the direction of the directional key press. The database indicates that the element is a stop button that is part of a media player object and the processor implements the routine for stopping the video content. The routine will cause the requested content to stop. The last video content frame will be frozen and a depressed stop button graphic will be interwoven by the stitcher module into the frame. The routine may also include a focus graphic to provide focus around the stop button. For example, the virtual machine can cause the stitcher to enclose the graphic having focus with a boarder that is 1 macroblock wide. Thus, when the video frame is decoded and displayed, the user will be able to identify the graphic/object that the user can interact with. The frame will then be passed to a multiplexor and sent through the downstream network to the client device. The MPEG encoded video frame is decoded by the client device displayed on either the client device (cell phone, PDA) or on a separate display device (monitor, television). This process occurs in near real-time with a minimal delay. Thus, each scene from an application results in a plurality of video frames each representing a snapshot of the media player application state.

The virtual machine 106 will repeatedly receive commands from the client device and in response to the commands will either directly or indirectly access the objects and execute or interpret the routines of the objects in response to user interaction and application interaction model. In such a system, the video content material displayed on the television of the user is merely decoded MPEG content and all of the processing for the interactivity occurs at the processing office and is orchestrated by the assigned virtual machine. Thus, the client device only needs a decoder and need not cache or process any of the content.

It should be recognized that through user requests from a client device, the processing office could replace a video element with another video element. For example, a user may select from a list of movies to display and therefore a first video content element would be replaced by a second video content element if the user selects to switch between two movies. The virtual machine, which maintains a listing of the location of each element and region forming an element can easily replace elements within a scene creating a new MPEG video frame wherein the frame is stitched together including the new element in the stitcher 115.

Fig. 1A shows the interoperation between the digital content distribution network 100A, the content providers 110A and the processing offices 120A. In this example, the content providers 130A distribute content into the video content distribution network 100A. Either the content providers 130A or processors associated with the video content distribution network convert the content to an MPEG format that is compatible with the processing office's 120A creation of interactive MPEG content. A content management server 140A of the digital content distribution network 100A distributes the MPEG-encoded content among proxy/caches 150A-154A located in different regions if the content is of a global/national scope. If the content is of a regional/local scope, the content will reside in a regional/local proxy/cache. The content may be mirrored throughout the country or world at different locations in order to increase access times. When an end user, through their client device 160A, requests an application from a regional processing office, the regional processing office will access the requested application. The requested application may be located within the video content distribution network or the application may reside locally to the regional processing office or within the network of interconnected processing offices. Once the application is retrieved, the virtual machine assigned at the regional processing office will determine the video content that needs to be retrieved. The content management server 140A assists the virtual machine in locating the content within the video content distribution network. The content management server 140A can determine if the content is located on a regional or local proxy/cache and also locate the nearest proxy/cache. For example, the application may include advertising and the content management server will direct the virtual machine to retrieve the advertising from a local proxy/cache. As shown in Fig 1A., both the Midwestern and Southeastern regional processing offices 120A also have local proxy/caches 153A, 154A. These proxy/caches may contain local news and local advertising. Thus, the scenes presented to an end user in the Southeast may appear different to an end user in the Midwest. Each end user may be presented with different local news stories or different advertising. Once the content and the application are retrieved, the virtual machine processes the content and creates an MPEG video stream. The MPEG video stream is then directed to the requesting client device. The end user may then interact with the content requesting an updated scene with new content and the virtual machine at the processing office will update the scene by requesting the new video content from the proxy/cache of the video content distribution network.

### AUTHORING ENVIRONMENT

The authoring environment includes a graphical editor as shown in Fig. 1C for developing interactive applications. An application includes one or more scenes. As shown in Fig. 1B the application window shows that the application is composed of three scenes (scene 1, scene 2 and scene 3). The graphical editor allows a developer to select elements to be placed into the scene forming a display that will eventually be shown on a display device associated with the user. In some embodiments, the elements are dragged-and-dropped into the application window. For example, a developer may want to include a media player object and media player button objects and will select these elements from a toolbar and drag and drop the elements in the window. Once a graphical element is in the window, the developer can select the element and a property window for the element is provided. The property window includes at least the location of the graphical element (address), and the size of the graphical element. If the graphical element is associated with an object, the property window will include a tab that allows the developer to switch to a bitmap event screen and alter the associated object parameters. For example, a user may change the functionality associated with a button or may define a program associated with the button.

As shown in Fig. 1D, the stitcher of the system creates a series of MPEG frames for the scene based upon the AVML file that is the output of the authoring environment. Each element/graphical object within a scene is composed of different slices defining a region. A region defining an element/object may be contiguous or non-contiguous. The system snaps the slices forming the graphics on a macro-block boundary. Each element need not have contiguous slices. For example, the background has a number of non-contiguous slices each composed of a plurality of macroblocks. The background, if it is static, can be defined by intracoded macroblocks. Similarly, graphics for each of the buttons can be intracoded; however the buttons are associated with a state and have multiple possible graphics. For example, the button may have a first state "off" and a second state "on" wherein the first graphic shows an image of a button in a non-depressed state and the second graphic shows the button in a depressed state. Fig. 1C also shows a third graphical element, which is the window for the movie. The movie slices are encoded with a mix of intracoded and intercoded macroblocks and dynamically changes based upon the content. Similarly if the background is dynamic, the background can be encoded with both intracoded and intercoded macroblocks, subject to the requirements below regarding grooming.

When a user selects an application through a client device, the processing office will stitch together the elements in accordance with the layout from the graphical editor of the authoring environment. The output of the authoring environment includes an Active Video Mark-up Language file (AVML) The AVML file provides state information about multi-state elements such as a button, the address of the associated graphic, and the size of the graphic. The AVML file indicates the locations within the MPEG frame for each element, indicates the objects that are associated with each element, and includes the scripts that define changes to the MPEG frame based upon user's actions. For example, a user may send an instruction signal to the processing office and the processing office will use the AVML file to construct a set of new MPEG frames based upon the received instruction signal. A user may want to switch between various video elements and may send an instruction signal to the processing office. The processing office will remove a video element within the layout for a frame and will select the second video element causing the second video element to be stitched into the MPEG frame at the location of the first video element. This process is described below.

### AVML FILE

The application programming environment outputs an AVML file. The AVML file has an XML-based syntax. The AVML file syntax includes a root object <AVML>. Other top level tags include <initialscene> that specifies the first scene to be loaded when an application starts. The <script> tag identifies a script and a <scene> tag identifies a scene. There may also be lower level tags to each of the top level tags, so that there is a hierarchy for applying the data within the tag. For example, a top level stream tag may include <aspect ratio> for the video stream, <video format>, <bit rate>, <audio format> and <audio bit rate>. Similarly, a scene tag may include each of the elements within the scene. For example, <background> for the background, <button> for a button object, and <static image> for a still graphic. Other tags include <size> and <pos> for the size and position of an element and may be lower level tags for each element within a scene. An example of an AVML file is provided in Fig. 1B. Further discussion of the AVML file syntax is provided in Appendix A attached hereto.

### GROOMER

Fig. 2 is a diagram of a representative display that could be provided to a television of a requesting client device. The display 200 shows three separate video content elements appearing on the screen. Element #1 211 is the background in which element #2 215 and element #3 217 are inserted.

Fig. 3 shows a first embodiment of a system that can generate the display of Fig. 2. In this diagram, the three video content elements come in as encoded video: element #1 303, element #2 305, and element #3 307. The groomers 310 each receive an encoded video content element and the groomers process each element before the stitcher 340 combines the groomed video content elements into a single composited video 380. It should be understood by one of ordinary skill in the art that groomers 310 may be a single processor or multiple processors that operate in parallel. The groomers may be located either within the processing office, at content providers' facilities, or linear broadcast provider's facilities. The groomers may not be directly connected to the stitcher, as shown in Fig. 1 wherein the groomers 190 and 180 are not directly coupled to stitcher 115.

The process of stitching is described below and can be performed in a much more efficient manner if the elements have been groomed first.

Grooming removes some of the interdependencies present in compressed video. The groomer will convert I and B frames to P frames and will fix any stray motion vectors that reference a section of another frame of video that has been cropped or removed. Thus, a groomed video stream can be used in combination with other groomed video streams and encoded still images to form a composite MPEG video stream. Each groomed video stream includes a plurality of frames and the frames can be can be easily inserted into another groomed frame wherein the composite frames are grouped together to form an MPEG video stream. It should be noted that the groomed frames may be formed from one or more MPEG slices and may be smaller in size than an MPEG video frame in the MPEG video stream.

Fig. 4 is an example of a composite video frame that contains a plurality of elements 410, 420. This composite video frame is provided for illustrative purposes. The groomers as shown in Fig. 1 only receive a single element and groom the element (video sequence), so that the video sequence can be stitched together in the stitcher. The groomers do not receive a plurality of elements simultaneously. In this example, the background video frame 410 includes 1 row per slice (this is an example only; the row could be composed of any number of slices). As shown in Fig. 1, the layout of the video frame including the location of all of the elements within the scene are defined by the application programmer in the AVML file. For example, the application programmer may design the background element for a scene. Thus, the application programmer may have the background encoded as MPEG video and may groom the background prior to having the background placed into the proxy cache 140. Therefore, when an application is requested, each of the elements within the scene of the application may be groomed video and the groomed video can easily be stitched together. It should be noted that although two groomers are shown within Fig. 1 for the content provider and for the linear broadcasters, groomers may be present in other parts of the system.

As shown, video element 420 is inserted within the background video frame 410 (also for example only; this element could also consist of multiple slices per row). If a macroblock within the original video frame 410 references another macroblock in determining its value and the reference macroblock is removed from the frame because the video image 420 is inserted in its place, the macroblocks value needs to be recalculated. Similarly, if a macroblock references another macroblock in a subsequent frame and that macroblock is removed and other source material is inserted in its place, the macroblock values need to be recalculated. This is addressed by grooming the video 430. The video frame is processed so that the rows contain multiple slices some of which are specifically sized and located to match the substitute video content. After this process is complete, it is a simple task to replace some of the current slices with the overlay video resulting in a groomed video with overlay 440. The groomed video stream has been specifically defined to address that particular overlay. A different overlay would dictate different grooming parameters. Thus, this type of grooming addresses the process of segmenting a video frame into slices in preparation for stitching. It should be noted that there is never a need to add slices to the overlay element. Slices are only added to the receiving element, that is, the element into which the overlay will be placed. The groomed video stream can contain information about the stream's groomed characteristics. Characteristics that can be provided include: 1. the locations for the upper left and lower right corners of the groomed window. 2. The location of upper left corner only and then the size of the window. The size of the slice accurate to the pixel level.

There are also two ways to provide the characteristic information in the video stream. The first is to provide that information in the slice header. The second is to provide the information in the extended data slice structure. Either of these options can be used to successfully pass the necessary information to future processing stages, such as the virtual machine and stitcher.

Fig. 5 shows the video sequence for a video graphical element before and after grooming. The original incoming encoded stream 500 has a sequence of MPEG I-frames 510, B-frames 530 550, and P-frames 570 as are known to those of ordinary skill in the art. In this original stream, the I-frame is used as a reference 512 for all the other frames, both B and P. This is shown via the arrows from the I-frame to all the other frames. Also, the P-frame is used as a reference frame 572 for both B-frames. The groomer processes the stream and replaces all the frames with P-frames. First the original I-frame 510 is converted to an intracoded P-frame 520. Next the B-frames 530, 550 are converted 535 to P-frames 540 and 560 and modified to reference only the frame immediately prior. Also, the P-frames 570 are modified to move their reference 574 from the original I-frame 510 to the newly created P-frame 560 immediately in preceding themselves. The resulting P-frame 580 is shown in the output stream of groomed encoded frames 590.

Fig. 6 is a diagram of a standard MPEG-2 bitstream syntax. MPEG-2 is used as an example and the invention should not be viewed as limited to this example. The hierarchical structure of the bitstream starts at the sequence level. This contains the sequence header 600 followed by group of picture (GOP) data 605. The GOP data contains the GOP header 620 followed by picture data 625. The picture data 625 contains the picture header 640 followed by the slice data 645. The slice data 645 consists of some slice overhead 660 followed by macroblock data 665. Finally, the macroblock data 665 consists of some macroblock overhead 680 followed by block data 685 (the block data is broken down further but that is not required for purposes of this reference). Sequence headers act as normal in the groomer. However, there are no GOP headers output of the groomer since all frames are P-frames. The remainder of the headers may be modified to meet the output parameters required.

Fig. 7 provides a flow for grooming the video sequence. First the frame type is determining 700: I-frame 703 B-frame 705, or P-frame 707. I-frames 703 as do B-frames 705 need to be converted to P-frames. In addition, I-frames need to match the picture information that the stitcher requires. For example, this information may indicate the encoding parameters set in the picture header. Therefore, the first step is to modify the picture header information 730 so that the information in the picture header is consistent for all groomed video sequences. The stitcher settings are system level settings that may be included in the application. These are the parameters that will be used for all levels of the bit stream. The items that require modification are provided in the table below:

**Table 1: Picture Header Information**

| # | Name | Value |
|---|---|---|
| A | Picture Coding Type | P-Frame |
| B | Intra DC Precision | Match stitcher setting |
| C | Picture structure | Frame |
| D | Frame prediction frame DCT | Match stitcher setting |
| E | Quant scale type | Match stitcher setting |
| F | Intra VLC format | Match stitcher setting |
| G | Alternate scan | Normal scan |
| H | Progressive frame | Progressive scan |

Next, the slice overhead information 740 must be modified. The parameters to modify are given in the table below.

**Table 2: Slice Overhead Information**

| **#** | **Name** | **Value** |
|---|---|---|
| A | Quantizer Scale Code | Will change if there is a "scale type" change in the picture header. |

Next, the macroblock overhead 750 information may require modification. The values to be modified are given in the table below.

**Table 3: Macroblock Information**

| **#** | **Name** | **Value** |
|---|---|---|
| A | Macroblock type | Change the variable length code from that for an I frame to that for a P frame) |
| B | DCT type | Set to frame if not already |
| C | Concealment motion vectors | Removed |

Finally, the block information 760 may require modification. The items to modify are given in the table below.

**Table 4: Block Information**

| **#** | **Name** | **Value** |
|---|---|---|
| A | DCT coefficient values | Require updating if there were any quantizer changes at the picture or slice level. |
| B | DCT coefficient ordering | Need to be reordered if "alternate scan" was changed from what it was before. |

Once the block changes are complete, the process can start over with the next frame of video.

If the frame type is a B-frame 705, the same steps required for an I-frame are also required for the B-frame. However, in addition, the motion vectors 770 need to be modified. There are two scenarios: B-frame immediately following an I-frame or P-frame, or a B-frame following another B-frame. Should the B-frame follow either an I or P frame, the motion vector, using the I or P frame as a reference, can remain the same and only the residual would need to change. This may be as simple as converting the forward looking motion vector to be the residual.

For the B-frames that follow another B-frame, the motion vector and its residual will both need to be modified. The second B-frame must now reference the newly converted B to P frame immediately preceding it. First, the B-frame and its reference are decoded and the motion vector and the residual are recalculated. It must be noted that while the frame is decoded to update the motion vectors, there is no need to re-encode the DCT coefficients. These remain the same. Only the motion vector and residual are calculated and modified.

The last frame type is the P-frame. This frame type also follows the same path as an I-frame Fig. 8 diagrams the motion vector modification for macroblocks adjacent to a region boundary. It should be recognized that motion vectors on a region boundary are most relevant to background elements into which other video elements are being inserted. Therefore, grooming of the background elements may be accomplished by the application creator. Similarly, if a video element is cropped and is being inserted into a "hole" in the background element, the cropped element may include motion vectors that point to locations outside of the "hole". Grooming motion vectors for a cropped image may be done by the content creator if the content creator knows the size that the video element needs to be cropped, or the grooming may be accomplished by the virtual machine in combination with the element renderer and MPEG encoder if the video element to be inserted is larger than the size of the "hole" in the background.

Fig. 8 graphically shows the problems that occur with motion vectors that surround a region that is being removed from a background element. In the example of Fig.8, the scene includes two regions: #1 800 and #2 820. There are two examples of improper motion vector references. In the first instance, region #2 820 that is inserting into region #1 800 (background), uses region #1 800 (background) as a reference for motion 840. Thus, the motion vectors in region #2 need to be corrected. The second instance of improper motion vector references occurs where region #1 800 uses region #2 820 as a reference for motion 860. The groomer removes these improper motion vector references by either re-encoding them using a frame within the same region or converting the macroblocks to be intracoded blocks.

In addition to updating motion vectors and changing frame types, the groomer may also convert field based encoded macroblocks to frame based encoded macroblocks. Fig. 9 shows the conversion of a field based encoded macroblocks to frame based. For reference, a frame based set of blocks 900 is compressed. The compressed block set 910 contains the same information in the same blocks but now it is contained in compressed form. On the other hand, a field based macroblock 940 is also compressed. When this is done, all the even rows (0, 2,4, 6) are placed in the upper blocks (0 & 1) while the odd rows (1, 3, 5, 7) are placed in the lower blocks (2&3). When the compressed field based macroblock 950 is converted to a frame based macroblock 970, the coefficients need to be moved from one block to another 980. That is, the rows must be reconstructed in numerical order rather than in even odd. Rows 1 & 3, which in the field based encoding were in blocks 2 & 3, are now moved back up to blocks 0 or 1 respectively. Correspondingly, rows 4 & 6 are moved from blocks 0 & 1 and placed down in blocks 2 & 3.

Fig. 10 shows a second embodiment of the grooming platform. All the components are the same as the first embodiment: groomers 1110A and stitcher 1130A. The inputs are also the same: input #1 1103A, input #2 1105A, and input #3 1107A as well as the composited output 1280. The difference in this system is that the stitcher 1140A provides feedback, both synchronization and frame type information, to each of the groomers 1110A. With the synchronization and frame type information, the stitcher 1240 can define a GOP structure that the groomers 1110A follow. With this feedback and the GOP structure, the output of the groomer is no longer P-frames only but can also include I-frames and B-frames. The limitation to an embodiment without feedback is that no groomer would know what type of frame the stitcher was building. In this second embodiment with the feedback from the stitcher 1140A, the groomers 1110A will know what picture type the stitcher is building and so the groomers will provide a matching frame type. This improves the picture quality assuming the same data rate and may decrease the data rate assuming that the quality level is kept constant due to more reference frames and less modification of existing frames while, at the same time, reducing the bit rate since B-frames are allowed.

### STITCHER

Fig. 11 shows an environment for implementing a stitcher module, such as the stitcher shown in Fig. 1. The stitcher 1200 receives video elements from different sources. Uncompressed content 1210 is encoded in an encoder 1215, such as the MPEG element encoder shown in Fig. 1 prior to its arrival at the stitcher 1200. Compressed or encoded video 1220 does not need to be encoded. There is, however, the need to separate the audio 1217 1227 from the video 1219 1229 in both cases. The audio is fed into an audio selector 1230 to be included in the stream. The video is fed into a frame synchronization block 1240 before it is put into a buffer 1250. The frame constructor 1270 pulls data from the buffers 1250 based on input from the controller 1275. The video out of the frame constructor 1270 is fed into a multiplexer 1280 along with the audio after the audio has been delayed 1260 to align with the video. The multiplexer 1280 combines the audio and video streams and outputs the composited, encoded output streams 1290 that can be played on any standard decoder. Multiplexing a data stream into a program or transport stream is well known to those familiar in the art. The encoded video sources can be real-time, from a stored location, or a combination of both. There is no requirement that all of the sources arrive in real-time.

Fig. 12 shows an example of three video content elements that are temporally out of sync. In order to synchronize the three elements, element #1 1300 is used as an "anchor" or "reference" frame. That is, it is used as the master frame and all other frames will be aligned to it (this is for example only; the system could have its own master frame reference separate from any of the incoming video sources). The output frame timing 1370 1380 is set to match the frame timing of element #1 1300. Elements #2 & 3 1320 and 1340 do not align with element #1 1300. Therefore, their frame start is located and they are stored in a buffer. For example, element #2 1320 will be delayed one frame so an entire frame is available before it is composited along with the reference frame. Element #3 is much slower than the reference frame. Element #3 is collected over two frames and presented over two frames. That is, each frame of element #3 1340 is displayed for two consecutive frames in order to match the frame rate of the reference frame. Conversely if a frame, not shown, was running at twice the rate of the reference frame, then every other frame would be dropped (not shown). More than likely all elements are running at almost the same speed so only infrequently would a frame need to be repeated or dropped in order to maintain synchronization.

Fig. 13 shows an example composited video frame 1400. In this example, the frame is made up of 40 macroblocks per row 1410 with 30 rows per picture 1420. The size is used as an example and it not intended to restrict the scope of the invention. The frame includes a background 1430 that has elements 1440 composited in various locations. These elements 1440 can be video elements, static elements, etc. That is, the frame is constructed of a full background, which then has particular areas replaced with different elements. This particular example shows four elements composited on a background.

Fig. 14 shows a more detailed version of the screen illustrating the slices within the picture. The diagram depicts a picture consisting of 40 macroblocks per row and 30 rows per picture (non-restrictive, for illustration purposes only). However, it also shows the picture divided up into slices. The size of the slice can be a full row 1590 (shown as shaded) or a few macroblocks within a row 1580 (shown as rectangle with diagonal lines inside element #4 1528). The background 1530 has been broken into multiple regions with the slice size matching the width of each region. This can be better seen by looking at element #1 1522. Element #1 1522 has been defined to be twelve macroblocks wide. The slice size for this region for both the background 1530 and element #1 1522 is then defined to be that exact number of macroblocks. Element #1 1522 is then comprised of six slices, each slice containing 12 macroblocks. In a similar fashion, element #2 1524 consists of four slices of eight macroblocks per slice; element #3 1526 is eighteen slices of 23 macroblocks per slice; and element #4 1528 is seventeen slices of five macroblocks per slice. It is evident that the background 1530 and the elements can be defined to be composed of any number of slices which, in turn, can be any number of macroblocks. This gives full flexibility to arrange the picture and the elements in any fashion desired. The process of determining the slice content for each element along with the positioning of the elements within the video frame are determined by the virtual machine of Fig.1 using the AVML file.

Fig. 15 shows the preparation of the background 1600 by the virtual machine in order for stitching to occur in the stitcher. The virtual machine gathers an uncompressed background based upon the AVML file and forwards the background to the element encoder. The virtual machine forwards the locations within the background where elements will be placed in the frame. As shown the background 1620 has been broken into a particular slice configuration by the virtual machine with a hole(s) that exactly aligns with where the element(s) will (are to) be placed prior to passing the background to the element encoder. The encoder compresses the background leaving a "hole" or "holes" where the element(s) will be placed. The encoder passes the compressed background to memory. The virtual machine then access the memory and retrieves each element for a scene and passes the encoded elements to the stitcher along with a list of the locations for each slice for each of the elements. The stitcher takes each of the slices and places the slices into the proper position.

This particular type of encoding is called "slice based encoding". A slice based encoder/virtual machine is one that is aware of the desired slice structure of the output frame and performs its encoding appropriately. That is, the encoder knows the size of the slices and where they belong. It knows where to leave holes if that is required. By being aware of the desired output slice configuration, the virtual machine provides an output that is easily stitched.

Fig. 16 shows the compositing process after the background element has been compressed. The background element 1700 has been compressed into seven slices with a hole where the element 1740 is to be placed. The composite image 1780 shows the result of the combination of the background element 1700 and element 1740. The composite video frame 1780 shows the slices that have been inserted in grey. Although this diagram depicts a single element composited onto a background, it is possible to composite any number of elements that will fit onto a user's display. Furthermore, the number of slices per row for the background or the element can be greater than what is shown. The slice start and slice end points of the background and elements must align.
Fig. 17 is a diagram showing different macroblock sizes between the background element 1800 (24 pixels by 24 pixels) and the added video content element 1840 (16 pixels by 16 pixels). The composited video frame 1880 shows two cases. Horizontally, the pixels align as there are 24 pixels/block x 4 blocks = 96 pixels wide in the background 800 and 16 pixels/block* 6 blocks = 96 pixels wide for the video content element 1840. However, vertically, there is a difference. The background 1800 is 24 pixels/block* 3 blocks = 72 pixels tall. The element 1840 is 16 pixels / block* 4 blocks = 64 pixels tall. This leaves a vertical gap of 8 pixels 1860. The stitcher is aware of such differences and can extrapolate either the element or the background to fill the gap. It is also possible to leave a gap so that there is a dark or light border region. Any combination of macroblock sizes is acceptable even though this example uses macroblock sizes of 24x24 and 16x16. DCT based compression formats may rely on macroblocks of sizes other than 16x 16 without deviating from the intended scope of the invention. Similarly, a DCT based compression format may also rely on variable sized macroblocks for temporal prediction without deviating from the intended scope of the invention Finally, frequency domain representations of content may also be achieved using other Fourier related transforms without deviating from the intended scope of the invention.

It is also possible for there to be an overlap in the composited video frame. Referring back to Fig. 17, the element 1840 consisted of four slices. Should this element actually be five slices, it would overlap with the background element 1800 in the composited video frame 1880. There are multiple ways to resolve this conflict with the easiest being to composite only four slices of the element and drop the fifth. It is also possible to composite the fifth slice into the background row, break the conflicting background row into slices and remove the background slice that conflicts with the fifth element slice (then possibly add a sixth element slice to fill any gap).

The possibility of different slice sizes requires the compositing function to perform a check of the incoming background and video elements to confirm they are proper. That is, make sure each one is complete (e.g., a full frame), there are no sizing conflicts, etc.

Fig. 18 is a diagram depicting elements of a frame. A simple composited picture 1900 is composed of an element 1910 and a background element 1920. To control the building of the video frame for the requested scene, the stitcher builds a data structure 1940 based upon the position information for each element as provided by the virtual machine. The data structure 1940 contains a linked list describing how many macroblocks and where the macroblocks are located. For example, the data row 1 1943 shows that the stitcher should take 40 macroblocks from buffer B, which is the buffer for the background. Data row 2 1945 should take 12 macroblocks from buffer B, then 8 macroblocks from buffer E (the buffer for element 1910), and then another 20 macroblocks from buffer B. This continues down to the last row 1947 wherein the stitcher uses the data structure to take 40 macroblocks from buffer B. The buffer structure 1970 has separate areas for each background or element. The B buffer 1973 contains all the information for stitching in B macroblocks. The E buffer 1975 has the information for stitching in E macroblocks.

Fig. 19 is a flow chart depicting the process for building a picture from multiple encoded elements. The sequence 2000 begins by starting the video frame composition 2010. First the frames are synchronized 2015 and then each row 2020 is built up by grabbing the appropriate slice 2030. The slice is then inserted 2040 and the system checks to see if it is the end of the row 2050. If not, the process goes back to "fetch next slice" block 2030 until the end of row 2050 is reached. Once the row is complete, the system checks to see if it is the end of frame 2080. If not, the process goes back to the "for each row" 2020 block. Once the frame is complete, the system checks if it is the end of the sequence 2090 for the scene. If not, it goes back to the "compose frame" 2010 step. If it is, the frame or sequence of video frames for the scene is complete 2090. If not, it repeats the frame building process. If the end of sequence 2090 has been reached, the scene is complete and the process ends or it can start the construction of another frame.

The performance of the stitcher can be improved (build frames faster with less processor power) by providing the stitcher advance information on the frame format. For example, the virtual machine may provide the stitcher with the start location and size of the areas in the frame to be inserted. Alternatively, the information could be the start location for each slice and the stitcher could then figure out the size (the difference between the two start locations). This information could be provided externally by the virtual machine or the virtual machine could incorporate the information into each element. For instance, part of the slice header could be used to carry this information. The stitcher can use this foreknowledge of the frame structure to begin compositing the elements together well before they are required.

Fig. 20 shows a further improvement on the system. As explained above in the groomer section, the graphical video elements can be groomed thereby providing stitchable elements that are already compressed and do not need to be decoded in order to be stitched together. In Fig. 20, a frame has a number of encoded slices 2100. Each slice is a full row (this is used as an example only; the rows could consist of multiple slices prior to grooming). The virtual machine in combination with the AVML file determines that there should be an element 2140 of a particular size placed in a particular location within the composited video frame. The groomer processes the incoming background 2100 and converts the full-row encoded slices to smaller slices that match the areas around and in the desired element 2140 location. The resulting groomed video frame 2180 has a slice configuration that matches the desired element 2140. The stitcher then constructs the stream by selecting all the slices except #3 and #6 from the groomed frame 2180. Instead of those slices, the stitcher grabs the element 2140 slices and uses those in its place. In this manner, the background never leaves the compressed domain and the system is still able to composite the element 2140 into the frame.

Fig. 21 shows the flexibility available to define the element to be composited. Elements can be of different shapes and sizes. The elements need not reside contiguously and in fact a single element can be formed from multiple images separated by the background. This figure shows a background element 2230 (areas colored grey) that has had a single element 2210 (areas colored white) composited on it. In this diagram, the composited element 2210 has areas that are shifted, are different sizes, and even where there are multiple parts of the element on a single row. The stitcher can perform this stitching just as if there were multiple elements used to create the display. The slices for the frame are labeled contiguously S1 - S45. These include the slice locations where the element will be placed. The element also has its slice numbering from ES1 - ES 14. The element slices can be placed in the background where desired even though they are pulled from a single element file.

The source for the element slices can be any one of a number of options. It can come from a real-time encoded source. It can be a complex slice that is built from separate slices, one having a background and the other having text. It can be a pre-encoded element that is fetched from a cache. These examples are for illustrative purposes only and are not intended to limit the options for element sources.

Fig. 22 shows an embodiment using a groomer 2340 for grooming linear broadcast content. The content is received by the groomer 2340 in real-time. Each channel is groomed by the groomer 2340 so that the content can be easily stitched together. The groomer 2340 of Fig. 22 may include a plurality of groomer modules for grooming all of the linear broadcast channels. The groomed channels may then be multicast to one or more processing offices 2310, 2320, 2330 and one or more virtual machines within each of the processing offices for use in applications. As shown, client devices request an application for receipt of a mosaic 2350 of linear broadcast sources and/or other groomed content that are selected by the client. A mosaic 2350 is a scene that includes a background frame 2360 that allows for viewing of a plurality of sources 2371-2376 simultaneously as shown in Fig. 23. For example, if there are multiple sporting events that a user wishes to watch, the user can request each of the channels carrying the sporting events for simultaneous viewing within the mosaic. The user can even select an MPEG object (edit) 2380 and then edit the desired content sources to be displayed. For example, the groomed content can be selected from linear/live broadcasts and also from other video content (i.e. movies, pre-recorded content etc.). A mosaic may even include both user selected material and material provided by the processing office/session processor, such as, advertisements. As shown in Fig. 22, client devices 2301-2305 each request a mosaic that includes channel 1. Thus, the multicast groomed content for channel 1 is used by different virtual machines and different processing offices in the construction of personalized mosaics.

When a client device sends a request for a mosaic application, the processing office associated with the client device assigns a processor/virtual machine for the client device for the requested mosaic application. The assigned virtual machine constructs the personalized mosaic by compositing the groomed content from the desired channels using a stitcher. The virtual machine sends the client device an MPEG stream that has a mosaic of the channels that the client has requested. Thus, by grooming the content first so that the content can be stitched together, the virtual machines that create the mosaics do not need to first decode the desired channels, render the channels within the background as a bitmap and then encode the bitmap.

An application, such as a mosaic, can be requested either directly through a client device or indirectly through another device, such as a PC, for display of the application on a display associated with the client device. The user could log into a website associated with the processing office by providing information about the user's account. The server associated with the processing office would provide the user with a selection screen for selecting an application. If the user selected a mosaic application, the server would allow the user to select the content that the user wishes to view within the mosaic. In response to the selected content for the mosaic and using the user's account information, the processing office server would direct the request to a session processor and establish an interactive session with the client device of the user. The session processor would then be informed by the processing office server of the desired application. The session processor would retrieve the desired application, the mosaic application in this example, and would obtain the required MPEG objects. The processing office server would then inform the session processor of the requested video content and the session processor would operate in conjunction with the stitcher to construct the mosaic and provide the mosaic as an MPEG video stream to the client device. Thus, the processing office server may include scripts or application for performing the functions of the client device in setting up the interactive session, requesting the application, and selecting content for display. While the mosaic elements may be predetermined by the application, they may also be user configurable resulting in a personalized mosaic.

Fig. 24 is a diagram of an IP based content delivery system. In this system, content may come from a broadcast source 2400, a proxy cache 2415 fed by a content provider 2410, Network Attached Storage (NAS) 2425 containing configuration and management files 2420, or other sources not shown. For example, the NAS may include asset metadata that provides information about the location of content. This content could be available through a load balancing switch 2460. BladeSession processors/virtual machines 2460 can perform different processing functions on the content to prepare it for delivery. Content is requested by the user via a client device such as a set top box 2490. This request is processed by the controller 2430 which then configures the resources and path to provide this content. The client device 2490 receives the content and presents it on the user's display 2495.

Fig. 25 provides a diagram of a cable based content delivery system. Many of the components are the same: a controller 2530, broadcast source 2500, a content provider 2510 providing their content via a proxy cache 2515, configuration and management files 2520 via a file server NAS 2525, session processors 2560, load balancing switch 2550, a client device, such as a set top box 2590, and a display 2595. However, there are also a number of additional pieces of equipment required due to the different physical medium. In this case the added resources include: QAM modulators 2575, a return path receiver 2570, a combiner and diplexer 2580, and a Session and Resource Manager (SRM) 2540. QAM upconverter 2575 are required to transmit data (content) downstream to the user. These modulators convert the data into a form that can be carried across the coax that goes to the user. Correspondingly, the return path receiver 2570 also is used to demodulate the data that comes up the cable from the set top 2590. The combiner and diplexer 2580 is a passive device that combines the downstream QAM channels and splits out the upstream return channel. The SRM is the entity that controls how the QAM modulators are configured and assigned and how the streams are routed to the client device.

These additional resources add cost to the system. As a result, the desire is to minimize the number of additional resources that are required to deliver a level of performance to the user that mimics a non-blocking system such as an IP network. Since there is not a one-to-one correspondence between the cable network resources and the users on the network, the resources must be shared. Shared resources must be managed so they can be assigned when a user requires a resource and then freed when the user is finished utilizing that resource. Proper management of these resources is critical to the operator because without it, the resources could be unavailable when needed most. Should this occur, the user either receives a "please wait" message or, in the worst case, a "service unavailable" message.

Fig. 26 is a diagram showing the steps required to configure a new interactive session based on input from a user. This diagram depicts only those items that must be allocated or managed or used to do the allocation or management. A typical request would follow the steps listed below:
(1) The Set Top 2609 requests content 2610 from the Controller 2607
(2) The Controller 2607 requests QAM bandwidth 2620 from the SRM 2603
(3) The SRM 2603 checks QAM availability 2625
(4) The SRM 2603 allocates the QAM modulator 2630
(5) The QAM modulator returns confirmation 2635
(6) The SRM 2603 confirms QAM allocation success 2640 to the Controller
(7) The Controller 407 allocates the Session processor 2650
(8) The Session processor confirms allocation success 2653
(9) The Controller 2607 allocates the content 2655
(10) The Controller 2607 configures 2660 the Set Top 2609. This includes:
   a. Frequency to tune
   b. Programs to acquire or alternatively PIDs to decode
   c. IP port to connect to the Session processor for keystroke capture
(11) The Set Top 2609 tunes to the channel 2663
(12) The Set Top 2609 confirms success 2665 to the Controller 2607

The Controller 2607 allocates the resources based on a request for service from a set top box 2609. It frees these resources when the set top or server sends an "end of session". While the controller 2607 can react quickly with minimal delay, the SRM 2603 can only allocate a set number of QAM sessions per second i.e. 200. Demand that exceeds this rate results in unacceptable delays for the user. For example, if 500 requests come in at the same time, the last user would have to wait 5 seconds before their request was granted. It is also possible that rather than the request being granted, an error message could be displayed such as "service unavailable".

While the example above describes the request and response sequence for an AVDN session over a cable TV network, the example below describes a similar sequence over an IPTV network. Note that the sequence in itself is not a claim, but rather illustrates how AVDN would work over an IPTV network.
(1) Client device requests content from the Controller via a Session Manager (i.e. controller proxy).
(2) Session Manager forwards request to Controller.
(3) Controller responds with the requested content via Session Manager (i.e. client proxy).
(4) Session Manager opens a unicast session and forwards Controller response to client over unicast IP session.
(5) Client device acquires Controller response sent over unicast IP session.
(6) Session manager may simultaneously narrowcast response over multicast IP session to share with other clients on node group that request same content simultaneously as a bandwidth usage optimization technique.

Fig. 27 is a simplified system diagram used to break out each area for performance improvement. This diagram focuses only on the data and equipment that will be managed and removes all other non-managed items. Therefore, the switch, return path, combiner, etc. are removed for the sake of clarity. This diagram will be used to step through each item, working from the end user back to the content origination.

A first issue is the assignment of QAMs 2770 and QAM channels 2775 by the SRM 2720. In particular, the resources must be managed to prevent SRM overload, that is, eliminating the delay the user would see when requests to the SRM 2720 exceed its sessions per second rate.

To prevent SRM "overload", "time based modeling" may be used. For time based modeling, the Controller 2700 monitors the history of past transactions, in particular, high load periods. By using this previous history, the Controller 2700 can predict when a high load period may occur, for example, at the top of an hour. The Controller 2700 uses this knowledge to pre-allocate resources before the period comes. That is, it uses predictive algorithms to determine future resource requirements. As an example, if the Controller 2700 thinks 475 users are going to join at a particular time, it can start allocating those resources 5 seconds early so that when the load hits, the resources have already been allocated and no user sees a delay.

Secondly, the resources could be pre-allocated based on input from an operator. Should the operator know a major event is coming, e.g., a pay per view sporting event, he may want to pre-allocate resources in anticipation. In both cases, the SRM 2720 releases unused QAM 2770 resources when not in use and after the event.

Thirdly, QAMs 2770 can be allocated based on a "rate of change" which is independent of previous history. For example, if the controller 2700 recognizes a sudden spike in traffic, it can then request more QAM bandwidth than needed in order to avoid the QAM allocation step when adding additional sessions. An example of a sudden, unexpected spike might be a button as part of the program that indicates a prize could be won if the user selects this button.

Currently, there is one request to the SRM 2720 for each session to be added. Instead the controller 2700 could request the whole QAM 2770 or a large part of a single QAM's bandwidth and allow this invention to handle the data within that QAM channel 2775. Since one aspect of this system is the ability to create a channel that is only 1, 2, or 3 Mb/sec, this could reduce the number of requests to the SRM 2720 by replacing up to 27 requests with a single request.

The user will also experience a delay when they request different content even if they are already in an active session. Currently, if a set top 2790 is in an active session and requests a new set of content 2730, the Controller 2700 has to tell the SRM 2720 to de-allocate the QAM 2770, then the Controller 2700 must de-allocate the session processor 2750 and the content 2730, and then request another QAM 2770 from the SRM 2720 and then allocate a different session processor 2750 and content 2730. Instead, the controller 2700 can change the video stream 2755 feeding the QAM modulator 2770 thereby leaving the previously established path intact. There are a couple of ways to accomplish the change. First, since the QAM Modulators 2770 are on a network so the controller 2700 can merely change the session processor 2750 driving the QAM 2770. Second, the controller 2700 can leave the session processor 2750 to set top 2790 connection intact but change the content 2730 feeding the session processor 2750, e.g., "CNN Headline News" to "CNN World Now". Both of these methods eliminate the QAM initialization and Set Top tuning delays.

Thus, resources are intelligently managed to minimize the amount of equipment required to provide these interactive services. In particular, the Controller can manipulate the video streams 2755 feeding the QAM 2770. By profiling these streams 2755, the Controller 2700 can maximize the channel usage within a QAM 2770. That is, it can maximize the number of programs in each QAM channel 2775 reducing wasted bandwidth and the required number of QAMs 2770. There are three primary means to profile streams: formulaic, pre-profiling, and live feedback.

The first profiling method, formulaic, consists of adding up the bit rates of the various video streams used to fill a QAM channel 2775. In particular, there may be many video elements that are used to create a single video stream 2755. The maximum bit rate of each element can be added together to obtain an aggregate bit rate for the video stream 2755. By monitoring the bit rates of all video streams 2755, the Controller 2700 can create a combination of video streams 2755 that most efficiently uses a QAM channel 2775. For example, if there were four video streams 2755: two that were 16 Mb/sec and two that were 20 Mb/sec then the controller could best fill a 38.8 Mb/sec QAM channel 2775 by allocating one of each bit rate per channel. This would then require two QAM channels 2775 to deliver the video. However, without the formulaic profiling, the result could end up as 3 QAM channels 2775 as perhaps the two 16 Mb/sec video streams 2755 are combined into a single 38.8 Mb/sec QAM channel 2775 and then each 20 Mb/sec video stream 2755 must have its own 38.8 Mb/sec QAM channel 2775.

A second method is pre-profiling. In this method, a profile for the content 2730 is either received or generated internally. The profile information can be provided in metadata with the stream or in a separate file. The profiling information can be generated from the entire video or from a representative sample. The controller 2700 is then aware of the bit rate at various times in the stream and can use this information to effectively combine video streams 2755 together. For example, if two video streams 2755 both had a peak rate of 20 Mb/sec, they would need to be allocated to different 38.8 Mb/sec QAM channels 2775 if they were allocated bandwidth based on their peaks. However, if the controller knew that the nominal bit rate was 14 Mb/sec and knew their respective profiles so there were no simultaneous peaks, the controller 2700 could then combine the streams 2755 into a single 38.8 Mb/sec QAM channel 2775. The particular QAM bit rate is used for the above examples only and should not be construed as a limitation.

A third method for profiling is via feedback provided by the system. The system can inform the controller 2700 of the current bit rate for all video elements used to build streams and the aggregate bit rate of the stream after it has been built. Furthermore, it can inform the controller 2700 of bit rates of stored elements prior to their use. Using this information, the controller 2700 can combine video streams 2755 in the most efficient manner to fill a QAM channel 2775.

It should be noted that it is also acceptable to use any or all of the three profiling methods in combination. That is, there is no restriction that they must be used independently.

The system can also address the usage of the resources themselves. For example, if a session processor 2750 can support 100 users and currently there are 350 users that are active, it requires four session processors. However, when the demand goes down to say 80 users, it would make sense to reallocate those resources to a single session processor 2750, thereby conserving the remaining resources of three session processors. This is also useful in failure situations. Should a resource fail, the invention can reassign sessions to other resources that are available. In this way, disruption to the user is minimized.

The system can also repurpose functions depending on the expected usage. The session processors 2750 can implement a number of different functions, for example, process video, process audio, etc. Since the controller 2700 has a history of usage, it can adjust the functions on the session processors 2700 to meet expected demand. For example, if in the early afternoons there is typically a high demand for music, the controller 2700 can reassign additional session processors 2750 to process music in anticipation of the demand. Correspondingly, if in the early evening there is a high demand for news, the controller 2700 anticipates the demand and reassigns the session processors 2750 accordingly. The flexibility and anticipation of the system allows it to provide the optimum user experience with the minimum amount of equipment. That is, no equipment is idle because it only has a single purpose and that purpose is not required.

The present invention may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof. In an embodiment of the present invention, predominantly all of the reordering logic may be implemented as a set of computer program instructions that is converted into a computer executable form, stored as such in a computer readable medium, and executed by a microprocessor within the array under the control of an operating system.

Computer program logic implementing all or part of the functionality previously described herein may be embodied in various forms, including, but in no way limited to, a source code form, a computer executable form, and various intermediate forms (e.g., forms generated by an assembler, compiler, networker, or locator.) Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device. The computer program may be fixed in any form in a signal that is transmittable to a computer using any of various communication technologies, including, but in no way limited to, analog technologies, digital technologies, optical technologies, wireless technologies, networking technologies, and internetworking technologies. The computer program may be distributed in any form as a removable storage medium with accompanying printed or electronic documentation (e.g., shrink wrapped software or a magnetic tape), preloaded with a computer system (e.g., on system ROM or fixed disk), or distributed from a server or electronic bulletin board over the communication system (e.g., the Internet or World Wide Web.)

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL.)

While the invention has been particularly shown and described with reference to specific embodiments, it will be understood by those skilled in the art that various changes in form and detail may be made therein without departing from the spirit and scope of the invention as defined by the appended clauses. As will be apparent to those skilled in the art, techniques described above for panoramas may be applied to images that have been captured as non-panoramic images, and vice versa.

Embodiments of the present invention may be described, without limitation, by the following clauses. While these embodiments have been described in the clauses by process steps, an apparatus comprising a computer with associated display capable of executing the process steps in the clauses below is also included in the present invention. Likewise, a computer program product including computer executable instructions for executing the process steps in the clauses below and stored on a computer readable medium is included within the present invention.

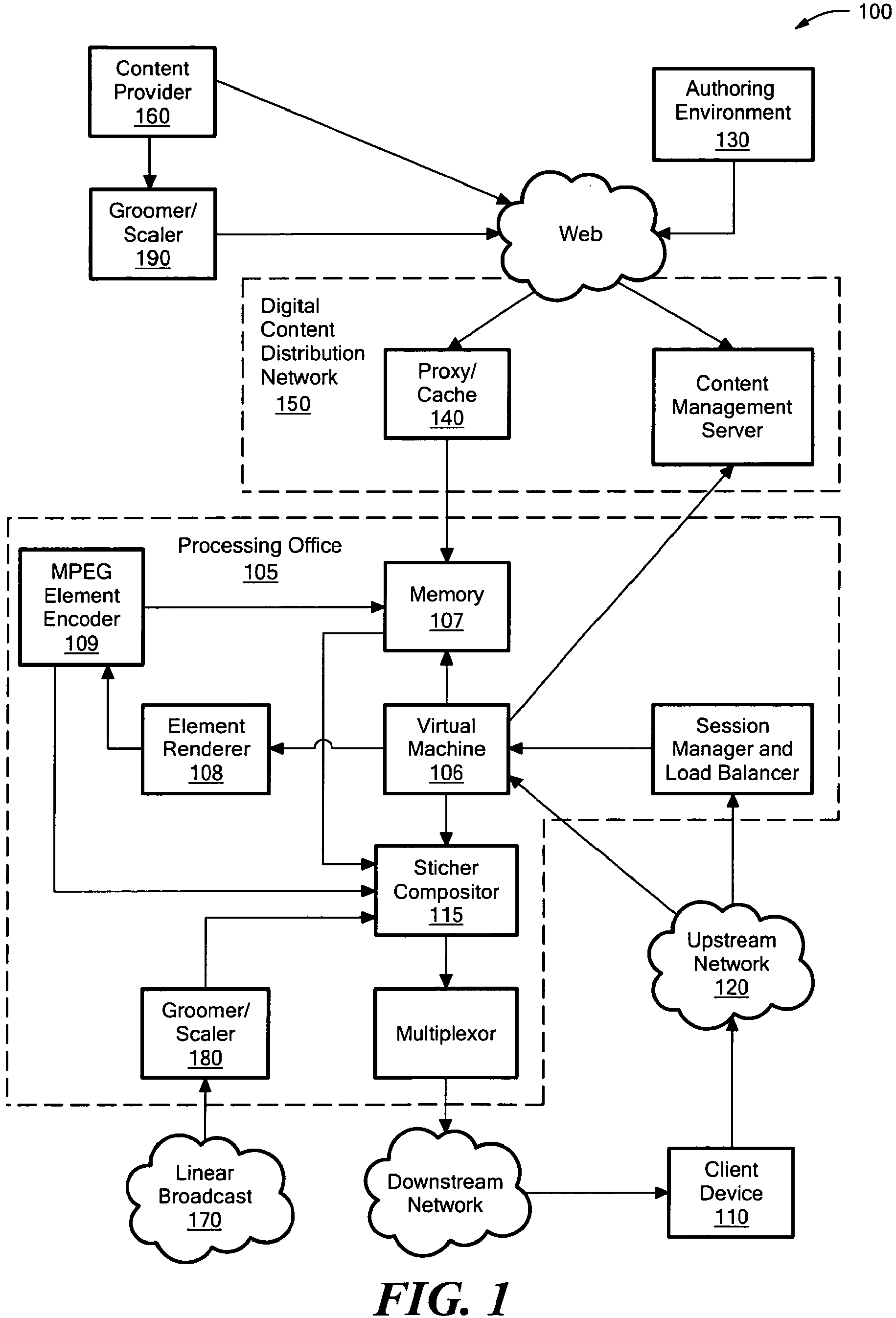

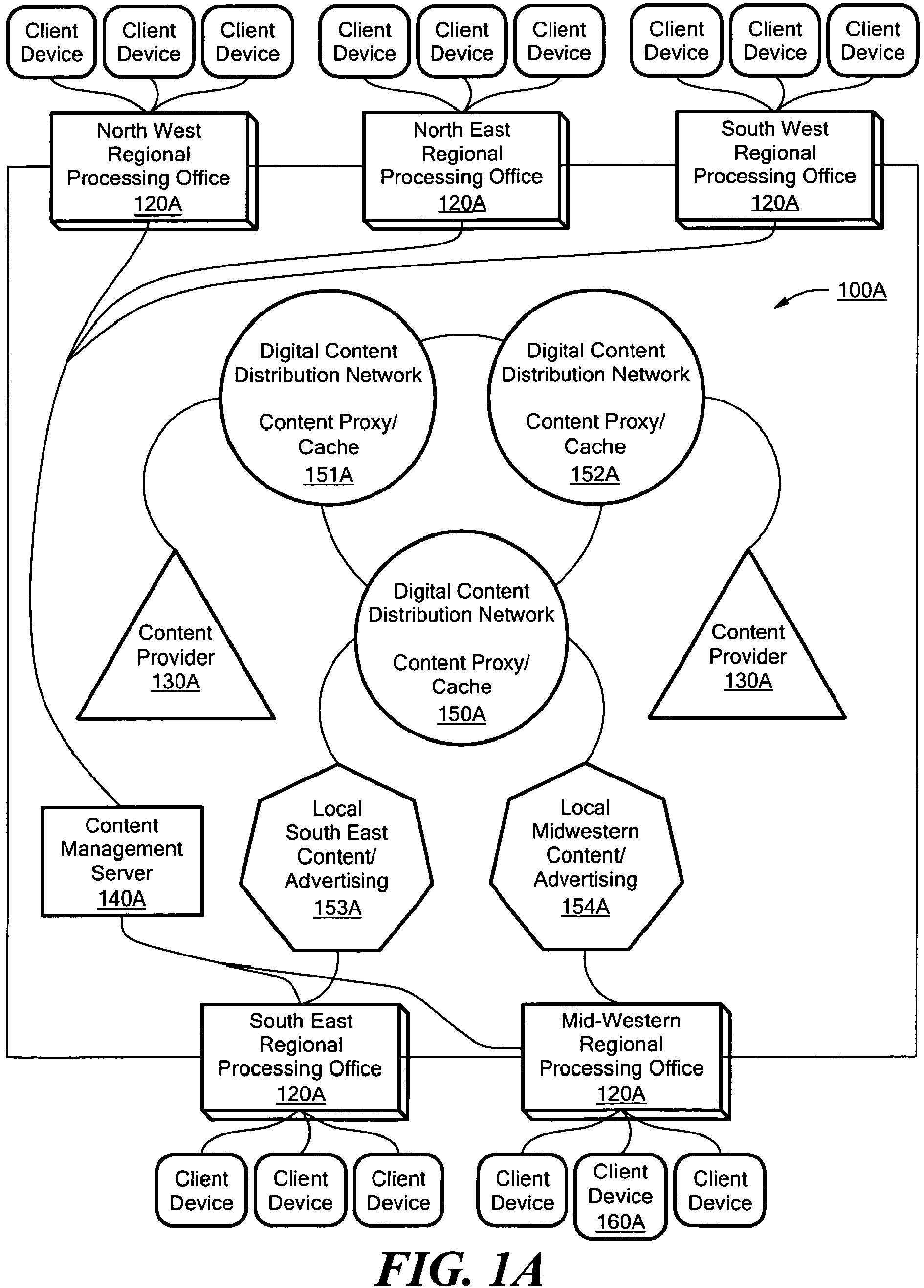

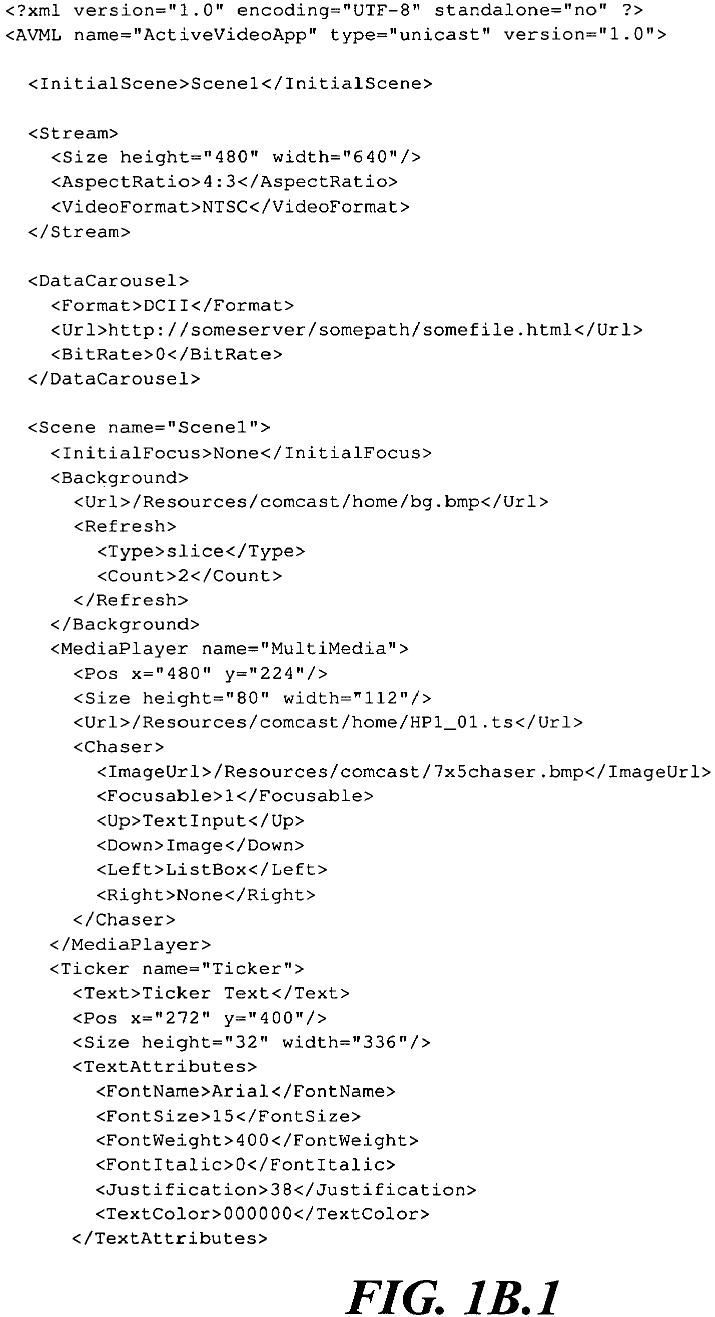

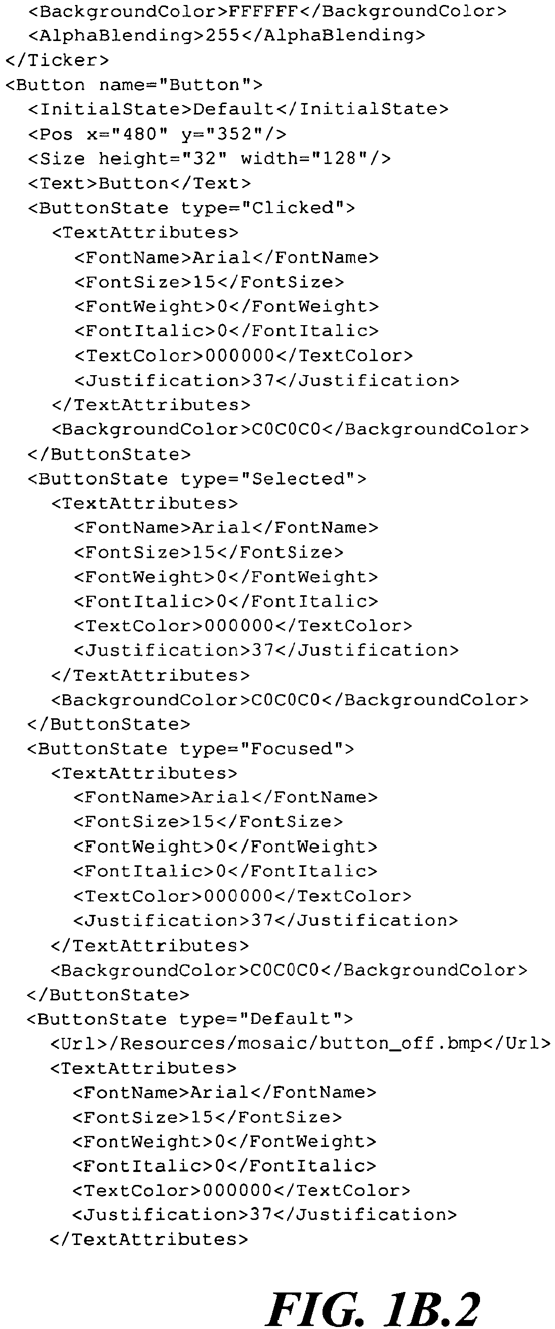

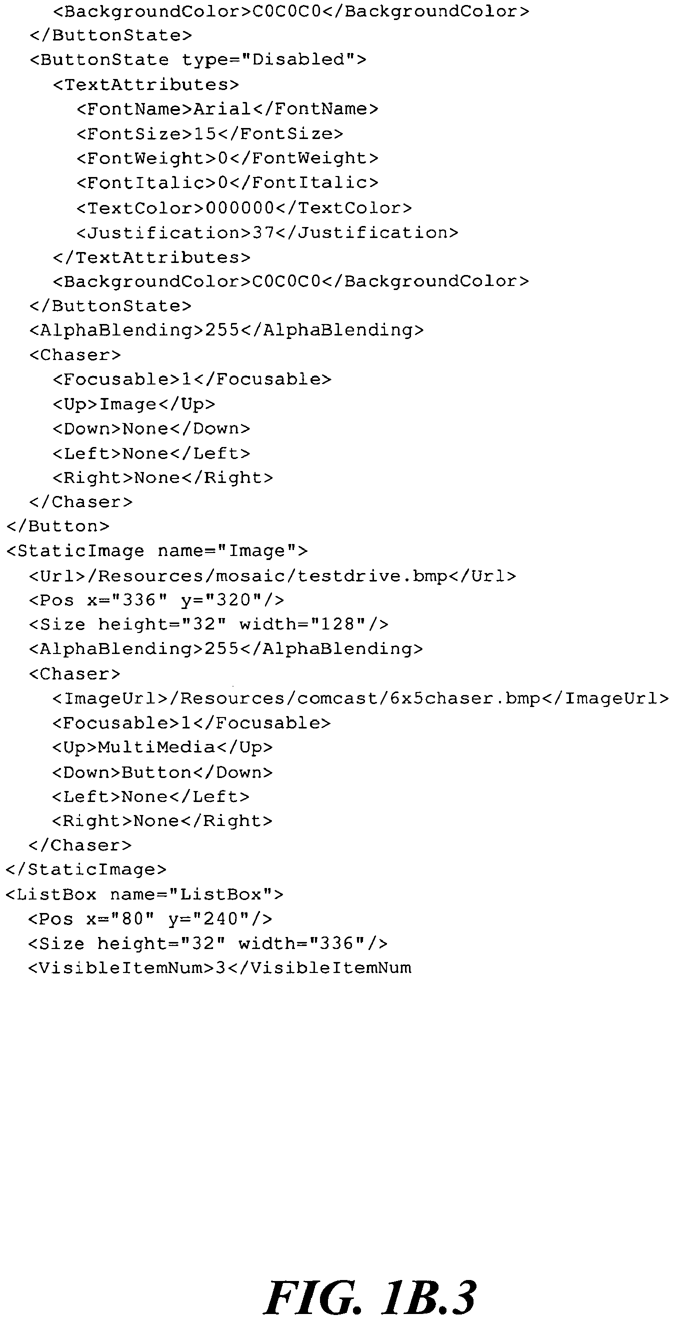

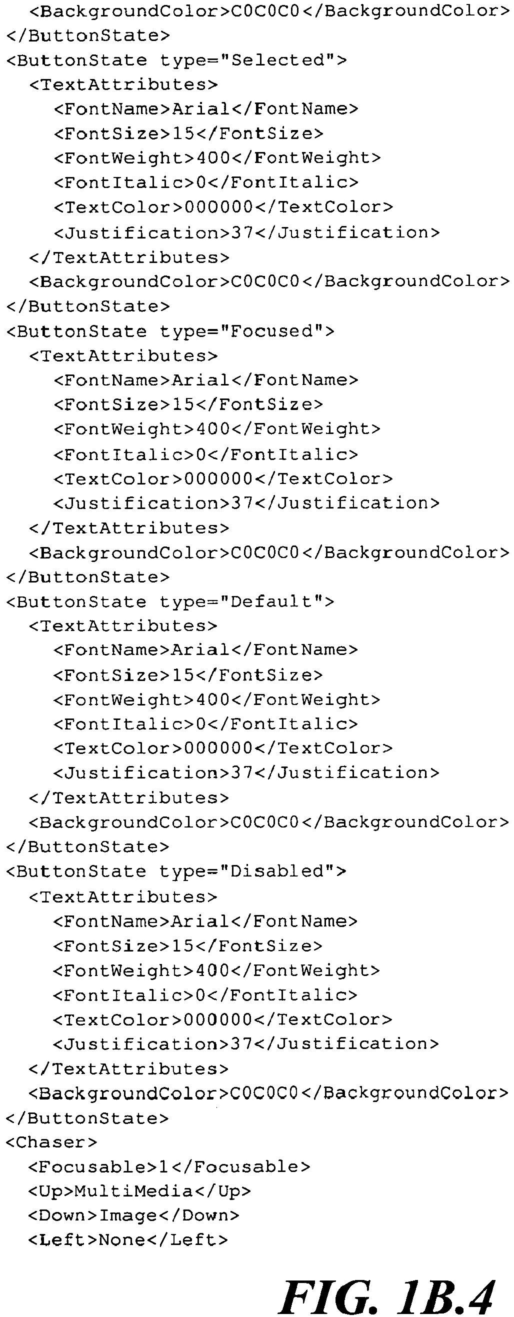

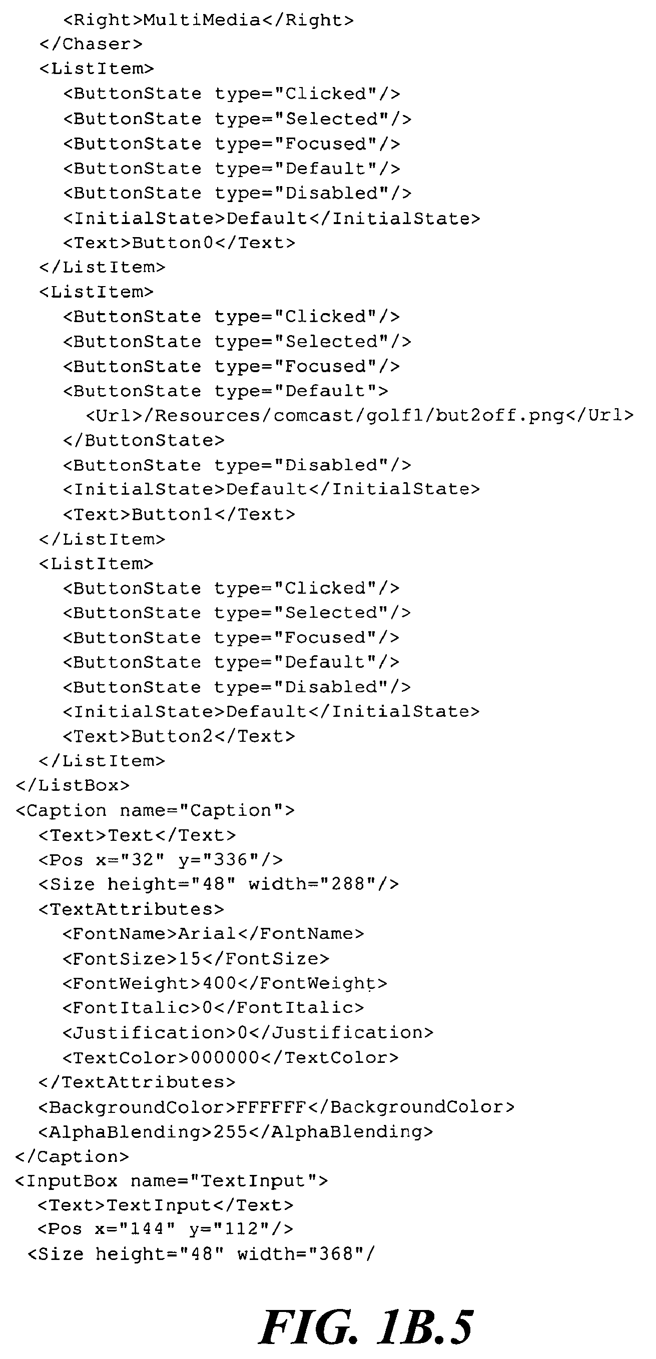

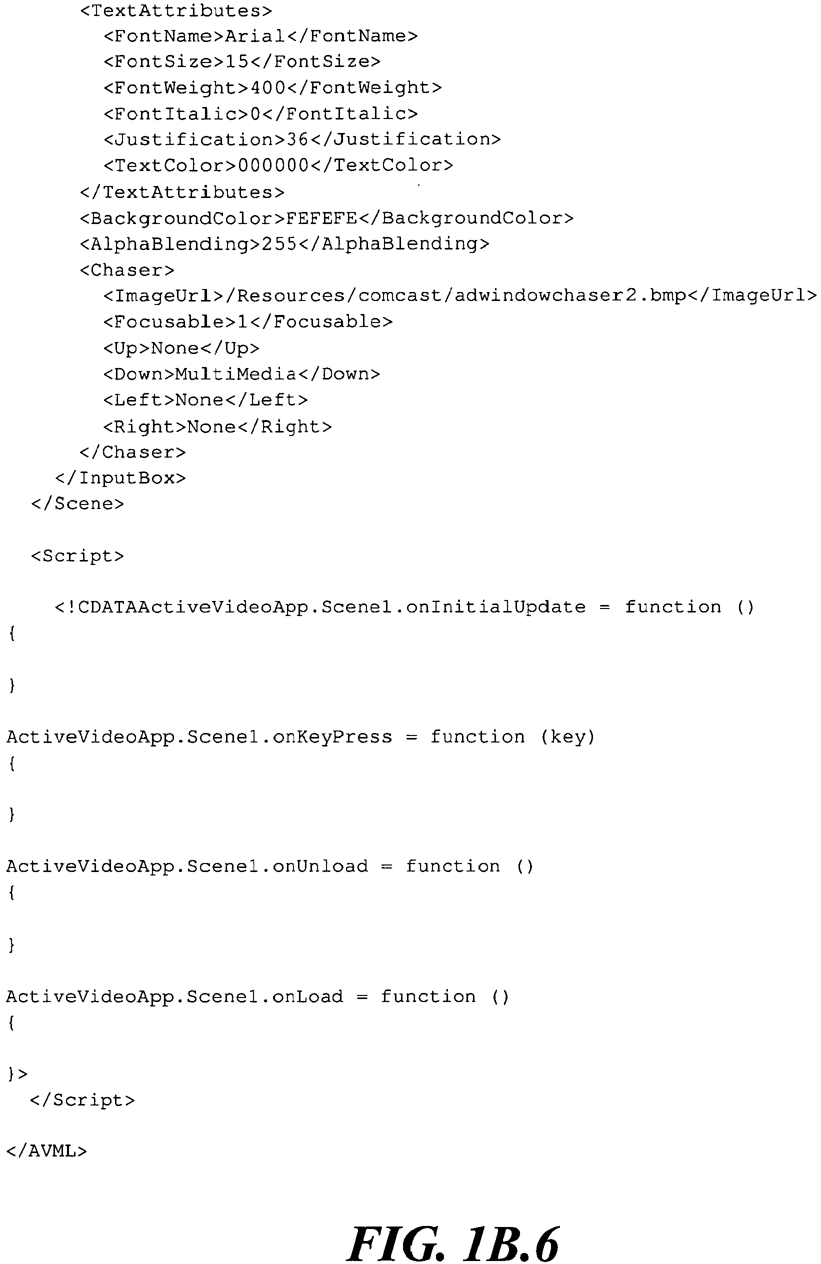

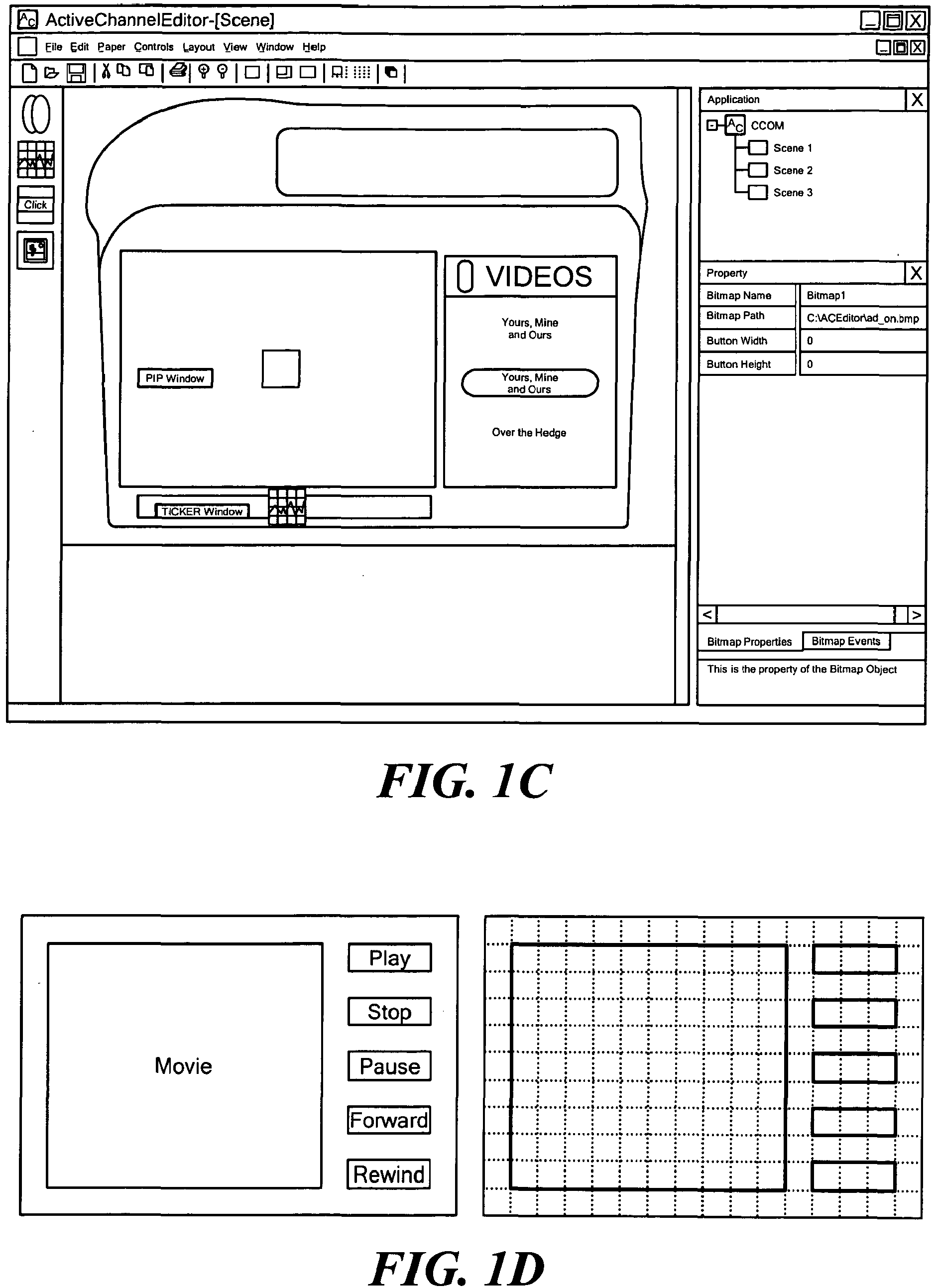

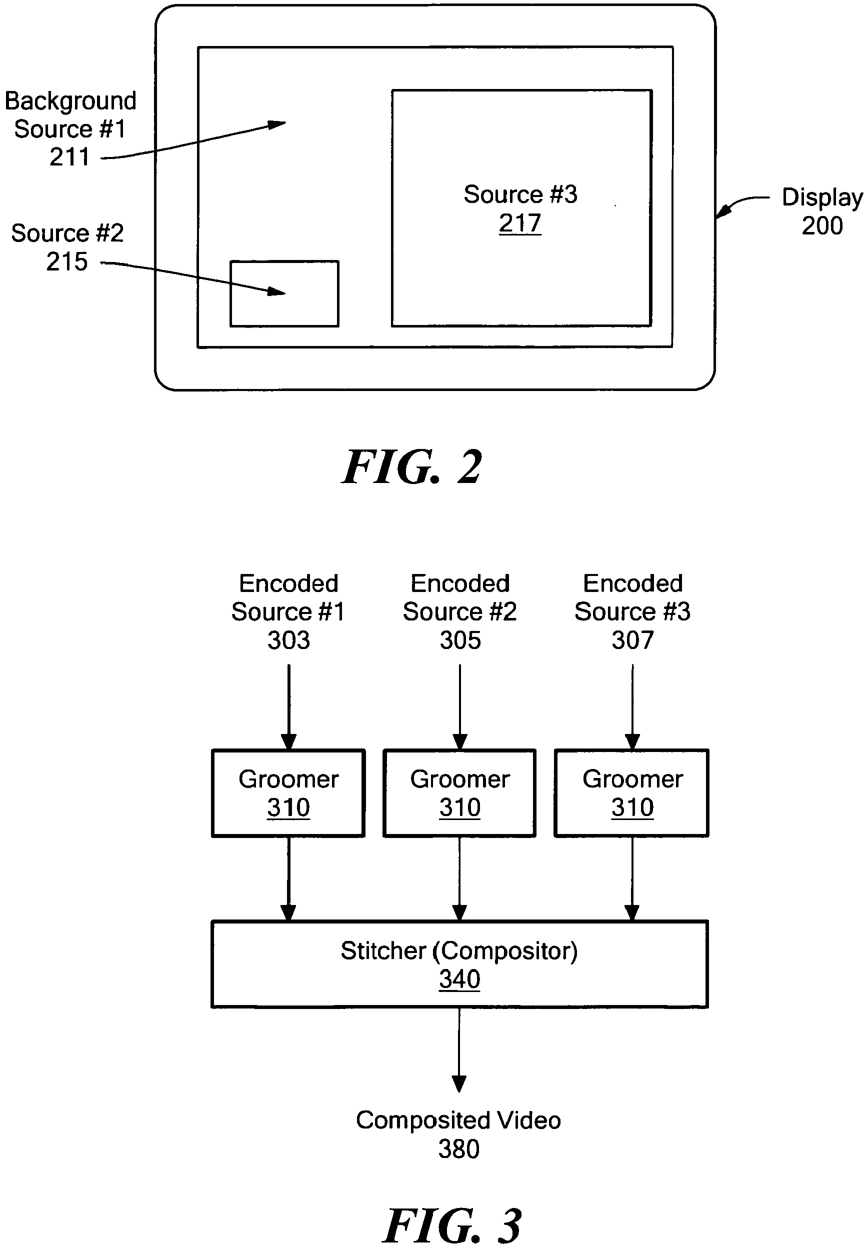

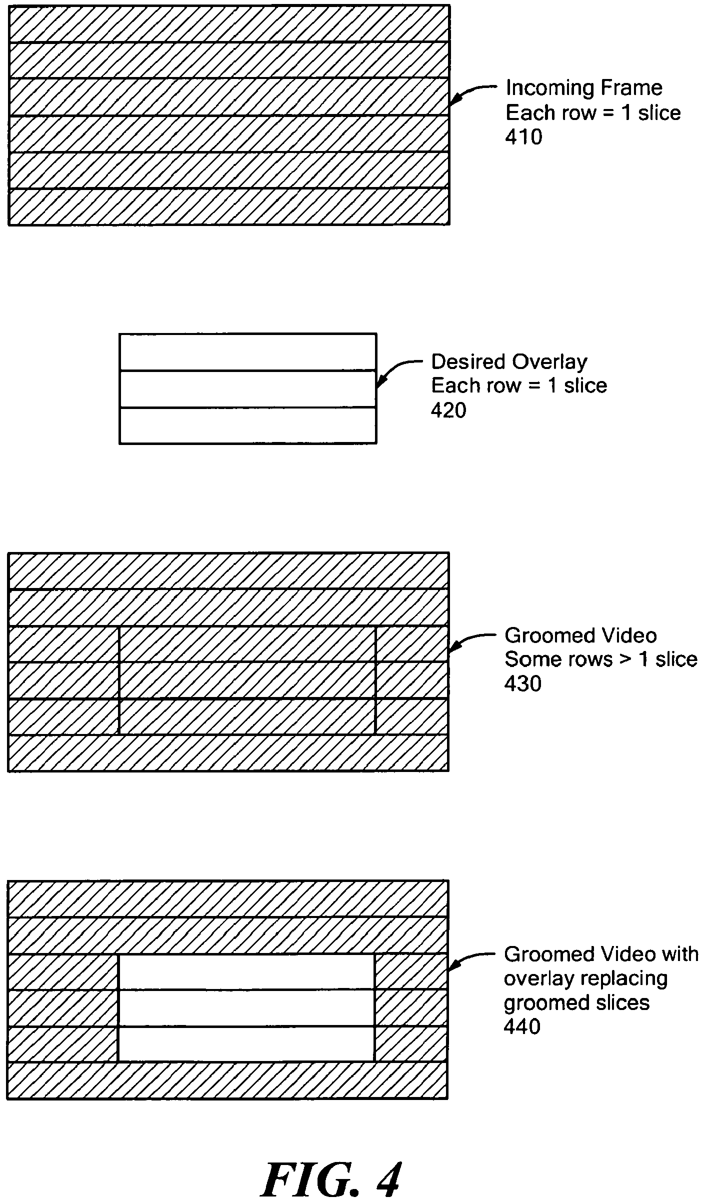

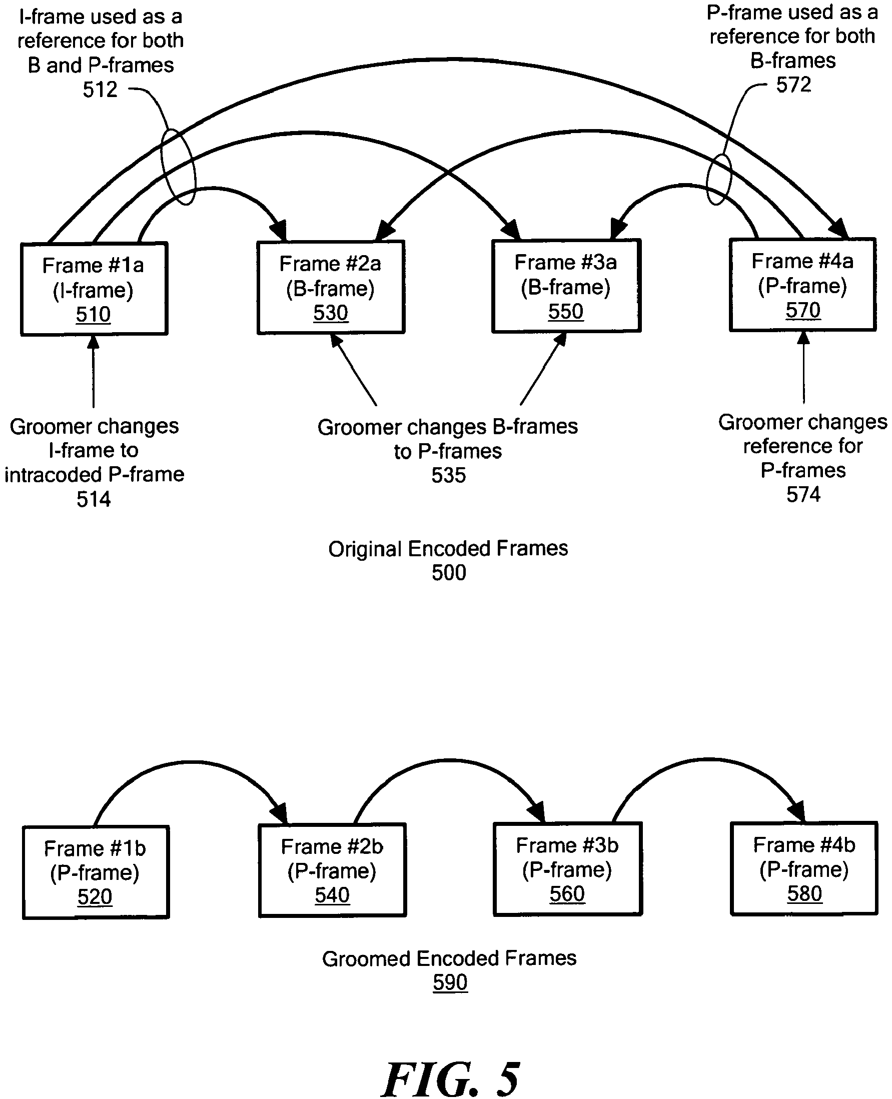

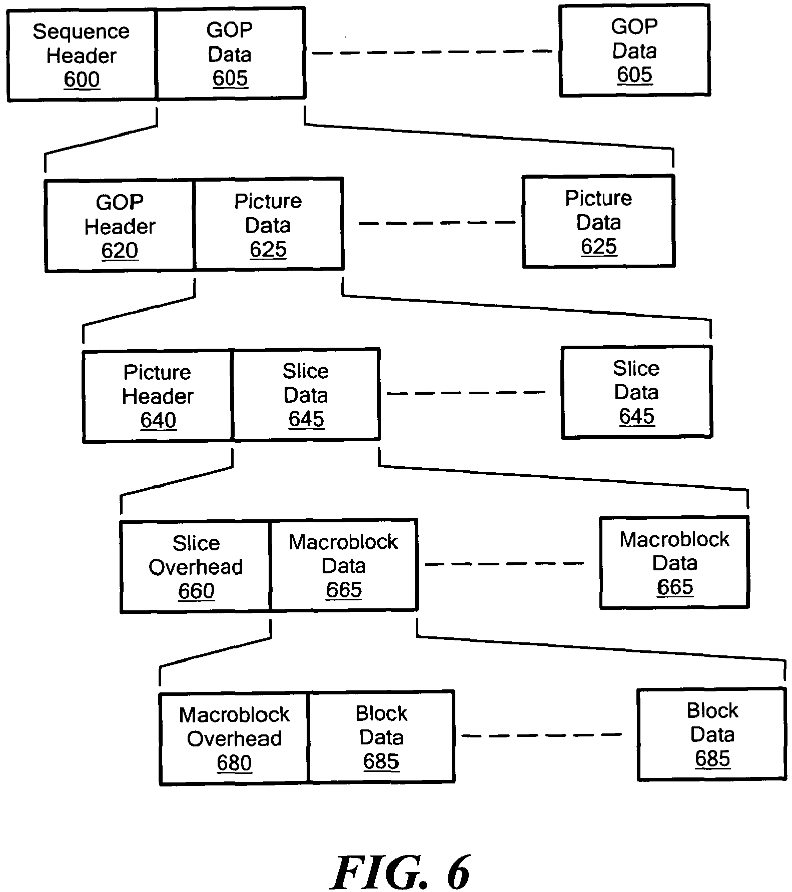

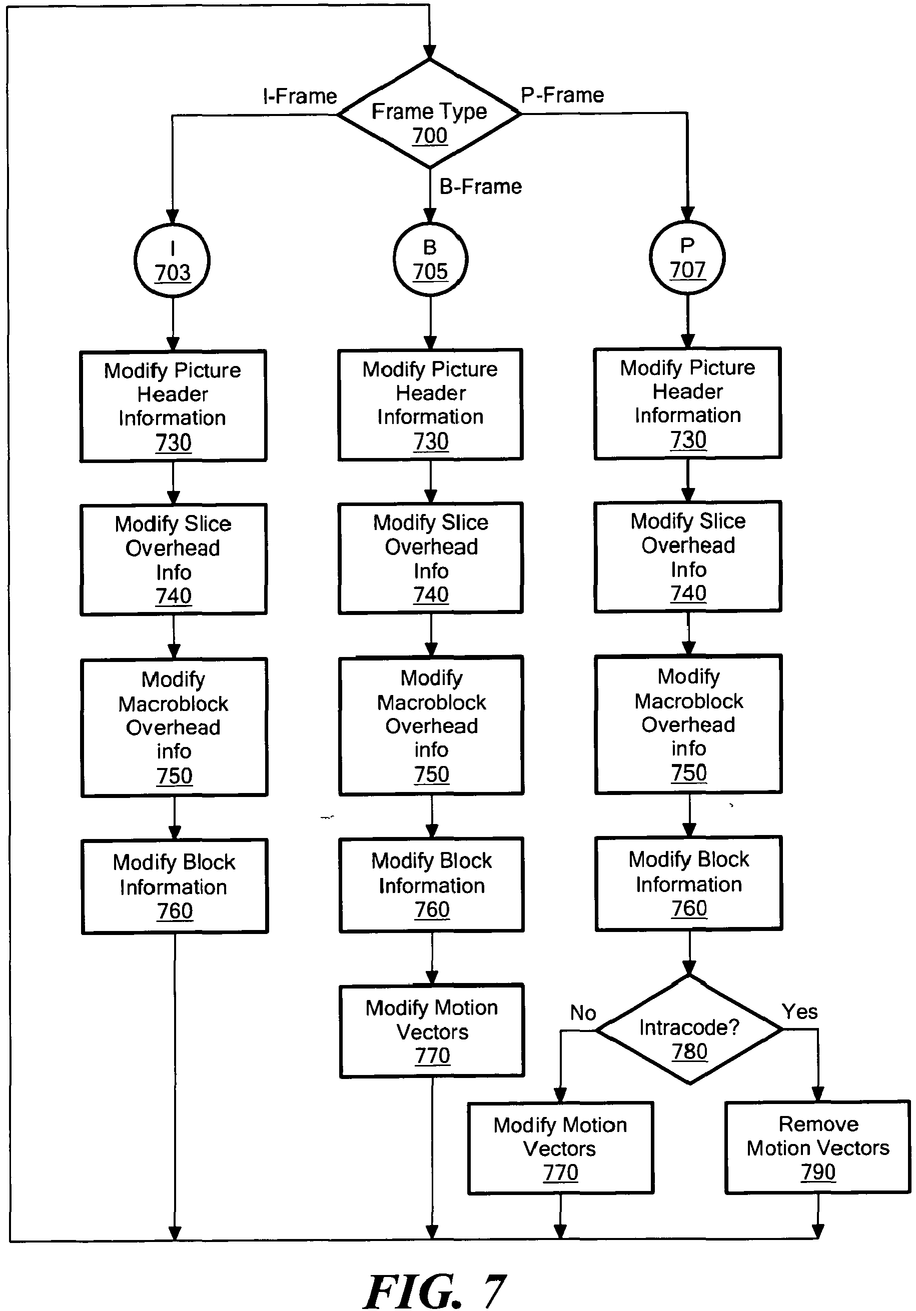

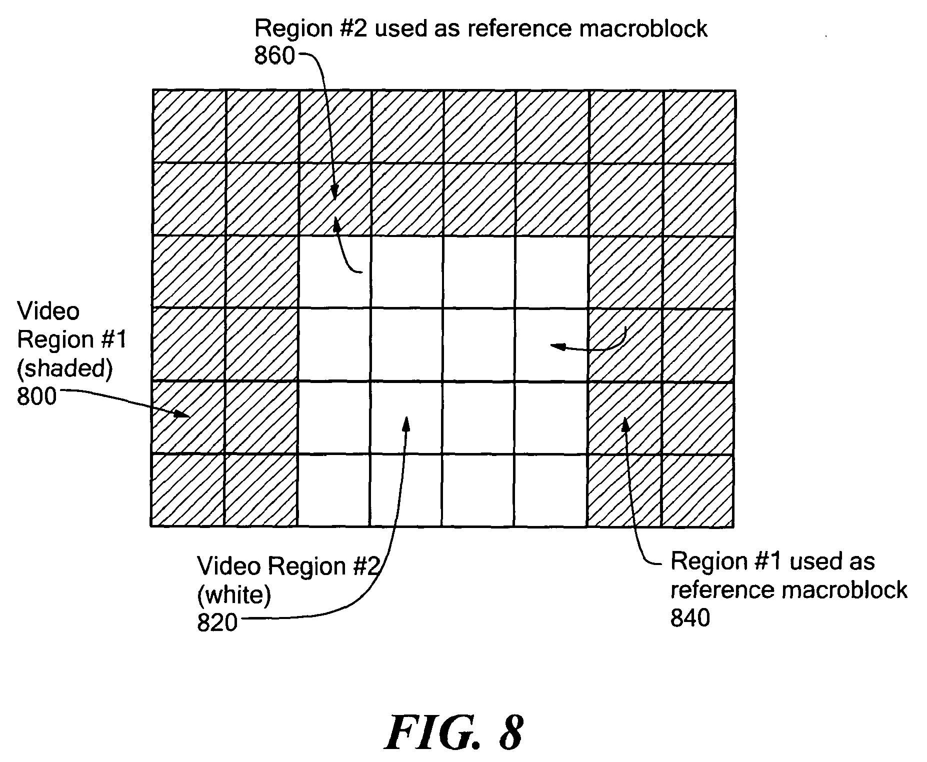

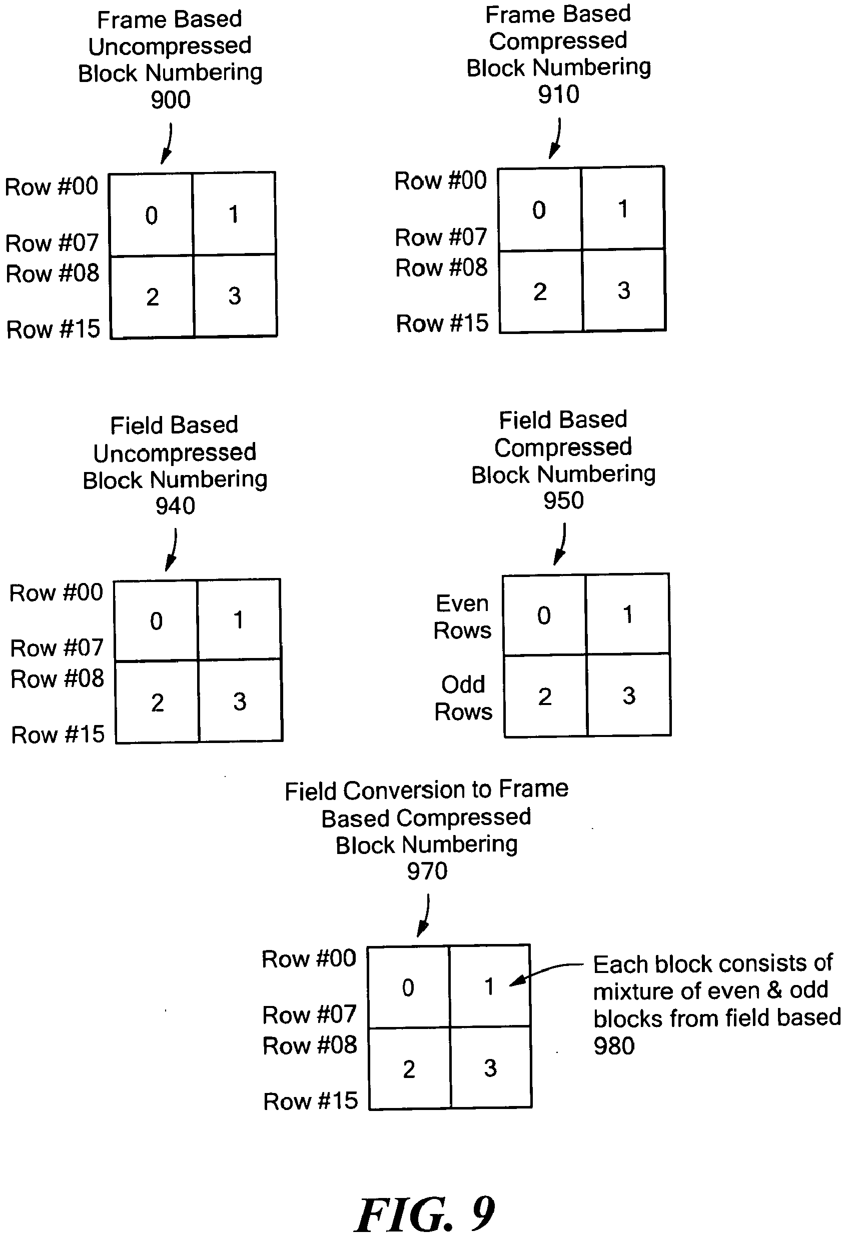

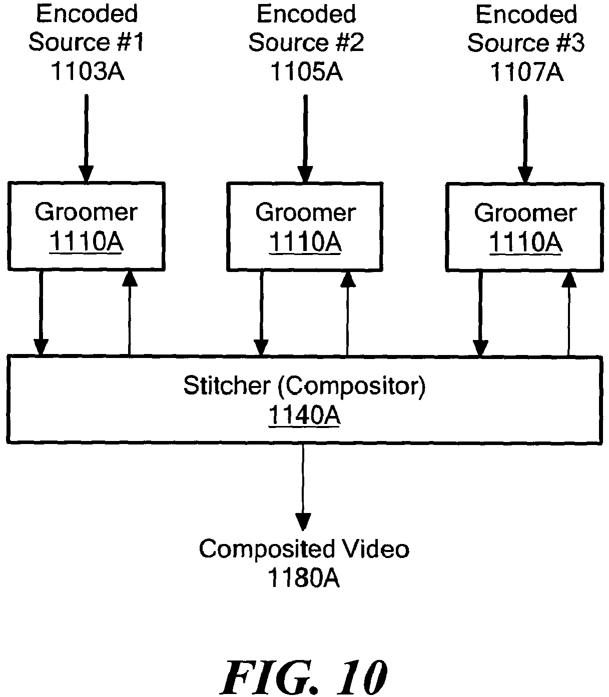

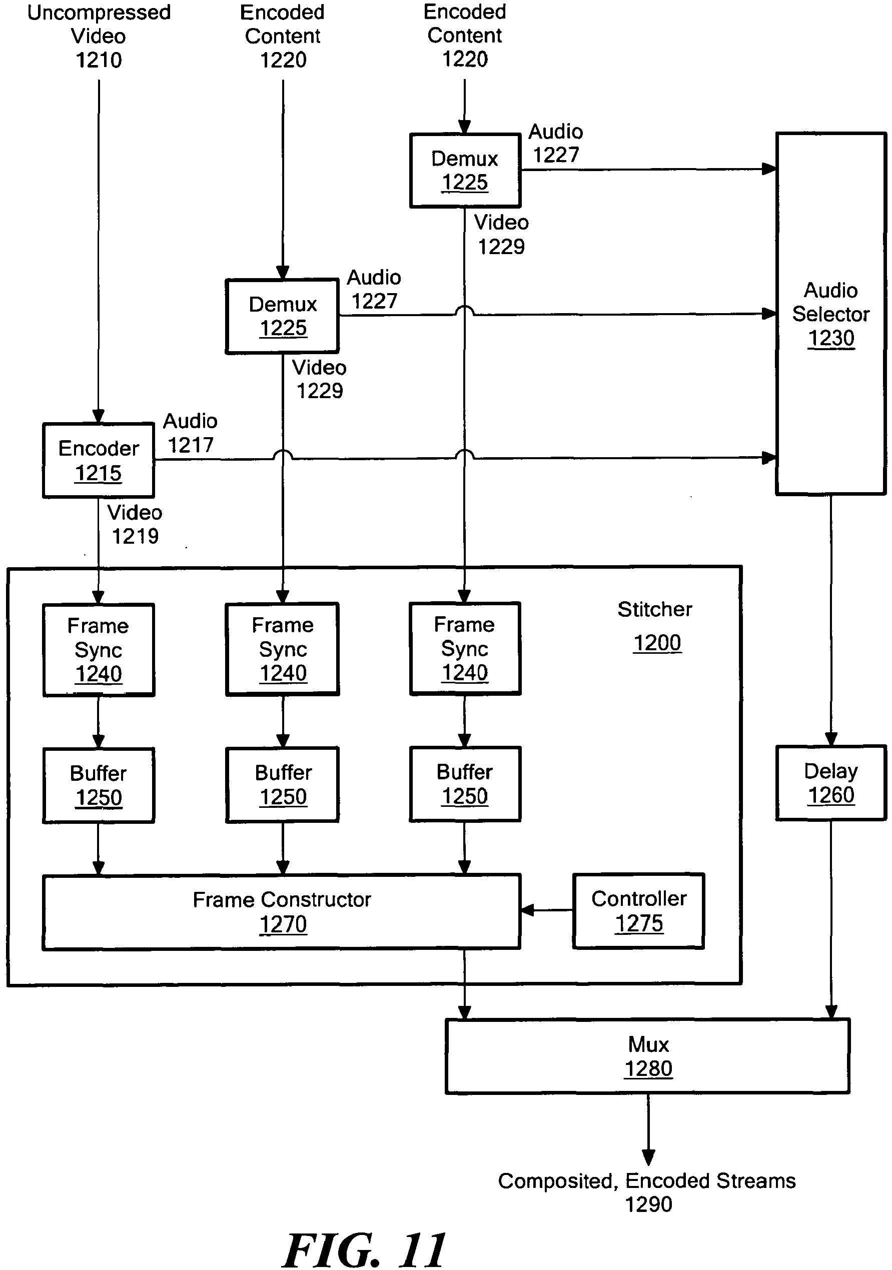

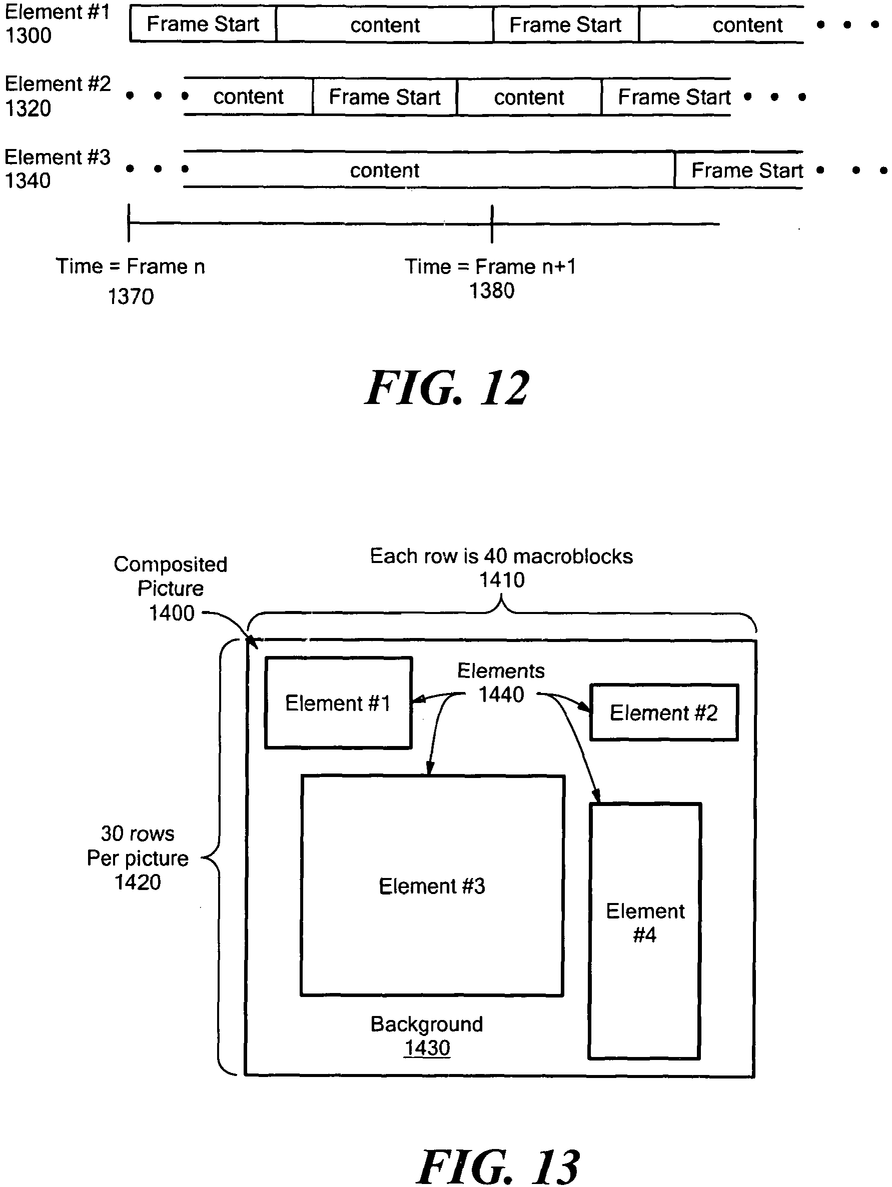

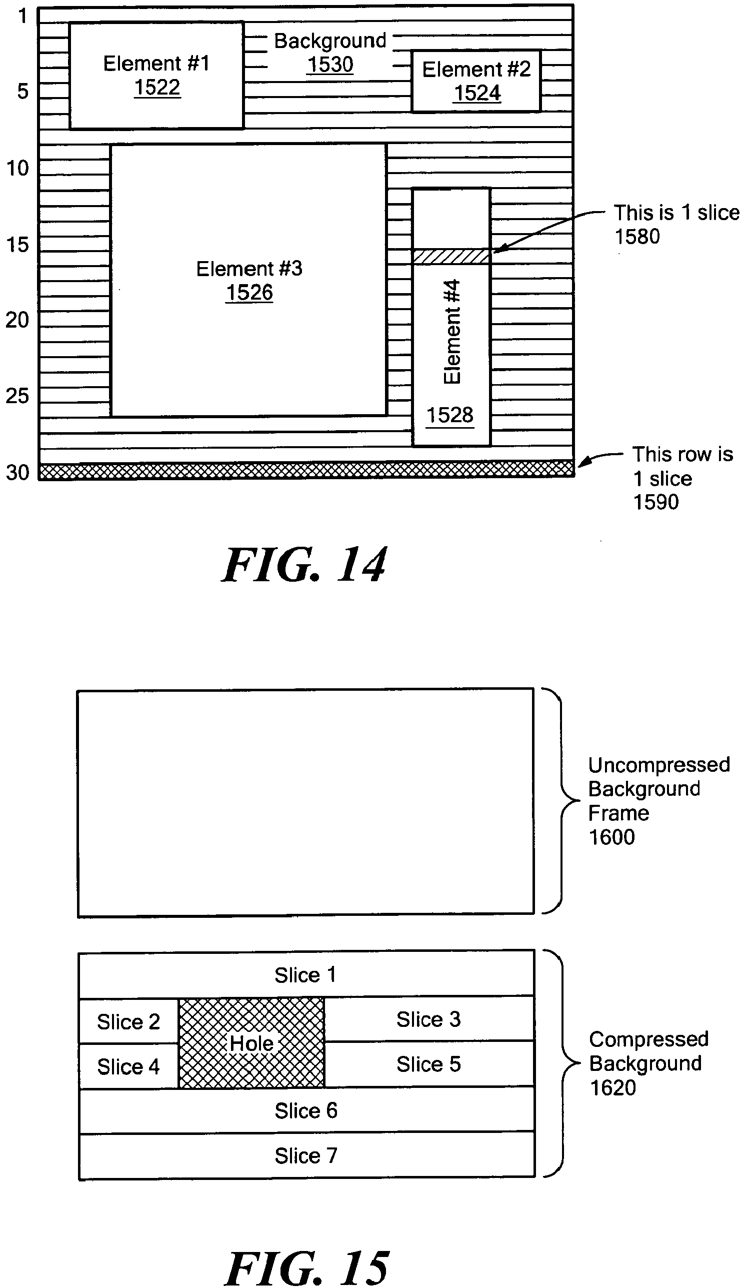

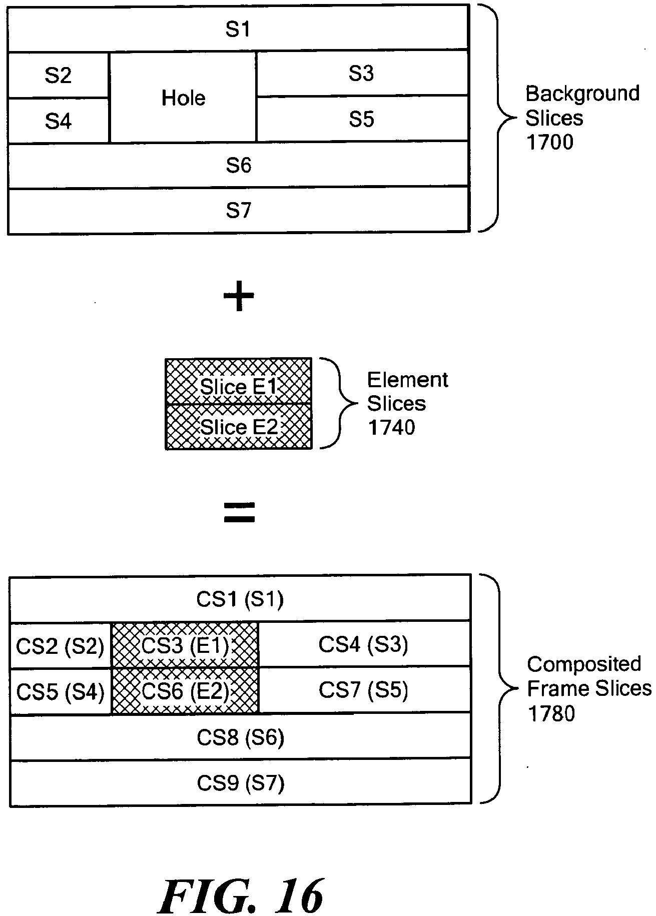

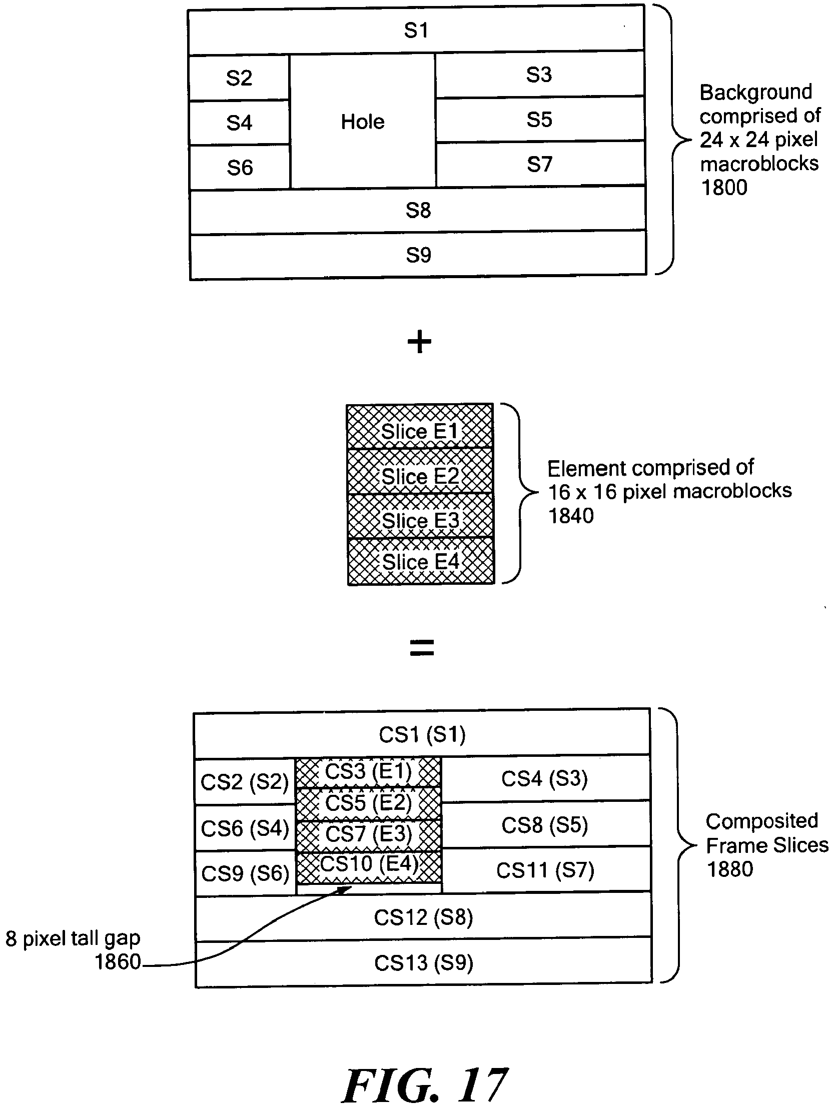

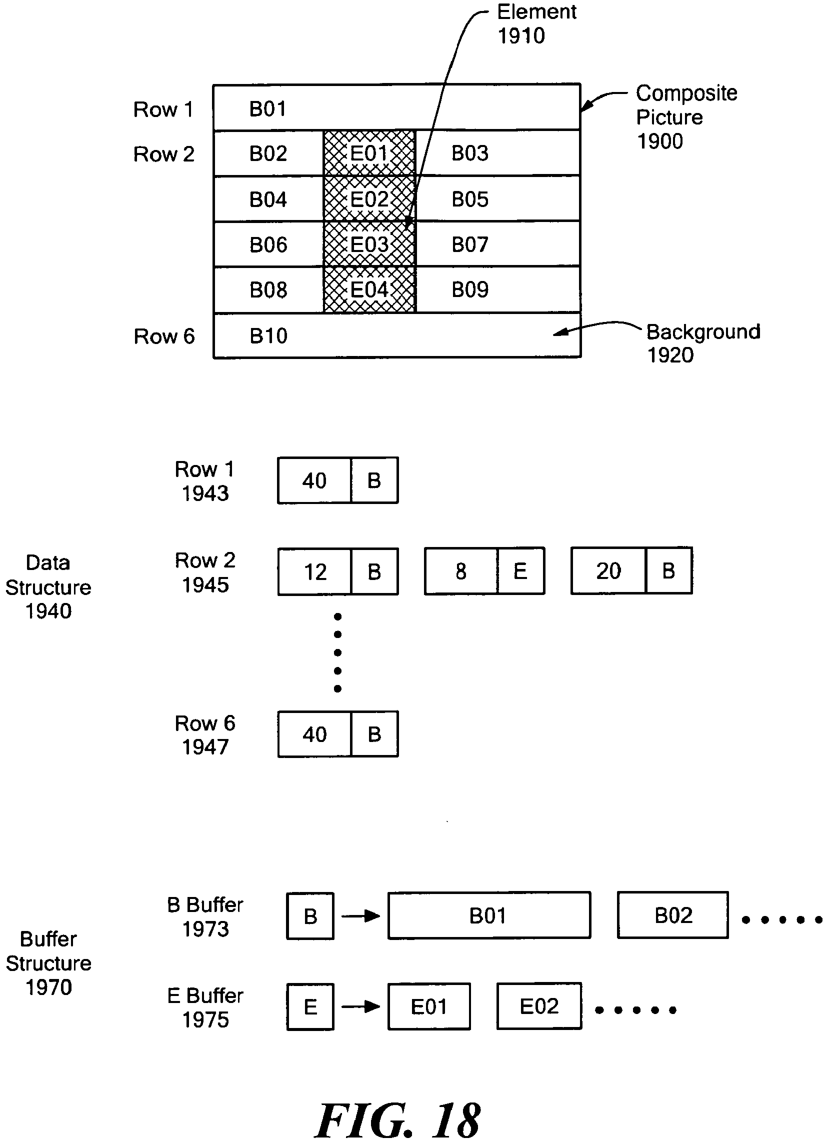

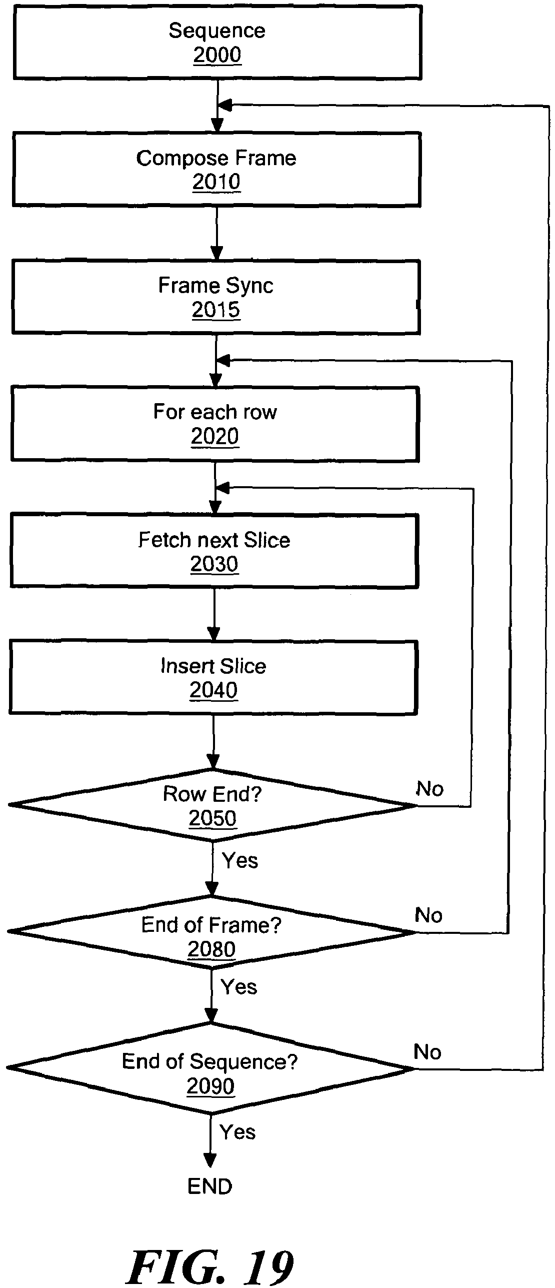

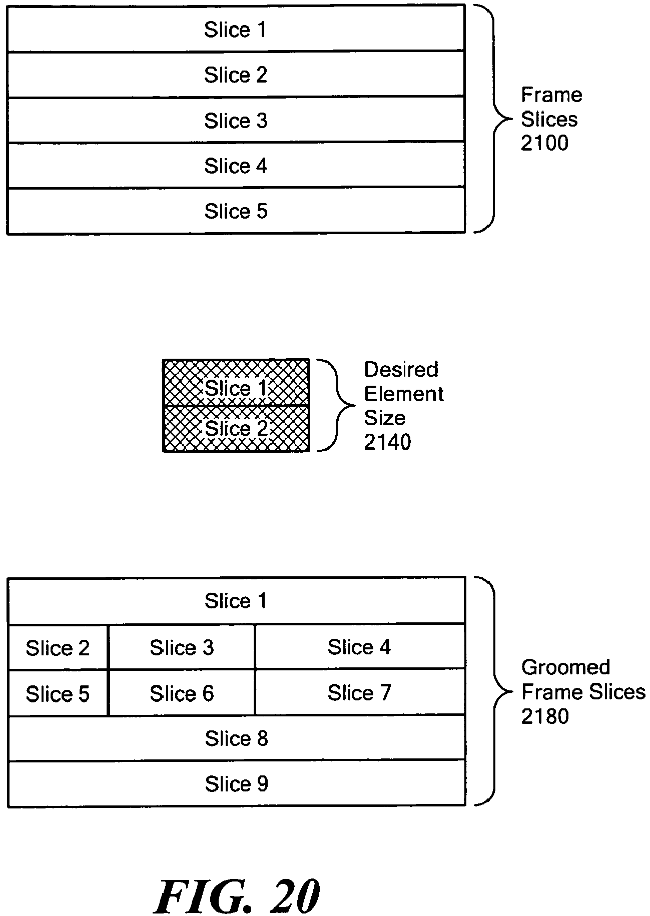

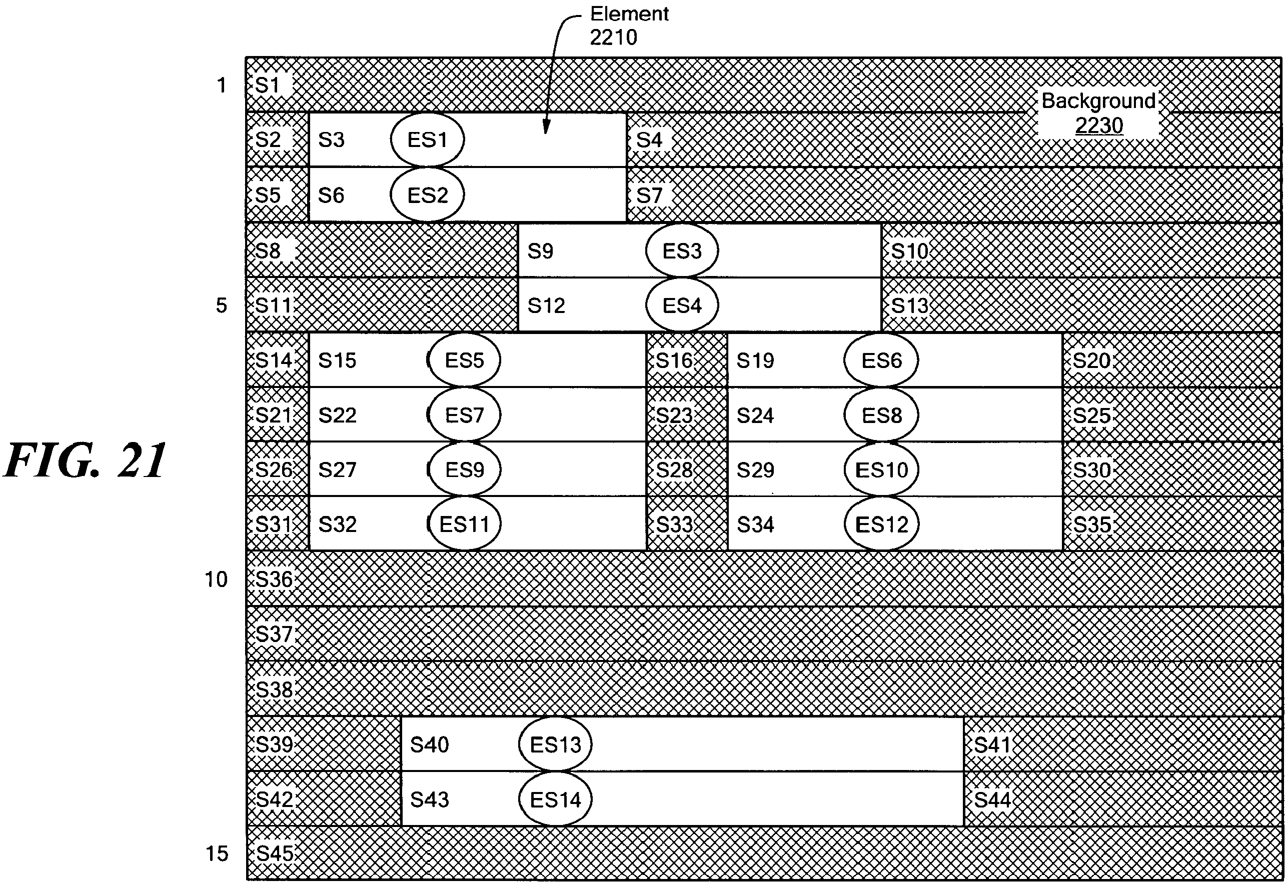

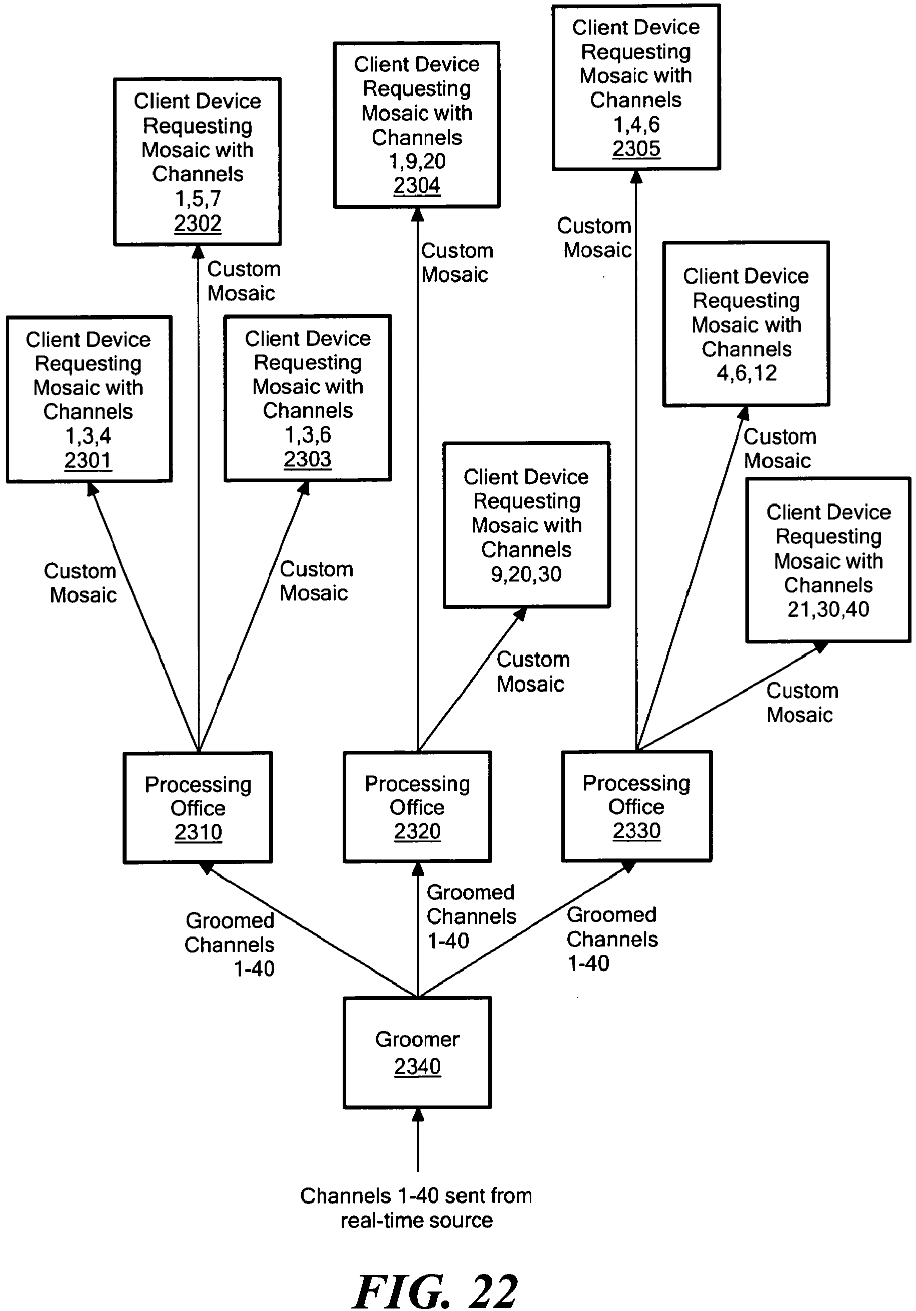

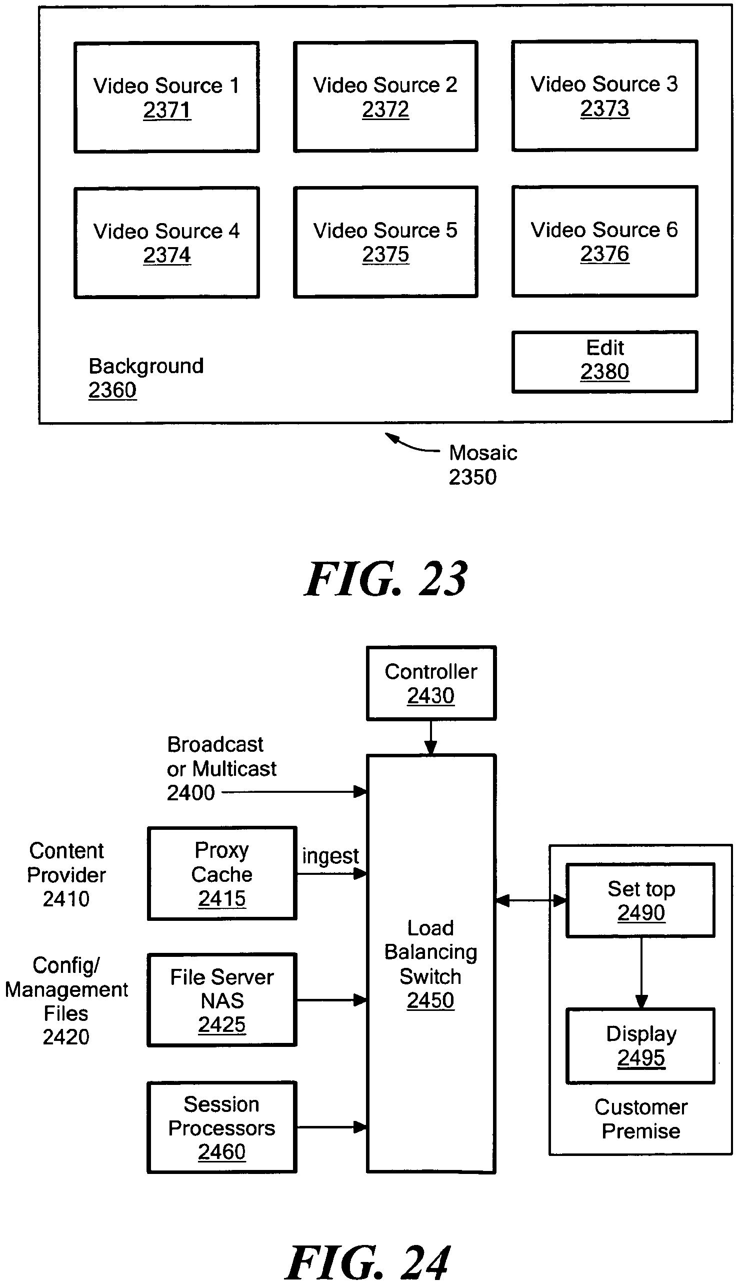

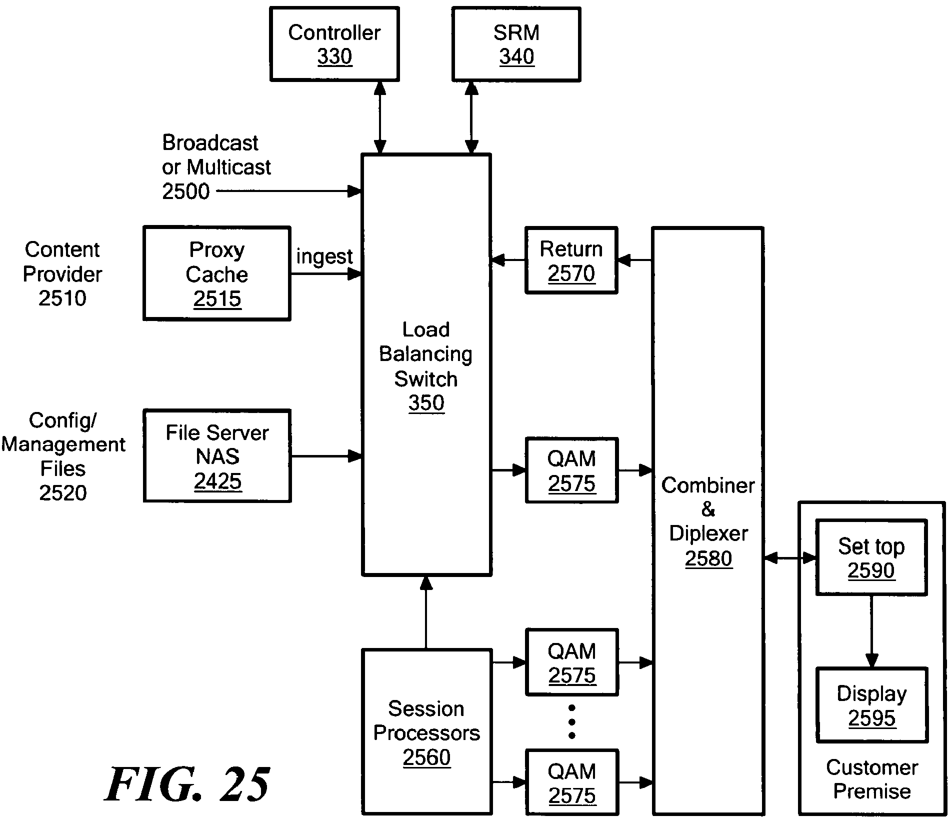

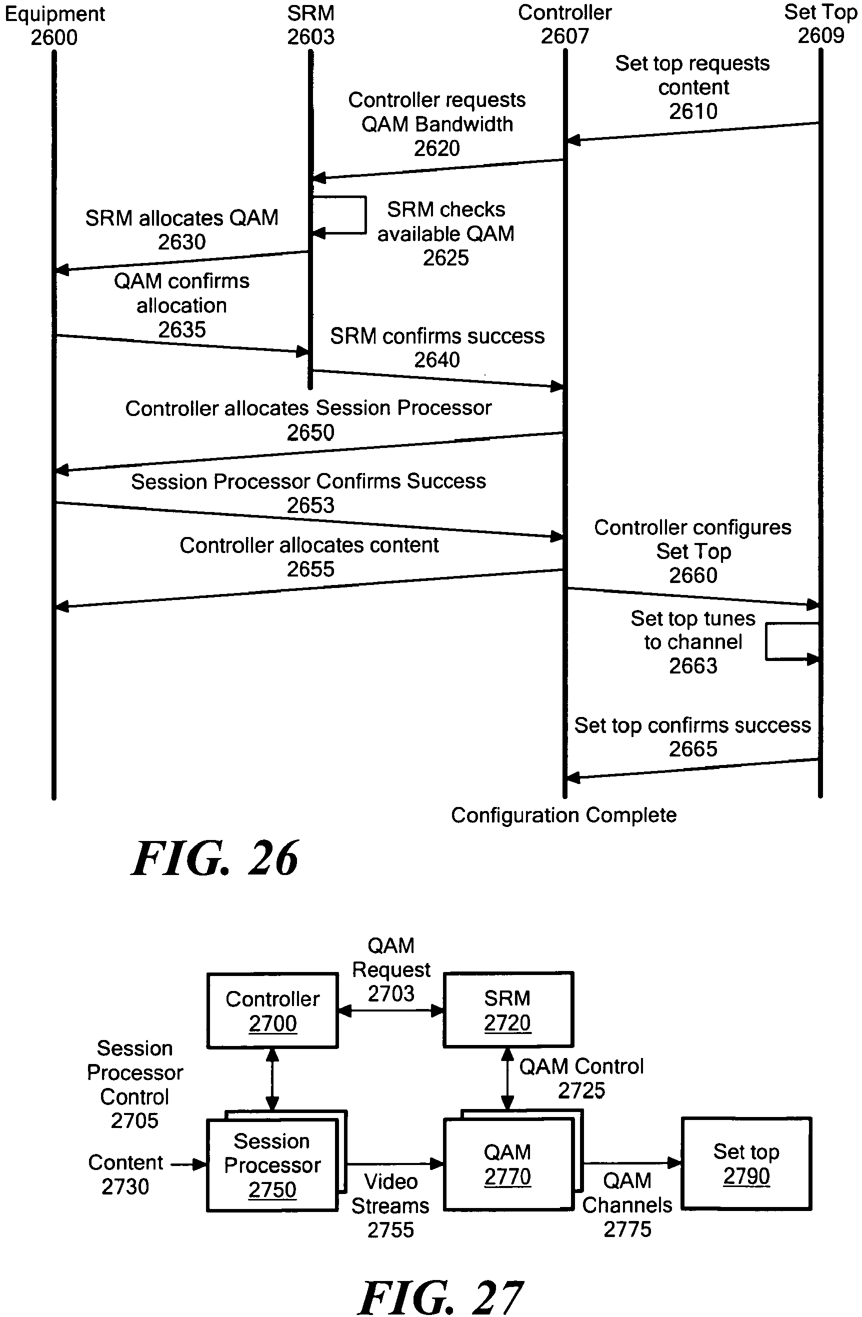

### 1 Introduction

This appendix describes MPEG Objects, their configurable attributes, methods and events (including arguments). It also provides examples of how to use MPEG Objects and Script (AVScript) to write programs that in turn control sessions which ultimately provide interactive television subscribers the capability to set-up their own personal viewing experiences by using only their regular TV channel selectors, in conjunction with any Set-top Box (IP or Cable). In addition, other devices that use MPEG and its variants, AVS, VC-1 or other block-based decoders, and are capable of two way communication may also benefit from these Objects and the AVScript. For example, wireless devices such as cell phones could receive MPEG content and provide control instructions to a processing office that would maintain the AVScript and the state of the MPEG Objects/AVObjects wherein the user of the cell phone would control the interactive content.

The AVScript language controls MPEG Objects, or AVObjects. This language is similar to JavaScript (based on the ECMA-262 standard). A programming development environment, is provided and allows for the development of layouts of Graphical User Interface objects and other, non-graphical objects that control sound and external communications or, in other words, for the development of layouts of TV User/Service Subscriber Interfaces or, in still more succinct parlance, for the development of "Scenes" and their controlling AVScripts.

A group of AVObjects may be combined to form a Scene. The code for the objects that comprise a Scene and all of the Scene's controlling AVScript are saved in a single AVML file. AVML files are XML-like files that contain the names of objects and their attributes, plus other resource information that is necessary for a program to run on the Audio Video Distribution Network (AVDN) platform. The AVDN platform provides the control interface between the commands received from interactive television subscribers and the Program that implements their individually specified commands.

Figure 1 shows the hierarchy of all of AVObject Properties. A root Element Area object, containing a top-level Scene, is always created by default. The Scene could in turn contain multiple Element Areas than various Scenes which are themselves comprised of various instances of individually specifiable AVObjects, ultimately make-up a subscriber's selectable viewing experience.

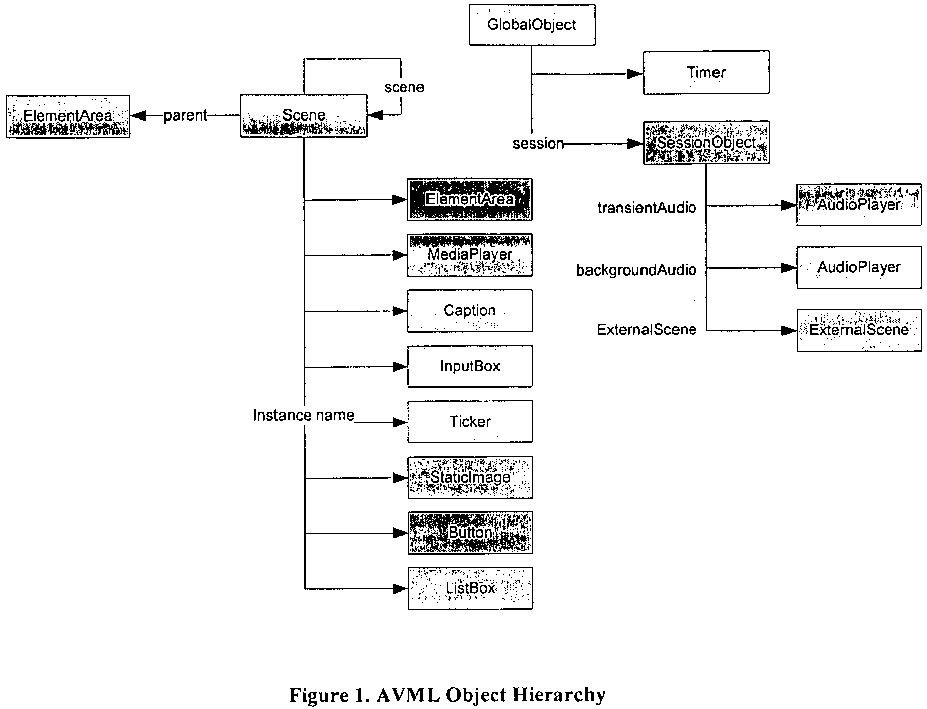

### 2 Scripting Details

As stated earlier, all AVObjects described in this document are controlled by AVScripts. For each Scene in an AVProgram, an AVML file is created that contains the code that instantiates each specified AVComponent of that Scene and its associated AVScript that controls the use of each object thus created. The AVScript can specify the inclusion of additional script files by using the # include directive followed by a quoted string that specifies the location of the file to be included. For example:
#include "http://www.ictv.com/AVDN/include/myscript.avs"

Please note that this is an absolute path to the AVScript file *myscript.avs,* but there are other ways to reference or specify the pathname of any file.

Note: The .avs extension is recommended for AVScript files.

### 2.1 #include files

If a script interpreter cannot find the file to include or if there is a script compile error, the interpreter stops and returns an error message without processing any additional script.

An AVScript file that is included through the use of a #include directive may itself contain additional #include directives. The script interpreter currently limits the recursive depth of #include directives to 50 levels. If the depth limit is exceeded, the interpreter stops processing script and reports an error. This limit is arbitrary and may be set to any level or disabled.

It is possible that multiple script files might # include the same file; the script should work normally without causing a compile error. However, if a function name or a variable name is defined in global space by more than one include file, the last definition compiled is the one that the script uses and, again, there is no compile error.

If a # include directive is incorrectly formatted and either one or both quotes around the path/filename are missing, the interpreter tries to find the file based on the entire string and that could be the entire content of the file if the file does not happen to contain any quotes. The #include directive must be in the following form:
#include "[path]filename. avs"

Note: Do not place a semicolon (;) at the end of any line that contains a #include directive.

A file can list multiple files to be included; however, each #include directive must appear on a separate line.

The [path] component of the form of the # include directive is optional and a developer can specify no path, a relative path or an absolute path to an HTTP site for a file to be included.

The file that contains the #include directive is considered to be the "parent" file. If a path is not specified, then the file to be included must be in the same directory as the file that contains the # include directive.

A relative path is based on the location of a parent file. A Program's AVML file is the top-most parent file and its location/path is the URL of the AVML file. Include files stored locally (i.e., on the computer hosting an AVProgram) must be referred to by a relative path that specifies the directory below the directory where the AVML file of the AVProgram is located.

To specify a relative path for an AVScript file use a single dot (.) to specify the current directory, two dots (..) to specify a parent directory and forward slashes / to specify subdirectories. It is possible to go up multiple levels by using a series of"../" commands. For example "../" refers up one directory level, while "../../" refers up two levels, etc.

### # Include Examples:

// **Note:** Not one of the following #include directives ends with a semicolon (;).
// Here, the file func_script. avs must reside in the same directory as the file that
// contains the #include directive:
   #include "func_script.avs"
// In the following example, the current directory must contain a subdirectory called
// subdir and that subdirectory must contain the file proc. avs :
   #include "subdir/proc.avs"
// Notice that in the previous example we could just as well have used:
   #include "./subdir/proc.avs"
// In the following example we refer to one directory level up to the parent of the script
// file that contains the # include directive:
   #include "../lvls.avs"
// In the following we refer up one directory level to the parent of the script file that
// contains the #include directive, then down to directory level b:
   #include "../level_b/newScript.avs"

### Accessing script files using http://

AVScript files can also be accessed using the http web protocol. To specify an absolute path for an AVScript file by this method, use the URL for the file, preceded by "http: //". For example:
#include "http://www.aaa.com/myfiles/script.avs"

Note: Use forward slashes (/), not back slashes (\).

### 2.2 URLs

The images of many objects are specified by their URLs which point to the location of information about them on the Internet. Images and media that can be played might be located on a server and the URL path for information about them begins with "http://."

Image and media information is stored as part of the Audio Video Distribution Network (AVDN) Program. Their URLs are considered to be "local content" and are packaged with the AVML file as part of the AVDN Program. These files are installed on the computer that hosts the AVDN Program when it runs. The URL path for local content must point to a subdirectory of the directory that contains the AVML file.

### For example: if a developer is working in directory

C:/MyName/NewContent/CellPhone/ and if his AVML file is also located there, then local resources must be in directories below the CellPhone directory; e.g., in C:/MyName/NewContent/CellPhone/Images/ or in C:/MyName/NewContent/CellPhoneBitmaps/. When referring to local content in script, the path relative to the directory of the AVML file must be provided.

For example, to replace a Static image bitmap with an image found at C:/MyName/NewContent/CellPhone/Bitmaps/StaticImage/newsHeadline.bmp, the relative path would be: /Bitmaps/StaticImage/newsHeadline.bmp.this.loadImage("/Bit maps/StaticImage/newsHeadline.bmp").

Note: Use forward slashes (/), not back slashes (\) for all URL notations.

### 2.3 Focus, Chaser and Navigation Flow

### Focus

When an object has focus, the object gets notified about events (programmatic, keyboard or mouse events) or is affected by them. Only one object on a Scene can have focus at any given time.

### Chaser

A "chaser" is a graphical method of showing that an object has focus. A chaser typically appears as a special colored polygon (usually a rectangle or a square) that surrounds an object to indicate that that object has focus. Another approach is to have the object appear in a different color when it has focus.

A chaser can be made to appear by the use of either of these two different methods:
Method 1 - An object that can receive focus is an object that can appear as a Clicked or a Focused image that shows the chaser around it or that changes to a different color. Buttons often use this method.
Method 2 - A media player, a Static Image or an Input Box could have a chaser attribute similar to a picture frame. The chaser appears on the outside of the object but the object is visible within the chaser. The same image for a chaser attribute can appear only around objects that are the same size. To put chasers around objects that are of different sizes, multiple chaser images are required.

### Chaser navigation

A subscriber can use the arrow keys of a remote control unit to move input focus from object to object. Each object that can receive focus has specified for each direction (up, down, left or right) either some other Scene object or a chaser keyword. If some other Scene object is specified, then that object receives focus when the arrow key of the remote control for that direction is activated.

There are two chaser keywords, "None" and "Exit." When the chaser keyword "None" is specified for an arrow direction, focus remains on the current object when that arrow key is activated. The "Exit" keyword applies only when an object is in an ElementArea within another Scene and it causes keyboard focus to move to the external Scene.

### Focus Flow Diagram

With an introduction of the Element Area in AVML, it is possible to create a hierarchy of nested Scenes with a default or run-time defined focus flow. Thus, the Element Area of each Scene could be defined as focusable (with or without other Chaser attributes defined) and each nested Scene might contain focusable Scene elements.

Default navigation logic allows focus to be passed transparently in the general case of nested navigation. If required, the programmer can override default behavior using focus-related attributes and methods.

### Focus Flow and Use Cases

The diagrams on the next couple of pages illustrate the comprehensive flowchart of focus flow (Figure 2) and a couple of typical focus flows (Figures 3 and 4).

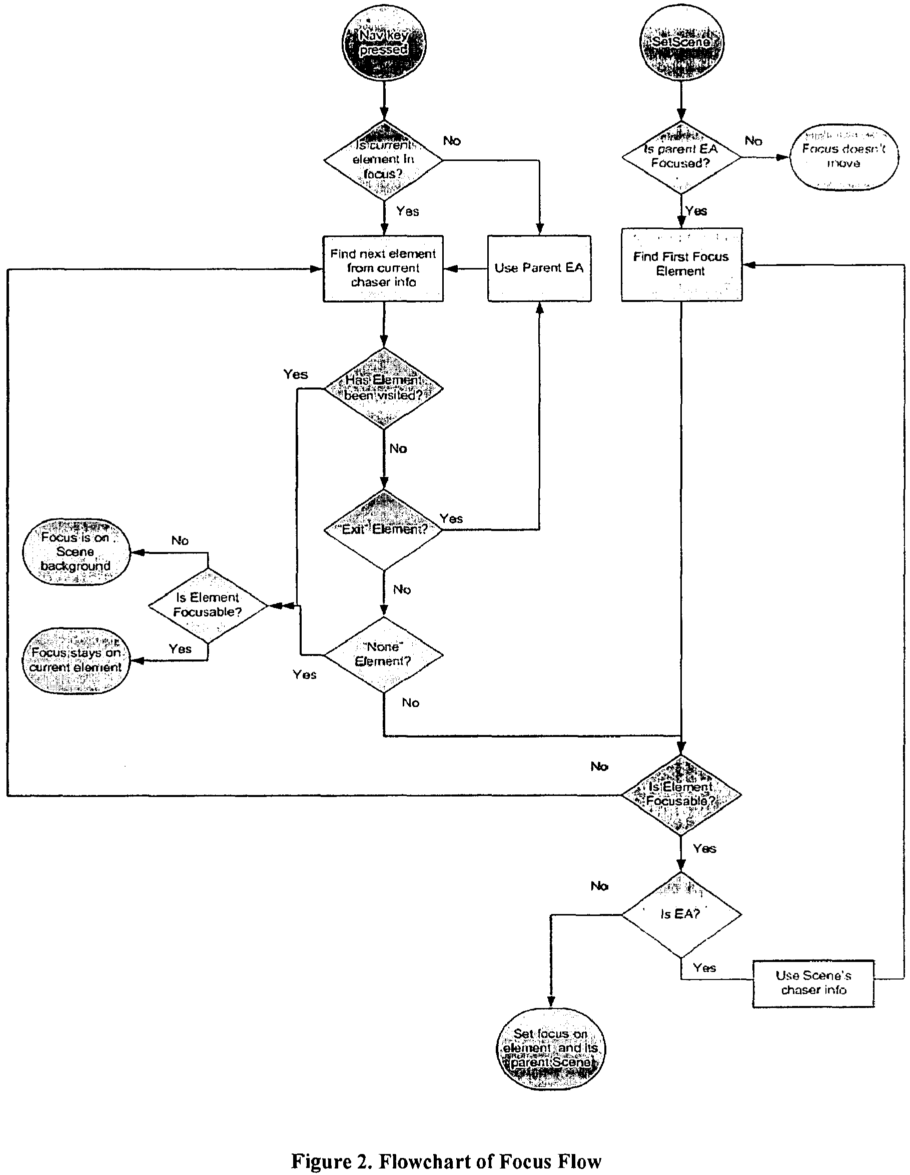

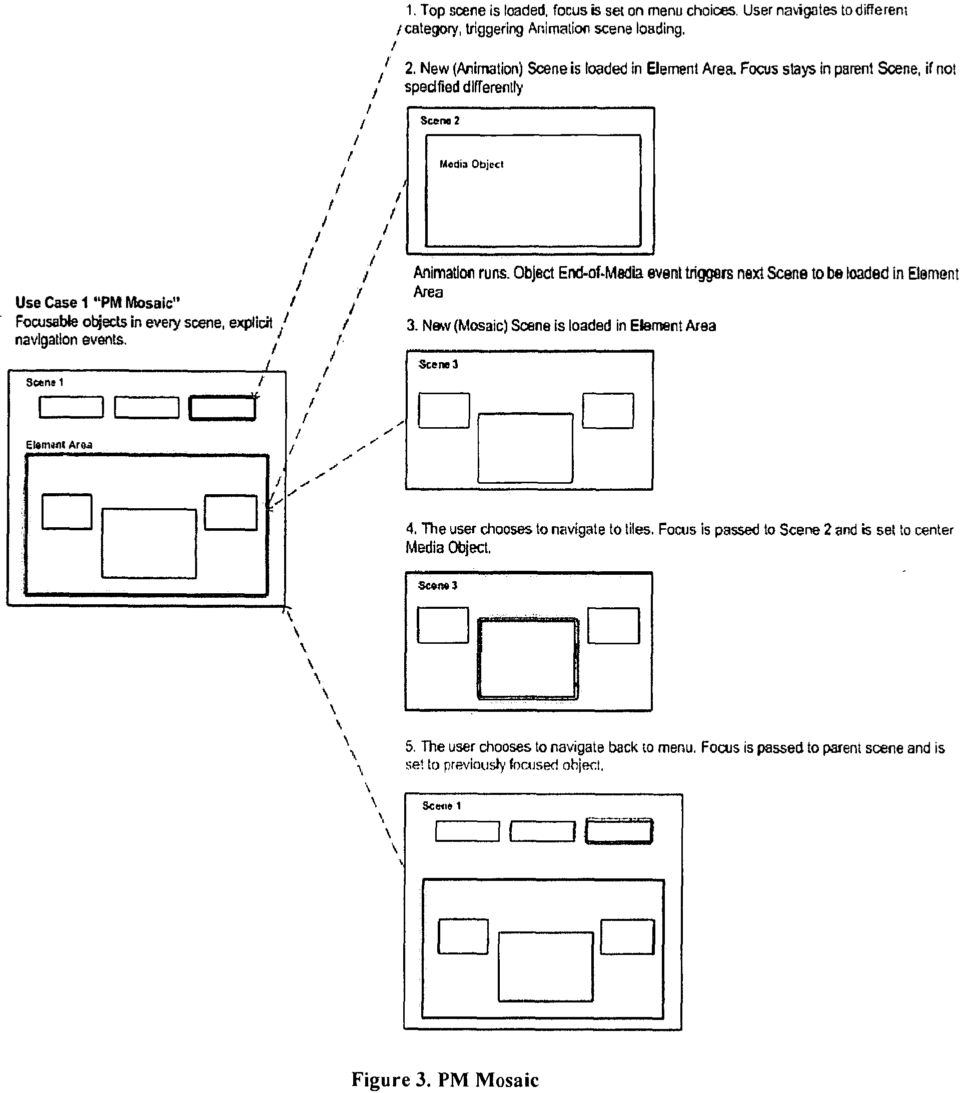

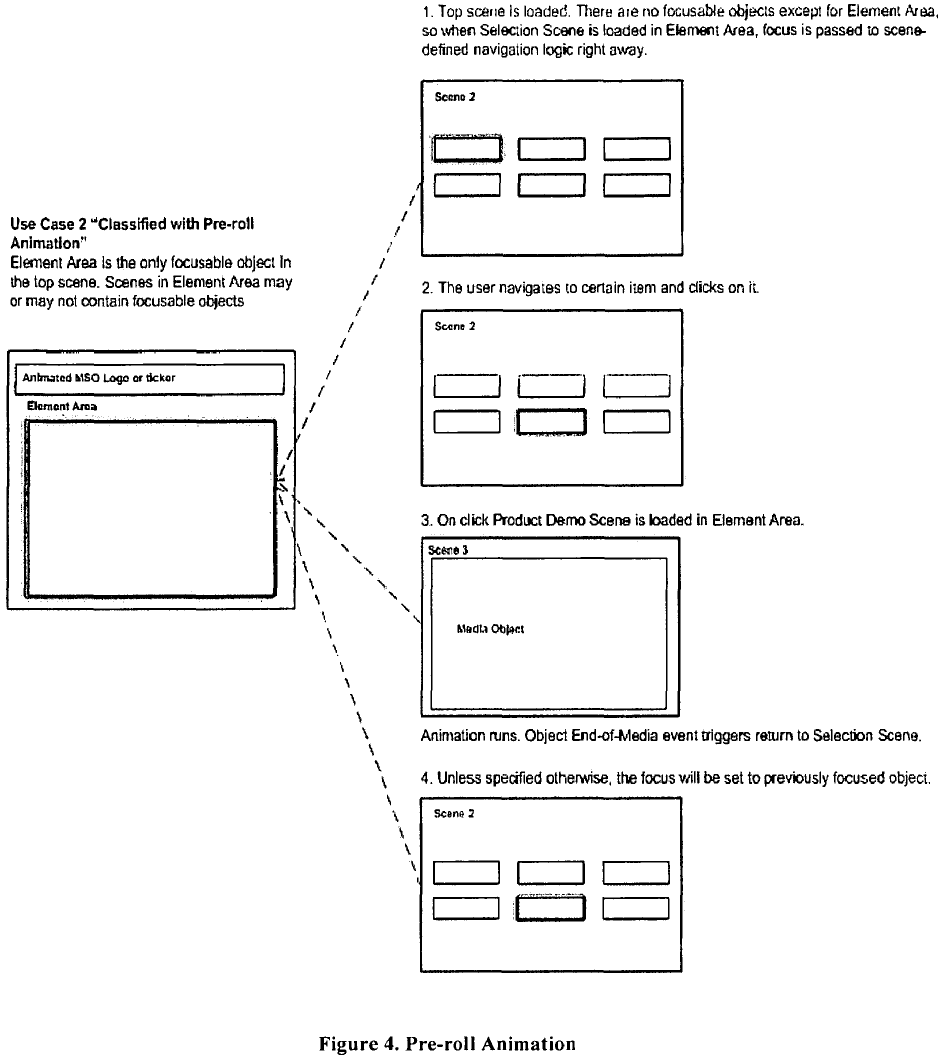

### 2.4 Audio / Sound

Four audio priority levels are maintained which, from highest to lowest, are named: "transient," "high," "medium" and "background." Any asset associated with a higher priority plays regardless of any audio asset set at lower priority. Specific audio players are available through the session object to play assets at transient and background audio priorities. MediaPlayer focus traversal uses the medium audio priority. The high priority level is used when audio focus is explicitly set using the MediaPlayer setAudioFocus method.

### 2.5 Button and ListBox images

Buttons and items within a ListBox are depicted with different images to represent their different states. The term "Clicked," which comes from the act of clicking a computer mouse button when the cursor is over an item, is used when an item is being selected. Figure 5 shows the normal states for a Button or a ListBox, which are:
Focused - an item has keyboard focus but has not yet been Clicked
Clicked - an item has keyboard focus and has been Clicked by the subscriber
Selected - a subscriber has Selected an item but keyboard focus is no longer on it
Default - an item has not been selected and does not have keyboard focus
Disabled - an item is not selected and cannot receive keyboard focus

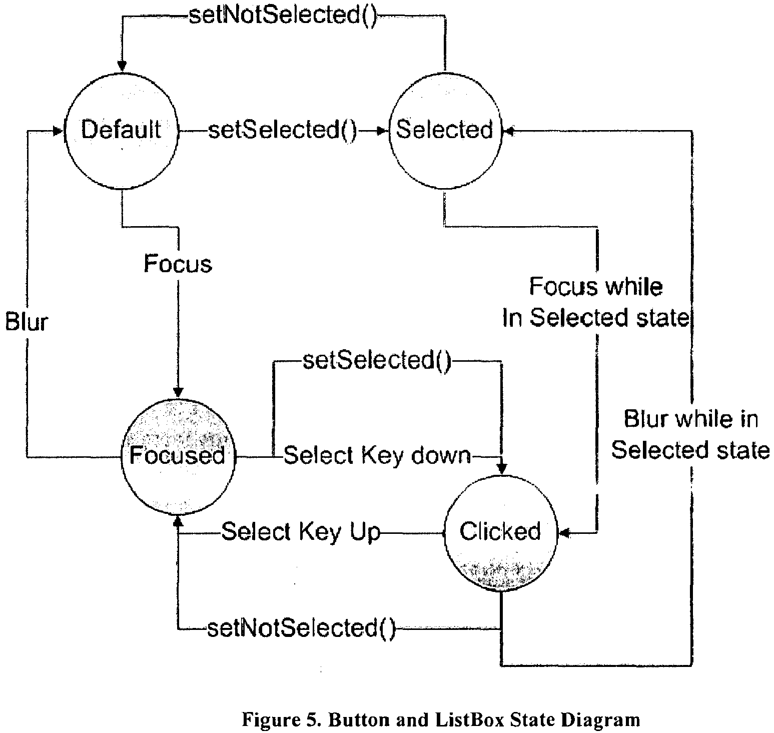

**NOTE:** In addition to a transition to the normal state, a Button can be disabled or hidden or a ListBox can be disabled.

If a Button is hidden and a script calls the enable() function, the Button appears in its default state. When a Button is hidden, a subscriber cannot see anything on the TV to indicate that there is a button present, even though the Scene background can be seen.

Any time a script disables or hides a Button or disables a ListBox, the object displays the disabled or hidden image, no matter what state was displayed before the command. If focus was on an object when that object was disabled or hidden, it moves to another object on the Scene. See the disable() and the hide() function commands 0 or 0 for information on how the new chaser position is set.

A script cannot set focus on a disabled or hidden object while it is disabled or hidden. If an object is not disabled and the enable command is called, the object remains in its current state. Making changes to the text, text color or background color of a Button or a ListBox does not change its state. If the state of a disabled object is changed, a new image appears for it.

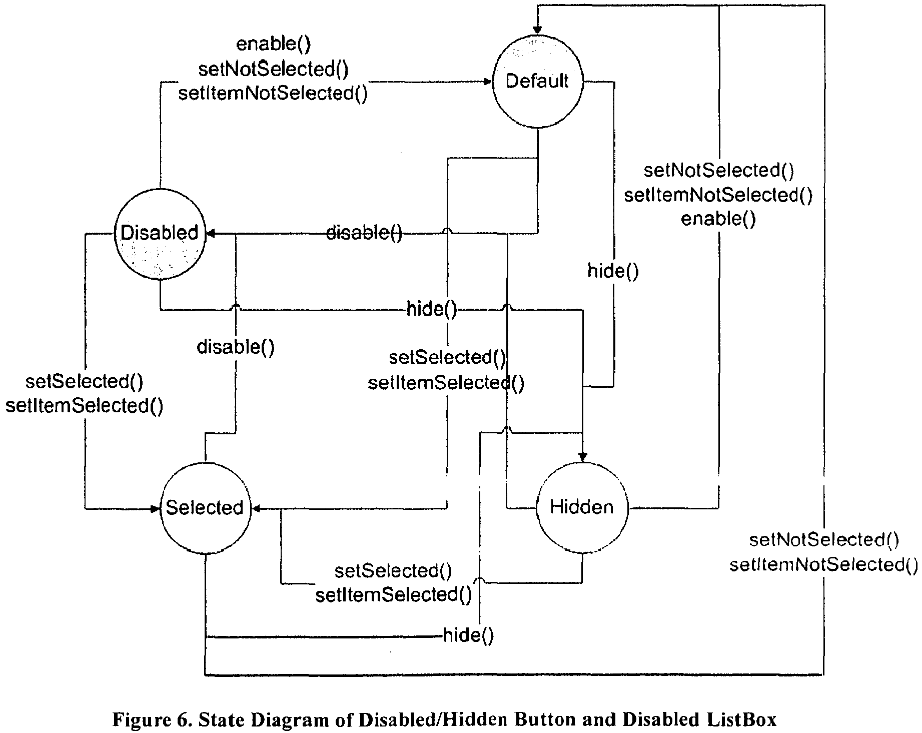

### 2.6 Keyboard Input

Typically a cable box remote control provides the keyboard input to an AVDN session. The remote control might have buttons on it that are not normally found on a computer keyboard; for example, there might be a "play" or a "rewind" button. A script receives a key value that relates to the remote control button that was pressed.

The key values are neither ASCII character values nor Unicode character values, but Table 1 lists their key values and their corresponding keys.

**Table-1. Cable Box Keys and Their Values**

| key value | Device Key | Keyboard Key |
|---|---|---|
| 262144 | 0 | 0 |
| 262145 | 1 | 1 |
| 262146 | 2 | 2 |
| 262147 | 3 | 3 |
| 262148 | 4 | 4 |
| 262149 | 5 | 5 |
| 262150 | 6 | 6 |
| 262151 | 7 | 7 |
| 262152 | 8 | 8 |
| 262153 | 9 | 9 |
| 196609 | left arrow key | left arrow key |
| 196610 | right arrow key | right arrow key |
| 196611 | up arrow key | up arrow key |
| 196612 | down arrow key | down arrow key |
| 327683 | page down key | page down key |
| 327684 | page up key | page up key |
| 196608 | okay or enter key | okay or enter key |
| 65536 | Play | F2 |
| 65537 | Pause | F3 |
| 65538 | Stop | F4 |
| 65539 | FWRD | F5 |
| 65540 | REW | F6 |
| 327680 | Guide | F7 |
| 327681 | Menu | F8 |
| 327682 | Info | F9 |
| 327685 | Help | H/h |
| 327686 | Last | L/l |
| 327687 | Fav | F/f |
| 327689 | Lock | Scroll Lock |
| 327690 | A | A/a |
| 327691 | B | B/b |
| 327692 | C | C/c |

### 2.7 Events and Event Order

The majority of script commands are written to handle a subscriber event. For example, a subscriber might start to navigate to an AVML file or press a key on the remote. When these external events occur, event handlers like onLoad() or onKeyPress() notify an script. The following subsections describe the events (and specify their order) that assist in creating an script.

### onLoad() and onInitialUpdate()

A Scene and all Scene elements support an onLoad() event. A Scene also has an onInitialUpdate() event that occurs only when a Scene loads for the first time in a session. Tables 2 and 3 list and comment on these and other Scene-related event functions.

**Table-2. Order of Initiating Scene-Related Event Functions**

| **Event Order** | **Comments** |
|---|---|
| 1. onInitialUpdate() event for Scene | Occurs the first time a Scene loads |
| 2. onLoad() events for all Scene elements | OnLoad() events are executed asynchronously. |
| 3. setFocus() on for Scene elements, if any | Scene element in focus is determined by InitialFocus property, currently focused element or first focusable element in a Scene. |
| 4. onLoad() event for Scene | Due to asynchronous nature of onLoad events, it is not guaranteed that an onLoad() event for the Scene elements are |
| | complete by that time. |

### onUnload()

When a subscriber leaves a Scene, the onUnload() event occurs. Like the onLoad() event, scene and GUI objects support an onUnload() event. As can be seen from Table 3, first all Scene elements are unloaded, then all Scenes are unloaded and, lastly, the session is ended.

**Table-3. Order of Terminating Scene-Related Event Functions**

| **Event order** | **Comment** |
|---|---|
| 1. onUnload() for Scene elements | The event order for GUI objects can vary. This event only occurs when changing to another Scene. |
| 2. onUnload() for Scene | The Scene onUnload() is last. This event only occurs when changing to another Scene. |
| 3. onEndSession() for Scene | When the session ends, this events gets called for each Scene that has been loaded during the session. OnSessionEnd() is called from the bottom up in terms of Scene hierarchy. Scenes at the same level are called in alphabetical order. |

### onEndSession()

This event function gets called for each Scene that has been loaded during this session, when the session ends.

### onFocus() and onBlur()

The TextInput, Button, ListBox, MultiMedia and StaticImage objects support onFocus() and onBlur() events. The onFocus() and onBlur() events occur as input focus moves from object to object. Input focus can be controlled either by script code using the Scene command setFocus() or by subscriber input, using the arrow keys on the remote control. Events occur in an expected order. If focus is moved by the subscriber hitting an arrow key, the onKeyPress() is the first event, then the onBlur() for the object that currently has focus and finally the onFocus() for the object that receives focus. When the setFocus() command is used, the first event is onBlur() then the onFocus().

Note: The default event handler for the onBlur() changes the appearance of an object to unfocused and the onFocus() default handler changes the appearance of an object to focused. If the script overrides a default handler by returning true for an event, then the script must be responsible for changing the appearances of objects.

### onKeyPress(), onKeyUp(), onClick() and onSelectItem()

StaticImage, MultiMedia and Button all support onKeyPress(), onKeyUp() and onClick() events. TextInput and ListBox support only onKeyPress() and onKeyUp() events. Also the scene has onKeyPress and onKeyUp() events that allow one to override default key handling. The onTopOfList(), onBottomOfList() and onSelectItem() are special events that apply to only the ListBox object. The onTopOfList() and onBottomOfList() allow a developer to control keyboard focus. If focus is on one of the end elements and a keyboard input in the ListBox orientation would move focus off of the ListBox, the onTopOfList() or onBottomOfList() event occurs and, if overridden, it prevents the default handler from moving focus away from the ListBox. onClick() for button and onSelectItem() for ListBox have a default handler that changes the item to show it in the "Clicked" state. Table 4 shows the event order for these functions.

**Table-4. Essential Key-related Functions**

| **Event order** | **Comment** |
|---|---|
| 1. Scene - onKeyPress () | If default handler is overridden by returning true, no subsequent events occur. The default handler recognizes the arrow keys (up, down, right, left) and uses them to position keyboard focus on the Scene, but if that is overridden then script must be made to control keyboard focus. |
| 2. GUI objects that have focus onKeyPress() | If the default handler is overridden by returning true, no subsequent events occur. |
| 3. GUI objects that have focus on the onClick() function | Only StaticImage, MultiMedia and Button. If the default handler is overwritten for a Button, that Button is not automatically displayed in the "Clicked" state. |
| 4. ListBox has focus - onTopOfList() and onBottomOfList() | Only ListBox. |
| 5. ListBox has focus - onSelectItem() | If the default handler is overwritten for ListBox, the "item" with focus is not automatically displayed in the "Clicked" state. |

**Note:** The default handling of "page up" to the "next" Scene only occurs if the subscriber has moved "back" from another Scene. If the subscriber has not moved "back," the default handler cannot select the "next" Scene.

### 2.8 Subscriber Inactivity Timer

A subscriber inactivity timer (a Global Object property), terminates sessions that a subscriber has abandoned and thereby frees resources for other subscribers to use. Default timeout values are assigned to all AVPrograms, but developers can change the timeout values (up to a maximum amount of time) by using script. There are two timeout values that a developer can change by using script commands: Warning Timeout and Logout Timeout. The Warning Timeout is the amount of time (in seconds) without subscriber input until the session onInactivityTimerExpired() event (see section 10.1) is called for the script (the developer can display a message to subscribers to caution them that their session is about to terminate unless they hit a key). If there is not any subscriber activity for the Logout Time after the onInactivityTimerExpired() event, then the session ends. The script commands are part of the session attributes (see Section 10), which are: session.warningTimeout and session.logoutTimeout.

### 3 User Interface Objects

### 3.1 Button

### Description

A button appears on the TV and allows a subscriber to interact with the GUI by selecting and clicking on it. A button can have any one of the following five states: Clicked, Focused, Selected, Default or Disabled (see Button and ListBox images).

### Button Attributes

### None

### Button Events

### void onLoad()

### Description

This event occurs for an object each time a subscriber views a Scene that contains that object.
- **Arguments**: None.
- **Returns**: Void.

### Example

| |
|---|
| ```
 scene.Button1.onLoad = function ()
 {
     // Print a message when onLoad Event happens for Button1  
        print ("Button1 onLoad Event") ;
 }
``` |

### void onUnload()

### Description

This event occurs for an object each time a subscriber navigates away from a Scene that contains that object.
- **Arguments**: **None.**
- **Returns**: Void.

### Example

| |
|---|
| ```
 scene.Button1.onUnload = function ()
 {  // Print a message when the onUnload event happes for Button1
          print("Button1 onUnload Event") ;
 }
``` |

### bool onFocus(String previous)

### Description

An event that indicates this item has received focus. When the button gets focus, "Previous" is the object name of object that had focus. The Default event handler sets the chaser on this object. If this event returns a true, then the default handler does not execute.

### Arguments

- previous: The name of the object in the Scene that had focus before focus was put on this button.

### Returns

- true: This is the keyword for the Boolean that indicates this object handled this event.
- false: This is the keyword for the Boolean that indicates another object should handle this event.

### Example

| |
|---|
| ```
 // The variable scriptHandlesFocus can be changed to select if script overrides the
 // default event handler
 var scriptHandlesFocus = true;
 scene.Button1.onFocus = function (previous)
 {
      // print a message with the name of this button and what object has focus
      // previously
         print("Name="+this.toString() + " Button onFocus Event previous was " + previous);
      if (scriptHandlesFocus)
         {
         // The script overrides the default event handler and shows d
         // different button, as selected.
                scene.DifferentButton.setSelected();
                return true;
         }
         else
         {
         // Allow the default event handler.
                return false;
         }
 }
``` |

### bool onBlur(String next)

### Description

An event that indicates this item no longer has focus. When the button loses focus, "Next" is the name of the object that gets focus next. The default event handler removes the chaser from this object. If this event returns a "true," then the default handler does not execute.

### Arguments

- Next: The name of an object on the Scene that receives focus next.

### Returns

- true: This is the keyword for the Boolean that indicates that this object handled this event.
- false: This is the keyword for the Boolean that indicates that another object should handle this event.

### Example

| |
|---|
| ```
 // The variable scriptHandlesFocus can be changed to select if script overrides the
 // default event handler
 var scriptHandlesFocus = true;
 scene.Button1.onBlur = function (next)
 {
       print("Button onBlur Event next is " + next);
       if (scriptHandlesFocus)  
       {
       // Script overrides the default event handler
       // an unselects a different button
               scene.DifferentButton.setNotSelected();
       }  
       else  
       {  
               // let the default event handler handle the event
       return true;
       }  
       return false;
 }
``` |

### boolean onKeyPress(int keyCode)

### Description

If the button is in focus and a key on the keyboard is pressed, this event is fired. The default event handler updates the chaser position (keyboard focus), if needed, and fires the onClick event if the "OKAY" key was pressed. If a Boolean true is returned, the default handler does not execute.

### Arguments

- keyCode: The keyCode is an integer for the key that was pressed. For additional information on keyCodes, see section 0.

### Returns

- true: This is the keyword for the Boolean that indicates that this object handled this event.
- false: This is the keyword for the Boolean that indicates that another object should handle this event.

### Example

| |
|---|
| ```
 // include the library file keycodes.avs to help human readability of the code.
 #include ".../lib/keycodes.avs"
 scene.Button1.onKeyPress = function (key)
 {
       // print out what key was pressed while focus was on the button.
          print ("Button onKeyPress Event key value is" + key);  
          // key codes are defined in /lib/keycode.avs file  
          if (key == AV_RIGHT_ARROW_KEY)  
          {
                  print ("right arrow disabled");  
                  // don't allow moving right from this button by overriding the  
          // default event handler  
                  return true;
          }
      // allow the default event handler to handle these cases  
          return false;
 }
``` |

### boolean onKeyUp(int keyCode)

### Description

If this button is in focus and a key on the keyboard is released, this event occurs.

### Arguments

- keyCode: The key value as an integer for the key that was released. For addition information on key values see section 0 .
- **Returns**: Void.

### Example

| |
|---|
| ```
 scene.Button1.onKeyUp = function (key)
 {
     // print message that a onKeyUp event occurred and print key value.  
        print("Button onKeyUp Event key value is " + key);
 }
``` |

### void onClick()

### Description

This is a special case of the onKeyPress() event. This event occurs when an object has focus and the Enter key on a keyboard or the "OKAY" key on a remote control is pressed. Also if a mouse is supported, then a mouse click can trigger this event. The default handler for the onClick() event is to place the object in the "Clicked" state.
- **Arguments**: None.
- **Returns**: Void.

### Example

| |
|---|
| ```
scene.Button1.onClick = function ()
{
// print that an onClick Event occurred for the button.  
print ("Button1 onClick Event");
}
``` |

### Button Methods

### void setText(String text)

### Description

This sets the specified text on the button.

### Arguments

- text: The text that is to appear on the button.
- **Returns**: Void.

### Example

| |
|---|
| ```
 var clickCount = 0;
 scene.Button1.onClick = function ()
 {  
          // display on the button number of times it has  
          // been clicked  
          clickCount++;  
          Button1.setText("#" + clickCount);
 }
``` |

### String getText()

### Description

This makes the specified text that appears on the button.
- **Arguments**: None.
- Returns: The text that is currently displayed on the button.

### Example

| |
|---|
| ```
 scene.Buttonl.onBlur = function (next)
 {
          // print a message showing the text label on the button  
          print("button text = " + Button1.getText());
 }
``` |

### void enable()

### Description

Shows a button in its unselected state. If the button has focus, the *Focused* image appears. If a button does not have focus, the *Default* image appears. The button appears similar to the setNotSelected() command appearance. Use setSelected()/setNotSelected () to control button selection and enable()/disable() to enable or disable a button.

### Example

| |
|---|
| ```
 scene.btnEnable.onClick = function ()
 {
     // enable a different button when this button is clicked.
     scene.TestButton.enable();
 }
``` |

### void disable()

### Description

Shows the button in its Disabled state; the Disabled image appears. This indicates that the button cannot be selected and it cannot receive keyboard focus.

### Example

| |
|---|
| ```
 scene.btnDisable.onClick = function ()
 {
     // disable a different button when this button is clicked
     scene.TestButton.disable() ;
 }
``` |

### void setselected()

### Description

This shows a button in its Selected state.

**Note:** Selected and Focused are different states and they can have different appearances. If the button has focus then the *Clicked* image appears; however, if the button does not have focus, then the *Selected* image appears.

### Example

| |
|---|
| ```
 scene.btnSelect.onClick = function ()
 {
     // show in selected state a different button when this button is clicked
     scene.TestButton.setSelected();
 }
``` |

### void setNotSelected()

### Description

Shows a button in its unselected state. The button looks similar to the way it looks in response to the enable() command. Use setSelected()/setNotSelected() to control button selection and enable()/disable() to enable or disable it.

**Note:** Selected and Focused are different states and can have different appearances. If the button has focus the *Focused* image appears; however, if the button does not have focus, the *Default* image appears.

### Example

| |
|---|
| ```
 scene.btnNotSelect.onClick = function ()
 {
     // show not selected a different button when this button is clicked
     scene.TestButton.setNotSelected() ;
 }
``` |

### void hide()

### Description

In the hidden state, the background image of the Scene appears in place of the button. This indicates that the button cannot be selected, nor can it receive focus. A subscriber cannot see a button in the hidden state. A button may be unhidden using one of the other view button commands like enable(), disable(), setSelected () or setNotSelected(); although typically, enable() would be used.

### Example

| |
|---|
| ```
 scene.btnHide.onClick = function ()
 {
     // hide a different button when this button is clicked
     scene.TestButton.hide();
 }
``` |

### void setTextColor(String RGBvalue, String buttonState)

### Description

This sets the color of the text for a specified button state.

### Arguments

- RGBvalue: This specifies the RGB color value, which must be a string of three two-digit hexadecimal values. Each hexadecimal value represents an amount of a certain color. The format is RRGGBB where RR is the hexadecimal value for Red, GG is for Green and BB is for blue. The string "FF0000" would be completely red and "00FF00" would be green. White is "FFFFFF" and black is "000000."
**NOTE:** If an invalid string (i.e., any string that does not meet the RRGGBB format) is passed as a parameter, the color is set to black.
- buttonState: This string is the button state that should display the text with that specified color. Possible button states are: *Focused, Clicked, Selected, Default and Disabled.*
- **Returns**: Void.

### Example

| |
|---|
| ```
 // each of the buttons changes the text color for the default state
 // of the test button on the Scene
 scene.btnRed.onClick = function ()
 {
     scene.TestButton.setTextColor("FF0000", "Default");
 }
 scene.btnGreen.onClick = function ()
     {scene.TestButton.setTextColor("00FF00", "Default") ;
 }
``` |
| ```
 scene.btnBlue.onClick = function ()
 {
     scene.TestButton.setTextColor("0000FF", "Default");
 }
``` |

### void setBackgroundColor(String RGBvalue, String buttonState)

### Description

This sets the background color for a specified button state.

### Arguments

- RGBvalue: This specifies the RGB color value, which must be a string of three two-digit hexadecimal values. Each hexadecimal value represents an amount of that color. The format is RRGGBB where RR is the hexadecimal value for Red, GG is for Green and BB is for blue. The string "FF0000" is completely red, while "00FF00" is green. White is "FFFFFF" and black is "000000.." **NOTE:** If an invalid string (i.e., any string that does not meet the RRGGBB format) is passed as a parameter, the color is set to black.
- buttonState: A string that is the button state that should display the background with this color. Possible button states are: *Focused, Clicked, Selected, Default and Disabled.*
- **Returns**: Void.

### Example

| |
|---|
| ```
 var backWhite = true; scene.btnToggleBack.onClick = function ()
 {  
     if(backWhite)  
     {  
          // set the button background color to black for Default state  
          scene.TestButton.setBackgroundColor("000000," "Default") ;  
          backWhite = false;  
     }
     else
     {  
          // set the button background color to white for Default state  
          scene.TestButton.setBackgroundColor ("FFFFFF," "Default");  
          backWhite = true;  
     }
 }
``` |

### String getCurrentState()

### Description

This gets the name of the current state of the button.
- **Arguments**: None.
- **Returns**: The name of the state that the button is currently in; that is: Disabled, Default, Selected, Focused or Clicked.

### Example

| |
|---|
| ```
 scene.btnGetState.onClick = function ()
 {
          // print message of the current state of the Test Button.
     var currentState = scene.TestButton.getCurrentState();  
     print ("Button state is " + currentState);
 }
``` |

### String getTextColor(String buttonState)

### Description

Returns the RGB color value of the button text as a text string.

### Arguments

- buttonState: A string that is the buttonState displays the background with this color. Possible button states are: *Focused, Clicked, Selected, Default and Disabled.*
- **Returns**: Returns the RGB color value of the button text as a text string. The format is RRGGBB where RR is the hexadecimal value for Red, GG is for Green and BB is for blue. **NOTE:** If an invalid string (i.e., any string that does not meet the RRGGBB format) is passed as a parameter, the color is set to black.

### Example

| |
|---|
| ```
 scene.btnGetTextColor.onClick = function ()
 {  
          // print the current color of Default state text  
     var buttonTextColor = scene.TestButton.getTextColor("Default");
     print("Button default state text color is " + buttonTextColor);
 }
``` |

### String getBackgroundColor(String buttonState)

### Description

Returns the RGB color value of the button background for the given button State.

### Arguments

- buttonState: A string that is the button state that should display the background with this color. Possible button states are: *Focused, Clicked, Selected, Default, Disabled.*
- **Returns**: Returns the RGB color value of the button background as a text string. The format is RRGGBB where RR is the hexadecimal value for Red, GG is for Green and BB is for blue. **NOTE:** If an invalid string (i.e., any string that does not meet the RRGGBB format) is passed as a parameter, the color is set to black.

### Example

| |
|---|
| ```
 scene.btnGetBack.onClick = function ()
 {
          // print the Background color for the Default state of the Test Button.
          var backgroundColor = scene.TestSutton.getBackgroundColor("Default");  
     print ("Button default state background color is " + backgroundColor);
 }
``` |

### String toString()

- **Arguments**: None.
- **Returns**: Returns the name of the button as a string. **Note:** If the button object is used with the + operator to concatenate a string, the name of the button is still returned.

### Example

| |
|---|
| ```
 scene.Buttonl.onFocus = function (previous)
 {  
     // each print statement is the same, showing the name of the button, "Button1"  
     var buttonName = Button1.toString();  
          print("Name 1 = " + buttonName);  
          print("Name 2 = " + this.toString());  
     print("Name 3 = " + Button1);
 }
``` |

### 3.2 Caption

### Description

A caption is a static text region that is encoded onto a background at runtime and can be updated at that time. A caption can also be configured to be a clock. The AV Editor (AVE) lets the developer define the text to be displayed in the Caption area. If the caption text is "Clock:" followed by the escape characters for time or date, then that information is displayed. (See Appendix A.1: Caption Clock Format 11). For example: "Clock:%a %b %d %I:%M %p" displays the abbreviated weekday, abbreviated month, the Day of the month as a decimal, the hour in 12-hour format, the minutes as a decimal and either AM or PM. The clock is updated automatically, so the developer does not need to write any script code for that.

### Caption Attributes

### Caption Events

### void onLoad()

### Description

This event occurs for an object each time the Scene that contains that object is viewed by a subscriber.
- **Arguments**: None.
- **Returns**: Void.

### Example

| |
|---|
| ```
 scene.TestCaption.onLoad = function ()
 {
     // prints the text that was in caption at load time
     print(this.toString()+ " just loaded text is " + this.getText());
 }
``` |

### void onUnload()

### Description

This event occurs for an object each time a subscriber navigates away from a Scene that contains that object.
- **Arguments**: None.
- **Returns**: Void.

### Example

| |
|---|
| ```
 scene.TestCaption.onUnload = function ()
 {
     //prints the name of caption object when it unloads 
     print(this.toString()+ " just unLoaded");
 }
``` |

### Caption Methods

### void setText(String text)

### Description

This method changes the text that appears in the caption area. If the Caption has been configured to be a clock, then the setText() command is ignored.

### Arguments

- Text: The text to display in the caption.
- **Returns**: Void.

### Example

| |
|---|
| ```
 scene.Button1.onClick = function ()
 {
     //Sets the text in the caption to be "My text"  
     scene.TestCaption.setText ("My text") ;
 }
``` |

### String getText()

### Description

This method returns the text displayed in the caption area.
- **Arguments**: None.
- **Returns**: getText() returns the string value of the text being displayed by the caption.

### Example

| |
|---|
| ```
 scene.Button1.onClick = function ()
 {  
     // get the caption text and print it
     print (scene.TestCaption.getText());
 }
``` |

### void setTextColor(String RGBvalue)

### Description

This method changes the color of the text displayed in the caption area.

### Arguments

- RGBvalue: This specifies the RGB color value and consists of a string of three two-digit hexadecimal values. Each hexadecimal value represents the amount of a particular color. The format is RRGGBB where RR is the hexadecimal value for Red, GG is for Green and BB is for blue. The string "FF0000" is completely red, while "00FF00" is green. White is "FFFFFF" and black is "000000." If the Caption has been configured to be a clock, then the setTextColor() command is ignored. **NOTE:** If an invalid string (i.e., any string that does not meet the RRGGBB format) is passed as a parameter, the color is set to black.
- **Returns**: Void.

### Example

| |
|---|
| ```
 scene.Button1.onClick = function ()
 {
      // This changes the text color in the caption red
      scene.TestCaption.setTextColor("ff0000");
 }
``` |

### void setBackgroundColor(String RGBvalue)

### Description

This method changes the color of the background displayed in the caption area.

### Arguments

- RGBvalue: This specifies the RGB color value and must be a string of three two-digit hexadecimal values. Each hexadecimal value represents the amount of a particular color. The form is RRGGBB where RR is the hexadecimal value for Red, GG is for Green and BB is for blue. The string "FF0000" is completely red and "00FF00" is green. White is "FFFFFF" and black is "000000." If the Caption has been configured to be a clock then, the setBackgroundColor() command is ignored. **NOTE:** If an invalid string (i.e., any string that does not meet the RRGGBB format) is passed as a parameter, the color is set to black.
- **Returns**: Void.

### Example

| |
|---|
| ```
 scene.Button1.onClick = function ()
 {
     // This sets the background color in the Caption to blue  
     scene.TestCaption.setBackgroundColor("0000ff") ;
 }
``` |

### String getTextColor()

### Description

Returns the RGB color value of the caption text.
- **Arguments**: None.
- **Returns**: Returns the RGB color value of the caption text as a text string. The form is RRGGBB where RR is the hexadecimal value for Red, GG is for Green and BB is for blue. **NOTE:** If an invalid string (i.e., any string that does not meet the RRGGBB format) is passed as a parameter, the color is set to black.

### Example

| |
|---|
| ```
 scene.Button1.onClick = function ()
 {
     // Gets and prints the text color of the caption
     var TextColor = scene.TestCaption.getTextColor();
     print("Caption Text color is: " + TextColor);
 }
``` |

### String getBackgroundColor()

### Description

Returns the RGB color value of the caption background.
- **Arguments**: None.
- **Returns**: Returns the RGB color value of the caption background as a text string. The format is RRGGBB where RR is the hexadecimal value for Red, GG is for Green and BB is for blue. **NOTE:** If an invalid string (i.e., any string that does not meet the RRGGBB format) is passed as a parameter, the color is set to black.

### Example

| |
|---|
| ```
 scene.Button1.onClick = function ()
 {
     // Gets and prints the background color of the caption  
     var BackgroundColor = scene.TestCaption.getBackgroundColor();
     print("Caption Background color is: " + BackgroundColor);
 }
``` |

### String toString()

### Description

Returns the name of the caption as a string.
- **Arguments**: None.
- **Returns**: Returns the name of the caption as a string. **Note:** If a caption object is used with the + operator to concatenate a string, the name of the caption object is still returned.

### Example

| |
|---|
| ```
 scene.TestCaption.onLoad = function ()
 {
     // prints the name of the caption and the text in it
     print(this.toString() + " just loaded text is " + this.getText ());
 }
``` |

### 3.3 Input Box

An Input Box is a component that is used to get text input from a subscriber.

### Input Box Attributes

### void onLoad()

### Description

This event occurs for an object each time the Scene that contains that object is viewed by a subscriber.
- **Arguments**: None.
- **Returns**: Void.

### Example

| |
|---|
| ```
 scene.TextInput.onLoad = function ()
 {
     // prints the input box name when the input box loads
     print("Input Box name is: " + this.toString())
 }
``` |

### void onUnload()

### Description

This event occurs for an object each time a subscriber navigates away from a Scene that contains the object.
- **Arguments**: None.
- **Returns**: Void.

### Example

| |
|---|
| ```
 scene.TextInput.onUnload = function ()
 {
     //prints name of the input box and the text in it when it unloads
     print ("unloading " + this.toString() + " contained " + this.getText()) ;
 }
``` |

### bool onKeyPress(int keyCode, int cursorPosition)

### Description

This event indicates that a key has been pressed while keyboard focus was on the InputBox.

### Arguments

- keyCode: keyCode value is an integer for the key that was pressed. For additional information on key values, please see Section 0.
- cursorPosition: This is the integer value indicating the current position of the cursor within the InputBox text string.

### Returns

- true: This is the keyword for the Boolean that indicates that this object handled this event.
- false: This is the keyword for the Boolean that indicates that another object should handle this event.

### Example

| |
|---|
| ```
 scene.TextInput.onKeyPress = function (keyCode, cursorPosition)
 {  
     // prints the keycode of the pressed key and the position
        print("input box got " + keyCode + " at position " + cursorPosition);
        return true; //Indicates that this routine handled the key press
 }
``` |

### void onKeyUp(int keyCode, int cursorPosition)

### Description

This event indicates that a key has been released while keyboard focus was on the InputBox.

### Arguments

- keyCode: The key value as an integer for the key that was released. For addition information on key values see Section 0 .
- cursorPosition: This is the integer value indicating the current position of the cursor within the InputBox text string.
- **Returns**: Void.

### Example

| |
|---|
| ```
 scene.TextInput.onKeyUp = function (keyCode, cursorPosition)
 {
     // prints the keycode of the key up event and the position
     print ("input box got onKeyUp " + keyCode + " at position " + cursorPosition) ;  
     return true; //Indicates that this routine handled the key press
 }
``` |

### void onFocus(String previous)

### Description

An event that indicates that this item has received focus. When an item gets focus, "Previous" is the name of the object that had focus. The default event handler sets the chaser on this object. If this event returns a true, then the default handler does not execute.

### Arguments

- previous: The name of the object in the Scene that had focus before focus was put on this Input Box.

### Returns

- true: This is the keyword for the Boolean that indicates that this object handled this event.
- false: This is the keyword for the Boolean that indicates that another object should handle this event.

### Example

| |
|---|
| ```
 scene.TextInput.onFocus = function (previous)
 {
     // prints the name of the object that had focus previously  
     print ("input box got focus from " + previous);
 }
``` |

### bool onBlur(String next)

### Description

This is an event that indicates that this item no longer has focus. It occurs when an item loses focus. "Next" is the name of the object that gets focus next. The default event handler removes the chaser from this object. If this event returns a true, then the default handler does not execute.

### Arguments

- next: The name of an object on the Scene that receives focus next.

### Returns

- true: This is the keyword for the Boolean that indicates that this object handled this event.
- false: This is the keyword for the Boolean that indicates that another object should handle this event.

### Example

| |
|---|
| ```
 scene.TextInput.onBlur = function (next)
 {
     // prints the name of the object that recives focus next
     print ("input box lost focus to " + next);
 }
``` |

### InputBox Methods

### String getText ()

### Description

This method retrieves the text that had been entered into the InputBox.
- **Arguments**: None.
- **Returns**: Returns the string that is in the InputBox.

### Example

| |
|---|
| ```
 scene.Button1.onClick = function ()
 {
     // Gets the text from the input box and prints it.  
     var text = scene.TextInput.getText();  
     print ("input box text is " + text) ;
 }
``` |

### void setText(String text)

### Description

This method sets the text in the InputBox. Text in the input box is replaced with the specified text string.

### Arguments

- text: The text to display in the InputBox.
- **Returns**: Void.

### Example

| |
|---|
| ```
 scene.Button1.onClick = function ()
 {
     //set the text in the input box  
     scene.TextInput.setText ("ABCDEFG");
     //turn on the cursor  scene.TextInput.showCursor (true);
     //set the cursor postion to 3  
     scene.TextInput.setCursorPosition (3);
     //Get the cursor postion and print it
     var CursorPostion = scene.TextInput.getCursorPosition ();
     print ("The cursor position is: " + CursorPostion) ;
 }
``` |

### int getCursorPosition()

### Description

Gets the current position of the input cursor for the InputBox.
- **Arguments**: None.
- **Returns**: Returns an integer value that is the position of the input cursor.

### Example

| |
|---|
| ```
 scene.Button1.onClick = function ()
 {
     //set the text in the input box  
     scene.TextInput.setText ("ABCDEFG");  
     //turn on the cursor
     scene.TextInput.showCursor (true);
     //set the cursor postion to 3  
     scene.TextInput.setCursorPosition (3);
     //Get the cursor postion and print it  
     var CursorPostion = scene.TextInput.getCursorPosition ();
     print ("The cursor position is: " + CursorPostion);
 }
``` |

### void setCursorPosition(int cursorPosition)

### Description

Places the input cursor at a specified position in the InputBox.

### Arguments

- cursorPosition: This is an integer value that indicates where the input cursor should appear in the InputBox.
- **Returns**: Void.

### Example

| |
|---|
| ```
 scene.Button1.onClick = function ()
 {
     //set the text in the input box
     scene.TextInput.setText ("ABCDEFG");
     //turn on the cursor  scene.TextInput.showCursor (true);
     //set the cursor postion to 3  
     scene.TextInput.setCursorPosition (3);
     //Get the cursor postion and print it
     var CursorPostion = scene.TextInput.getCursorPosition ();
     print ("The cursor position is: " + CursorPostion);
 }
``` |

### void setTextColor(String RGBvalue)

### Description

This method changes the color of the text in the input display area.

### Arguments

- RGBvalue: This specifies the RGB color value, a string of three two-digit hexadecimal values. Each hexadecimal value represents the amount of a particular color. The RRGGBB format uses RR to specify the hexadecimal value for Red, GG to specify the value for Green and BB for blue. The string "FF0000" is completely red, while "00FF00" is green. White is "FFFFFF" and black is "000000."
**NOTE:** If an invalid string (i.e., any string that does not meet the RRGGBB format) is passed as a parameter, the color is set to black.
- **Returns**: Void.

### Example

| |
|---|
| ```
 scene.Button1.onClick = function ()
 {  
     // This changes the text color in the caption to red  
     scene.TextInput.setTextColor("ff0000") ;
 }
``` |

### void setSetColor(String RGBvalue)

### Description

This method changes the color of the cursor in the input display area.

### Arguments

- RGBvalue: This specifies the RGB color value, a string of three two-digit hexadecimal values. Each hexadecimal value represents the amount of a particular color. The RRGGBB format uses RR to specify the hexadecimal value for Red, GG to specify the value for Green and BB for blue. The string "FF0000" is completely red, while "00FF00" is green. White is "FFFFFF" and black is "000000."
**NOTE:** If an invalid string (i.e., any string that does not meet the RRGGBB format) is passed as a parameter, the color is set to black.
- **Returns**: Void.

### Example

| |
|---|
| ```
 scene.Button1.onClick = function ()
 {  
     // This changes the cursor color in the input box to red
     scene.TextInput.setCursorColor("ff0000") ;
 }
``` |

### void setBackgroundColor(String RGBvalue)

### Description

This method changes the color of the background of the InputBox area.

### Arguments

- RGBvalue: This specifies the RGB color value, a string of three two-digit hexadecimal values in an RRGGBB format. Each hexadecimal value represents the amount of a particular color. The RRGGBB format uses RR to specify the hexadecimal value for Red, GG to specify the value for Green and BB for blue. The string "FF0000" is completely red, while "00FF00" is green. White is "FFFFFF" and black is "000000." **NOTE:** If an invalid string (i.e., any string that does not meet the RRGGBB format) is passed as a parameter, the color is set to black.
- **Returns**: Void.

### Example

| |
|---|
| ```
 scene.Button1.onClick = function ()
 {  
     // This sets the background color in the Caption to blue
     scene.TextInput.setBackgroundColor("0000ff") ;
 }
``` |

### String getTextColor()

### Description

Returns the RGB color value of the InputBox text.
- **Arguments**: None.
- **Returns**: Returns the RGB color value of the caption text as a text string. The form is RRGGBB where RR is the hexadecimal value for Red. GG is for Green and BB is for blue. **NOTE:** If an invalid string (i.e., any string that does not meet the RRGGBB format) is passed as a parameter, the color is set to black.

### Example

| |
|---|
| ```
 scene.Buttonl.onClick = function ()
 {
     // Gets and prints the text color of the caption  
     var TextColor = scene.TextInput.getTextColor();
     print ("Caption Text color is: " + TextColor);
 }
``` |

### String getCursorColor()

### Description

Returns the RGB color value of the InputBox cursor.
- **Arguments**: None.
- **Returns**: Returns the RGB color value of the cursor as a text string. The form is RRGGBB where RR is the hexadecimal value for Red. GG is for Green and BB is for blue. **NOTE:** If an invalid string (i.e., any string that does not meet the RRGGBB format) is passed as a parameter, the color is set to black.

### Example

| |
|---|
| ```
 scene.Buttonl.onClick = function ()
 {
     // Gets and prints the text color of the caption
     var TextColor = scene.TextInput.getCursorColor();
     print ("Caption Text color is: " + TextColor);
 }
``` |

### String getBackgroundColor()

### Description

Returns the RGB color value of the InputBox background.
- **Arguments**: None.
- **Returns**: Returns the RGB color value of the InputBox background as a text string. The format is RRGGBB where RR is the hexadecimal value for Red, GG is for Green and BB is for blue.
**NOTE:** If an invalid string (i.e., any string that does not meet the RRGGBB format) is passed as a parameter, the color is set to black.

### Example

| |
|---|
| ```
 scene.Button1.onClick = function ()
 {
     // Gets and prints the background color of the caption
     var BackgroundColor = scene.TextInput.getBackgroundColor();
     print ("Caption Background color is: " + BackgroundColor);
 }
``` |

### String toString()

### Description

Returns the name of the InputBox as a string. Note also that if an InputBox object is used with the + operator to concatenate a string the name of the InputBox object is still returned.
- **Arguments**: None.
- **Returns**: The name of the InputBox as a string.

### Example

| |
|---|
| ```
 scene.TextInput.onLoad = function ()
 {
     // prints the input box name when the input box loads
     print("Input Box name is: " + this.toString())
 }
``` |

### void insertText(String text)

### . Description

This method inserts the "text" argument string into the InputBox at the location of the cursor.

### Arguments

- Text: The text string that is inserted into the InputBox at the current cursor position.
- **Returns**: Void.

### Example

| |
|---|
| ```
 scene.Buttonl.onClick = function ()
 {
     // insert text to the current cursor position
     scene.TextInput.insertText(" inserted here ");
 }
``` |

### void eraseChar(string rightLeft)

### Description

This method erases one InputBox character either to the right or the left of the current cursor position.

**Arguments**
- rightLeft: This is a case insensitive string (either "left" or "right") identifying whether to erase the character to the left or the character to the right of the current cursor position.
- **Returns**: Void.

### Example

| |
|---|
| ```
      scene.Button1.onClick = function ()
 {
     //set the text in the input box
     scene.TextInput.setText ("ABCDEFG");
     //turn on the cursor  
     scene.TextInput.showCursor (true);
     //set the cursor postion to 3
     scene.TextInput.setCursorPosition (3);
     // this erases D
     scene.TextInput.eraseChar ("right");  
     // this erases C
     scene.TextInput.eraseChar ("left");
 }
``` |

### void showCursor (boolean enable)

### Description

This method controls the display of the text cursor.

### Arguments

- enable: This boolean argument is used to enable or disable display of the text cursor.
- **Returns**: Void.

### Example

| |
|---|
| ```
 scene.Button1.onClick = function ()
 {
     //set the text in the input box
     scene.TextInput.setText ("ABCDEFG");
     //turn on the cursor
     scene.TextInput.showCursor (true);
     //set the cursor postion to 3
     scene.TextInput.setCursorPosition (3);
/     / this erases D
     scene.TextInput.eraseChar ("right");
     // this erases C  
     scene.TextInput.eraseChar ("left");
 }
``` |

### 3.4 ListBox

### Description

A ListBox is a group of one or more items containing text or images or both. The group of items/elements is displayed either vertically or horizontally. Any item/element within a ListBox can receive keyboard focus. Each item/element has an associated data element that can be used by a script. A data element is an integer value that has been assigned by the developer. While the text displayed in each box and the data element associated with it can be updated at runtime, the size of the viewable area of a ListBox cannot be changed at that time and therefore the number of items/elements that can be viewed on a TV screen at any one time can be more or less than the number of viewable boxes that are in the entire ListBox array. If the number of items/elements are more than what can be viewed at one time on a TV screen, the TV display can be scrolled to bring the hidden ListBox items/elements into its viewable area.

**Note:** ListBox transparency can be configured with the AVE development tool. The percent of transparency of a ListBox determines how much of a Scene background can be viewed. If 100% transparent, the ListBox text can be viewed on the Scene background; however, when transparency is used, the Scene background in the area of each list box element must be the same. If the area of a Scene behind a listbox is a solid color there is no problem, but if a pattern appears behind a ListBox when transparency is used, then the image behind each ListBox element must be the same image.

### Inserting Items/Elements in a ListBox

A ListBox item can be text with a background color or text with an image. Like a button, a ListBox item has five possible states; namely, Clicked, Selected, Over, Default and Disabled. When using images, the developer must provide an image to be displayed for each ListBox state. Use the insertItem() function to add an item to a ListBox. If the new item uses images, those images must be added by using the changeItemImage() function, which must be called for each ListBox Item state that is to be displayed. If an image is not provided for a particular state, then the ListBox Item Background color is displayed for that state.

### ListBox navigation

The focus scrolls to each of the visible items/elements. When the focus is at the visible edge (top, bottom, left or right), the next hidden item/element is scrolled into view and this continues until the last item/element is visible, at which time focus moves off the ListBox.

A developer can add optional navigation buttons to the top and bottom or to the right and left sides, depending on the orientation of the ListBox. These navigation buttons can be used to scroll through the list items/elements. When focus is on the navigation button, it is used to scroll the items/elements within the ListBox to move hidden items/elements into the viewable area. Scripts can be used to customize the performance of these navigation buttons.

### ListBox Attributes

### ListBox Events

The following events are supported by a ListBox.

### void onLoad()

### Description

This event occurs for an object each time the Scene that contains that object is viewed by a subscriber.
- **Arguments**: None.
- **Returns**: Void.

### Example

| |
|---|
| ```
 scene.ListBox1.onLoad = function ()
 {
     //prints the name of the list box when it loads
     print(this.toString() + " onLoad event ");
 }
``` |

### void onUnload()

### Description

This event occurs for an object each time a subscriber navigates away from a Scene that contains the object.
- **Arguments**: None.
- **Returns**: Void.

### Example

| |
|---|
| ```
 scene.ListBox1.onUnload = function ()
 {  
     //prints the name of the list box when it unloads
     print (this.toString() + " onUnload() event ");
 }
``` |

### bool onFocus(String previous, int newIndex, int oldIndex)

### Description

An event that indicates that the ListBox has received focus. When the ListBox gets focus, "Previous" is the name of an object on the Scene that had focus. newIndex and oldIndex indicate which items within a ListBox have received or lost focus.

### Arguments

- previous: The name of the object in the Scene that had focus before focus was put on this ListBox.
- newIndex: This is the index value of the item/element in the ListBox that now has focus.
- oldIndex: This is the index value of the item/element in the ListBox that used to have focus. When focus is first put on a ListBox this value is -1 to indicate that no ListBox item/element previously had focus.

### Returns

- true: This is the keyword for the Boolean that indicates that this item/element handled this event.
- false: This is the keyword for the Boolean that indicates that another object should handle this event.

### Example

| |
|---|
| ```
  scene.ListBox1.onFocus = function (previous, newIndex, oldIndex)
   {
    // prints the previous, newIndex, oldIndex information when focus is recived
    print ("previous " + previous + " old index " + oldIndex + " new index " + newIndex );
   }
``` |

### bool onBlur(String next, int oldIndex)

### Description

An event that indicates the ListBox no longer has focus. "Next" is the name of an object on the Scene that gets focus. The default event handler removes the chaser from this object. If this event returns a true, then the default handler does not execute.

### Arguments

- next: The name of an object on the Scene that receives focus next.
- oldIndex: This is the index value of the item/element in the ListBox that used to have focus. Pleas note that the old index is -1 when the list box itself loses focus.

### Returns

- true: This is the keyword for the Boolean that indicates that this item/element handled this event.
- false: This is the keyword for the Boolean that indicates that another object should handle this event.

### Example

| |
|---|
| ```
 scene.ListBox1.onBlur = function (next, oldIndex)
 {
     // prints the next, oldIndex when focus is lost  
     print(this.toString() + " onBlur event old index " + oldIndex + " next " + next);
 }
``` |

### bool onKeyPress(int keyCode, int index)

### Description

If this box is in focus and a key on the keyboard is pressed, then this event occurs. The default event handler updates the chaser position (keyboard focus) if needed and fires the onSelectItem() event if the "OKAY" key was pressed. If a Boolean true is returned the default handler does not execute.

### Arguments

- keyCode: The key value as an integer for the key that was pressed. For additional information on key values see Section 0 .
- index: The index value of the ListBox item/element that currently has focus.

### Returns

- true: This is the keyword for the Boolean that indicates this item/element handled this event.
- false: This is the keyword for the Boolean that indicates another object should handle this event.

### Example

| |
|---|
| ```
 scene.ListBox1.onKeyPress = function (key,index)
 {
       //print the keycode of the key that was pressed and  
       //the index of the item that recived the key
     print (this. toString() + " onKeyPress event index " + index + " key " + key);
 }
``` |

### bool onKeyUp(int keyCode, int index)

### Description

If this box is in focus and a key on the keyboard is released then this event occurs.

### Arguments

- keyCode: The key value as an integer for the key that was released. For additional information on key values see Section 0.
- index: The index value of the ListBox item/element that currently has focus.

### Returns

- true: This is the keyword for the Boolean that indicates that this box handled this event.
- false: This is the keyword for the Boolean that indicates that another object should handle this event.

### Example

| |
|---|
| ```
 scene.ListBox1.onKeyUp = function (key,index)
 {
       //print the keycode of the key that went up  
       //the index of the item that recived the event  
     print(this.toString() + " onKeyUp event index " + index + " key " + key);
 }
``` |

### bool onSelectItem(int index, int userData)

### Description

This is a special case of the onKeyPress() event that occurs when an object has focus and the Enter key on a keyboard or the "OKAY" key on a remote is pressed. If a mouse is supported, then a mouse click also triggers this event.

### Arguments

- index: This is the index value of the item/element in the ListBox that is Selected.
- userData: Data associated with the box. This is an integer value associated with a ListBox item. This can be used to index into an array where specific information for each ListBox item is stored

### Returns

- true: This is the keyword for the Boolean that indicates that this item/element handled this event.
- false: This is the keyword for the Boolean that indicates that another object should handle this event.

### Example

| |
|---|
| ```
 scene.ListBox1.onSelectltem = function (index, userData)
 {
     //prints the index that was selected and the data for that index.
     print ("onSelectItem event index " + index + " userData " + userData);
 }
``` |

### bool onTopOfList()

### Description

An event when focus is moved from the element that is on the top (first item/element) of a list to another object on the Scene. The default handler moves focus to a different item on the Scene. The developer can override this and handle keyboard focus in script.

### Arguments None.

### Returns

- true: This is the keyword for the Boolean that indicates that this item/element handled this event.
- false: This is the keyword for the Boolean that indicates that another object should handle this event.

### Example

| |
|---|
| ```
 scene.ListBox1.onTopOfList = function ()
 {
     //prints this message when user navigtes to the top of the list
     print(this.toString() + " onTopOfList ");
 }
``` |

### bool onBottomOfList()

### Description

An event when focus is moved from the element that is on the bottom (last item/element) of a list to another Scene object. The default handler moves focus to a different item on the Scene. The developer can override this and handle keyboard focus in script.

### Arguments None.

### Returns

- true: This is the keyword for the Boolean that indicates that this item/element handled this event.
- false: This is the keyword for the Boolean that indicates that another object should handle this event.

### Example

| |
|---|
| ```
 scene.ListBox1.onBottomOfList = function ()
 {
     //prints this message when user navigtes to the top of the list
     print(this.toString() + " onBottomOfList ");
 }
``` |

### ListBox Methods

### Boolean insertItem(int index, String text, int value)

### Description

This command inserts a new item to the ListBox list at the location specified by index. The new items appearance is defined by the Default font, font size, font color, background color and font weight that were specified at development time.

### Arguments

- index: The index specifies the location where the new item/element is to be inserted.
- text: This is the text that is displayed when the item/element is in view.
- value: Data associated with the box. This is an integer value associated with a ListBox item and can be used to index into an array where specific information for each ListBox item is stored.
- **Returns**: Boolean true on success, false on failure.

### Example

| |
|---|
| ```
 scene.Button1.onClick = function ()
 {
     //inserts a new item at the top of the
     //list box called "my new Button" with data value 10
     if (!scene.ListBox1.insertltem(0, "my new Button", 10)) {  
        print ("error inserting item");
     }
 }
``` |

### Boolean changeItem(int index, String text, int value)

### Description

This command modifies the text or the data value of the ListBox item at the location specified by the index.

### Arguments

- index: The index specifies the location of the item/element that changes.
- text: The text that appears when the item/element is in view.
- value: This is an integer value, data, that is associated with a ListBox item. It can be used to index into an array where specific information for each ListBox item is stored.
- **Returns**: Boolean true on success, false on failure.

### Example

| |
|---|
| ```
 scene.Button1.onClick = function ()
 {  
     // changes the text and the data of item 0  
     if (!scene.ListBox1.changeItem(0, "change item" , 11)) {
        print ("error changing item");  
 }
 }
``` |

### Boolean changeItemImage(int index, String stateName, String imageURL)

### Description

This command changes the Image associated with the stateName of the ListBox item at the location specified by index.

**NOTE:** If the URL cannot be found, a black box appears in place of the specified image.

### Arguments

- index: The index specifies the location where the new item/element is to be inserted
- stateName: The name of the Item state that should display the image URL. The state names are: Clicked, Focused, Selected, Default and Disabled.
- imageURL: The URL location for the image to display on the ListBox Item when the stateName is displayed.
- **Returns**: Boolean true on success, false on failure.

### Example

| |
|---|
| ```
 scene.Button1.onClick = function ()
 {
     // changes the default image for item 0
     if (!scene.ListBox1.changeItemImage(0, "Default","but_ListBox_default.bmp")) {  
        print ("error changing item image");
     }
 }
``` |

### String getImageUrl(int index, String stateName)

### Description

This command returns the name of the Image associated with the stateName of the ListBox item at the location specified by index.

### Arguments

- index: The index specifies the item of the ListBox whose image URL is to be returned
- stateName: The name of the Item state whose image URL should be returned. The state names are: Clicked, Focused, Selected, Default and Disabled.
- **Returns**: The URL for the Image for the state name at the specified index of the ListBox.

### Example

| |
|---|
| ```
 scene.Button1.onClick = function ()
 {
     //prints the url for the default image of item 0  
     var ImageUrl = scene.ListBox1.getImageUrl(0, "Default");  
     print (" Image is " + ImageUrl);
 }
``` |

### String getItemCurrentState(int index)

### Description

This command returns the current state of the ListBox item at the location specified by index.

### Arguments

- index: The index specifies the item of the ListBox.
- **Returns**: The current state name of the specified ListBox. The state names are: Clicked, Focused, Selected, Default and Disabled.

### Example

| |
|---|
| ```
 scene.Button1.onClick = function ()
 {  
     //Gets the current state of item 0 and prints it.
     var CurrentState = scene.ListBox1.getItemCurrentState(0);
     print("Current state is " + CurrentState);
 }
``` |

### bool removeItem(int index);

### Description

This command removes the item specified by the index. If the item removed has focus at the time and the script does not place focus on another focusable item, then new focus is determined according to one of the following:
1. A focusable ListBox item to the right (for a horizontal ListBox) or below (for a vertical ListBox).
2. A focusable ListBox item to the left (for a horizontal ListBox) or above (for a vertical ListBox).
3. Any focusable object on the Scene.

### Arguments

- index: The index specifies the location of the item/element that is to be removed.
- **Returns**: bool true on success, false on failure.

### Example

| |
|---|
| ```
 scene.Button1.onClick = function ()
 {
     //Removes item 0 from the list box
     if (!scene.ListBox1.removeItem(0)) {
        print ("error removing item");
     }
 }
``` |

### void clear();

### Description

This command removes all the items of a ListBox.
- **Arguments**: None.
- **Returns**: Void.

### Example

| |
|---|
| ```
 scene.Button1.onClick = function ()
 {
     //removes all the buttons from the listbox  
     scene.ListBox1.clear();
 }
``` |

### String getText(int index)

### Description

This command returns the text that is displayed in a box within a ListBox.

### Arguments

- index: The index specifies the location of the item/element whose text is to be retrieved
- **Returns**: The text displayed in the box.

### Example

| |
|---|
| ```
 scene.Button1.onClick = function ()
 { 
     //gets the button text from item 0 and prints it  
     var ButtonText = scene.ListBox1.getText(0);  
     print("Text is " + ButtonText);
 }
``` |

### int getValue( int index)

### Description

This command returns the data that is associated with the selected box within a ListBox. This value is specified by insertItem() and by changeItem(). ListBoxes that are created by AVE and not created by these script commands have a default value of 0. A -1 is returned if the index does not exist.

### Arguments

- Index: The index specifies the location of the item/element whose value is to be retrieved
- **Returns**: The Data item/element associated with that box.

### Example

| |
|---|
| ```
 scene.Button1.onClick = function ()
 {
     //gets the value from item 0 and prints it
     var ButtonValue = scene.ListBox1.getValue(0);  
     print("Value is " + ButtonValue);
 }
``` |

### int getItemCount()

### Description

Gets the number of item/elements within a ListBox.
- **Arguments**: None.
- **Returns**: The number of boxes in the ListBox

### Example

| |
|---|
| ```
 scene.Button1.onClick = function ()
 {
     //gets the total item count and prints it
     var ItemCount = scene.ListBox1.getItemCount();
     print(" Number of items is " + ItemCount);
 }
``` |

### void setItemFocus(int index)

### Description

This command sets focus on an item within the ListBox. If the item specified by index is not currently in the visible area of the ListBox, the ListBox items are scrolled until the index item is in the visible area.

### Arguments

- Index: The index specifies the location of the Item/element that should receive focus
- **Returns**: A Boolean true if focus is put on selected box, otherwise a Boolean false.

### Example

| |
|---|
| ```
 scene.Button1.onClick = function ()
 {  
     //Sets focus on item 0  
     scene.ListBox1.setItemFocus(0);
 }
``` |

### int getFocusedItem()

### Description

This method returns the index position of the item/element that currently has focus.
- **Arguments**: None.
- **Returns**: The index position of the item/element that currently has focus

### Example

| |
|---|
| ```
 scene.ListBox1.onKeyPress = function (key)
 {
     //gets the focused item index and prints it  
     var focusedItem = scene.ListBox1.getFocusedItem();
     print(" ListBox focus " + focusedItem);
 }
``` |

### void setItemSelected(int index)

### Description

This command selects an item/element within the ListBox and displays its Selected or Clicked state. If the item is not visible it does not scroll into view. The AV script is responsible for setting items in the Selected or the NotSelected state. Unlike keyboard focus only, the AV script controls Selecting items. Multiple items within a ListBox can be selected at the same time, but the AV script code must keep track of what items are selected.

### Arguments

- index: The index specifies the location of the Item/element that should be selected.
- **Returns**: Void.

### Example

| |
|---|
| ```
 scene.Button1.onClick = function ()
 {  
     //Sets item 0 to a selected state
     scene.ListBox1.setItemSelected(0);
 }
``` |

### void setItemNotSelected(int index)

### Description

This command unselects an item/element within the ListBox and displays its Default or Focused state.

### Arguments

- index: The index specifies the location of the Item/element that should be shown in its *not selected* state.
- **Returns**: Void.

### Example

| |
|---|
| ```
 scene.Buttonl.onClick = function ()
 {
     //Sets item 0 to default state.
     scene.ListBox1.setItemNotSelected(0);
 }
``` |

### void enable(int index)

### Description

Show the item in its unselected state. If the item has focus, the *Focused* image is displayed. If the item does not have focus, the *Default* image is displayed. The item appears similar to the setItemNotSelected() command appearance. Use setItemSelected()/setItemNotSelected () to control item selection. Use enable()/disable() to enable and disable a item.

### Arguments

- index: The index specifies the location of the Item/element that should be shown in its enabled state.
- **Returns**: Void.

### Example

| |
|---|
| ```
 scene.Button1.onClick = function ()
 {
     //Sets item 0 to be enabled  
     scene.ListBox1.enable(0);
 }
``` |

### void disable(int index)

### Description

Shows the item in its Disabled state. The Disabled image is displayed which indicates that the item cannot be selected and that it cannot receive keyboard focus. If the item has keyboard focus when the disable function is called and the script code does not move focus to a focusable item, then focus is put on the next focusable item (right for horizontal; down for vertical) of the ListBox. If the ListBox does not have a next item to receive focus, then focus is put on some other Scene object.

### Arguments

- index: The index specifies the location of the Item/element that should be shown in its Disabled state.
- **Returns**: Void.

### Example

| |
|---|
| ```
 scene.Button63.onClick = function ()
 {
     //Sets item 0 to be enabled  
     scene.ListBox1.disable(0);
 }
``` |

### bool isItemSelected(int index)

### Description

Tells if the item/element specified by the index is selected or not.

### Arguments

- Index: The position within the ListBox for a specific item/element.
- **Returns**: Returns a Boolean true if the item/element specified by the index is currently selected (in Selected state); false if it is not selected.

### Example

| |
|---|
| ```
 scene.Button1.onClick = function ()
 {  
     // Checks id item 0 is selected or not and prints the result  
     if (scene.ListBox1.isItemSelected(0))
{
        print("is selected");
        }  
        else  
        {  
        print("is not selected");  
     }
 }
``` |

### bool isVisible(int index)

### Description

Tells if the item/element specified by the index is being displayed or not.

### Arguments

- Index: The position within the ListBox for a specific item/element.
- **Returns**: Returns a Boolean true if the item/element specified by the index is being displayed, false if it is not displayed

### Example

| |
|---|
| ```
 scene.Button1.onClick = function ()
 {
     // Checks id item 0 is visible or not and prints the result
     if (scene.ListBox1.isVisible(0))  
     {
       print("is visible");
     }  
     else
     {  
        print("is not visible") ;
     }
 }
``` |

### intfindNextItemWithValue(int value, int startindex)

### Description

Returns the index of the next item/element in a list with the specified value if successful or returns a-1 if the item/element cannot be found.

### Arguments

- value: This is an integer value associated with a ListBox item. This can be used to index into an array where specific information for each ListBox item is stored.
- startindex: The position to start looking for the item/element within the ListBox. By updating the index all items/elements in the ListBox can be found.
- **Returns**: Returns the numeric value that is the index of the item/element specified by value if successful, but returns a-1 if the item/element cannot be found.

### Example

| |
|---|
| ```
 scene.Button1.onClick = function ()
 {
     // Gets the next item with data value 0 starting with index 1;
     var ItemIndex = scene.ListBox1.findNextItemWithValue(0, 1);
     print(" Next value is item " + Itemlndex);
 }
``` |

### int findnextItem With Text(String text, int startindex)

### Description

Returns the index of the next item/element in the list with the specified text if successful; returns a-1 if the item/element cannot be found.

### Arguments

- Text: The text that is displayed when the box is in view.
- Startindex: The position to start looking for the item/element within the ListBox. By updating the index, all items/elements in the ListBox can be found.
- **Returns**: Returns the numeric value that is the index of the item/element specified by text if successful; otherwise, returns a -1 if the item/element cannot be found.

### Example

| |
|---|
| ```
 scene.Button1.onClick = function ()
 {
     // Gets the next item with the text "Button 1" starting with index 0;
     var Index = scene.ListBox1.findNextItemWithText("Button1", 0)  
     print(" Next text is item " + Index);
 }
``` |

### String toString()

### Description

If a ListBox object is used with the + operator to concatenate a string, the name of the ListBox object is still returned.
- **Arguments**: None.
- **Return**: Returns the name of the ListBox as a string.

### Example

| |
|---|
| ```
 scene.ListBox1.onLoad = function ()
 {
     //prints the name of the list box when it loads  
     print(this.toString() + " onLoad event ");
 )
``` |

### 3.5 MediaPlayer

This is an object where media streams can be played. After a MediaPlayer object is created, it is controllable by scripts; however, script cannot create a viewable Media player. If the media is viewable then the developer must place a Media Player on the Scene.

### Media Player Attributes

### Attributes

- looping: Boolean (true or false) - controls whether or not the media player loops and repeats playing the current media (default = "true").

### Media Player Events

### void onLoad()

### Description

This event occurs for an object each time the Scene that contains the object is viewed by a subscriber.
- **Arguments**: None.
- **Returns**: Void.

### Example

| |
|---|
| ```
 scene.MediaPlayer.onLoad = function ()
 {  
     //prints the name of the MediaPlayer when it loads
     print(this.toString() + " onLoad event ");
 }
``` |

### void onUnload()

### Description

This event occurs for an object each time a subscriber navigates away from a Scene that contains that object.
- **Arguments**: None.
- **Returns**: Void.

### Example

| |
|---|
| ```
 scene.MediaPlayer.onUnload = function ()
 {
     //prints the name of the MediaPlayer when it unloads
     print(this.toString() + " onUnload() event ");
 }
``` |

### bool onFocus(String previous)

### Description

An event that indicates this item has received focus. When an item gets focus, "Previous" is the name of object that had focus. The default event handler sets the chaser on this object. If this event returns a true, then the default handler does not execute.

### Arguments

- previous: The name of the object in the Scene that had focus before the focus was put on this button.

### Returns

- true: This is the keyword for the Boolean that indicates that this object handled this event.
- false: This is the keyword for the Boolean that indicates that another object should handle this event.

### Example

| |
|---|
| ```
scene.MediaPlayer.onFocus = function (previous)
{  
//prints the name of the object that had focus previously
 print(this.toString() + " onFocus() event previous " + previous);
}
``` |

### bool onBlur(String next)

### Description

An event that indicates this item no longer has focus. When an item loses focus, "Next" is the name of the object that then gets focus. The default event handler removes the chaser from this object. If this event returns a true, then the default handler does not execute.

### Arguments

- next: The name of an object on the Scene that receives focus.

### Returns

- true: This is the keyword for the Boolean that indicates that this object handled this event.
- false: This is the keyword for the Boolean that indicates that another object should handle this event.

### Example

| |
|---|
| ```
 scene.MediaPlayer.onBlur = function (next)
 {
     //prints the name of the object that receives focus next.
     print(this.toString() + " onBlur() event next " + next);
 }
``` |

### bool onKeyPress(int keyCode)

### Description

If this button is in focus and a key on the keyboard is pressed, this event occurs. The default event handler updates the chaser position (keyboard focus) if needed and fires the onClick event if the "OKAY" key was pressed. If a Boolean true is returned, the default handler does not execute.

### Arguments

- keyCode: The key value as an integer for the key that was pressed. For additional information on key values see Section 0.

### Returns

- true: This is the keyword for the Boolean that indicates that this button handled this event.
- false: This is the keyword for the Boolean that indicates that another object should handle this event.

### Example

| |
|---|
| ```
 scene.MediaPlayer.onKeyPress = function (key)
 {  
     // prints the key code of the key that was pressed.
     print(this.toString() + " onKeyPress() event key " + key);
 }
``` |

### bool onKeyUp(int keyCode)

### Description

If this button is in focus and a key on the keyboard is released, this event occurs.

### Arguments

- keyCode: The key value as an integer for the key that was released. For additional information on key values see Section 0.
- **Returns**: Void.

### Example

| |
|---|
| ```
 scene.MediaPlayer.onKeyUp = function (key)
 {
     //prints the key code of the key that was released  
     print(this.toString() + " onKeyUp() event key " + key);
 }
``` |

### void onClick()

### Description

This is a special case of the onKeyPress() event. This event occurs when an object has focus and the Enter key on a keyboard or the "OKAY" key on a remote is pressed. If a mouse is supported, then a mouse click can also trigger this event.
- **Arguments**: None.
- **Returns**: Void.

### Example

| |
|---|
| ```
 scene.MediaPlayer.onClick = function ()
 {
     //prints the name of the multi media object.
     print(this.toString() + " onClick() event ");
 }
``` |

### boolean onEndOjMedia()

### Description

This event is fired under the following conditions:
1. A cached stream has reached the end of playback.
2. A playFromPosition() command is issued with a position beyond what is currently in the cache.

**Note:** If the onEndOfMedia event is not handled by script, playback behavior is determined by the MediaPlayer looping property. If looping is set to true, the asset starts playing from the beginning; otherwise, asset playback stops.

### Arguments None.

### Returns

- true: Return true indicates that the event was handled and prevents the default handler from running.
- false: Return false indicates that the default handler should run. The default handler loops the asset if the looping property is set to true; otherwise it discontinues play.
- **Returns**: Void.

### Example

| |
|---|
| ```
 scene.MediaPlayer.onEndOfMedia = function ()
 {
     //prints the name of the multi media object.  
     print(this.toString() + "onEndOfMedia() event ");
 }
``` |

### Media Player Methods

### void setAudioFocus()

### Description

This method locks audio focus on the media player. The priority of the audio, in this case, is elevated above the Scene element focus traversal and below transient audio.
- **Arguments**: None.
- **Returns**: Void.

### Example

| |
|---|
| ```
 scene.Buttonl.onClick = function ()
 {  
     //Set audio focus to the media player  
     scene.MediaPlayer.setAudioFocus();
 }
``` |

### void killAudioFocus()

### Description

This method unlocks audio focus on the media player. Audio playback switches to whichever asset is at the top of the audio playback stack.
- **Arguments**: None.
- **Returns**: Void.

### Example

| |
|---|
| ```
 scene.Button1.onClick = function ()
 {
     //Removes audio focus from the media player
     scene.MediaPlayer.killAudioFocus();
 }
``` |

### void loadMedia(String URL)

- **Description**: This method attaches the media player to an asset found at the specified location.

### Arguments

- URL: This parameter specifies the location from which to obtain the media player asset.
- **Returns**: Void.

### Example

| |
|---|
| ```
 scene.Button1.onClick = function ()
 {  
     //Load the video clip  scene.MediaPlayer.loadMedia ("Channel.ts");
     //Play the video clip  scene.MediaPlayer.play ();
 }
``` |

### void play()

### Description

This method starts playback of the current media player asset from the beginning. Use the loadMedia method to set the player asset.
- **Arguments**: None.
- **Returns**: Void.

### Example

| |
|---|
| ```
 scene.Button1.onClick = function ()
 {  
     //Load the video clip  scene.MediaPlayer.loadMedia ("Channel.ts");  
     //Play the video clip  scene.MediaPlayer.play ();
 }
``` |

### void playFromPosition (int startPosition)

### Description

Plays the media, starting at the startPosition value. A loadMedia() command may be required before a playFromPosition() command can work. This command is ignored for live streams.

### Arguments

- startPosition: This argument is the temporal position, in milliseconds, from the beginning of an asset to the time the media starts to play. Often this is based on the value returned from a getPosition() command.
- **Returns**: Void.

### Example

| |
|---|
| ```
 var lastPosition = 0;
 var lastMedia = "Channel.ts";
 var paused = true;
 // Pause the media then play again from pause point.
 scene.Button1.onClick = function ()
 {  
     if (paused)  
     {  
     //Paused starting from last position  
          print (" starting at " + lastPosition);  
          scene.MediaPlayer.loadMedia(lastMedia);
          scene.MediaPlayer.play();  
          scene.MediaPlayer.playFromPosition(lastPosition);  
          paused = false;  
     }  
     else  
     {  
          lastPosition = scene.MediaPlayer.getPosition();  
          lastMedia = scene.MediaPlayer.getUrl();  
          print ("stopped at " + lastPosition);  
          // must get position before the media is stopped.  
          scene.MediaPlayer.stop();  
          paused = true;  
     }
 }
``` |

### int getPosition()

### Description

This function returns the current temporal position from the beginning of the asset in milliseconds.
- **Arguments**: None.
- **Returns**: An integer value that is the absolute asset position from the start of the asset in milliseconds. This command is ignored for live streams.

### Example

| |
|---|
| ```
See playFromPosition() command example for getPosition() example.
``` |

### void pause()

### Description

Stops the media player at the point when the pause() method was called. When playing a file or using an HTTP connection, use the getPosition() and playFromPosition() to start the Media Player from the paused point. This command is ignored for live streams.
- **Arguments**: None.
- **Returns**: Void.

### Example

| |
|---|
| ```
 // the variable pausePoint is a global used store the
 // media player position when a pause() occures
 var pausePoint = 0; // Pause the media.
 scene.Btn_Pause.onClick = function ()
 {  
     // pause the MediaPlayer MultiMedia
     scene.MultiMedia.pause();
     // save the position in the global variable pausePoint
     pausePoint = scene.MultiMedia.getPosition();
 }
 // Play MultiMedia for the point where it was paused
     scene.Btn_PlayOnly.onClick = function ()
 {  
     // play the Media Player MultiMedia from pausePoint  
          // pausePoint is a global where we saved the Media Player's position  
          // when the Media Player was paused.
     scene.MultiMedia.playFromPosition(pausePoint);  
     // clear the pausePoint so pressing Play again will start from the beginning
     pausePoint = 0;
 }
``` |

### void stop()

### Description

Stop the media. After a stop() command, another loadMedia() command must be issued before a play() or playFromPosition() command can work.
- **Arguments**: None.
- **Returns**: Void.

### Example

| |
|---|
| ```
see playFromPosition() command example for getPosition() example.
``` |

### String getUrl()

### Description

This command returns the URL that is playing for the Media Player.
- **Arguments**: None.
- **Returns**: The URL that the Media Player is playing as a string.

### Example

| |
|---|
| ```
 scene.Button1.onClick = function ()
 {  
     //Gets and prints the URL for the Meda Player
     var URL = scene.MediaPlayer.getUrl();  
     print(" Media URL is " + URL) ;
 }
``` |

### boolean isAudioPlaying()

### Description

This command returns a Boolean value true to indicate that the audio for the Media Player has audio focus. When the Media Player has audio focus a subscriber can hear the audio.
- **Arguments**: None.
- **Returns**: A Boolean string (true or false) is returned if the Audio of the Media Player currently has Audio focus.

### Example

| |
|---|
| ```
 scene.Buttonl.onClick = function ()
 {
     //Checks if audio is playing and prints the result  
     if (scene.MediaPlayer.isAudioPlaying())  
     {
     print(" Audio is playing ") ;  
     }  
     else  
     {  
     print(" Audio is not playing ") ;  
     }
 }
``` |

### String toString()

### Description

If a MediaPlayer object is used with the + operator to concatenate a string, the name of the MediaPlayer object is still returned.
- **Arguments**: None.
- **Returns**: Returns the name of the MediaPlayer as a string.

### Example

| |
|---|
| ```
 scene.MediaPlayer.onLoad = function ()
 {  
     //prints the name of the MediaPlayer when it loads  
     print(this.toString() + " onLoad event ");
 }
``` |

### void fastForward()

### Description

The fastForward() method can only be used for Real Time Streaming Protocol (RTSP) connections, where it fast forwards the media; however, this command is ignored for live streams.
- **Arguments**: None.
- **Returns**: Void.

### Example

*****FAIRE FA*****

| |
|---|
| ```
 scene.Btn_Fwd.onClick = function ()
 {  
         // move the asset that MultiMedia is playing  
     scene.MultiMedia.fastForward();
 }
``` |

### void rewind()

### Description

The rewind() method rewinds the media. It can be used only for Real Time Streaming Protocol (RTSP) connections; however, it is ignored for live streams.
- **Arguments**: None.
- **Returns**: Void.

### Example

| |
|---|
| ```
 scene.Btn_Rewind.onClick = function ()
 {  
        // rewind the asset that MultiMedia is playing  
     scene.MultiMedia.rewind();
 }
``` |

### void setReference(String imageUrl)

### Description

A"reference" image can be displayed in a MediaPlayer when no asset has been loaded or when an asset is being loading. The setReference() method allows the "reference" image to be changed programmatically.

### Arguments

- imageUrl: This parameter specifies the location from which to obtain the image to display in the media player area when the media player is not playing.
- **Returns**: Void.

### Example

| |
|---|
| ```
 scene.Btn_SetReference.onClick = function ()
 {
       // get Url for an image to display in the MultiMedia MediaPlayer during loading
       var refImageUrl = "../CompExampRes/Image1ForMediaPlayer.bmp";  
       // Display the specified image when the MediaPlayer is loading  
     scene.MultiMedia.setReference(refImageUrl)
 }
``` |

### 3.6 Static Image

Static images typically are rectangular objects whose size falls on macro block boundaries; however, static images could be things like company logos. A static image can have focus and focus is shown using a chaser. The background of a Scene is a static image and, despite its name, the image that appears in a Static Image can be changed by using the loadImage() method. The new image must be the same size as the original image. A static image could be a non-rectangular image such as a company logo where the area around the logo is transparent so that it shows the background image.

### Static Image Attributes

### None.

### Static Image Events

### void onLoad()

### Description

This event occurs for an object each time the Scene that contains the object is viewed by a subscriber.
- **Arguments**: None.
- **Returns**: Void.

### Example

| |
|---|
| ```
 scene.Image1.onLoad = function ()
 {
     //prints the name of the StaticImage object when it loads
     print(this.toString() + " onLoad event ");
 )
``` |

### void onUnload()

### Description

This event occurs for an object each time a subscriber navigates away from a Scene that contains the object.
- **Arguments**: None.
- **Returns**: Void.

### Example

| |
|---|
| ```
 scene.Image1.onUnload = function ()
 {  
     //prints the name of the StaticImage object when it unloads
     print(this.toString() + " onUnload() event ");
 }
``` |

### boolean onFocus(String previous)

### Description

When an object receives focus, this event is fired. When the Static Image gets focus, "Previous" is the name of object that had focus. The default event handler sets the chaser on this object. If this event returns a true, then the default handler does not execute.

### Arguments

- previous: The name of the object in the Scene that had focus before focus was put on this button.

### Returns

- true: This is the keyword for the Boolean that indicates that this object handled this event.
- false: This is the keyword for the Boolean that indicates that another object should handle this event.

### Example

| |
|---|
| ```
 scene.Image1.onFocus = function (previous)
 {  
     //prints the name of the object that had focus previously  
     print(this.toString() + " onFocus() event previous " + previous);
 }
``` |

### boolean onBlur(String next)

### Description

An event that indicates that this item no longer has focus. When the Static Image loses focus, "Next" is the name for the object that gets focus next. The default event handler removes the chaser from this object. If this event returns a true, then the default handler does not execute.

### Arguments

- next: The name of an object on the Scene that receives focus next.

### Returns

- true: This is the keyword for the Boolean that indicates that this object handled this event.
- false: This is the keyword for the Boolean that indicates that another object should handle this event.

### Example

| |
|---|
| ```
 scene.Image1.onBlur = function (next)
 {
     //prints the name of the object that receives focus next.
     print(this.toString() + " onBlur() event next " + next);
 }
``` |

### boolean onKeyPress(int keyCode)

### Description

If this Static Image is in focus and a key on the keyboard is pressed, this event occurs. The default event handler updates the chaser position (keyboard focus) if needed and fires the onClick event if the "OKAY" key was pressed. If a Boolean true is returned the default handler does not execute.

### Arguments

- keyCode: This is the key value, as an integer, for the key that was pressed. Please see Section 0 for additional information on the key values.

### Returns

- true: This is the keyword for the Boolean that indicates that this object handled this event.
- false: This is the keyword for the Boolean that indicates that another object should handle this event.

### Example

| |
|---|
| ```
 scene.Image1.onKeyPress = function (key)
 {  
     // prints the key code of the key that was pressed.
     print(this.toString() + " onKeyPress() event key " + key);
 }
``` |

### boolean onKeyUp(int keyCode)

### Description

If this Static Image is in focus and a key on the keyboard is released, then this event occurs.

### Arguments

- keyCode: The key value as an integer for the key that was released. For additional information on key values see Section 0.
- **Returns**: Void.

### Example

| |
|---|
| ```
 scene.Image1.onKeyUp = function (key)
 {  
     //prints the key code of the key that was released
     print(this.toString() + " onKeyUp() event key " + key);
 }
``` |

### void onClick()

### Description

This is a special case of the onKeyPress() event. This event occurs when an object has focus and the Enter key on a keyboard or the "OKAY" key on a remote is pressed. If a mouse is supported, then a mouse click also triggers this event.
- **Arguments**: None.
- **Returns**: Void.

### Example

| |
|---|
| ```
 scene.Imagel.onClick = function ()
 {
     //prints the name of the multi media object.
     print(this.toString() + " onClick() event ");
 }
``` |

### Static Image Methods

### bool loadImage(String imageURL)

### Description

This is the path where the bitmap can be found.

### Arguments

- imageURL: Can be a URL, a pathname or part of the Programming data.
- **Returns**: Boolean true on success, false on failure.

### Example

| |
|---|
| ```
 scene.Button1.onClick = function ()
 {
     //Loads "compExampRes/onloadStatic.bmp" into the StaticImage object  
     if (!scene.Image1.loadImage("compExampRes/onloadStatic.bmp")) {
       print ("error loading image");
     }
 }
``` |

### String getUrl()

### Description

This command returns the URL that is displayed by the Static Image.
- Arguments: None.
- **Returns**: The URL that the Static Image displays as a string.

### Example

| |
|---|
| ```
 scene.Button1.onClick = function ()
 {  
     //Gets and prints the URL for the Meda Player
     var URL = scene.Image1.getUrl();
     print(" Image URL is " + URL);
 }
``` |

### String toString()

### Description

If a Static Image object is used with the + operator to concatenate a string, the name of the Static Image object is still returned.
- **Arguments**: None.
- **Returns**: Returns the name of the Static Image as a string.

### Example

| |
|---|
| ```
 scene.Image1.onLoad = function ()
 {
     //prints the name of the StaticImage object when it loads  
     print(this.toString() + " onLoad() event ");
 }
``` |

### void setAlignment(String xAlign, String yAlign, boolean update)

### Description

This command positions an image within the static image Scene element.

**Note:** The option to setAlignment() is dependent on how the image was scaled. Alignment can be changed only if the image was "cropped. "

### Arguments

- xAlign: A string that specifies the x-dimension alignment. Options are "Left," "Center" and "Right." Default is "Center."
- yAlign: A string that specifies the y-dimension alignment. Options are "Upper," "Center" and "Lower." Default is "Center."
- update: A Boolean value (true/false) - set to false if rendering should be deferred; such as when additional settings are to be employed.
- **Returns**: Void.

### Example

| |
|---|
| ```
 scene.Button1.onClick = function ()
 {
     //Set Scale type to Crop, so we can set the alignment  
     scene.Image1.setScaleType("Crop", false);
     //Set alignment to upper righthand corner
     scene.Image1.setAlignment("Right", "Upper", true);
 }
``` |

### void setScaleType(String scaleType, boolean update)

### Description

This allows setting the scaling of an image or delaying its setting.

### Arguments

scale Type This is a string that specifies the type of scaling to be applied. The following four types are available:
1. "Crop" - crop any part of the image that extends beyond the borders of the Scene element. Resizing is not performed. The alignment parameters determine where the image is placed and which portions of it are cropped.
2. "StretchFit" - scales the image in both dimensions such that it fills the Scene element. Aspect ratio is not preserved.
3. "BestFit" - scales the image such that aspect ratio is preserved and one or more dimensions of the image fill the Scene element. The image is always centered.
4. "AutoScale" - use the BestFit algorithm if the image is larger than the Scene element; otherwise, use the cropping algorithm. The image is always centered.

- Update: This is a Boolean value (true/false) that should be set to false if rendering is to be deferred; such as when additional settings are to be employed.
- **Returns**: Void.

### Example

| |
|---|
| ```
 scene.Button1.onClick = function ()
 {  
     //Set Scale type to Crop, so we can set the alignment  
     scene.Image1.setScaleType("Crop", false) ;  
     //Set alignment to upper righthand corner  
     scene.Image1.setAlignment("Right", "Upper", true);
 }
``` |

### void setUseBgFill(boolean useBgFill, boolean update)

### Description

Fills the area outside an image area when that area is smaller than the allocated image area.

### Arguments

- useBgFill: This is a Boolean value - when true and the actual image is smaller than the allocated static image area, then the Scene background fills the area outside the actual image area. When false, the static image background (currently black) is displayed around the actual image.
- update: This is a Boolean value (true/false) - set it to false to defer rendering; such as when additional settings are to be employed.
- **Returns**: Void.

### Example

| |
|---|
| ```
 scene.Button1.onClick = function ()
 {
     //Set the background to be default black
     scene.Image1.setUseBgFi11(false, true);
 }
``` |

### void fadeToColor (String color, int alphaBlend, int duration)

### Description

Fade from the current image to an alphablended combination of the current image and the specified color.

### Arguments

- color: color to fade to in rrggbb format.
- alphaBlend: alphablending weight between source and destination color. Range 0 - 255, 0 is source.
- duration: The time to complete the effect in units of frame intervals.
- **Returns**: Void.

### void fadeToImage (String image, int duration)

### Description

Fade from the current image to the specified image

### Arguments

- image: URL of the image to fade to.
- duration: The time to complete the effect in units of frame intervals.
- **Returns**: Void.

### void pan (String image, String direction, int duration)

### Description

Fade from the current image to the specified image

### Arguments

- image: The URL of the image to pan.
- direction: The direction of the pan (up, right, left, and down).
- duration: The time to complete the effect in units of frame intervals.
- **Returns**: Void.

### 3.7 Ticker

A ticker window has scrolling text that is encoded at runtime.

### Ticker Attributes

None.

### Ticker Events

### void onLoad()

### Description

This event occurs for an object each time the Scene that contains that object is viewed by a subscriber.
- **Arguments**: None.
- **Returns**: Void.

### Example

| |
|---|
| ```
 scene.Ticker1.onLoad = function ()
 {
     //prints the name of the Ticker when it loads
     print(this.toString() + " onLoad event ");
 }
``` |

### void on Unload()

### Description

This event occurs for an object each time a subscriber navigates away from a Scene that contains that object. Use Ticker clear() method in this event to free Ticker resources.
- **Arguments**: None.
- **Returns**: Void.

### Example

| |
|---|
| ```
 scene.Ticker1.onUnload = function ()
 {  
     //prints the name of the Ticker when it unloads
     print(this.toString() + " onUnload event ");
 }
``` |

### Ticker Methods

### void clear()

### Description

Clears the text area of the ticker.
- **Arguments**: None.
- **Returns**: Void.

### Example

| |
|---|
| ```
 scene.Buttonl.onClick = function ()
 {
     //Removes all text from ticker;
     scene.Ticker1.clear();
 }
``` |

### int insertText(String string)

### Description

Inserts the specified string into the Ticker. When new text is inserted the Ticker image goes blank, then restarts and includes the added text.
- **Arguments**: None.
- **Returns**: insertText() returns an Identifier (textId) that can by used by removeText() to remove the inserted text.

### Example

| |
|---|
| ```
 var index = -1; scene.Buttonl.onClick = function ()
 {
     //Clear the ticker  scene.Ticker1.clear ();
     //Insert new text into the ticker and save the text's index  
     index = scene.Ticker1.insertText(" new item ");
 }
 scene.Button3.onClick = function () {
     //Remove the text based on last index
     if (index > -1)  
     {  
       scene.Ticker1.removeText(index);
     }
 }
``` |

### void removeText(int textId)

### Description

Removes a string that is identified by textId

### Arguments

- textId: This is an identifier returned from insertText(); it specifies the text to be removed.
- **Returns**: Void.

### Example

| |
|---|
| ```
 var index = -1;
 scene.Buttonl.onClick = function ()
 {
     //Clear the ticker  scene.Ticker1.clear ();
     //Insert new text into the ticker and save the text's index
     index = scene.Ticker1.insertText(" new item ");
 }
 scene.Button3.onClick = function ()
 {  
     //Remove the text based on last index
     if (index > -1)
     {
       scene.Ticker1.removeText(index);  
     }
} 
``` |

### void setTextColor(String RGB)

### Description

Sets the color of the text to be displayed in the ticker. The new color settings apply only to new text inserted into the Ticker. Text already in the Ticker retains its original color.

### Arguments

- RGB: These are the Red, Green and Blue color values for the text, in the RRGGBB format. The RRGGBB format uses RR to specify the hexadecimal value for Red, GG to specify the value for Green and BB for blue.
- **Returns**: Void.

### Example

| |
|---|
| ```
 scene.Buttonl.onClick = function ()
 {  
     // This changes the text color in the ticker to be red
     scene.Ticker1.setTextColor("ff0000") ;
 }
``` |

### void setBackgroundColor(String RGB)

### Description

Sets the color of the background to be displayed in the ticker.

### Arguments

- RGB: This sets the color for the ticker background. The Red, Green and Blue color values in the RRGGBB format. The RRGGBB format uses RR to specify the hexadecimal value for Red, GG to specify the value for Green and BB for blue.
- **Returns**: Void.

### Example

| |
|---|
| ```
 scene.Button1.onClick = function ()
 {
     // This sets the background color in the Ticker to be blue
     scene.Ticker1.setBackgroundColor("0000ff");
 }
``` |

### String getText()

### Description

Returns the current Ticker text as a string.
- **Arguments**: None.
- **Returns**: Returns the string that is currently being displayed by the Ticker.

### Example

| |
|---|
| ```
 scene.Buttonl.onClick = function ()
 {
     // get the Ticker text and print it
     print (scene.Ticker1.getText());
 }
``` |

### String getIdText (int textId)

### Description

Returns the text for the specified textId.

### Arguments

- textId: An identifier returned from insertText() that specifies the text to be returned.
- **Returns**: The string for the specified textId.

### Example

| |
|---|
| ```
 var index = -1; scene.Buttonl.onClick = function ()
 {
     //Clear the ticker  
     scene.Tickerl.clear ();
     //Insert new text into the ticker and save the text's index  
     index = scene.Ticker1.insertText(" new item ");
 }
     scene.Button3.onClick = function ()
 {
     //Get the ticker text based on index and print it
     if (index > -1)  
     {  
         var text = scene.Ticker1.getIdText (index);  
         print ("Ticker text: " + text);  
     }
 }
``` |

### String getTextColor()

### Description

Returns the RGB color value of the Ticker text.
- **Arguments**: None.
- **Returns**: Returns the RGB color value of the caption text as a text string. The RRGGBB format uses RR to specify the hexadecimal value for Red, GG to specify the value for Green and BB for blue.

### Example

| |
|---|
| ```
 scene.Buttonl.onClick = function ()
 {
     // Gets and prints the text color of the ticker  
     var TextColor = scene.Ticker1.getTextColor();  
     print("Ticker Text color is: " + TextColor);
 }
``` |

### String getBackgroundColor()

- **Description**: Returns the RGB color value of the Ticker background.
- **Arguments**: None.
- **Returns**: Returns the RGB color value of the Ticker background as a text string. The RRGGBB format uses RR to specify the hexadecimal value for Red, GG to specify the value for Green and BB for blue.

### Example

| |
|---|
| ```
     scene.Buttonl.onClick = function ()
 {
     // Gets and prints the background color of the ticker
     var BackgroundColor = scene.Ticker1.getBackgroundColor();
     print ("Ticker Background color is: " + BackgroundColor);
 }
``` |

### String toString()

### Description

If a Ticker object is used with the + operator to concatenate a string, the name of the Ticker object is still returned.
- **Arguments**: None.
- **Returns**: Returns the name of the Ticker as a string.

### Example

| |
|---|
| ```
 scene.Ticker1.onLoad = function ()
 {  
     //prints the name of the Ticker when it loads  
     print(this.toString() + " onLoad event ");
 }
``` |

### 4 Communication Objects

### 4.1 Billing System Object

An object that allows access to a billing system. This object can be created by Scripts and a developer can use the socket object to make a connection to the billing system of his or her own company.

### Billing System Methods

### Purchase(itemId)

### Description

Charge the subscribers account for an item.

### Arguments

- itemId: An identifier for the item to be billed to the subscriber's account; an example might be a VOD movie.
- **Returns**: Success if the account was billed correctly. Failure if there was a problem.

### IsSubscribed(itemId)

### Description

Checks the status of a subscriber's account.

### Arguments

- itemId: An identifier for the item to be billed to a subscriber's account.
- **Returns**: Returns a status for a subscriber.

### Subscribe(itemId)

### Description

Based on the current billing commands.

### Arguments

- itemId: An identifier for the item to be billed to a subscriber's account.
- **Returns**: Returns a status for a subscriber.

### IsPurchased(itemId)

### Description

Based on the current billing commands.

### Arguments

- itemId: An identifier for the item to be billed to the subscriber's account.
- **Returns**: Returns true if the item has already been purchased. This is used, for example, so that a VOD movie can be viewed for a 24-hour period.

### getAccountId()

### Description

Based on the current billing commands, this can be used for households with more than one set-top box or other display device. Using this, a VOD movie can be purchased on one display device, then viewed on another in the same household. It can also be used for keeping track of high game scores across multiple display devices within a household. This Identifier can also be used when going out to a third party system.
- Arguments: None.
- **Returns**: Returns the account Id for a subscriber.

### 5 Debugging Script

### Description

While creating script, a developer might want to get feedback about the values of certain variables or where the script is executing at a particular time - the print() command provides the required support. The print() function displays messages to an output window in the AVE.

### Debugging Methods

### void print(String text)

### Description

Prints out the text to the AVE output window.

### Arguments

- Text: Message to be logged. This can be any combination of quoted strings, numbers or text variables. The text parameter is evaluated similar to JavaScript.
- **Returns**: Void.

### Debugging Example Script

In the following code a message is displayed in the AVE output window if there is a problem loading the Scene.

### Example

| |
|---|
| ```
 scene.Ticker1.onLoad = function ()
 {
     //prints the name of the Ticker when it loads
     print(this.toString() + " onLoad event ");
 }
``` |

The example code above would print:
ScriptTrace:"Ticker1 onLoad event "

### 6 XML

### 6.1 XMLAttribute

An Attribute Node object contains an attribute value that is associated with a node. The example output in the XMLAttribute section is based on this **XML** string:

```
 <TileIds>
   <Id attr2="val 2" attr3="value number 3" type="public">76</Id>
   <Id attr2="value2" type="custom">86</Id>
 </TileIds>
```

### XMLAttribute Attributes

The following attributes are supported:
- nodeName: Returns the qualified name for the attribute (Read-only).
- nodeType: Specifies the XML Document Object Model (DOM) node type, which determines valid values and whether or not the node can have child nodes (Read-only).
- node Value: Contains the node value expressed in its defined data type (Read-only).
- text: Represents the text content of the attribute. This value can be read or a new value can be assigned to it.

### Example

The follow example extracts attribute information from an XML string.

| |
|---|
| ```
 scene.Buttonl.onClick = function ()
 {
     // make an XML string
     var rawXmlString = "<TileIds><Id attr2=\"val 2\" attr3=\"value number 3\"
 type=\"public\">76</Id><Id attr2=\"value2\" type=\"custom\">86</Id><Id
 type=\"custom\">87</Id></TileIds>";  
     // here we create a new XMLDocument and load the XML string into  
     // the document.  
     var xmlData = new XMLDocument();  
     xmlData.loadString(rawXmlString);  
     // now we get a XML node list of the Elements with Tag Name "Id".  
     var IdList = xmlData.documentElement.getElementsByTagName("Id");  
     // Get an XML attribute list for the firts term on the none last
``` |
| ```
     var attrList = IdList.item(0).attributes;  
     // Get the the nodeName, nodeType, text, and nodeValue for the
     // first attribute in the list.  
     print ("name (" + attrList.item(0).nodeName + ") ");  
     print ("type (" + attrList.item(0).nodeType + ") ");
     print ("value ("+attrList.item(0).nodeValue +")");
     print ("text (" + attrList.item(0).text +") ");
     // change the text of the attribute  
     attrList.item(0).text = "new text ";  
     print ("new text (" + attrList.item(0).text + ") ");
 }
``` |
| ```
 The output when this example runs is:
 ScriptTrace:'name (attr2)' ScriptTrace:'type (2)'
 ScriptTrace:'value (val 2)'
 ScriptTrace:'text (val 2)'
 ScriptTrace:'new text (new text)'
``` |

### XMLAttribute Events

No events are supported.

### XMLAttribute Methods

No methods are supported.

### 6.2 XMLDocument

Represents the top level of the XML source and includes members for retrieving all other XML objects.

### XMLDocument Attributes

The following attributes described here are supported:
- • Async: Specifies if the document loads synchronously or asynchronously. If asynchronous, then the onLoad() event fires when the document is loaded. Default is false.
- • DocumentElement: Contains the root element of the document or null if the root element does not exist.
- • PreserveWhitespace: Specifies how white space is handled. Default is false.
- • Validate: "validate" is a Boolean property that tells the XML parser whether or not to validate the XML against a schema. If this property is false, the parser never validates the XML. If this property is true and a schema exists, then the parser uses the schema to validate the xml. The default value is "false."

### Example

| |
|---|
| ```
 scene.Button22.onClick = function ()
``` |
| ```
 {
         // g_XmlDoc is a global Xml document
         // print out whether the Xml Document is using XML validation or not
     print ( "XmlDoc validate = " + g_XmlDoc.validate);
 }
 scene.Button23.onClick = function ()
 {
         // g_XmlDoc is a global Xml document
         // set up the XMLDocument g_XmlDoc to validate the XML
         g_XmlDoc.validate = true;
 }
``` |

### XMLDocument Events

Only the following event is supported.

### void onLoad(int status)

### Description

This event indicates that an XML Document load operation is complete. This is especially useful for asynchronous document loading, but the event also occurs even when the completed XML document load is synchronous.

### Arguments

- Status: A zero value indicates a successful load; a non-zero value, indicates a failure.
- **Returns**: Void.

### Example

| |
|---|
| ```
 scene.Button1.onClick = function ()
 {
         // this is the URL where the XML information is located
         var url = "http://localhost/xml_tests.xml";
         //Create a new XML Document called UserAppXMLDoc
         var UserAppXMLDoc = new XMLDocument();
         // configure some of the XMLDocument attributes
         UserAppXMLDoc.PreserveWhitespace = true;
         // Asynchronous load.
         UserAppXMLDoc.onload callback function
     UserAppXMLDoc.onLoad = XmlEventOnload;
         // Load the XML Document from the url.
         UserAppXMLDoc.load(url);
 }
 // this is the XML document onload callback function
``` |
| ```
 function XmlEventOnLoad (statusCode)
 {  
     print (" Xml document loaded status code was = " + statusCode);  
     // status code == 0 for a successful load  
     if (statusCode == 0)  
     {  
         // Get the topmost node an print out its name to show that the test worked.  
         var topnode = this.documentElement;  
         print(topnode.nodeName);  
     }
 }
``` |

### XMLDocument Methods

The following methods are supported.

### boolean load(String URL)

### Description

Loads an XML document from the specified.

### Arguments

- URL: A that string specifies the URL of the XML document to load.

### Returns

- True: This Boolean keyword indicates that the load succeeded.
- False: This Boolean keyword indicates that the load failed.

### Example

| |
|---|
| ```
 scene.Buttonl.onClick = function ()
 {  
         // this is the URL where the XML information is located  
         var url = "http://localhost/xml_tests.xml";  
         // Create a new XML Document called UserAppXMLDoc  
         var UserAppXMLDoc = new XMLDocument();
     // Load the XML Document from the url.  
         UserAppXMLDoc.load(url);  
         // Get and print the node name of the root node to show that the load worked  
     var topnode = UserAppXMLDoc.documentElement;
     print(topnode.nodeName);
 }
``` |

### boolean loadString(String xml)

### Description

Loads a string containing XML text.

### Arguments

- xml: A string that contains the XML text to load.

### Returns

- true: This Boolean keyword indicates that the load succeeded.
- false: This Boolean keyword indicates that the load failed.

### Example

| |
|---|
| ```
 scene.Buttonl.onClick = function ()
 {  
     // make an XML string
     var rawXmlString = "<TileIds><Id attr2=\"val 2\" attr3=\"value number 3\"
 type=\"public\">76</IdxId attr2=\"value2\" type=\"custom\">86</Id><Id
 type=\"custom\">87</Id></TileIds>";  
     // here we create a new XMLDocument and load the XML string into  
     // the document.  
     var xmlData = new XMLDocument();  
     xmlData.loadString(rawXmlString);
     // get a XML node list of the Elements with Tag Name "Id"  
     // and print out the node name to show the loadString command worked  
         var IdList = xmlData.documentElement.getElementsByTagName("Id");  
     print("node name is " + IdList.item(0).nodeName);
 }
``` |

### 6.3 XMLNamedNodeMap

Adds support for namespaces and iteration through the collection of attribute nodes. An XMLNamedNodeMap is returned by the XMLNode.attributes property. The example output for this section is based on the XML string.

```
 <TileIds>
   <Id attr2="val 2" attr3="value number 3" type="public">76</Id>
   <Id attr2="value2" type="custom">86</Td>
 </TileIds>
```

### XMLNamedNodeMap Attributes

The following attributes are supported.
- length: Indicates the number of items in the collection (Read-only).

### Example

| |
|---|
| ```
 scene.Buttonl.onClick = function ()
 {
   // g_XmlDoc is a global Xml document
   var IdList = g_XmlDoc.documentElement.getElementsByTagName("Id");
     nameNodeMap = IdList.item(0).attributes;
     // Find the number of attributes for the first item.
   var mapLength = nameNodeMap.length;
   print (" their are " + mapLength + " attributes for the first \"Id\" item");
 }
``` |
| The output is: |
| ```
 ScriptTrace:' their are 3 attributes for the first "Id" item'
``` |

### XMLNamedNodeMap Events

No events are supported.

### XMLNamedNodeMap Methods

The following methods are supported.

### getNamedItem(String name)

### Description

Retrieves the attribute with the specified name.

### Arguments

- name: A string specifying the name of the attribute.

### Returns

- An object.: Returns an XMLAttribute object for the object specified.
- null: If the node object is not in the collection, a null is returned.

### Example

| |
|---|
| ```
 scene.Button3.onClick = function ()
 {
     // g_XmlDoc is a global Xml document
     var IdList = g_XmlDOC.documentElement.getElementsByTagName("Id");
     nameNodeMap = IdList.item(0).attributes;
     // Get the XML Attribute object named "attr2"
     var namedItem = nameNodeMap. getNamedItem ("attr2");
     // print out information about the named attribute.
     print (namedItem.text);
     print(namedItem.nodeName);
     print(namedItem.nodeValue);
     print(namedItem.nodeTypel;
 } 
``` |
| The output is: ```
 ScriptTrace:'val 2'
 ScriptTrace:'attr2'
 ScriptTrace:'val 2'
 ScriptTrace:'2'
``` |

### item(int index)

### Description

Allows random access to individual nodes within a collection.

### Arguments

- index: An integer that specifies the index of the item within the collection. The first item is number zero.

### Returns

- An object.: Returns XMLNode, if found.
- null: If the index is out of range.

### Example

| |
|---|
| ```
 scene.Button4.onClick = function ()
 {
     // g_XmlDoc is a global Xml document
     var IdList = g_XmlDOC.documentElement.getElementsByTagName("Id");
     // Get a named nede list.  
     nameNodeMap = IdList.item(0).attributes;
     for (var x = 0; x < nameNodeMap.length; x++)  
 {  
     // Get each item for the node list  
     var attrItem = nameNodeMap.item(x);
``` |
| ```
     // print out the items name and value  
     print (" item " + x + " value " + attrItem.nodevalue);  
     print (" item " + x + " name " attrItem.nodeName);
   }
 }
``` |
| The output is: |
| ```
 ScriptTrace:' item 0 value val 2'
 ScriptTrace:' item 0 name attr2'
 ScriptTrace:' item 1 value value number 3'
 ScriptTrace:' item 1 name attr3'
 ScriptTrace:' item 2 value public'
 ScriptTrace:' item 2 name type'
``` |

### 6.4 XMLNode

Adds support for namespaces and iteration through the collection of attribute nodes. The output results for the examples in this section are based on the following XML string:

```
  <TileIds>
   <Id attr2="val 2" attr3="value number 3" type="public">76</Id>
   <Id attr2="value2" type="custom">86</Id>
  </TileIds>
```

### XMLNode Attributes

The following attributes are supported.
- attributes: Contains the list of attributes for this node. This returns an XMLNamedNodeList (see section 6.3) (Read-only).

### Example

| |
|---|
| ```
 scene.Button5.onClick = function ()
 {  
     // g_XmlDoc is a global Xml document  
     var IdList = g_XmlDoc.documentElement.getElementsByTagName("Id");
     // Get an attribute list for the first node in IdList  
     var attrList = IdList.item(0).attributes;
     // print out the list length and the name of the first attribute
     print ("Attribute list length = " + attrList.length) ""
     print("first attribute name (" + attrList.item(0).nodeName + ")");
 } 
``` |
| The output is: |
| ```
 script Trace: 'Attribute list length = 3'
 ScriptTrace: first attribute name (attr2)'
``` |

- childNodes: Contains a node list containing the children nodes Read-only.

### Example

| |
|---|
| ```
 scene.Button6.onClick = function ()
 {
     // g_XmlDoc is a global Xml document
     // Get a list of child node for the XML document root.
     var childList = g_XmlDoc.documentElement.childNodes;  
     // print out the length of the list and the first child's name
     print("length = " + childList.length);  
     print ("first node name " + childList.item(0).nodeName);
 } 
``` |
| The output is: |
| ```
 ScriptTrace:'length = 3'
 ScriptTrace:'first node name Id'
``` |

- firstChild: Contains the first child of this node. null if there are no children nodes (Read-only).

### Example

| |
|---|
| ```
 scene.Button7.onClick = function ()
 {
     // g_XmlDoc is a global Xml document
     // Get the first child node for the XML document root.
     var fstChild = g_XmlDoc.documentElement.firstChild;
     if (fstChild != null)  
     {  
         // print the nodename and the text  
     print(fstChild.nodeName + " = " + fstChild.text);
     }
 } 
``` |
| The output is: |
| ```
 ScriptTrace:'Id = 76'
``` |

- lastChild: Returns the last child node. null if there are no children nodes (Read-only).

### Example

| |
|---|
| ```
 scene.Button8.onClick = function ()
 {
     // g_XmlDoc is a global Xml document  
     // Get the last child node for the XML document root.
     var IstChild = g_XmlDoc.documentElement.lastChild;
     if (IstChild != null)
     {  
         // print the nodename and the text  
     print(IstChild.nodeName + " = " + IstChild.text);
     }
 }
``` |
| The Output is: |
| ```
 ScriptTrace:'Id = 87'
``` |

- nextSibling: Contains the next sibling of the node in the parent's
- child: list. null if there is not a next sibling. Read-only.

### Example

| |
|---|
| ```
 scene.Button9.onClick = function ()
 {
     // g_XmlDoc is a global Xml document
     // Get the first child node for the XML document root.  
     var testsib = g_XmlDoc.documentElement.firstChild;  
     while (testsib.nextSibling != null)
     {
``` |
| ```
           // print out the text for the next Sibling  
         print ("sib test " + testsib.nextSibling.text);  
         // get the next sibling  
         testsib = testsib.nextSibling;
     }
 } 
``` |
| The Output is: |
| ```
 ScriptTrace:'sib test 86'
 ScriptTrace:'sib test 87'
``` |

- nodeName: Returns the qualified name for attribute, document type, element, entity, or notation nodes. Returns a fixed string
for
all other node types (Read-only).

### Example

| |
|---|
| ```
 scene.Button10.onClick = function ()
 {
     // g_XmlDoc is a global Xml document
     // Make sure the element exists before trying to use it.
     if(g_XmlDoc &&
         g_XmlDoc.documentElement &&
         g_XmlDoc.documentElement.hasChildNodes())
 {  
            // Get the node name of the first and.d  
            var ndName = g_XmlDoc.documentElement.firstChild.nodeName;  
         print("Name = " + ndName);
     }
 }
``` |
| The Output is: |
| ```
 ScriptTrace:'Name = Id'
``` |

- nodeType: Specifies the XML Document Object Model (DOM) node
type, which determines valid values and whether the node
can have child nodes (Read-only).

### Example

| |
|---|
| ```
 scene.Button11.onClick = function ()
 {  
     // g_XmlDoc is a global Xml document
     // get the root node  
     var root = g_XmlDoc.documentElement;  
     // find out and print what the type the root node is  
     var rootType = root.nodeType;  
     print (" root type is " + rootType);
 }
``` |
| The Output is: |
| ```
 ScriptTrace:' root type is 1'
``` |

nodeValue Contains the text associated with the node (Read-only).

### Example

| |
|---|
| ```
 scene.Button4.onClick = function ()
 {
     // g_XmlDoc is a global Xml document
     var IdList = g_XmlDoc.documentElement.getElementsBytagName("Id");
     // Get a named node list.
     nameNodeMap = IdList.item(0).attributes;
``` |
| ```
     for (var x = 0; x < nameNodeMap.length; x++)
     {
         // Get each item for the node list  
         var attrItem = nameNodeMap.item(x);  
         // print out the items name and value  
         print (" item " + x + " value " + attrItem.nodeValue);
         print (" item " + x + " name " + attrItem.nodeName);
     }
 } 
``` |
| The output is: |
| ```
 ScriptTrace:' item 0 value val 2'
 ScriptTrace:' item 0 name attr2'
 ScriptTrace:' item 1 value value number 3'
 ScriptTrace:' item 1 name attr3'
 ScriptTrace:' item 2 value public'
 ScriptTrace:' item 2 name type'
``` |

- parentNode: Contains the parent node. null if parent does not exist (Read-only).

### Example

| |
|---|
| ```
 scene.Button13.onClick = function ()
 {
     // g_XmlDoc is a global Xml document
     // get the document root
    var rootNode = g_XmlDoc.documentElement;
     // get the first child of root
    var fstChild = rootNode.firstChild;
     // get the parent of the child
    var parNode = fstChild.parentNode;
       // print out the parents nodeName
    print ("Parent name = " + parNode.nodeName);
 }
``` |
| The output is: |
| ```
 ScriptTrace:'Parent name = TileIds'
``` |

- previousSibling: Contains the previous sibling of the node in the parent's child list; however, if the previous Sibling does not exist, it is null (Read-only).

### Example

| |
|---|
| ```
 scene.Button14.onClick = function ()
 {
     // g_XmlDoc is a global Xml document
``` |
| ```
     // get the last child of root  
     var testsib = g_XmlDoc.documentElement.lastChild;
     // Keep getting the previous sibling until we run out.  
     while (testsib.previousSibling != null)
     {
         print ("sib test " + testsib.previousSibling.text);
         testsib = testsib.previousSibling;
     }
 }
``` |
| The output is: |
| ```
 ScriptTrace:'sib test 86'
 ScriptTrace:'sib test 76'
``` |

- text: Represents the text content of the node or the concatenated text representing the node and its descendants. This value can be read or a new value can be assigned to it. Use caution since descendant nodes get overwritten.

### Example

| |
|---|
| ```
 scene.Button15.onClick = function ()
 {
     // g_XmlDoc is a global Xml document  
     var IdList = g_XmlDoc.documentElement.getElementsByTagName("Id");
     for (var x = 0; x < IdList.length; x++)
     {  
         // Get text for each item  
         var nodeText = IdList.item(x). text,  
         print ("item" + x + " text = " + nodeText);
     }
 } 
``` |
| The output is: |
| ```
 ScriptTrace:'item 0 text = 76'
 ScriptTrace:'item 1 text = 86'
 ScriptTrace:'item 2 text = 87'
``` |

### XMLNode Events

No events are supported.

### XMLNode Methods

The following methods are supported.

### String getAttribute (String name)

### Description Gets the value of the attribute.

### Arguments

- name: A string specifying the name of the attribute.

### Returns

- A String: Returns the value as a string if the attribute value is a non-empty string
- null: Returns null if the named attribute does not have a specified value,or an implied default value, such as one taken from a DTD or schema..

### Example

| |
|---|
| ```
 scene.Button16.onClick = function ()
 {
     // g_XmlDoc is a global Xml document  
     // Get a list of Elements with Tag name "Id"  
     var IdList = g_XmlDoc.documentElement.getElementsByTagName("Id");
     // Get the value of attribute "attr2" for the first element in the list
     var attr2Value = IdList.item(0).getAttribute("attr2");
     print ("attr2 value = " + attr2Value);
 } 
``` |
| The output is: |
| ```
 ScriptTrace:'attr2 value = val 2'
``` |

### getElementsByTagName (String tagName)

- **Description**: **Returns a list of all descendant elements that match the supplied name.**

### Arguments

- tagName: A string specifying the name of the element to find. The tagName value "*" matches all descendant elements of this element.

### Returns

- An object: Returns an XMLNodeList object containing all elements that match the supplied name.

### Example

| |
|---|
| ```
 scene.Button15.onClick = function ()
 {  
     // g_XmlDoc is a global Xml document
     // get a list of Elements with Tag name "Id"  
     var IdList = g_XmlDOC.documentElement.getElementsByTagName("Id");
     for (var x = 0; x < IdList.length; x++)
     {
         // Get text for each item  
         var nodeText = IdList.item(x).text;  
         print ("item " + x + " text = " + nodeText);
     }
 }
``` |
| The output is: |
| ```
 ScriptTrace:'item 0 text = 76'
 ScriptTrace:'item 1 text = 86'
 ScriptTrace:'item 2 text = 87'
``` |

### boolean hasChildNodes ()

### Description

Provides a fast way to determine whether a node has children.
- **Arguments**: **None.**

### Returns

- Boolean: Returns true if this node has children.

### Example

| |
|---|
| ```
 scene.Button18.onClick = function ()
 {  
     // g_XmlDoc is a global Xml document
     // check if the Root has child nodes  
     if (g_XmlDoc.documentElement.hasChildNodes())
     {
         print("has child nodes");
     }
     else
     {  
         print("does not have child nodes");
     }
 } 
``` |
| The output is: |
| ```
 ScriptTrace:'has child nodes'
``` |

### String toString()

### Description

Serializes an XML node to a string. An XML document could be modified, then written to a file using XmlDocument.documentElement,toString().
- **Arguments**: **None.**

### Returns

- A String: Returns the entire node including all attributes and children as a string. Since the XmlDocument.documentElement is the root node, using toString allows the XML document to be serialized.

### Example

| |
|---|
| ```
 scene.Button19.onClick = function ()
 {  
     // g_XmlDoc is a global Xml document
     var rootNode = g_XmlDoc.documentElement;  
     // print out the root node.  
     print (rootNode.toString());
 }
``` |
| The output is: |
| ```
 ScriptTrace:'<Tileids><Id attr2="val 2" attr3="value number 3"
 type="public">76</Id><Id attr2="value2" type="custom">86</Id><Id
 type="custom">87</Id></TileIds>'
``` |

### 6.5 XMLNodeList

Supports indexed access to a collection.

### XMLNodeList Attributes

The following attributes are supported.
- length: Indicates the number of items in the collection (Read-only).

### Example

| |
|---|
| ```
 scene.Button20.onClick = function ()
 {
     // g_XmlDoc is a global Xml document
     var nodeList = g_XmlDoc.documentElement.childNodes;
``` |
| ```
     // print out how many children are in root.
     print (" Root has " + nodeList.length + " children");
 } 
``` |
| The output is: |
| ```
 ScriptTrace:' Root has 3 children'
``` |

### XMLNodeList Events

No events are supported.

### XMLNodeList Methods

The following methods are supported.

### item(int index)

- **Description**: Allows random access to individual nodes within the collection

### Arguments

- Index: An integer specifying the index of the item within the collection. The first item is number zero.

### Returns

- An object.: Returns XMLNode if found.
- Null: If the index is out of range.

### Example

| |
|---|
| ```
 scene.Button21.onClick = function ()
 {
     // g_XmlDoc is a global Xml document  
     var nodeList = g_XmlDoc.documentElement.childNodes;
     // get the first item fron the child list
     var firstItem = nodeList.item(0);  
     print ("First item text = " + firstItem.text);
 } 
``` |
| The output is: |
| ```
 ScriptTrace:'First item text = 76'
``` |

### 6.6 XMLHttp

The XMLHttp object is patterned after the XMLHttpRequest concept that was implemented in IE, Mozilla, Safari (Apple) and Opera. The AVDN system supports HTTP messages and messages across a Secure Socket Layer (SSL) using HTTPS.

### Description

Creates a XML socket object for communication with an HTTP server.

### XMLHttp Attributes

The following attributes are supported.
- checkCertificate: is a Boolean property which is used to enable or disable certificate checking during secure HTTP operations. This property can be read or assigned. The default value is "true."

### Example

| |
|---|
| ```
 scene.Button32.onClick = function ()
 {
     // g_httpConn is a global XMLHttp object
     // print out whether the XMLHttp is checking certificates or not.  
     print ("CheckCertificate state = " + g_httpConn.checkCertificate);
 }
 scene.Button33.onClick = function ()
 {
     // g_httpConn is a global XMLHttp object  
     // set the XMLHttp connection to not check Certificates
     g_httpConn.checkCertificate = false;
 }
``` |

- redirectPolicy: Used to set the redirect policy to one of the following values:
0 = Never redirect.
1 = Disallow HTTPS to HTTP redirects.
2 = Always redirect.
The default is 1 (Disallow HTTPS to HTTP redirects).

### Example

| |
|---|
| ```
 scene.Button33.onClick = function ()
 {
     var outdata = new XMLHttp;  
     //set the redirect policy to not auto redirect because we need the redirect URL  
     outdata.redirectPolicy = 0;
     //Load the content URL  
     outdata.open ("get","http://MyURL", false);
     outdata.send ("");
 }
``` |

- readyState: Returns the state of the object as follows:
0 = uninitialized
1 = open
2 = sent
3 = receiving
4 = loaded.
Read-only.

### Example

| |
|---|
| ```
 scene.Button31.onClick = function ()
 {
     // g.httpConn is a global XMIHttp)
     if (g_httpConn != null)  
     {
         // check what the ready state is for the XMLHttp connection
         var httpReadyState = g_httpConn.readyState;
         print("ready state = " + httpReadyState);
     }
 }
``` |

- ***response Text***: Returns the response as a string. Read-only.

### Example

| |
|---|
| ```
 scene.Buttonl.onClick = function ()
 {  
     // g_httpConn is a global XMLHttp object  
        g_httpConn = new XMLHttp();  
        // Set the user agent  
        g_httpConn.useragent = "My User Agent String";
       // Get the URL for the HTTP serven that has data
``` |
| ```
     var httpServerUrl = "http://myServer/myXML"
     g_httpConn.open("get", httpServerUrl, false);
     g_httpConn.send("");  if (g_httpConn.status == 200)
     {  
        // take data from file and make XML DOM  
        // g_XmlDoc is a global XMLDocument
        g_XmlDoc = new XMLDocument;  
        // Get the responseText and load it into an XMLDocument  
        g_XmlDoc.loadString(g_httpConn.responseText);  
        // print something to show that XML loaded  
        print (" root name is " + g_XmlDoc.documentElement.nodeName);  
        }
     else
     {  
        print("load error = " + g_httpConn.statusTest + " " + g_httpConn.status);
     }
 }
``` |

- responseXML: To examine and parse the XML document, create a new XMLDocument object and pass the *responseText* as an argument to the XMLDocument's *loadString* method.
- status: Returns the status as a number (e.g. 404 for "Not
- Found": and 200 for "OK"). For some security errors may return a 0 (zero). In some cases the statusText attribute may provide additional information about the error. Read-only.

### Example

| |
|---|
| ```
 see responseText example above
``` |

- statusText: Returns the status as a string (e.g. "Not Found" or
- "OK").: Some security errors may return a status value of 0 (zero). In some cases the statusText attribute may provide additional information about the error. Read-only.

### Example

| |
|---|
| ```
 see responseText example above
``` |

- useragent: Sets and gets the user agent in the HTTP requests. The useragent can only be set before the open command. It can be read at any time.

### Example

| |
|---|
| ```
 see responseText example above
``` |

### XMLHttp Events

### void onReadyStateChange(int state)

### Description

An event handler for an event that fires at every state change. Occurs only when the file is opened asynchronously (see parameters for open() method below).

### Arguments

- state: The state to which the object is changing.
- **Returns**: Void

### Example

| |
|---|
| ```
 var g_httpAsyncConn = null;
 var g_asyncXmlDoc = null; scene.Button41.onClick = function ()
 {
     // g_httpAsyncConn is a global XMLHttp;
     g_httpAsyncConn = new XMLHttp();
     // assign the onReadyStateChange event to a function
     g_httpAsyncConn.onReadyStateChange = onHttpReadyStateChange;
     // open asynchronously
     g_httpAsyncConn.open(''get'',''http://localhost/XML_Tests.xml", true);
     g_httpAsyncConn.send(" ");
     print ("Waiting for onReadyStateChange");
 }
 // onHttpReadyStateChange is the asynchronous callback
 // for the XMLHttp connection function onHttpReadyStateChange(state)
 {  
         if (state == 4)  
         {  
/     / g_httpAsyncConn is a global XMLHttp;  
     if (g_httpAsyncConn.status != 200)  
     {
``` |
| ```
         print ("load failure " + g_httpAsyncConn.statusText);  
     }  
     else  
     {  
         // g_asyncXmlDoc is a global XMLDocument  
         g_asyncXmlDoc = new XMLDocument;  
         // Use responseText as the XML data in the XMLDocument  
         g_asyncXmlDoc.loadString(g_httpAsyncConn.responseText);  
         // print something to show this worked  
         print ("root is " + g_asyncXmlDoc.documentElement.nodeName);  
     }
          }
 }
``` |

### XMLHttp Methods

The following methods are supported.

### void abort()

### Description

Cancels the current request.
- **Arguments**: None.
- **Returns**: Void.

### Example:

| |
|---|
| ```
 scene.Button42.onClick = function ()
 {
     // g_httpAsyncConn is a global XMLHttp;
     // abort the Http connection  
     g_httpAsyncConn.abort();
     print ("Http connection aborted");
 }
``` |

### getAllResponseHeaders ()

### Description

Returns the complete set of HTTP headers as a string.
- **Arguments**: None.

### Returns

- A string: The complete set of HTTP headers

### Example

| |
|---|
| ```
 var g_httpConn = null; scene.Button55.onClick = function ()
 {  
 // g_httpConn is a global XMLHttp object
     g_httpConn = new XMLHttp();
     // get file synchronously  
     var openasync = false;
     var httpServerUrl = ''http://localhost/XML_Tests.xml'';  
     g_httpConn.open("GET",httpServerUrl, openasync);
     // must send the command. send Empty string when getting a file.  
     g_httpConn.send(" ");
     if (g_httpConn.status == 200)  
     {  
         // get the response headers from the HTTPS message  
         var responseString = g_httpConn.getAllResponseHeaderso;  
         print ("Headers " + responseString);
     }
 }
``` |

### String getResponseHeader (String headerName)

### Description

Returns the value of the specified HTTP header as a string.

### Arguments

- headerName: Name of the HTTP header to retrieve.

### Returns

- A string.: Returns the header entry if found. Returns an empty string if not found.

### Example

| |
|---|
| ```
 scene.Button55.onClick = function ()
 {
     // g_httpConn is a global XMLHttp object
     g_httpConn = new XMLHttp();
     // get file synchronously
     var openasync = false;
     var httpServerUrl = "http://localhost/XML_Tests.xml";  
     g_httpConn.open("GET",httpServerUrl, openasync);
     // must send the command. send Empty string when getting a file.
     g_httpConn.send(" ");
     if (g_httpConn.status == 200)  
     {
``` |
| ```
         // get the server response header from the HTTP message  
         var responseServer = g_httpConn.getResponseHeader("Server");  
         print ("Server " + responseServer);  
     }
 }
``` |

### open (method, URL)

### void open (String method, String URL, boolean async)

### open (method, URL, async, username)

### open (method, URL, async, username, password)

### Description

Specifies the method, URL and other optional attributes of a request. The AVDN system supports HTTP messages and also messages across a Secure Socket Layer (SSL) using HTTPS.

### Arguments

- method: The method parameter can have a value of "GET," "POST" or "PUT" (Use "GET" to request data and use "POST" to send data; especially if the length of the data is greater than 512 bytes).
- URL: The URL parameter can be either a relative or complete URL.
- Async: Specifies whether or not the request should be handled asynchronously - "true" means that script processing carries on after the send() method, without waiting for a response, while "false" means that the script waits for a response before continuing to process more script (Default: true¹).
- username: The name of the user for authentication. Default: empty string
- password: The name of the user for authentication. Default: empty string
¹ The value for this field is always set to "true."

### Example

| |
|---|
| ```
 scene.Buttonl.onClick = function ()
 {  
     // g_httpConn is a global XMLHttp object
         g_httpConn = new XMLHttp();  
         // Get the URL for the HTTP server that has data  
     var httpServerUrl = "http://myServer/myXML"
     g_httpConn.open("get", httpServerUrl, false);
     g_httpConn.send(" ");  if (g_httpConn.status == 200)
     {
         // take data from file and make XML DOM
         // g_XmlDoc is a global XMLDocument  
         g_XmlDoc = new XMLDocument;  
         // Get the responseText and load it into an XMLDocument  
         g_XmlDoc.loadString(g_httpConn.responseText);  
         // print something to show that XML loaded  
         print (" root name is " + g_XmlDoc.documentElement.nodeName);  
         }
     else  
     {
         print("load error = " + g_httpConn.statusTest + " " + g_httpConn.status);
     }
 }
``` |

**Note:** See onReadyStateChange () event above for an asynchronous open example.

### void send (String content)

### Description

Sends an HTTP request to the server.

### Arguments

- Content: The body of the message being sent with the request.
- **Returns**: Void.

### Example

| |
|---|
| ```
 scene.Button56.onClick = function ()
 {
     // make an XMLHttp connection
     var outdata = new XMLHttp;
     // the "http://www.swanandmokashi.com/HomePage/WebServices/QuoteofTheDay.asmx"
     // site sends famous quotations as XML messages
     var url = "http://www.swanandmokashi.com/HomePage/WebServices/QuoteOfTheDay.asmx";  
     outdata.open ("POST", url, false);
     // build the request header that the Quote of The Day site requires
     outdata.setRequestHeader("Content-Type", "text/xml");  
     outdata.setRequestHeader("SOAPACtion", "\"http://swanandmokashi.com/GetQuote\" ");
``` |
| ```
     // build the message for the QuoteOfTheDay site
     var Data = "<?xml version=\"1.0\" encoding=\"utf-8\"?>" +  
         " <soap:Envelope xmlns:xsi=\"http://www.w3.org/2001/XMLSchema-instance\"
 xmlns:xsd=\"http://www.w3.org/2001/XMLSchema\"
 xmlns:soap=\"http://schemas.xmlsoap.org/soap/envelope/\">" +  
         " <soap:Body> <GetQuote xmlns=\"http://swanandmokashi.com\" />" +  
         " </soap:Body> </soap:Envelope>";  
     // Send the HTTP message
     outdata.send (Data);
     if (outdata.status != 200 && outdata status != 201)  
     {
       print ("ERROR: " + outdata.status + outdata.statusText);
     } else{
       // Create an XML Document for the response  
       var xmlDoc = new XMLDocument() ;  
       // load the responseText into the XMLDocument  
       xmlDoc.loadString(outdata.responseText);  
       print ("root name " + xmlDoc.documentElement.nodeName) ;  
       print (outdata.responseText);
     }
 }
``` |

### void setRequestHeader (String label, String value)

### Description

Adds a label/value pair to the HTTP header to be sent.

### Arguments

- Label: A string containing the header name to set; for example, "depth." This parameter should not contain a colon and should be the actual text of the HTTP header.
- Value: A string containing the value of the header.
- **Returns**: Void.

### Example

| |
|---|
| ```
 scene.Button56.onClick = function ()
 {  
     // make an XMLHttp connection
     var outdata = new XMLHttp;
     // the "http://www.swanandmokashi.com/HomePage/WebServices/QuoteOfTheDay.asmx"  
     // site sends famous quotations as XML messages  
     var url = "http://www.swanandmokashi.com/HomePage/WebServices/QuoteOfTheDay.asmx";
     outdata.open ("POST", url, false);  
     // build the request header that the QuoteOfTheDay site requires  
     outdata.setRequestHeader("Content-Type", "text/xml") ;
     outdata.secRequestHeader("SOAPAction", "\"http://swanandmokashi.com/GetQuote\") ;
     // build the message for the QuoteOfTheDay site
``` |
| ```
v     ar Data = "<?xml version=\"1.0\" encoding=\"utf-8\"?>" +
         " <soap:Envelope xmlns:xsi=\"http://www.w3.org/2001/XMLSchema-instance\"
 xmlns:xsd=\"http://www.w3.org/2001/XMLSchema"
 xmlns:soap=\"http://schemas.xmlsoap.org/soap/envelope/\">" +  
         " <soap:Body> <GetQuote xmlns=\"http://swanandmokashi.com\" />" +  
         " </soap:Body> </soap:Envelope>";
     // Send the HTTP message  
     outdata.send (Data);
     if (outdata.status != 200 && outdata.status != 201)  
     {
       print ("ERROR: " + outdata.status + outdata.statusText);
     } else {
       // Create an XML Document for the response  
       var xmlDoc = new XMLDocument() ;  
       // load the responseText into the XMLDocument
        xmlDOC.loadString(outdata.responseText) ;
       print ("root name " + xmlDoc.documentElement.nodeName) ;  
       print (outdata.responseText);  
     }
 }
``` |

### 7 Container Objects

### 7.1 ElementArea

An element area is a Scene element that contains a single Scene. There are methods that allow the Scene that is contained by an element area to be switched. Since an element area is a Scene element, a Scene can contain any number of element areas. This means the programmer has the ability to define what portion of the screen a Scene consumes. The programmer can dynamically change the functionality of this area simply by changing the element area Scene. This provides the programmer with the ability to create hierarchical, flexible and dynamic designs.

A top-level element area is created by default. A top-level Scene, defined at session launch, is automatically loaded and is contained by the top-level element area. The top-level element area assumes the resolution defined by the session.

### ElementArea Methods

### bool preloadScene (String url)

### Description

This method preloads a Scene in the element area cache.

### Returns Boolean true on success, false on failure.

### Example

| |
|---|
| ```
 scene.Button1.onClick = function ()
 {
     // Preloads Scene Scene2.avpkg into ElementAreal
     if (!scene.ElementAreal.preloadScene("Scene2.avpkg")) {  
       print ("error preloading scene");
     }
 }
``` |

### void previousScene ()

- **Description**: This method navigates to the previous Scene that was loaded in the ElementArea.

### Example

| |
|---|
| ```
 scene.Button1.onClick = function ()
``` |
| ```
 {  
     // Navigates to the previous Scene in ElementAreal
     scene.ElementAreal.previousScene();
 }
``` |

### bool setScene (String url)

### Description

This method replaces the current Scene contained by the element area with the Scene found at the specified location. The Scene is also placed in the element area cache if it is not yet in there.

### Returns Boolean true on success, false on failure.

### Example

| |
|---|
| ```
 scene.Buttonl.onClick = function ()
 {
     // Loads Scene Scene2.avpkg int ElementAreal
     if (!scene.ElementAreal.setScene("Scene2.avpkg")) {
       print ("error loading scene");
     }
 }
``` |

### void nextScene ()

### Description

This method navigates to the next Scene in the ElementArea history. This method only works if previousScene () has been called successfully at least once.

### Example

| |
|---|
| ```
 scene.Buttonl.onClick = function ()
 {
     // Navigates to the next Scene in ElementAreal history
     scene.ElementAreal.nextScene() ;
 }
``` |

### void setChaserElement(String direction, string elementName)

### Description

This method allows script to define what element receives input focus when the user navigates away from the element area. The direction is a string either "up," "down," "left" or "right." The elementName is the name of the element that receives the input focus on the Scene.

### Arguments

- Direction: This is the direction that is navigating away from an Element Area. For example, if input focus is on the element area and the user hits the 'up arrow' key on the remote control, then the direction is up. The four possible directions are "up," "down," "left" and "right."
- elementName: This is the name of the element on the Scene that receives the input focus.
- **Returns**: Void.

### Example

| |
|---|
| ```
 scene.changeFocusButton.onClick = function ()
 {  
     // make the button (upFocusButton) receive focus when the user presses  
     // the up arrow key navigating away from ElementAreal
     scene.ElementAreal.setChaserElement("up", "upFocusButton");
 }
``` |

### String toString()

- **Returns**: Returns the name of the ElementArea as a string. Note also that if an ElementArea object is used with the + operator to concatenate a string, the name of the ElementArea object is still returned.

### Example

| |
|---|
| ```
 scene.onLoad = function ()
 {  
     // Get the name of the ElementArea
     print ("ElementArea [" + scene.ElementAreal.toString() + "]") ;
 }
``` |

### 7.2 Scene Object

The "scene" object holds other objects to be displayed on the subscribers TV or other display device. Scenes can contain buttons, captions, input boxes, list boxes, media players, static images and tickers.

### Scene Attributes

- ***parent***: The containing element area.

### Example

| |
|---|
| ```
 scene.Buttonl.onClick = function ()
 {  
     // Loads Scene "Scene3.avpkg" in place of this Scene
     parent.setScene("Scene3.avpkg");
 }
``` |

### scene A reference to the Scene.

### Example

| |
|---|
| ```
     scene.Button1.onClick = function ()
 {
     // Starts playing MediaPlayer1 on the current Scene  
     scene.MediPlayer1.play ();
 }
``` |

### Scene Events

### void onLoad()

### Description

This event fires when the Scene is displayed.

### Example

| |
|---|
| ```
 scene.onLoad = function ()
 {
     // prints the name of the Scene that just loaded
     print(this.toString()+ " just loaded");
 }
``` |

### void onUnload()

### Description

This event fires when the subscriber is being moved to another Scene.

### Example

| |
|---|
| ```
 scene.onUnload = function ()
 {
     // prints the name of the Scene that just unloaded
     print(this.toString()+ " just unloaded");
 }
``` |

### void onInitialUpdate()

### Description

This event occurs only when the Scene is displayed for the first time. The event occurs only on the first time a Scene is displayed in a session; it allows for a one time initialization of the objects of the Scene.

### Example

| |
|---|
| ```
 scene.onInitialUpdate = function ()
 {
     //prints the name of Scene when the Scene loads for the first time
     print(this.toString() + " onInitialUpdate event" );
 }
``` |

### void onSessionEnd()

### Description

This event occurs for each Scene loaded during a session when the session ends.

### Example

| |
|---|
| ```
 scene.onSessionEnd = function ()
 {
     //prints the name of Scene when the session ends
     print(this.toString() + " onSessionEnd event" );
 }
``` |

### bool onKeyPress(int keyCode)

### Description

If this Scene is in focus and a key on the keyboard is pressed this event occurs. The default event handler updates the chaser position (keyboard focus), if needed, and fires the onClick event if the "OKAY" key was pressed. If a Boolean true is returned, the default handler does not execute.

### Arguments

- keyCode: The key value as an integer for the key that was pressed. For additional information on key values, please see section 0.

### Returns

- True: This is the keyword for the Boolean that indicates that this button handled this event.
- False: This is the keyword for the Boolean that indicates that another object should handle this event.

### Example

| |
|---|
| ```
 scene.onKeyPress = function (key) {
     // prints the key code of the key that was pressed.
     print(this.toString() + " onKeyPress() event key " + key);
 }
``` |

### bool onKeyUp(int keyCode)

### Description

If this Scene is in focus and a key on the keyboard is released, this event occurs.

### Arguments

- keyCode: The key value as an integer for the key that was released. For additional information on key values, please see section 0.
- **Returns**: Void.

### Example

| |
|---|
| ```
 scene.onKeyUp = function (key)
 {
     //prints the key code of the key that was released  
     print(this.toString() + " onKeyUp() event key " + key) ;
 }
``` |

### Scene Methods

### void setFocus(String objectName)

### Description

Sets the focus on the focusable object specified.

### Arguments

- objectName: The name of the object that should have focus.
- **Returns**: Void.

### Example

| |
|---|
| ```
 scene.Buttonl.onClick = function ()
 {
     //Sets focus on Button2
     scene.setFocus("Button2") ;
 }
``` |

### String getCurrentFocus()

### Description

Gets the name of the object that currently has focus.
**Arguments** None.
**Returns** The name of the object that currently has focus.

### Example

| |
|---|
| ```
  scene.onKeyPress = function (key)
 {  
     //Get current focus and print it  
     var CurrentFocus = scene.getCurrentFocus() ;
     print("focus is on " + CurrentFocus) ;
 }
``` |

### void setBackground(String backgroundUr/)

### Description

This command changes the Scene background to the image specified by the backgroundUrl parameter.

### Arguments

- backgroundUrl: A string that is the URL location for the background image. The URL can be relative to the AV Program directory or it can be an http path.
- **Returns**: Void.

### Example

| |
|---|
| ```
 scene.onInitialUpdate = function ()
 {
     // Sets the current background image of the current Scene  
     scene.setBackground("http://myServer/Backgrounds/firstBackground.bmp") ;
 }
``` |

### String getBackgroundUrl()

### Description

Gets the URL for the Scene background image.
- **Arguments**: None.
- **Returns**: The URL for the background image of the Scene. Empty string if background is not an image.

### Example

| |
|---|
| ```
 scene.Buttonl.onClick = function ()
 {
     //Gets the URL for the Scenes background image and prints it.
     var BackgroundUrl = scene.getBackgroundUrl() ;
     print ("Background URL is: " + BackgroundUrl);
 }
``` |

### String toString()

- **Returns**: Returns the name of the Scene as a string. Note also that if a Scene object is used with the + operator to concatenate a string, the name of the Scene object is still returned.

### Example

| |
|---|
| ```
 scene.onLoad = function ()
 {
     // prints the name of the Scene that just loaded
     print(this.toString()+ " just loaded");
 }
``` |

### String getParameter(String parameterName)

### Description

Returns the value from the URL of the Program for parameterName specified.

### Arguments

- paramterName: This specifies an argument contained either in the launch URL of the Scene or in the Package file for the scene.
- **Returns**: The value assigned to the parameterName specified. This return value is encoded to support all computer and network transmission standards. The decodeURIComponent() command should be used on each value returned by getParameter().

### Example

| |
|---|
| ```
 scene.Buttonl.onClick = function ()
 {  
     // Gets an argument called myArg and prints it.
     var arg = scene.getParameter("myArg") ;
     print ("myArg = " + decodeURIComponent(arg));
 }
``` |

### 8 Other Objects

### 8.1 Timers

The timer functionality is available globally and is not a function or property of another object. A developer does not need to create a timer object to use a timer, just write the command setInterval(function, interval) or setTimeout(function, delay). For example, the following code executes the function UpdateTime() every 2 seconds (2000 milliseconds):
setInterval(UpdateTime, 2000);
setInterval() function repeatedly executes Script at a specified interval, while setTimeout() function executes Script only once after a specified timeout interval. Each time setInterval() or setTimeout() is called, an identifier is returned which can be used to stop the timer by calling either clearInterval(identifier) or clearTimeout(identifier).

A developer can use the setInterval() if he wants to check for some kind of data update at specific time intervals. For example, he might want to check for updates to data coming from an RSS feed:
var intervalId = setInterval(CheckRSSFeed, 180000)

So, every 3 minutes the RSS feed is checked until clearInterval(intervalId) is called. With setTimeout(), the function passed-in, executes only one time after the timeout interval expires. setTimeout() can be used if the developer wants to display a message to the subscriber when the subscriber has not performed a specific action within a certain time. For example, if the subscriber needs to enter a password and does so before the Timeout period, then the clearTimeout() stops the timer and the message is never displayed:

```
 var PWId = setTimeout(RequestPassword, 60000);
 while (!(PasswordEntered())) {
         clearTimeout(PWId);
 }
```

### Timer Attributes

None.

### Timer Events

Timer events are not predefined. When the specified time elapses, the function specified by either the setInterval() or the setTimeout()executes.

### Timer Methods

### int setInterval(String func, int interval)

### Description

setInterval() The specified function is executed after the interval specified. setInterval() returns a value that can later be passed to clearInterval() to stop *the func* from being repeatedly executed.

### Arguments

- func: A Script function to be periodically executed. This is the function name, not a string (do not include the parentheses). Upon executing setInterval(MyFunc(), 10000); the MyFunc function executes immediately, but only once. The correct form is:
setInterval(MyFunc, 10000);
A function must have global scope to be referenced by setInterval().
- interval: A positive integer between 1 and 1,073,741,823 that specifies the interval in milliseconds, between invocations of *func.*
- **Returns**: A identifier value that can be passed to clearInterval() to cancel the periodic execution of *func.* The identifier can be any positive number, including zero, up to 4,294,967,295. If the return value is negative 1 (-1), then the setInterval() function failed.

### Example

| |
|---|
| ```
 var intervalId = -1;
 scene.Buttonl.onClick = function ()
 {
     //set function up to be called every second
     intervalId = setInterval(oneSecondFunc, 1000) ;
     print ("interval Id = " + intervalId) ;
 }
 var count=0 ;
 // This is the function that gets called every second
 function oneSecondFunc()
``` |
| ```
 {  
         print(" time = " + count);  
         count++
 }
 scene.Button3.onClick = function ()
 {  
     // This button click clears the Interval if set.  
         if (intervalId >= 0)  
         {  
         clearInterval(intervalId) ;  
         }
 }
``` |

### void clearInterval(int intervalId)

### Description

The clearInterval() command stops the repeated execution of the *function func* that was started by setInterval().

### Arguments

- intervalId: The value returned by the corresponding call to setInterval().
- Returns: Void.

### Example

| |
|---|
| ```
 var intervalId = -1;
 scene.Buttonl.onClick = function ()
{
     //set function up to be called every second
     intervalId = setInterval(oneSecondFunc, 1000) ;
     print ("interval Id = " + intervalId) ;
 }
 var count=0 ;
 // This is the function that gets called every second function oneSecondFunc()
 {  
         print(" time = " + count);  
         count++
 }
 scene.Button3.onClick = function ()
 {  
     // This button click clears the Interval if set.  
         if (intervalId >= 0)  
         {  
         clearInterval(intervalId) ;  
         }
 }
``` |

### int setTimeout(String func, int delay)

### Description

The setTimeout() command causes the specified Script function *func* to be executed after the delay period, given in milliseconds.

setTimeout() returns an identifier value that can later be passed to the clearTimeout() to stop *func* from being executed.

### Arguments

- func: A Script function executed after the delay time. This is the function name not a string. Also do not include the parentheses. Upon executing setTimeout(MyFunc(), 10000); the MyFunc function executes immediately. The correct form would be: setTimeout(MyFunc, 10000); The function must have global scope to be referenced by setTimeout().
- delay: A positive integer between 1 and 1,073,741,823 that specifies the delay in millisecond, before the *func* is executed.
- **Returns**: A timeoutId identifier value that can be passed to the clearTimeout() to cancel the execution of the function *func, that is* provided in the setTimeout(). The Identifier can be any positive number, including zero, up to 4,294,967,295. If the return value is negative 1 (-1), then the setTimeout() function failed.

### Example

| |
|---|
| ```
 var timeOutId = -1 scene.Button1.onClick = function ()
 {
     //Sets up the timeout function "timeoutFunc" to be called after 30 seconds
     timeOutId = setTimeout(timeoutFunc, 30000);  
     print ("30 second timeout started");
 }
 //This is the timeout function
 function timeoutFunc()
 {
     print("The 30 second timeout expired");  
     timeOutId = -1;
 }
 //This clears the timeout timer scene.Button2.onClick = function ()
 {  
     if (timeOutId >= 0)  
     {
     clearTimeout(timeOutId);
     print ("The 30 second timeout has been cleared");  
     timeOutId = -1;
     }  
     else
     {
     print("The 30 second timeout has not been started");
     }
 }
``` |

### void clearTimeout(int timeoutId)

### Description

The clearTimeout() command stops the execution of the function *func* that was specified by the setTimeout().

### Arguments

timeoutId The value returned by the corresponding call to setTimeout().
**Returns** Void.

### Example

| |
|---|
| ```
 var timeOutId = -1 scene.Buttonl.onClick = function ()
 {
     //Sets up the timeout function "timeoutFunc" to be called after 30 seconds
     timeOutId = setTimeout(timeoutFunc, 30000);
     print ("30 second timeout started");
 }
 //This is the timeout function
 function timeoutFunc()
 {  
 print("The 30 second timeout expired");
 timeOutId = -1;
 }
 //This clears the timeout timer scene.Button2.onClick = function ()
 {  
     if (timeOutId >= 0)  
     {  
     clearTimeout(timeOutId) ;  
     print ("The 30 second timeout has been cleared");  
     timeOutId = -1;  
     }  
     else  
     {  
     print("The 30 second timeout has not been started");  
     }
 }
``` |

### 9 Session Object

The session object provides miscellaneous functionality and utility through various objects and methods. The session object is accessed through a global object property named *session.* The session object provides access to the background and transient audio players, the InactivityTimer and various session launch parameters.

### 9.1 Session Object Properties

### AudioPlayer Object

Session Object always creates two instances of AudioPlayer Object and makes them available to the programmers via two session properties:
- ***session:backgroundAudio***: This property provides access to the backgroundAudio AudioPlayer. Audio assets used with this player play at "background" priority.
- ***session:transientAudio***: This property provides access to the transientAudio AudioPlayer. Audio assets used with this player play at "transient" priority.

### AudioPlayer Attributes

- looping: Boolean (true or false) - controls whether or not the audio loops at the end of the stream (default = true).

| |
|---|
| ```
 //This example toggles the looping flag for the AudioPlayer audio
 scene.Buttonl.onClick = function ()
 {  
     if (session.backgroundAudio.looping)
     {  
          session.backgroundAudio.looping = false;
     }
     else
{       
     session.backgroundAudio.looping = true;
     }
 }
``` |

### AudioPlayer Events

### boolean onEndOfMedia()

### Description

This event indicates that the background Audio player has reached the end of what it was playing. Typically this event is used to start a new audio clip after a previous one has finished.
**Arguments** None.

### Returns

- True: This is the keyword for the Boolean that indicates that this button handled this event.
- False: This is the keyword for the Boolean that indicates that another object should handle this event. The default behavior is that the media (audio) that was playing loops (i.e., plays again), unless looping has been disabled, in which case it stops.

### Example

| |
|---|
| ```
 // onEndOfMedia() example
 session.backgroundAudio.onEndOfMedia = function()
 {  
     session.backgroundAudio.play(GetNextAudioUrl());  
     print("backgroundAudio ended");  
     // this routine handled the event return true  
     return true;
 }
``` |

### AudioPlayer Methods

### void play (String Url)

### Description

Load and play the audio media from the location specified by the URL. The URL must point to a single program transport stream (SPTS) or program stream formatted streams. The stream may contain video, but the video gets discarded. The backgroundAudio object is the lowest priority audio object.

### Arguments

- Url: The location to find the audio media to play.

### Example

| |
|---|
| ```
   scene.Buttonl.onClick = function ()
   {
       //Check if background audio is playing
          if (!(session.backgroundAudio.isPlaying()))
          {
           //background audio was not playing, sc lets start it.
                  session.backgroundAudio.play("assets/channel1.ts") ;
      }
   }
``` |

### void stop ()

### Description

Stop playing the audio.

### Example

| |
|---|
| ```
 scene.Buttonl.onClick = function ()
 {  
     //Stop the background audio  
         session.backgroundAudio.stop() ;
 }
``` |

### String getUrl ()

### Description

Returns the URL that is the current background Audio.
- **Returns**: The URL that is currently being played as background Audio.

### Example

| |
|---|
| ```
 scene.Buttonl.onClick = function ()
 {
     //Get the background audio URL and print it.
     var backgroundAudioURL = session.backgroundAudio.getUrl() ;
     print ("Background URL is: " + backgroundAudioURL) ;
 }
``` |

### boolean is Playing ()

### Description

Returns a Boolean that indicates if the background audio currently has audio focus.
- **Returns**: A Boolean string (true or false) indicates if the audio currently has audio focus and is being heard by the subscriber.

### Example.

| |
|---|
| ```
 scene.Button1.onClick = function ()
 {
     //Check if background audio is playing  
     if (!(session.backgroundAudio.isPlaying()))
     {
        //background audio was not playing, so lets start it.  
        session.backgroundAudio.play("assets/channel1.ts") ;  
        }
 }
``` |

### String toString()

- **Returns**: Returns the name of the AudioPlayer as a string. Note also that if an AudioPlayer object is used with the + operator to concatenate a string the name of the AudioPlayer object is still returned.

### Example

| |
|---|
| ```
 scene.onLoad = function ()
 {
     // Get the name of the backgroundAudio
     print ("BackgroundAudio is [" + session.backgroundAudio.toString() + "]") ;
     // Get the name of the transientAudio
     print ("TransientAudio is [" + session.transientAudio.toString() + "]");
 }
``` |

### deviceid

- ***String:deviceid***: A unique identifier for the device that is hosting the session. The device identifier is constructed using the MAC Address of the display device, the timestamp from the first time the display device accessed the AVDN system, and an obfuscation algorithm. This method identifies a display device uniquely, enabling the applications to save personalized information without it being transferred to the next customer if the owner of the display device is changed.

### Example

| |
|---|
| ```
 scene.Buttonl.onClick = function ()
 {
     // gets and prints the device id  
     var Deviceld = session.deviceid;
     print ("Device Id: " + DeviceId) ;
 }
``` |

### devicetype

- ***String:devicetype***: The device type of the hosting client device, for example "Motorola" or "Scientific_Atlanta".

### Example

| |
|---|
| ```
 scene.Buttonl.onClick = function ()
 {
     // gets and prints the device type
     var DeviceType = session.devicetype;  
     print ("Device type: " + DeviceType) ;
 }
``` |

### ExternalScene

A special, pre-allocated Scene is available for controlling external streamers or encoders. It is accessed through the global object property named ExternalScene. The output stream of the external session bypasses Stitcher and is sent to the same target address and port that is used by the initiating AVDN session. The RTSP is used to control the external session.

The bandwidth of the external encoder must not exceed that of the initiating AVDN session bandwidth set by the Launch Method.

### ExternalScene Events

### boolean onLoad()

### Description

This event indicates that the Scene is active.
- **Arguments**: None.
- **Returns**: Return False or nothing to activate the default onLoad handler which, in this case, issues the ExternalScene play method. Return True to deactivate the default handler.

### Example

| |
|---|
| ```
 session.ExternalScene.onLoad = function ()
 {  
     print ("ExternalScene onLoad") ;
 }
``` |

### boolean onUnload()

### Description

This event indicates that the Scene is inactive.
**Arguments** None.
**Returns** Return False or nothing to active the default onUnload handler which, this case, issues the External Scene stop method. Return True to deactivate the default handler.

### Example

| |
|---|
| ```
 session.ExternalScene.onUnload = function ()
 {  
     print ("ExternalScene onUnload") ;
 }
``` |

### boolean onKeyPress(int key)

### Description

Called for each user key down.

### Arguments

- key: keycode value
- **Returns**: No default handler exists.

### Example

| |
|---|
| ```
 session.ExternalScene.onKeyPress = function (Key)
 {
 switch (Key)  
     {
     case 0x10000: // play
          print ("KeyPress play");  
       break;  
     case 0x10001: // pause  
       print ("KeyPress pause");
       break;  
     case 0x10002: // stop  
       print ("KeyPress stop");
       break;
     case 0x10003: // ff
       print ("KeyPress ff") ;
       break;  
     case 0x10004: // rw
       print ("KeyPress rw") ;  
       break;
     default:
       {  
          print ("press");  
          this.setParameter ("KeyEvent: Press\r\nKeyCode: " + Key);
          break;  
       }
 }
``` |

### boolean onKeyUp(int key)

### Description

Called for each user key up.

### Arguments

- key: keycode value
- **Returns**: No default handler exists.

### Example

| |
|---|
| ```
 session.ExternalScene.onKeyUp = function (Key)
 {
  switch (Key)  
     {  
     case 0x10000: // play  
        this.play () ;  
        break;
     case 0x10001: // pause
        this.pause () ;  
        break;  
     case 0x10002: // stop
        this.stop ();  
        break;
     case 0x10003: // ff  
        this.fastForward () ;
        break;  
     case 0x10004: // rw  
        this.rewind () ;  
        break;  
     default:  
       {  
          print ("up");  
          this.setParameter ("KeyEvent: Up\r\nKeyCode: " + Key) ;  
          break;  
     }
 }
``` |

### boolean onResponse(int code, String message)

### Description

This event notifies script of command status. Please note that in case of failure, typically two events are fired: one for failure and one for termination.

### Arguments

- code: 0 = Success, 1 = Failure, 2 = Terminated.
- message: This argument is set to the empty string for the Success and Terminated response codes. Message contains a string in one of the following formats when code is set to Failure:
"RTSP connection failed: %s", url
"RTSP Describe timed out"
"RTSP Describe failure: %d %s", rfc2326 status code, rfc2326 status text
"RTSP Setup timed out"
"RTSP Setup failure: %d %s", rfc2326 status code, rfc2326 status text
"RTSP timeout"
"RTSP response: %d %s", rfc2326 status code, rfc2326 status text
- **Returns**: Return False or nothing to activate the default handler. The default handler issues the ExternalScene stop method if a failure code is encountered and switches to the Scene specified by the returnScene property (previous Scene by default) if the terminated code is encountered. Return True to deactivate the default handler.

### Example

| |
|---|
| ```
 session.ExternalScene.onResponse = function (code, message)
 {  
     switch (Key)
     {
     case 0: // success
        print ("Success");  
        break;
     case 1: // Failure
        print ("Failure message:" + message);  
        break;
     case 2: // terminated
        print ("Terminated");
      break;  
     }
 }
``` |

### ExternalScene Methods

### void start (String url)

### Description

This method opens a connection with the external session server, creates a session, and, depending on the onLoad () event handler, potentially starts session playback.

### Arguments

- url: RTSP url of a streaming server.
- **Returns**: Void

### Example

| |
|---|
| ```
 scene.Buttonl.onClick = function ()
 {
     //Starts the external Scene with video http://myserver/mpeg/video1.mpeg
     session.ExternalScene.start ("rtsp://myserver/mpeg/videol.mpg");
 }
``` |

### void stop()

### Description

This method stops playback, ends the session, closes the connection with the session server and, depending on the onResponse event handler, potentially switches Scenes.
- **Arguments**: None.
- **Returns**: Void.

### Example

| |
|---|
| ```
 scene.Buttonl.onClick = function ()
 {
     //Stops the external Scene  
     session.ExternalScene.stop ();
 }
``` |

### void play ()

### Description

This method starts playback of RTSP stream defined by ExternalScene.start method.
- **Arguments**: None.

### Example:

| |
|---|
| ```
 scene.Buttonl.onClick = function ()
 {
     //Starts playback  
     session.ExternalSCene.play ();
 }
``` |

### void fastForward()

### Description

This method initiates fast playback of RTSP stream defined by ExternalScene.start method (if supported).
- **Arguments**: None.

### Example:

| |
|---|
| ```
 scene.Buttonl.onClick = function ()
 {  
     //Starts fast forward for the external Scene
     session.ExternalScene.fastForward () ;
 }
``` |

### void rewinds)

### Description

This method initiates reverse playback of RTSP stream defined by ExternalScene.start method (if supported).
- **Arguments**: None.

### Example:

| |
|---|
| ```
 scene.Buttonl.onClick = function ()
 {  
     //Starts rewind for the external Scene
     session.ExternalScene.rewind ();
 }
``` |

### avoid pause()

### Description

This method suspends playback of RTSP stream defined by ExternalScene.start method (if supported).
- **Arguments**: None.

### Example:

| |
|---|
| ```
 scene.Buttonl.onClick = function ()
 {  
     //Pauses the external Scene  
     session.ExternalScene.pause () ;
 }
``` |

### void setParameter (String paramString)

### Description

This method issues a RTSP SetParameter command. The body of the command is specified by the paramString argument. May be used to forward the keystrokes to the RTSP server.

### Arguments

- *paramString*: This argument specifies the RTSP SetParameter message body. This could be used, for example, to indicate the type of key event:
"KeyEvent: Up\r\nKeyCode: 104"

### Example:

| |
|---|
| ```
 scene.Buttonl.onClick = function ()
 {
     // Issues a RTSP setParamter Command.
     session.ExternalScene.setParameter ("KeyEvent: Up\r\nKeyCode: 104");
 }
``` |

### void setReturnScene (String SceneUrl)

### Description

Sets the URL of the Scene to return to when the session ends (default is previous Scene).

### Arguments

SceneUrl The url of the Scene to return to.

### Example:

| |
|---|
| ```
 scene.Button1.onClick = function ()
 {  
     // Set the Scene when the external session Ends  
     session.ExternalScene.setReturnScene ("mainScene.avpkg") ;
 }
``` |

### String toString()

### Returns

Returns the name of the ExternalScene as a string. Note also that if an ExternalScene object is used with the + operator to concatenate a string the name of the ExternalScene object is still returned.

### Example

| |
|---|
| ```
 scene.onLoad = function ()
 {  
     // Get the name of the ExternalScene
     print (" external Scene [" + session.ExternalScene.toString() + "]") ;
 }
``` |

### Complete ExteernalScene Example

| |
|---|
| ```
     session.ExternalScene.onKeyPress = function (Key)
 {  
          print ("down");
          this.setParameter ("KeyEvent: Down\r\nKeyCode: " + Key) ;
 }
 scene.Buttonl.onClick = function ()
 {
          var url = decodeURIComponent (session.getAppArg ("AssetUrl")) ;  
          print (url) ;  
          session.ExternalScene.start (url) ;
 }
     session.ExternalScene.onKeyUp = function (Key)
 {
  switch (Key)  
     {
     case 0x10000: // play  
        this.play ();  
        break;
     case 0x10001: // pause
        this.pause ();  
        break;  
     case 0x10002: // stop  
        this.stop ();  
        break;  
 case 0x10003: // ff  
        this.fastForward ();  
        break;   
     case 0x10004: // rw  
        this. rwind ();  
        break;  default:  
       {  
          print ("up");  
          this.setParameter ("KeyEvent: Up\r\nKeyCode: " + Key) ;  
          break;  
}
 }
``` |

### logoutTimeout

- ***int:logoutTimeout***: Read/Write property used to set/get the value of the logoutTimeout InactivityTimer time. Value is in seconds.

### Example

| |
|---|
| ```
 scene.Buttonl.onClick = function ()
 {
     // gets and prints the logout timeout value
     var LogOutTimeOut = session.logoutTimeout;  
     print ("LogOutTimeOut: " + LogOutTimeOut);
     }
``` |

### sessionid

***String:sessionid*** An identifier for the session that is generated by the host system.

### Example

| |
|---|
| ```
 scene.Buttonl.onClick = function ()
 {
     // gets and prints the session id
     var MySessionId = session.sessionid;  
     print ("The session Id: " + MySessionId) ;
 }
``` |

### warningTimeout

- ***int:warningTimeout***: Read/Write property used to set/get the value of the warningTimeout InactivityTimer time. Value is in seconds.

### Example

| |
|---|
| ```
 scene.Buttonl.onClick = function ()
 {  
     // gets and prints the warning timeout value  
     var WarningTimeOut = session.warningTimeout ;  
     print ("WarningTimeOut: " + WarningTimeOut) ;
 }
``` |

### 9.2 Session Object Events

### void onInactivityTimerExpired()

### Description

See Section 2.8 for a description of the subscriber inactivity timer. This event occurs if there has not been subscriber input activity for a time that can be specified by the session.warningTimeout property. This is to allow a developer to provide a warning to a subscriber that the session is going to terminate due to subscriber inactivity. If there is not any subscriber activity for the time specified by the session.logoutTimeout property, then the session is terminated.

### Example

| |
|---|
| ```
 session.onInactivityTimerExpired = function ()
 {  
     print ("onTimerExpired Event") ;
 }
``` |

### void onCacheFilled(int id)

### Description

This event occurs when the cache of an asset (e.g., a video stream) has been filled to the value that was specified by the Program method ***preLoadAsset()**.* The id parameter identifies the asset that was preloaded since the method ***preLoadAsset()*** can be used to load multiple assets.

### Arguments

- id: The id is the identifier used to specify which preLoadAsset() call has filled its cache.
- **Returns**: Void.

### Example

| |
|---|
| ```
 scene.onLoad = function ()
 {
     //preloads two assets one with id 0 and one with id 1
     session.preloadAsset ("assets/Channel1.ts", 2000, 0);
     session.preloadAsset ("assets/Channel2.ts", 2000, 1);
 }
 session.onCacheFilled (Id)
     {
 //Event indicating that cache is ready  switch (Id)
     {
       case 0:  
          print ("Channell.ts ready");  
          break;
       case 1:  
          print ("Channel2.ts ready");  
          break;
     }
 }
``` |

### 9.3 Session Object Methods

### void launchApplication(String appURL)

### Description

Change to a new Program, specified by the appURL. The AVDN system supports three types of sessions; namely, web browser-based, VOD (Video on Demand) and AVDN programming.

### Arguments

- appURL: The URL of the next Programming to load.

### AV Application to AV Application

The appURL is identified as AV Application by http request for *.avml or *.avpkg extension. The appURL can be set to the absolute or relative application path. To obtain absolute path of production URL use getLaunchURL library function.

### Example

| |
|---|
| ```
 scene.Button1.onClick = function ()
 {  
     // the servername, path and programName must be valid for this to work  
     var programName = "http://servername/path/program.avpkg";
     session.launchApplication(programName);
 }
``` |

### AV Application to Web Application

If appURL points to web extension (*.html, *.htm, etc.), a new WebBrowser session is instantiated.

To mask transition visual effects, it is recommended to construct a special transition Scene with a dark or black background and appropriate text, for instance "Loading...."

### Example

| |
|---|
| ```
 scene.Buttonl.onClick = function ()
 {  
     // the servername, path and programName must be valid for this to work
     var appName = "http://servername/path/someapp.html";
     session.launchApplication(appName);
 }
``` |

### AV Application to VOD Application

The appURL should point to existing offering and have the following generic format:

```
          vod://moviename?assetid=<offering id>&playtype=CONTINUE&bookmark=<bookmark
          value in ms>[&<VOD-vendor specific parameter set>]
```

When the VOD streaming is ended (under error condition, by user or normally), the AV application is re-launched and the status parameters from VOD session are appended to AV application URL. This allows an AV application to retrieve the status of VOD session and process it according to application logic

### Programming Context

AV Platform does not retain session context in transitions when the launchApplication method is used. Saving/retrieving the application state or the application context should be performed by application code. WebBrowser-based applications can use standard IE cookies for that purpose, while AVML -based applications can use an XMLHttp object to save/retrieve any application information representing the application state. Both application types can use similar onLoad methods in Web or AVML objects to process the information.

### void tune(Sting tuneType, String tuneId)

### Description

Forces AV session to quit and instructs the display device to tune to a specific channel. For example, if the Mosaic application shows the tiles for broadcast channels, then by selecting some tile and pressing "Ok" button on the remote the user can tune to the channel represented by that tile. Channel numbers, channel descriptors and source identifiers will be specific to each MSO.

### Arguments

- tuneType: Legacy types "BROADCAST_CHANNEL" and "URL" could be used, however all tuning types are converted internally to "URL".
- tuneId: String that identifies the channel or the URL to which the settop should tune.
Examples of supported tuning strings:
"tv://123", where 123 is the channel number "tv://ESPN2", where ESPN2 is the short descriptor for the channel
"si://23057", where 23057 is the source id for the channel "last", forces the session to exit and Settop to do a default tuning to the channel from which that session was launched
Concatenation of tuning strings
Tuning Strings can be concatenated together with a '#' separator to support multiple tuning types from a single command. For example
"tv://123#si://23057" will tune to channel 123 or source id 23057
- **Returns**: Void.

### Example

| |
|---|
| ```
 scene.Button1.onClick = function ()
 {
     //Tunes the display device to the last channel it was on
     session.tune("BROADCAST_CHANNEL". "last");
 }
``` |

### String getParameter (String parameterName)

### Description

Gets the parameters that were passed-in via the package or command line of the initial Scene (AVML file) of the session, which makes it easy to pass and access global parameters over multiple Scenes for the same session. This command is different from the scene.getParameter, which gets the parameters that have been passed-in via the package or the command line for this particular Scene (AVML file).

### Arguments

- paramterName: This specifies an argument contained either in the Programming launch URL or the Package file for the Program.
- **Returns**: The value assigned to the parameterName specified. This return value is encoded to support all computer and network transmission standards. The decodeURIComponentQ command should be used on each value returned by the getParameter().

### Example

| |
|---|
| ```
 scene.Buttonl.onClick = function ()
 {  
     // Gets an argument called myArg and prints it.
     var arg = session.getParameter("myArg") ;  
     print ("myArg = " + decodeURIComponent(arg));
 }
``` |

### void preloadAsset (String assetUrl, int fillTime, int id)

### Description

This method is used to pre-cache the asset before playing it. The onCacheFilled event is called when an asset can be played from cache for fillTime milliseconds. Using this method can help to avoid possible lag incurred by download jitter when playing an asset for the first time.

### Arguments

- assetUrl: The url (string) of the asset to preload.
- fillTime: An integer value equal to the length of stream content, in milliseconds, that must be in the cache before the onCacheFilled event is fired.
- Id: An integer id used to indicate which asset has reached the specified fill level.
- **Returns**: Void.

### Example

| |
|---|
| ```
 scene.onLoad = function ()
 {
     //preloads two assets one with id 0 and one with id 1  
     session.preloadAsset ("assets/Channel1.ts" 2000, 0);  
     session.preloadAsset ("assets/Channel2.ts", 2000, 1) ;
 }
 session.onCacheFilled (Id)
 {  
     //Event indicating that cache is ready  switch (Id)
     {  
       case 0:  
          print ("Channel1.ts ready");  
          break;  
       case 1:  
          print ("Channel2.ts ready");
          break;  
     }
 }
``` |

### String toString()

- **Description**: Returns the name of the session as a string. If a session object is used with the + operator to concatenate a string, the name of the session object is still returned.
- **Arguments**: None.

### Example

| |
|---|
| ```
 scene.onLoad = function ()
 {
     // Get the name of the session  
     print ("session is [" + session.toString() + "]") ;
 }
``` |

### 10 AVML Syntax

The AVML file is an XML-based file format. This section specifies the XML syntax of the AVML file format. One AVML file describes one Scene and the script associated with it.

### 10.1 Root Tag: <AVML>

### Example

| |
|---|
| ```
 <AVML Version="1.1">
     <Size width="640" height="480"/>
     <InitialFocus>Button5</InitialFocus>
     <Background> ... </Background>
     <MediaPlayer name="Tilel"> ... </MediaPlayer>  
     <Caption name="cap"> ... </Caption>
     <Button name="button1"> ... </Button>
     <InputBox name="Edit1"> ... </Input>  
     <StaticImage name="Image1"> ... </StaticImage>  
     <Ticker name="tick"> ... </Ticker>
     <ListBox name="list1"> ... </ListBox>
     <Script>...</Script>
     <Chaser>...</Chaser>
     <Background>...</Background>
 </AVML>
``` |

### Attributes

Version: The AVML file format version.

### 10.2 Size and Position Settings

### <Size>

### Example

| |
|---|
| ```
     <Size width="640" height="480"/>
``` |

The size setting contains the width and height information in pixel.

### <Pos>

### Example

| |
|---|
| ```
     <Pos x="10" y="10"/>
``` |

The position setting contains the x (left) and y (top) information in pixel.

### 10.3 Top level Tags

### <InitialScene>

<InitialScene> specifies the first Scene to be loaded when the Programming starts.

### Example

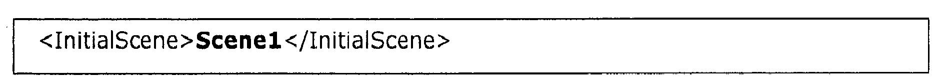

### <Script>

<Script> tag contains the JavaScript-like AV script that gets executed at runtime.

### Example

| |
|---|
| ```
 <Script>
     // just for test  
     Tile1.play() ;
 </Script>
``` |

### <InitialFocus>

<InitialFocus> indicates the first item to receive focus when the Scene is loaded.

### Example

| |
|---|
| ```
 <InitialFocus>Button5</InitialFocus>
``` |

### <Background>

<Background> defines the Background Object for a specific Scene.

### Example

| |
|---|
| ```
 <Background>
     <Url>Demo/mosaic/resources/mosaic/bglst.bmp</Url>  
     <AlphaBlending>229</AlphaBlending>  
     <BackgroundColor>ECE9D8</BackgroundColor>
 </Background>
``` |

### <Caption>

<Caption> tag defines the Caption Object in a specific Scene.

### Example

| |
|---|
| ```
 <Caption name="Caption8">  
   <Text>Text</Text>
   <Pos x="304" y="32"/>
   <Size height="48" width="288"/>  
   <TextAttributes>
     <FontName>Arial</FontName>
     <FontSize>15</FontSize>
     <FontStyle>0</FontStyle>
     <VAlign>0</VAlign>
      <HAlign>0</HAlign>
     <TrimStyle>0</TrimStyle>
     <CharAngle>0</CharAngle>
     <LineAngle>0</LineAngle>
             <Margin>
        <TopEdge>0</TopEdge>
        <LeftEdge>0</LeftEdge>
        <BottomEdge>0</BottomEdge>
        <RightEdge>0</RightEdge>  
     </Margin>  
     <TextColor>000000</TextColor>
   </TextAttributes>
   <BackgroundColor>FFFFFF</BackgroundColor>
   <AlphaBlending>127</AlphaBlending>
 </Caption>
``` |

### <Ticker>

<Ticker> tag defines the Ticker Object in a specific Scene. A ticker is similar to a Caption; however, while the ticker object is for dynamic text, the caption object is for statically bound text.

### Example

| |
|---|
| ```
 <Ticker name="Ticker3">
   <Text>Ticker Text</Text>
   <Pos x="0" y="112"/>  
   <Size height="32" width="336"/>
   <TextAttributes>  
      <FontName>Arial</FontName>  
    <FontSize>15</FontSize>
     <FontStyle>16</FontStyle>
     <VAlign>1</VAlign>  
     <HAlign>2</HAlign>  
     <TrimStyle>0</TrimStyle>
     <CharAngle>0</CharAngle>
     <LineAngle>0</LineAngle>
     <Margin>  
        <TopEdge>0</TopEdge>  
        <LeftEdge>0</LeftEdge>
        <BottomEdge>0</BottomEdge>  
        <RightEdge>0</RightEdge>
     </Margin>  
     <TextColor>000000</TextColor>
   </TextAttributes>
   <BackgroundColor>FFFFFF</BackgroundColor>
   <AlphaBlending>255</AlphaBlending>
 </Ticker>
``` |

### <StaticImage>

<StaticImage> tag defines the Static Image object in a specific Scene.

### Example

| |
|---|
| ```
 <StaticImage name="StaticImage6">
   <Url>Demo/mosaic/resources/logos/channel_1.bmp</Url>
   <Pos x="192" y="0"/>
   <Size height="112" width="112"/>  
   <AlphaBlending>127</AlphaBlending>  
   <Chaser>  
     <Focusable>1</Focusable>
     <Up>None</Up>  
     <Down>ElementArea9</Down>  
     <Left>MediaPlayer5</Left>  
     <Right>ListBox7</Right>
   </Chaser>
 </StaticImage>
``` |

### <Mediaplayer>

<Mediaplayer> tag defines a media player to play video clips.

### Example

| |
|---|
| ```
 <MediaPlayer name="MediaPlayer5">
   <Pos x="80" y="0"/>
   <Size height="112" width="112"/>
   <Url>Demo/mosaic/assets/ad.mpg</Url>
   <AlphaBlending>255</AlphaBlending>
   <BackgroundColor>ECE9D8</BackgroundColor>
   <Chaser>  
     <Focusable>1</Focusable>  
     <Up>None</Up>
     <Down>ElementArea9</Down>  
     <Left>Buttonl</Left>  
     <Right>StaticImage6</Right>
   </Chaser>
 </MediaPlayer>
``` |

<Focusable> defines if a UI object can have focus set or not, while <ChaserUp>/<ChaserDown>/<ChaserLeft>/<ChaserRight> defines when an arrow key is pressed and the next UI object to have focus set (i.e., chaser).

### <Button>

<Button> tag defines a button control. The button can be either text-based or image-based. If no URL is given, the BackgroundColor color is painted on the button.

### Example

| |
|---|
| ```
 <Button name="Button1">
   <InitialState>Default</InitialState>  
   <Pos x="0" y="0"/>  
   <Size height="32" width="80"/>  
   <Text>Button1</Text>  
   <ButtonState type="Clicked">  
     <TextAttributes>  
       <FontName>Arial</FontName>  
       <FontSize>15</FontSize>  
       <TextColor>C0C0C0</TextColor>  
       <FontStyle>16</FontStyle>
``` |
| ```
     <VAlign>1</VAlign>  
     <HAlign>1</HAlign>  
     <TrimStyle>0</TrimStyle>
     <CharAngle>0</CharAngle>  
     <LineAngle>0</LineAngle>  
     <Margin>  
       <TopEdge>0</TopEdge>  
       <LeftEdge>0</LeftEdge>  
       <BottomEdge>0</BottomEdge>  
       <RightEdge>0</RightEdge>
     </Margin>
     </TextAttributes>
     BackgroundColor>000000</BackgroundColor>
   </ButtonState>
   <ButtonState type="Selected">
     <TextAttributes>  
<FontName>Arial</FontName>
       <FontSize>15</FontSize>
       <TextColor>C0C0C0</TextColor>
       <FontStyle>16</FontStyle>
       <VAlign>1</VAlign>
       <HAlign>1</HAlign>
       <TrimStyle>0</TrimStyle>  
       <CharAngle>0</CharAngle>
       <LineAngle>0</LineAngle>
       <Margin>
         <TopEdge>0</TopEdge>
         <LeftEdge>0</LeftEdge>
         <BottomEdge>0</BottomEdge>
         <RightEdge>0</RightEdge>  
       </Margin>  
     </TextAttributes>
     <BackgroundColor>000000</BackgroundColor>
   </ButtonState>
   <ButtonState type="Focused">
     <TextAttributes>  
       <FontName>Arial</FontName>
       <FontSize>15</FontSize>
       <TextColor>C0C0C0</TextColor>  
       <FontStyle>16</FontStyle>
       <VAlign>1</VAlign>
``` |
| ```
       <HAlign>1</HAlign>
       <TrimStyle>0</TrimStyle>  
       <CharAngle>0</CharAngle>  
       <LineAngle>0</LineAngle>  
       <Margin>  
         <TopEdge>0</TopEdge>  
         <LeftEdge>0</LeftEdge>  
         <BottomEdge>0</BottomEdge>  
         <RightEdge>0</RightEdge>  
       </Margin>  
     </TextAttributes>  
     <BackgroundColor>000000</BackgroundColor>
   </ButtonState>
   <ButtonState type="Default">
     <TextAttributes>  
       <FontName>Arial</FontName>  
       <FontSize>15</FontSize>  
       <TextColor>000000</TextColor>  
       <FontStyle>16</FontStyle>
       <VAlign>1</VAlign>  
       <HAlign>1</HAlign>  
       <TrimStyle>0</TrimStyle>
       <CharAngle>0</CharAngle>  
       <LineAngle>0</LineAngle>  
       <Margin>  
         <TopEdge>0</TopEdge>
         <LeftEdge>0</LeftEdge>
         <BottomEdge>0</BottomEdge>  
         <RightEdge>0</RightEdge>  
       </Margin>  
     </TextAttributes>
     <BackgroundColor>C0C0C0</BackgroundColor>
   </ButtonState>
   <ButtonState type="Disabled">
     <TextAttributes>  
       <FontName>Arial</FontName>
       <FontSize>15</FontSize>  
       <TextColor>C0C0C0</TextColor>  
       <FontStyle>16</FontStyle>  
       <VAlign>1</VAlign>
       <HAlign>1</HAlign>
       <TrimStyle>0</TrimStyle>
``` |
| ```
     <CharAngle>0</CharAngle>
     <LineAngle>0</LineAngle>
     <Margin>  
       <TopEdge>0</TopEdge>  
       <LeftEdge>0</LeftEdge>
       <BottomEdge>0</BottomEdge>  
       <RightEdge>0</RightEdge>  
     </Margin>
   </TextAttributes>
   <BackgroundColor>000000</BackgroundColor>
   </ButtonState>
   <AlphaBlending>255</AlphaBlending>
   <Chaser>  
     <Focusable>1</Focusable>
     <Up>None</Up>  
     <Down>ElementArea9</Down>  
     <Left>None</Left>  
     <Right>MediaPlayer5</Right>
   </Chaser>
 </Button>
``` |

### <InputBox>

<InputBox> tag defines the Input Text Edit Object in a specific Scene.

### Example

| |
|---|
| ```
 <InputBox name="InputBox10">
   <Text>TextInput</Text>  
   <Pos x="304" y="80"/>  
   <Size height="32" width="192"/>
   <TextAttributes>
     <FontName>Arial</FontName>
     <FontSize>15</FontSize>
     <FontStyle>16</FontStyle>  
     <VAlign>0</VAlign>  
     <HAlign>0</HAlign>  
     <TrimStyle>0</TrimStyle>  
     <CharAngle>0</CharAngle>  
     <LineAngle>0</LineAngle>  
     <Margin>  
       <TopEdge>0</TopEdge>  
       <LeftEdge>0</LeftEdge>
``` |
| ```
       <BottomEdge>0</BottomEdge>
       <RightEdge>0</RightEdge>  
     </Margin>
     <TextColor>000000</TextColor>
   </TextAttributes>
   <BackgroundColor>FEFEFE</BackgroundColor>
   <AlphaBlending>255</AlphaBlending>
   <Chaser>  
     <Focusable>1</Focusable>  
     <Up>ListBox7</Up>
     <Down>ElementArea9</Down>
     <Left>StaticImage6</Left>
     <Right>None</Right>
   </Chaser>
 </InputBox>
``` |

### <ElementArea>

<ElementArea> tag defines a place holder where Scenes can be inserted on a Scene.

### Example

| |
|---|
| ```
 <ElementArea name="ElementArea9">
   <Pos x="16" y="160"/>
   <Size height="288" width="288"/>
   <Chaser>  
     <Focusable>1</Focusable>
     <Up>MediaPlayer5</Up>  
     <Down>None</Down>  
     <Left>None</Left>
     <Right>None</Right>
   </Chaser>
 </ElementArea>
``` |

### <ListBox>

<ListBox> tag defines the ListBox Object in a specific Scene. A ListBox object contains a number of list items. If a URL is not given for a ListBoxItem state, the BackgroundColor for that state is displayed. A typical ListBox UI Object is specified as shown here:

### Example

| |
|---|
| ```
 <ListBox name="ListBox7">
 <Pos x="304" y="0"/>
 <Size height="32" width="336"/>
 <VisibleItemNum>3</VisibleItemNum>
 <AlphaBlending>127</AlphaBlending>
 <Horizontal>1</Horizontal>
 <ButtonState type="Clicked">  
   <TextAttributes>  
     <FontName>Arial</FontName>
     <FontSize>15</FontSize>  
     <TextColor>C0C0C0</TextColor>
     <FontStyle>16</FontStyle>
     <VAlign>1</VAlign>  
     <HAlign>1</HAlign>
     <TrimStyle>0</TrimStyle>
     <CharAngle>0</CharAngle>  
     <LineAngle>0</LineAngle>  
     <Margin>
       <TopEdge>0</TopEdge>
       <LeftEdge>0</LeftEdge>  
       <BottomEdge>0</BottomEdge>  
       <RightEdge>0</RightEdge>  
     </Margin>
   </TextAttributes>
   <BackgroundColor>000000</BackgroundColor>
 </ButtonState>
 <ButtonState type="Selected">
   <TextAttributes>  
     <FontName>Arial</FontName>
     <FontSize>15</FontSize>  
     <TextColor>C0C0C0</TextColor>  
     <FontStyle>16</FontStyle>  
     <VAlign>1</VAlign>  
     <HAlign>1</HAlign>  
     <TrimStyle>0</TrimStyle>  
     <CharAngle>0</CharAngle>  
     <LineAngle>0</LineAngle>  
     <Margin>  
        <TopEdge>0</TopEdge>
       <LeftEdge>0</LeftEdge>  
       <BottomEdge>0</BottomEdge>  
       <RightEdge>0</RightEdge>
     </Margin>
``` |
| ```
   </TextAttributes>  
   <BackgroundColor>000000</BackgroundColor>
 </ButtonState>  
 <ButtonState type="Focused">
   <TextAttributes>  
     <FontName>Arial</FontName>  
     <FontSize>15</FontSize>  
     <TextColor>C0C0C0</TextColor>
     <FontStyle>16</FontStyle>  
     <VAlign>1</VAlign>  
     <HAlign>1</HAlign>  
     <TrimStyle>0</TrimStyle>  
     <CharAngle>0</CharAngle>  
     <LineAngle>0</LineAngle>  
     <Margin>  
       <TopEdge>0</TopEdge>  
       <LeftEdge>0</LeftEdge>
       <BottomEdge>0</BottomEdge>
       <RightEdge>0</RightEdge>  
     </Margin>
   </TextAttributes>
   <BackgroundColor>000000</BackgroundColor>
 </ButtonState>
 <ButtonState type="Default">
   <TextAttributes>  
     <FontName>Arial</FontName>
     <FontSize>15</FontSize>  
     <TextColor>000000</TextColor>  
     <FontStyle>16</FontStyle>  
     <VAlign>1</VAlign>  
     <HAlign>1</HAlign>  
     <TrimStyle>0</TrimStyle>
     <CharAngle>0</CharAngle>  
     <LineAngle>0</LineAngle>
     <Margin>  
       <TopEdge>0</TopEdge>  
       <LeftEdge>0</LeftEdge>  
       <BottomEdge>0</BottomEdge>  
       <RightEdge>0</RightEdge>  
     </Margin>
   </TextAttributes>
   <BackgroundColor>C0C0C0</BackgroundColor>
``` |
| ```
 </ButtonState>
 <ButtonState type="Disabled">  
   <TextAttributes>  
     <FontName>Arial</FontName>
     <FontSize>15</FontSize>
     <TextColor>C0C0C0</TextColor>  
     <FontStyle>16</FontStyle>  
     <VAlign>1</VAlign>  
     <HAlign>1</HAlign>  
     <TrimStyle>0</TrimStyle>  
     <CharAngle>0</CharAngle>  
     <LineAngle>0</LineAngle>  
     <Margin>  
       <TopEdge>0</TopEdge>  
       <LeftEdge>0</LeftEdge>  
       <BottomEdge>0</BottomEdge>  
       <RightEdge>0</RightEdge>  
     </Margin>  
   </TextAttributes>  
   <BackgroundColor>000000</BackgroundColor>
 </ButtonState>
 <Chaser>
   <Focusable>1</Focusable>  
   <Up>None</Up>  
   <Down>InputBox10</Down>  
   <Left>StaticImage6</Left>  
   <Right>None</Right>
 </Chaser>
   <ListItem>
   <ButtonState type="Clicked"/>  
   <ButtonState type="Selected"/>
   <ButtonState type="Focused"/>  
   <ButtonState type="Default"/>  
   <ButtonState type="Disabled"/>
   <InitialState>Default</InitialState>
   <Text>Button0</Text>
 </ListItem> <ListItem>  
   <ButtonState type="Clicked"/>  
   <ButtonState type="Selected"/>  
   <ButtonState type="Focused"/>  
   <buttonState type="Default"/>
``` |
| ```
     <ButtonState type="Disabled"/>
     <InitialState>Default</InitialState>  
     <Text>Button1</Text>
   </ListItem>
   <ListItem>
     <ButtonState type="Clicked"/>  
     <ButtonState type="Selected"/>
     <ButtonState type="Focused"/>  
     <ButtonState type="Default"/>  
     <ButtonState type="Disabled"/>  
     <InitialState>Default</InitialState>  
     <Text>Button2</Text>
   </ListItem>
 </ListBox>
``` |

### 10.4 Sample AVML file

A sample XML format AVML file is shown here in this next example:

### Example

| |
|---|
| ```
 <?xml version="1.0" encoding="UTF-8" standalone="no" ?>
 <AVML version="1.1">
   <InitialFocus>None</InitialFocus>
   <Size height="480" width="640"/>
   Chaser>  
     <Focusable>1</Focusable>
     <Up>Buttonl</Up>  
     <Down>ListBox7</Down>  
     <Left>MediaPlayer5</Left>  
     <Right>MediaPlayer5</Right>
   </Chaser>  
   <Background>  
     <Url>Demo/mosaic/resources/mosaic/bglst.bmp</Url>
     <AlphaBlending>229</AlphaBlending>  
     <BackgroundColor>ECE9D8</BackgroundColor>
   </Background>
   <Button name="Buttonl">
     <InitialState>Default</InitialState>
     <Pos x="0" y="0"/>  
     <Size height="32" width="80"/>
``` |
| ```
 <Text>Buttonl</Text>
 <ButtonState type="Clicked">
  <TextAttributes>  
     <FontName>Arial</FontName>
     <FontSize>15</FontSize>  
     <TextColor>C0C0C0</TextColor>  
     <FontStyle>16</FontStyle>  
     <VAlign>1</VAlign>  
     <HAlign>1</HAlign>  
     <TrimStyle>0</TrimStyle>  
     <CharAngle>0</CharAngle>  
     <LineAngle>0</LineAngle>
     <Margin>  
       <TopEdge>0</TopEdge>  
        <LeftEdge>0</LeftEdge>  
        <BottomEdge>0</BottomEdge>  
       <RightEdge>0</RightEdge>  
     </Margin>  
   </TextAttributes>
   <BackgroundColor>000000</BackgroundColor>
 </ButtonState>
 <ButtonState type="Selected">  
    <TextAttributes>  
     <FontName>Arial</FontName>
      <FontSize>15</FontSize>  
     <TextColor>C0C0C0</TextColor>  
     <FontStyle>16</FontStyle>  
     <VAlign>1</VAlign>  
     <HAlign>1</HAlign>  
     <TrimStyle>0</TrimStyle>  
     <CharAngle>0</CharAngle>  
     <LineAngle>0</LineAngle>  
     <Margin>  
       <TopEdge>0</TopEdge>  
       <LeftEdge>0</LeftEdge>  
       <BottomEdge>0</BottomEdge>  
       <RightEdge>0</RightEdge>  
     </Margin>
    </TextAttributes>  
    <BackgroundColor>000000</BackgroundColor>
 </ButtonState>
 <ButtonState type="Focused">
``` |
| ```
   <TextAttributes>
     <FontName>Arial</FontName>
     <FontSize>15</FontSize>
    <TextColor>C0C0C0</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   </TextAttributes>
   <BackgroundColor>000000</BackgroundColor>
 </ButtonState>
 <ButtonState type="Default">
   <TextAttributes>
     <FontName>Arial</FontName>
     <FontSize>15</FontSize>
     <TextColor>000000</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
       </Margin>
       </TextAttributes>
   <BackgroundColor>C0C0C0</BackgroundColor>
 </ButtonState>
 <ButtonState type="Disabled">
   <TextAttributes>
     <FontName>Arial</FontName>
``` |
| ```
    <FontSize>15</FontSize>
     <TextColor>C0C0C0</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   </TextAttributes>
   <BackgroundColor>000000</BackgroundColor>
 </ButtonState>
 <AlphaBlending>255</AlphaBlending>
 <Chaser>
     <Focusable>1</Focusable>
     <Up>None</Up>
     <Down>ElementArea9</Down>
     <Left>None</Left>
     <Right>MediaPlayer5</Right>
   </Chaser>
 </Button>
 <Ticker name="Ticker3">
   <Text>Ticker Text</Text>
   <Pos x="0" y="112"/>
   <Size height="32" width="336"/>
   <TextAttributes>
     <FontName>Arial</FontName>
     <FontSize>15</FontSize>
     <FontStyle>16</FontStyle>
     <VAlign>1</VAlign>
     <HAlign>2</HAlign>
     <TrimStyle>0</TrimStyle>
     <CharAngle>0</CharAngle>
     <LineAngle>0</LineAngle>
     <Margin>
       <TopEdge>0</TopEdge>
``` |
| ```
       <LeftEdge>0</LeftEdge>
       <BottomEdge>0</BottomEdge>
       <RightEdge>0</RightEdge>
     </Margin>
     <TextColor>000000</TextColor>
   </TextAttributes>
   <BackgroundColor>FFFFFF</BackgroundColor>
   <AlphaBlending>255</AlphaBlending>
 </Ticker>
 <MediaPlayer name="MediaPlayer5">
   <Pos x="80" y="0"/> <Size height="112" width="112"/>
   <Url>Demo/mosaic/assets/ad.mpg</Url>
   <AlphaBlending>255</AlphaBlending>
   <BackgroundColor>ECE9D8</BackgroundColor>
   <Chaser>
     <Focusable>1</Focusable>
     <Up>None</Up>
     <Down>ElementArea9</Down>
     <Left>Button1</Left>
     <Right>StaticImage6</Right>
   </Chaser>
 </MediaPlayer>
 <StaticImage name="StaticImage6">
   <Url>Demo/mosaic/resources/logos/channel_1.bmp</Url>
   <Pos x="192" y="0"/>
   <Size height="112" width="112"/>
    <AlphaBlending>127</AlphaBlending>
   <Chaser>
     <Focusable>1</Focusable>
     <Up>None</Up>
     <Down>ElementArea9</Down>
     <Left>MediaPlayer5</Left>
     <Right>ListBox7</Right>
   </Chaser>
 </StaticImage>
 <ListBox name="ListBox7">
   <Pos x="304" y="0"/>
   <Size height="32" width="336"/>
   <VisibleItemNum>3</VisibleItemNum>
   <AlphaBlending>127</AlphaBlending>
``` |
| ```
 <Horizontal>1</Horizontal>
 <ButtonState type="Clicked">
   <TextAttributes>
     <FontName>Arial</FontName>
     <FontSize>15</FontSize>
     <TextColor>C0C0C0</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   </TextAttributes><BackgroundColor>000000</BackgroundColor>
 </ButtonState>
 <ButtonState type="Selected">
   <TextAttributes>
     <FontName>Arial</FontName>
     <FontSize>15</FontSize>
     <TextColor>C0C0C0</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   </TextAttributes>
   <BackgroundColor>000000</BackgroundColor>
 </ButtonState>
 <ButtonState type="Focused">
``` |
| ```
   <TextAttributes>
     <FontName>Arial</FontName>
     <FontSize>15</FontSize>
     <TextColor>C0C0C0</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   </TextAttributes>
   <BackgroundColor>000000</BackgroundColor>
 </ButtonState>
 <ButtonState type="Default">
   <TextAttributes>
     <FontName>Arial</FontName>
     <FontSize>15</FontSize>
     <TextColor>000000</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   </TextAttributes>
   <BackgroundColor>C0C0C0</BackgroundColor>
 </ButtonState>
 <ButtonState type="Disabled">
   <TextAttributes>
     <FontName>Arial</FontName>
``` |
| ```
     <FontSize>15</FontSize>
     <TextColor>C0C0C0</TextColor>
     <FontStyle>16</FontStyle>
     <VAlign>1</VAlign>
     <HAlign>1</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
    </TextAttributes>
    <BackgroundColor>000000</BackgroundColor>
   </ButtonState>
   <Chaser>
     <Focusable>1</Focusable>
     <Up>None</Up>
     <Down>InputBox10</Down>
     <Left>StaticImage6</Left>
     <Right>None</Right>
   </Chaser>
   <ListItem>
     <ButtonState type="Clicked"/>
     <ButtonState type="Selected"/>
     <ButtonState type="Focused"/>
     <ButtonState type="Default"/>
     <ButtonState type="Disabled"/>
     <InitialState>Default</InitialState>
     <Text>Button0</Text>
   </ListItem>
   <ListItem>
     <ButtonState type="Clicked"/>
     <ButtonState type="Selected"/>
     <ButtonState type="Focused"/>
     <ButtonState type="Default"/>
     <ButtonState type="Disabled"/>
     <InitialState>Default</InitialState>
     <Text>Button1</Text>
   </ListItem>
``` |
| ```
   <ListItem>
     <ButtonState type="Clicked"/>
     <ButtonState type="Selected"/>
     <ButtonState type="Focused"/>
    <ButtonState type="Default"/>
     <ButtonState type="Disabled"/>
     <InitialState>Default</InitialState>
     <Text>Button2</Text>
   </ListItem>
 </ListBox>
 <Caption name="Caption8">
   <Text>Text</Text>
   <Pos x="304" y="32"/>
   <Size height="48" width="288"/>
   <TextAttributes>
     <FontName>Arial</FontName>
     <FontSize>15</FontSize>
     <FontStyle>0</FontStyle>
     <VAlign>0</VAlign>
     <HAlign>0</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
   <TextColor>000000</TextColor>
   </TextAttributes>
   <BackgroundColor>FFFFFF</BackgroundColor>
   <AlphaBlending>127</AlphaBlending>
 </Caption>
       <ElementArea name="ElementArea9">
   <Pos x="16" y="160"/>
   <Size height="288" width="288"/>
   <Chaser>
     <Focusable>1</Focusable>
     <Up>MediaPlayer5</Up>
     <Down>None</Down>
``` |
| ```
     <Left>None</Left>
     <Right>None</Right>
   </Chaser>
 </ElementArea>
 <InputBox name="InputBox10">
   <Text>TextInput</Text>
   <Pos x="304" y="80"/>
   <Size height="32" width="192"/>
   <TextAttributes>
     <FontName>Arial</FontName>
     <FontSize>15</FontSize>
     <FontStyle>16</FontStyle>
     <VAlign>0</VAlign>
     <HAlign>0</HAlign>
     <TrimStyle>0</TrimStyle>
     <CharAngle>0</CharAngle>
     <LineAngle>0</LineAngle>
     <Margin>
       <TopEdge>0</TopEdge>
       <LeftEdge>0</LeftEdge>
       <BottomEdge>0</BottomEdge>
       <RightEdge>0</RightEdge>
     </Margin>
     <TextColor>000000</TextColor>
   </TextAttributes>
   <BackgroundColor>FEFEFE</BackgroundColor>
   <AlphaBlending>255</AlphaBlending>
   <Chaser>
     <Focusable>1</Focusable>
     <Up>ListBox7</Up>
     <Down>ElementArea9</Down>
     <Left>StaticImage6</Left>
     <Right>None</Right>
   </Chaser>
   </InputBox>
   <Script>
     < ! [CDATA[
 scene.Buttonl.onClick = function ()
 {
 }
``` |
| ```
 scene.Buttonl.onFocus = function (previous)
 {
 }]]>
   </Script>
 </AVML>
``` |

### 11 Appendix A.1 Caption Clock format

- **%a**: Abbreviated weekday name
- **%A**: Full weekday name
- **%b**: Abbreviated month name
- **%B**: Full month name
- **%c**: Date and time representation appropriate for locale
- **%d**: Day of month as decimal number (01 - 31)
- **%H**: Hour in 24-hour format (00 - 23)
- **%I**: Hour in 12-hour format (01 - 12)
- **%j**: Day of year as decimal number (001 - 366)
- **%m**: Month as decimal number (01 - 12)
- **%M**: Minute as decimal number (00 - 59)
- **%p**: Current locale's A.M./P.M. indicator for 12-hour clock
- **%S**: Second as decimal number (00 - 59)
- **%U**: Week of year as decimal number, with Sunday as first day of week (00 - 53)
- **%w**: Weekday as decimal number (0 - 6; Sunday is 0)
- **%W**: Week of year as decimal number, with Monday as first day of week (00 - 53)
- **%x**: Date representation for current locale
- %**X**: Time representation for current locale
- **%y**: Year without century, as decimal number (00 - 99)
- **%Y**: Year with century, as decimal number
- %**z**, **%Z**: Either the time-zone name or time zone abbreviation, depending on registry settings; no characters if time zone is unknown
- **%%**: Percent sign

### 12 Appendix A.2 XML HTTP Status List

**XMLHttp Status List**

| **Status** | **Status Number** | **Description** |
|---|---|---|
| HTTP_STATUS_CONTINUE | 100 | The request can be continued. |
| HTTP_STATUS_SWITCH_PROTOCOLS | 101 | The server has switched protocols in an upgrade header. |
| HTTP_STATUS_OK | 200 | The request completed successfully. |
| HTTP_STATUS_CREATED | 201 | The request has been fulfilled and resulted in the creation of a new resource. |
| HTTP_STATUS_ACCEPTED | 202 | The request has been accepted for processing, but the processing has not been completed. |
| HTTP_STATUS_PARTIAL | 203 | The returned meta information in the entity-header is not the definitive set available from the origin server. |
| HTTP_STATUS_NO_CONTENT | 204 | The server has fulfilled the request, but there is no new information to send back. |
| HTTP_STATUS_RESET_CONTENT | 205 | The request has been completed, and the client program should reset the document view that caused the request to be sent so that the user can easily initiate another input action. |
| HTTP_STATUS_PARTIAL_CONTENT | 206 | The server has fulfilled the partial GET request for the resource. |
| HTTP_STATUS_AMBIGUOUS | 300 | The provided information was insufficient to resolve the current HTTP status. |
| HTTP_STATUS_MOVED | 301 | The requested resource has been assigned to a new permanent URI (Uniform Resource Identifier), and any future references to this resource |
| | should | should be done using one of the returned URIs. |
| HTTP_STATUS_REDIRECT | 302 | The requested resource resides temporarily under a different URI. |
| HTTP_STATUS_REDIRECT_METHOD | 303 | The response to the request can be found under a different URI and should be retrieved using a GET HTTP verb on that resource. |
| HTTP_STATUS_NOT_MODIFIED | 304 | The requested resource has not been modified. |
| HTTP_STATUS_USE_PROXY | 305 | The requested resource must be accessed through the proxy given by the location field. |
| HTTP_STATUS_REDIRECT_KEEP_VERB | 307 | The redirected request keeps the same HTTP verb. HTTP/1.1 behavior. |
| HTTP_STATUS_BAD_REQUEST | 400 | The request could not be processed by the server due to invalid syntax. |
| HTTP_STATUS_DENIED | 401 | The requested resource requires user authentication. |
| HTTP_STATUS_PAYMENT_REQ | 402 | Not currently implemented in the HTTP protocol. |
| HTTP_STATUS_FORBIDDEN | 403 | The server recognized the request, but cannot fulfill it. |
| HTTP_STATUS_NOT_FOUND | 404 | The server has not found anything matching the requested URI (Uniform Resource Identifier). |
| HTTP_STATUS_BAD_METHOD | 405 | The HTTP verb used is not allowed. |
| HTTP_STATUS_NONE_ACCEPTABLE | 406 | No responses acceptable to the client were found. |
| HTTP_STATUS_PROXY_AUTH_REQ | 407 | Proxy authentication required. |
| HTTP_STATUS_REQUEST_TIMEOUT | 408 | The server timed out waiting for the request. |
| HTTP_STATUS_CONFLICT | 409 | The request could not be completed due to a conflict with the current state of the resource. The user should resubmit the request with more information. |
| HTTP_STATUS_GONE | 410 | The requested resource is no longer available at the server, and no forwarding address is known. |
| HTTP_STATUS_LENGTH_REQUIRED | 411 | The server cannot accept the request without a defined content length. |
| HTTP_STATUS_PRECOND_FAILED | 412 | The precondition given in one or more of the request header fields evaluated to false when it was tested on the server. |
| HTTP_STATUS_REQUEST_TOO_LARGE | 413 | The server cannot process a request |
| | | because the request entity is larger than the server is capable to process. |
| HTTP_STATUS_URI_TOO_LONG | 414 | The server cannot service the request because the request URI is longer than the server can interpret. |
| HTTP_STATUS_UNSUPPORTED_MEDIA | 415 | The server cannot service the request because the entity of the request is in a format not supported by the requested resource for the requested method. |
| HTTP_STATUS_RETRY_WITH | 449 | The request should be retried after performing the appropriate action. |
| HTTP_STATUS_SERVER_ERROR | 500 | The server encountered an unexpected condition that prevented it from fulfilling the request. |
| HTTP_STATUS_NOT_SUPPORTED | 501 | The server does not support the functionality required to fulfill the request. |
| HTTP_STATUS_BAD_GATEWAY | 502 | The server, while acting as a gateway or proxy, received an invalid response from the upstream server it accessed in attempting to fulfill the request. |
| HTTP_STATUS_SERVICE_UNAVAIL | 503 | The service is temporarily overloaded. |
| HTTP_STATUS_GATEWAY_TIMEOUT | 504 | The request was timed out waiting for a gateway. |
| HTTP_STATUS_VERSION_NOT_SUP | 505 | The server does not support the HTTP protocol version that was used in the request message. |

### It follows a list of further embodiments of the invention:

Embodiment 1. A tool for creating interactive MPEG content, the tool comprising:
   an editor having a scene window allowing a user to create a scene based upon placement of MPEG objects within the scene window;
   an object tool bar allowing a user to add an MPEG object having at least one associated MPEG element and a corresponding method to the scene; and
   a format processor for processing the scene into a format including display position information of each MPEG object so as to form a complete MPEG video frame.
Embodiment 2. The tool according to the features of embodiment 1 wherein when an MPEG object is placed within the scene window, the editor snaps the resource to an MPEG macroblock boundary.
Embodiment 3. The tool according to the features of embodiment 1, wherein when an MPEG object is added properties associated with the MPEG object are displayed.
Embodiment 4. The tool according to the features of embodiment 3, wherein the selected properties are user modifiable.
Embodiment 5. The tool according to the features of embodiment 4, wherein a user can create a user definable script if an object has a plurality of states.
Embodiment 6. The tool according to the features of embodiment 5, wherein different MPEG video elements can be assigned to each state.
Embodiment 7. The tool according to the features of embodiment 5, wherein different MPEG frames can be assigned to each state.
Embodiment 8. The tool according to the features of embodiment 7 wherein the MPEG object represents a button.
Embodiment 9. The tool according to the features of embodiment 1, wherein after a scene is defined, the editor creates an XML-based output file.
Embodiment 10. A tool for creating interactive MPEG content, the tool comprising:
   a stitcher for receiving MPEG elements from multiple MPEG objects, arranging the MPEG elements in scan order according to content layout information to form an MPEG video frame, and
   a multiplexor for outputting the MPEG video frame.
Embodiment 11. The tool according to the features of embodiment 10 further comprising:
   a processor for maintaining the content layout information and based upon a received signal over a network from a client device obtaining a new MPEG element causing the stitcher to insert the MPEG element into a subsequent MPEG video frame.
Embodiment 12. A method for producing interactive MPEG content for display on a client device, the method comprising:
   accessing one or more MPEG objects wherein an MPEG object has associated visual
   MPEG content and at least one associated method;
   implementing the method associated with the MPEG object producing an output;
   in response to the output, stitching the visual MPEG content with other MPEG content to form a sequence of video frames.
Embodiment 13. The method according to the features of embodiment 12 wherein the method allows for the
   maintenance of state information.
Embodiment 14. The method according to the features of embodiment 12, wherein the method is implemented in
   response to a received signal from the user device.
Embodiment 15. An MPEG object data structure on a computer readable storage medium for use with a computer in communication with a client device for providing interactive MPEG video to the client device, the MPEG object data structure comprising:
   an MPEG object interface defining data received by the MPEG object and data output by the MPEG object;
   a plurality of MPEG video elements wherein each element relates to a different MPEG object state; and
   a computer method for receiving input through the MPEG object interface from the client device indicative of an MPEG object state and in response outputting the MPEG video element related to the MPEG object state indicated in the input through the MPEG object interface.
Embodiment 16. An MPEG object data structure according to the features of embodiment 16 wherein the MPEG
   video elements are located on a separate computer readable storage medium and the MPEG object data structure further comprises:
   a computer method for retrieving the MPEG video elements from the separate computer readable storage medium.
Embodiment 17. An MPEG object data structure according to the features of embodiment 15 further comprising:
   a stitching directive including a pointer for use by a stitcher that points to a current MPEG video frame and is incremented with each new MPEG video frame.
Embodiment 18. An MPEG object data structure according to the features of embodiment 16 further comprising:
   a method for synchronizing audio data with each MPEG video frame.
Embodiment 19. An MPEG object data structure on a computer readable storage medium for use with a computer in communication with a client device for providing interactive MPEG video to the client device, the MPEG object data structure comprising:
   an MPEG object interface defining data received by the MPEG object and data output by the MPEG object;
   a computer method for receiving input through the MPEG object interface from the client device indicative of a request for streaming MPEG video content;
   a computer method for requesting the streaming MPEG video content from a source external to the computer; and
   a computer method for outputting the MPEG video content through the MPEG object interface.
Embodiment 20. An MPEG object data structure according to the features of embodiment 19, further comprising:
   a computer method for requesting streaming audio content from a source external to the computer.
Embodiment 21. An MPEG object data structure according to the features of embodiment 20 wherein the audio
   content is MPEG audio content.
Embodiment 22. An MPEG object data structure according to the features of embodiment 19 wherein the computer
   method for outputting the MPEG video content outputs the MPEG video content to a stitcher.
Embodiment 23. An MPEG object data structure according to the features of embodiment 22, wherein the computer
   method for outputting also outputs size information for the MPEG video content.
Embodiment 24. A method for preparing MPEG video content for use in an interactive communications network, the method comprising:
   maintaining a current state of an MPEG object within a memory;
   receiving a request for a change in state of the MPEG object from a client device within the interactive communications network;
   accessing an MPEG element associated with the MPEG object and representative of the change in state; and
   stitching the MPEG element representative of the change in state into a data sequence representative of an MPEG frame based in part on the current state of the MPEG object.
Embodiment 25. The method according to the features of embodiment 24, further comprising: establishing an interactive session with a client device associated with a display.
Embodiment 26. The method according to the features of embodiment 24, wherein the MPEG object includes one or
   more computer methods.
Embodiment 27. The method according to the features of embodiment 24 further comprising: forwarding the MPEG frame to the client device requesting the change in state
Embodiment 28. The method according to the features of embodiment 24 further comprising: obtaining a mark-up language file providing state information for an MPEG object and position information about one or more MPEG elements representative of a state.
Embodiment 29. The method according to the features of embodiment 28, wherein the step of stitching is based in
   part upon the position information within the MPEG frame for the MPEG element.
Embodiment 30. The method according to the features of embodiment 24, further comprising: providing an MPEG object to from a first session processor to a second session processor.

## Claims

1. A tool (600) for creating interactive MPEG content, the tool (600) comprising:
an editor having a scene window allowing a user to create a scene based upon placement of atomic MPEG objects within the scene window;
an object tool bar (620) allowing a user to add the atomic MPEG objects to the scene, each of the atomic MPEG objects having a respective plurality of visual states and comprising a respective plurality of graphical elements, each graphical element of the respective plurality of graphical elements corresponding to a respective visual state of the respective plurality of visual states, each of the atomic MPEG objects further comprising code to construct each visual state of the respective plurality of visual states, wherein:
when a respective atomic MPEG object of the atomic MPEG objects is placed within the scene window, user-modifiable properties associated with the respective atomic MPEG object are displayed,
the user can create a user-definable script for the respective atomic MPEG object, and
a first atomic MPEG object of the atomic MPEG objects represents interactive graphical content; and
a format processor comprising hardware for processing the scene into a file format that includes display position information of respective pluralities of graphical elements of the atomic MPEG objects that were added to the scene, so as to allow a stitcher to form a complete MPEG video frame from the respective pluralities of graphical elements,
wherein different MPEG frames can be assigned to a respective visual state of the pluralities of visual states.

2. The tool (600) according to claim 1, wherein when a respective atomic MPEG object of the atomic MPEG objects is placed within the scene window, the editor snaps a first graphical element of the plurality of graphical elements of the respective atomic MPEG object to an MPEG macroblock boundary.

3. The tool (600) according to one of claims 1 or 2, wherein the respective pluralities of graphical elements of the atomic MPEG objects comprise respective pluralities of MPEG video elements corresponding to different visual states of the respective pluralities of visual states.

4. The tool (600) according to one of the preceding claims, wherein the first atomic MPEG object represents a button.

5. The tool (600) according to one of the preceding claims, wherein after a scene is defined, the editor creates an XML-based output file.
